(19) **Europäisches Patentamt / European Patent Office / Office européen des brevets**

(11) **EP 4 610 941 A1**

(12) **EUROPEAN PATENT APPLICATION**
published in accordance with Art. 153(4) EPC

(43) Date of publication:
03.09.2025 Bulletin 2025/36

(21) Application number: 23882533.5

(22) Date of filing: 19.10.2023

(51) International Patent Classification (IPC):
*G06V 10/94* (2022.01)

(52) Cooperative Patent Classification (CPC):
B60G 3/00; B60L 15/20; B60W 10/08; B60W 10/22;
B60W 30/02; B60W 30/095; B60W 40/00;
B60W 40/02; B60W 40/06; B60W 60/00;
B62D 7/15; G01B 11/00; G01C 3/06; G01C 21/34;
G01P 13/00; (Cont.)

(86) International application number:
PCT/JP2023/037929

(87) International publication number:
WO 2024/090328 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.10.2022 JP 2022170165
27.10.2022 JP 2022172777
01.11.2022 JP 2022175679
11.11.2022 JP 2022181362
14.11.2022 JP 2022182131
21.11.2022 JP 2022186040
24.11.2022 JP 2022187648
24.11.2022 JP 2022187649
28.11.2022 JP 2022189546
04.01.2023 JP 2023000320
16.01.2023 JP 2023004742

09.03.2023 JP 2023036967
09.03.2023 JP 2023036970
09.03.2023 JP 2023036971
14.04.2023 JP 2023066683
14.04.2023 JP 2023066684
14.04.2023 JP 2023066685
15.05.2023 JP 2023080410
29.05.2023 JP 2023088201
29.05.2023 JP 2023088202

(71) Applicant: SoftBank Group Corp.
Tokyo 105-7537 (JP)

(72) Inventor: SON, Masayoshi
Tokyo 105-7537 (JP)

(74) Representative: DREISS Patentanwälte PartG
mbB
Friedrichstraße 6
70174 Stuttgart (DE)

(54) **INFORMATION PROCESSING DEVICE, INFORMATION PROCESSING METHOD, AND INFORMATION PROCESSING PROGRAM**

(57) An information processing apparatus includes: a first processor that outputs, from an image of an object captured by a first camera, point information in which the imaged object is captured as a point; a second processor that outputs, from an image of the object captured by a second camera directed in a direction corresponding to the first camera, identification information that identifies the imaged object; and a third processor that associates the point information with the identification information, and a frame rate of the first camera is higher than a frame rate of the second camera.

## FIG.1

(52) Cooperative Patent Classification (CPC): (Cont.)
G06T 7/00; G06T 7/20; G06T 7/215; G06T 7/521;
G06T 7/60; G06T 7/70; G06V 10/94; G06V 20/58;
G08G 1/0968; G08G 1/16; H01L 23/473;
H04N 7/01; H04N 7/18; H04N 23/60;
H04N 23/667; H05K 7/20

**Description**

Technical Field

The present disclosure relates to an information processing apparatus, an information processing method, and an information processing program.

Background Art

Patent Literature 1 describes a vehicle having an automatic driving function.

Citation List

Patent Literature

Patent Literature 1: Japanese Patent Application Laid-Open (JP-A) No. 2022-035198

SUMMARY OF INVENTION

Technical Problem

In a case in which a vehicle is automatically driven as in Patent Literature 1, automatic driving is controlled using a plurality of images obtained by cameras imaging the surroundings of the vehicle. Here, in a case in which automatic driving is controlled using a plurality of images captured by a plurality of cameras, there is room for improvement in how to set the frame rate in each camera.

Therefore, an object of one aspect of the disclosure is to provide an information processing apparatus, an information processing method, and an information processing program capable of causing each camera to capture an object at a frame rate suitable for the camera in a case in which the object is imaged by a plurality of cameras.

In addition, it is desirable that an external environment of the vehicle be grasped and risks related to traveling of the vehicle be able to be avoided with high accuracy in the control of the automatic driving.

Therefore, an object of one aspect of the disclosure is to provide an information processing apparatus, an information processing method, and an information processing program allowing an external environment of a moving body to be understood.

In a case in which a vehicle is automatically driven as in Patent Literature 1, automatic driving is controlled using a plurality of images obtained by cameras imaging the surroundings of the vehicle. Therefore, there has been a problem that the amount of data acquired by a processor that controls the automatic driving increases and the amount of calculation required for the control of the automatic driving increases in the conventional automatic driving.

Therefore, an object of one aspect of the disclosure is to provide an information processing apparatus, an information processing method, and an information processing program capable of reducing the amount of data to be output to a predetermined output destination in a case in which image capturing information regarding an object imaged by the cameras is output to the output destination.

In addition, a technology in which a plurality of vehicles travel on a road in a convoy using automatic driving has been studied. In order to realize the automatic driving of a plurality of vehicles in a convoy, an information processing apparatus is used similarly to in automatic driving of a single vehicle. The information processing apparatus acquires information necessary for the automatic driving from the outside of the vehicles and controls the automatic driving on the basis of the acquired information. For example, the information processing apparatus recognizes conditions in front of the convoy and conditions behind the convoy on the basis of images and the like obtained by cameras imaging conditions outside the vehicle and controls the automatic driving on the basis of the recognition results. Furthermore, in order to realize safe traveling by the automatic driving, it is preferable that the information processing apparatus recognize conditions on lateral sides of the convoy in addition to the front conditions of the queue and the rear conditions of the convoy and control the automatic driving on the basis of the recognition results.

However, if a lateral camera for imaging conditions on lateral sides of the convoy is mounted on each of all the vehicles forming the convoy, and the information processing apparatus recognizes the conditions on the lateral sides of the convoy on the basis of all the images obtained by imaging the conditions on the lateral sides of the convoy by each lateral camera, then a large processing load is imparted on the information processing apparatus. The same applies to a case in which moving bodies other than vehicles in a convoy are automatically driven and safely travel.

Therefore, an object of one aspect of the disclosure is to provide an information processing apparatus, an information processing method, and an information processing program capable of recognizing conditions on each of the front side, the rear side, and the lateral sides of a convoy without imparting a processing load as compared with a case in which the information processing apparatus recognizes the conditions on the lateral sides of the convoy on the basis of all lateral images obtained by imaging the lateral sides of the convoy by each lateral camera provided in each of a plurality of moving bodies moving in a convoy.

Solution to Problem

An information processing apparatus according to one aspect of the disclosure includes: a first processor that outputs, from an image of an object captured by a first camera, point information in which the imaged object is captured as a point; a second processor that outputs, from an image of the object captured by a second camera directed in a direction corresponding to the first camera, identification information that identifies the imaged object; and a third processor that associates the point information output from the first processor with the identification information output from the second processor, and a frame rate of the first camera is higher than a frame rate of the second camera.

Also, in the information processing apparatus according to one aspect of the disclosure, the frame rate of the first camera is 10 times or more the frame rate of the second camera.

In the information processing apparatus according to one aspect of the disclosure, the frame rate of the first camera is 100 frames/second or more, and the frame rate of the second camera is 10 frames/second.

An information processing method according to one aspect of the disclosure includes executing, by a computer, processing of: outputting, from an image of an object captured by a first camera, point information in which the imaged object is captured as a point; outputting, from an image of the object captured by a second camera having a lower frame rate than the first camera and directed in a direction corresponding to the first camera, identification information that identifies the imaged object; and associating the point information with the identification information.

An information processing program according to one aspect of the disclosure causes a computer to execute processing of: outputting, from an image of an object captured by a first camera, point information in which the imaged object is captured as a point; outputting, from an image of the object captured by a second camera having a lower frame rate than the first camera and directed in a direction corresponding to the first camera, identification information that identifies the imaged object; and associating the point information with the identification information.

An information processing apparatus according to one aspect of the disclosure includes: a first processor that outputs, from an image of an object captured by a first camera, point information in which the imaged object is captured as a point; a second processor that outputs, from an image of the object captured by a second camera directed in a direction corresponding to the first camera, identification information that identifies the imaged object; and a third processor that associates the point information output from the first processor with the identification information output from the second processor, and the first processor calculates a level of danger related to moving of a predetermined moving body as a score related to an external environment of the moving body on the basis of detection information detected by a detection unit and the point information.

In the information processing apparatus according to one aspect of the disclosure, a frame rate of the first camera is variable, and the first processor changes the frame rate of the first camera in accordance with the calculated level of danger.

In the information processing apparatus according to one aspect of the disclosure, the level of danger indicates a degree of how dangerous a place to which the moving body is going to travel in the future is.

An information processing apparatus according to one aspect of the disclosure includes: a first processor that outputs, from an image of an object captured by a first camera, point information in which the imaged object is captured as a point; a second processor that outputs, from an image of the object captured by a second camera directed in a direction corresponding to the first camera, identification information that identifies the imaged object; and a third processor that associates the point information output from the first processor with the identification information output from the second processor, and the third processor calculates a level of danger related to moving of a predetermined moving body as a score related to an external environment of the moving body on the basis of detection information detected by a detection unit and the point information.

In the information processing apparatus according to one aspect of the disclosure, a frame rate of the first camera is variable, and the third processor outputs an instruction for changing the frame rate of the first camera in accordance with the calculated level of danger to the first processor.

An information processing method according to one aspect of the disclosure includes executing, by a computer, processing of: outputting, from an image of an object captured by a first camera, point information in which the imaged object is captured as a point; outputting, from an image of the object captured by a second camera directed in a direction corresponding to the first camera, identification information that identifies the imaged object; associating the point information with the identification information; and calculating a level of danger related to moving of a predetermined moving body as a score related to an external environment of the moving body on the basis of detection information detected by a detection unit and the point information.

An information processing program according to one aspect of the disclosure includes executing, by a computer, processing of: outputting, from an image of an object captured by a first camera, point information in which the imaged object is captured as a point; outputting, from an image of the object captured by a second camera directed in a direction corresponding to the first camera, identification information that identifies the imaged object; associating the point information with the identification information; and calculating a level of danger related to moving of a predetermined moving body as a score related to an external environment of the moving body on the basis of detection information detected by a detection unit and the point information.

An information processing apparatus according to one aspect of the disclosure includes: a first processor that outputs, from an image of an object captured by a first camera with a changeable frame rate, point information in which the imaged object is captured as a point; and a second processor that outputs, from an image of the object captured by a second camera directed in a direction corresponding to the first camera, identification information that identifies the imaged object, and the first processor changes the frame rate of the first camera in accordance with a type of the object based on the identification information.

In the information processing apparatus according to one aspect of the disclosure, the first processor may increase the frame rate in a case in which the object is an object moving quickly, and decrease the frame rate in a case in which the object is an object moving slowly or a still object.

In the information processing apparatus according to one aspect of the disclosure, the first processor may also change the frame rate of the first camera in accordance with the number of objects.

In the information processing apparatus according to one aspect of the disclosure, the first processor may increase the frame rate as the number of objects increases, and decrease the frame rate as the number of objects decreases.

In the information processing apparatus according to one aspect of the disclosure, the first processor may calculate a score related to an external environment in accordance with a type of the object, and change the frame rate in accordance with the score related to the external environment.

In the information processing apparatus according to one aspect of the disclosure, the first processor may calculate a score related to an external environment in accordance with a type of the object, and change the frame rate in accordance with the score related to the external environment.

In the information processing apparatus according to one aspect of the disclosure, the first processor may extract a point indicating an existing position of the object from the image captured by the first camera and output the point indicating the existing position of the object.

The information processing apparatus according to one aspect of the disclosure may include a third processor that associates the point information output from the first processor with the identification information output from the second processor.

An information processing method according to one aspect of the disclosure includes: outputting, from an image of an object captured by a first camera with a changeable frame rate, point information in which the imaged object is captured as a point; outputting, from an image of the object captured by a second camera directed in a direction corresponding to the first camera, identification information that identifies the imaged object; and changing the frame rate of the first camera in accordance with a type of the object based on the identification information.

An information processing program according to one aspect of the disclosure causes a computer to execute processing of: outputting, from an image of an object captured by a first camera with a changeable frame rate, point information in which the imaged object is captured as a point; outputting, from an image of the object captured by a second camera directed in a direction corresponding to the first camera, identification information that identifies the imaged object; and changing the frame rate of the first camera in accordance with a type of the object based on the identification information.

An information processing apparatus according to one aspect of the disclosure includes: a first processor that outputs, from an image of an object captured by a first camera with a changeable frame rate, point information in which the imaged object is captured as a point; a second processor that outputs, from an image of the object captured by a second camera directed in a direction corresponding to the first camera, identification information that identifies the imaged object; and a third processor that associates the point information output from the first processor with the identification information output from the second processor, the first processor derives coordinate values of a point indicating an existing position of the object as the point information in a depth direction of the object in a three-dimensional orthogonal coordinate system from the image of the object captured by the first camera, and the first processor changes the frame rate of the first camera in accordance with the coordinate values in the depth direction.

In the information processing apparatus according to one aspect of the disclosure, the first processor may derive the coordinate values in the depth direction as the point information from images of the object captured by a plurality of the first cameras.

In the information processing apparatus according to one aspect of the disclosure, the first processor may derive coordinate values of the object in a width direction, a height direction, and the depth direction as the point information from the image of the object captured by the first camera and a radar signal based on a reflected wave of an electromagnetic wave emitted to the object by a radar from the object.

In the information processing apparatus according to one aspect of the disclosure, the first processor may derive coordinate values of the object in a width direction, a height direction, and the depth direction as the point information from the image of the object captured by the first camera and a result of imaging structured light emitted to the object by an irradiation device.

In the information processing apparatus according to one aspect of the disclosure, the first processor may derive, from coordinate values of the object in a width direction, a height direction, and the depth direction in the three-dimensional orthogonal coordinate system at a first clock time and coordinate values in the width direction and the height direction at a second clock time which is a clock time following the first clock time, coordinate values in the depth direction at the second clock time as the point information.

An information processing method according to the disclosure includes: outputting, from an image of an object captured by a first camera with a changeable frame rate, point information in which the imaged object is captured as a point; outputting, from an image of the object captured by a second camera directed in a direction corresponding to the first camera, identification information that identifies the imaged object; associating the point information with the identification information; deriving, from the image of the object captured by the first camera, coordinate values of the point indicating an existing position of the object as the point information in a depth direction of the object in a three-dimensional orthogonal coordinate system; and changing the frame rate of the first camera in accordance with the coordinate values in the depth direction.

An information processing program according to the disclosure causes a computer to execute processing of: outputting, from an image of an object captured by a first camera with a changeable frame rate, point information in which the imaged object is captured as a point; outputting, from an image of the object captured by a second camera directed in a direction corresponding to the first camera, identification information that identifies the imaged object; associating the point information with the identification information; deriving, from the image of the object captured by the first camera, coordinate values of the point indicating an existing position of the object as the point information in a depth direction of the object in a three-dimensional orthogonal coordinate system; and changing the frame rate of the first camera in accordance with the coordinate values in the depth direction.

An information processing apparatus according to one aspect of the disclosure is an information processing apparatus mounted in a vehicle, including: a first processor that outputs, from an image of an object captured by a first camera with a changeable frame rate, point information in which the imaged object is captured as a point, in which the first processor changes the frame rate of the first camera in accordance with a position of the vehicle.

In the information processing apparatus according to one aspect of the disclosure, the first processor may calculate a score related to an external environment in accordance with the position of the vehicle, and change the frame rate in accordance with the score related to the external environment.

In the information processing apparatus according to one aspect of the disclosure, the first processor may extract a point indicating an existing position of the object from the image captured by the first camera and output the point indicating the existing position of the object.

In the information processing apparatus according to one aspect of the disclosure, the first processor may change the frame rate of the first camera in accordance with the type of the position of the vehicle.

The information processing apparatus according to one aspect of the disclosure may further include: a second processor that outputs, from an image of the object captured by a second camera directed in a direction corresponding to the first camera, identification information that identifies the imaged object; and a third processor that associates the point information output from the first processor with the identification information output from the second processor.

An information processing method according to one aspect of the disclosure is an information processing method in an information processing apparatus mounted in a vehicle, the information processing method including: outputting, from an image of an object captured by a first camera with a changeable frame rate, point information in which the imaged object is captured as a point; and changing the frame rate of the first camera in accordance with a position of the vehicle.

An information processing program according to one aspect of the disclosure is an information processing program for causing a computer to execute an information processing method in an information processing apparatus mounted in a vehicle, the information processing program being for causing the computer to execute processing of: outputting, from an image of an object captured by a first camera with a changeable frame rate, point information in which the imaged object is captured as a point; and changing the frame rate of the first camera in accordance with a position of the vehicle.

An information processing apparatus according to one aspect of the disclosure includes: a first processor that outputs, from an image of an object captured by a first camera, point information in which the imaged object is captured as a point; and a second processor that outputs, from an image of the object captured by a second camera directed in a direction corresponding to the first camera, identification information that identifies the imaged object, and a frame rate of the first camera is variable, and the first processor changes the frame rate of the first camera in accordance with position information.

The information processing apparatus according to one aspect of the disclosure includes a third processor that associates the point information output from the first processor with the identification information output from the second processor.

In the information processing apparatus according to one aspect of the disclosure, the first processor generates a heat map on the basis of a frequency at which the object has been detected previously at each position in surroundings of the first camera.

In the information processing apparatus according to one aspect of the disclosure, the first processor changes the frame rate of the first camera in accordance with the position information and the heat map.

An information processing method according to one aspect of the disclosure includes executing, by a computer, processing of: changing a frame rate of a first camera in accordance with position information; outputting, from an image of an object captured by the first camera, point information in which the imaged object is captured as a point; and outputting, from an image of the object captured by a second camera directed in a direction corresponding to the first camera, identification information that identifies the imaged object.

An information processing program according to one aspect of the disclosure causes a computer to execute processing of: changing a frame rate of a first camera in accordance with position information; outputting, from an image of an object captured by the first camera, point information in which the imaged object is captured as a point; and outputting, from an image of the object captured by a second camera directed in a direction corresponding to the first camera, identification information that identifies the imaged object.

An information processing apparatus according to one aspect of the disclosure includes: a first processor that outputs, from an image of an object captured by a first camera, point information in which the imaged object is captured as a point; and a second processor that outputs, from an image of the object captured by a second camera directed in a direction corresponding to the first camera, identification information that identifies the imaged object, a frame rate of the first camera is variable, and the first processor changes the frame rate of the first camera on the basis of information regarding a user acquired from the user.

The information processing apparatus according to one aspect of the disclosure includes a third processor that associates the point information output from the first processor with the identification information output from the second processor.

In the information processing apparatus according to one aspect of the disclosure, the information regarding the user includes at least one of sound information from the user, image information obtained by imaging the user, or heart rate information of the user.

In the information processing apparatus according to one aspect of the disclosure, the user is a passenger of a vehicle in which at least a part of the information processing apparatus is mounted.

An information processing method according to one aspect of the disclosure includes executing, by a computer, processing of: changing a frame rate of a first camera on the basis of information regarding a user acquired from the user; outputting, from an image of an object captured by the first camera, point information in which the imaged object is captured as a point; and outputting, from an image of the object captured by a second camera directed in a direction corresponding to the first camera, identification information that identifies the imaged object.

An information processing program according to one aspect of the disclosure causes a computer to execute processing of: changing a frame rate of a first camera on the basis of information regarding a user acquired from the user; outputting, from an image of an object captured by the first camera, point information in which the imaged object is captured as a point; and outputting, from an image of the object captured by a second camera directed in a direction corresponding to the first camera, identification information that identifies the imaged object.

In the information processing apparatus according to one aspect of the disclosure, the lateral cameras image the lateral sides at a first frame rate that is a higher frame rate than frame rates of the front camera and the rear camera.

In the information processing apparatus according to one aspect of the disclosure, the processor recognizes the conditions on the lateral sides on the basis of the obtained lateral images every time the lateral images are obtained by imaging the lateral sides at the first frame rate.

In the information processing apparatus according to one aspect of the disclosure, the plurality of moving bodies are three or more moving bodies, and
The specific moving bodies are intermediate moving bodies that are located between the leading moving body and the tail end moving body.

In the information processing apparatus according to one aspect of the disclosure, each of the plurality of moving bodies is a moving body that is able to be automatically driven, the intermediate moving bodies are provided with at least one of a leading-side camera that is able to image a side of the leading moving body or a tail end-side camera that is able to image a side of the tail end moving body, the processor controls the automatic driving of the intermediate moving bodies on the basis of at least one of a leading moving body-side image obtained by the leading-side camera imaging the leading moving body side or a tail end moving body-side image obtained by the tail end-side camera imaging the tail end moving body side, and a second frame rate that is a frame rate of the leading-side camera and a third frame rate that is a frame rate of the tail end-side camera are lower than a frame rate of the front camera and a frame rate of the rear camera.

In the information processing apparatus according to one aspect of the disclosure, each of the plurality of moving bodies is a moving body that is able to be automatically driven, and the processor controls the automatic driving of the intermediate moving bodies without using at least one of a leading moving body-side image obtained by the leading moving body side being imaged from a side of the intermediate moving body or a tail end moving body-side image obtained by the tail end moving body side being imaged from the intermediate moving body side.

In the information processing apparatus according to one aspect of the disclosure, the processor recognizes conditions on the front side by recognizing a kind of a front object that is present on the front side on the basis of the front image, and recognizes conditions on the rear side by recognizing a kind of a rear object that is present on the rear side on the basis of the rear image.

In the information processing apparatus according to one aspect of the disclosure, the processor recognizes conditions on the lateral sides by recognizing a lateral object that is present on the lateral sides as a point on the basis of the lateral images.

In the information processing apparatus according to one aspect of the disclosure, each of the plurality of moving bodies is a moving body that is able to be automatically driven, and the processor controls the automatic driving on the basis of the conditions on the front side, the conditions on the rear side, and the conditions on the lateral sides.

In the information processing apparatus according to one aspect of the disclosure, each of the plurality of moving bodies is a moving body that is able to be automatically driven, the processor acquires front object information, by which a kind of a front object that is present on the front side is able to be specified, by recognizing the kind of the front object on the basis of the front image, acquires rear object information, by which a kind of a rear object that is present on the rear side is able to be specified, by recognizing the kind of the rear object on the basis of the rear image, and controls the automatic driving on the basis of front associated information and rear associated information, the front associated information is information in which front point information and the front object information are associated, the front point information expressing the front object as a point on the basis of a first image obtained by imaging the front side at a fourth frame rate that is a higher frame rate than a frame rate of the front camera, and the rear associated information is information in which rear point information and the rear object information are associated, the rear point information expressing the rear object as a point on the basis of a second image obtained by imaging the rear side at a fifth frame rate that is a higher frame rate than a frame rate of the rear camera.

In the information processing apparatus according to one aspect of the disclosure, the processor acquires lateral point information that expresses a lateral object that is present on the lateral sides as a point by recognizing the lateral object as a point on the basis of the lateral images, and controls the automatic driving on the basis of the front associated information, the rear associated information, and the lateral point information.

In the information processing apparatus according to one aspect of the disclosure, the processor includes a front side recognition processor, a rear side recognition processor, and a lateral-side recognition processor, the front side recognition processor recognizes conditions on the front side on the basis of the front image, the rear side recognition processor recognizes conditions on the rear side on the basis of the rear image, and the lateral side recognition processor recognizes conditions on the lateral sides on the basis of the lateral images.

In the information processing apparatus according to one aspect of the disclosure, the lateral-side recognition processor recognizes conditions on the lateral sides by performing processing at a higher speed than the front side recognition processor and the rear side recognition processor on the basis of the lateral images.

An information processing method according to one aspect of the disclosure includes: recognizing, on the basis of a front image obtained by imaging a front side of a queue by a front camera that is provided in a leading moving body from among a plurality of moving bodies moving in a queue and is able to image the front side, conditions on the front side; recognizing, on the basis of a rear image obtained by imaging a rear side of the convoy by a rear camera that is provided in a tail end moving body from among the plurality of moving bodies and is able to image the rear side, conditions on the rear side; and recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

An information processing program according to one aspect of the disclosure is a program for causing a computer to execute processing including: recognizing, on the basis of a front image obtained by imaging a front side of a convoy by a front camera that is provided in a leading moving body from among a plurality of moving bodies moving in a convoy and is able to image the front side, conditions on the front side; recognizing, on the basis of a rear image obtained by imaging a rear side of the convoy by a rear camera that is provided in a tail end moving body from among the plurality of moving bodies and is able to image the rear side, conditions on the rear side; and recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

An information processing apparatus according to one aspect of the disclosure includes a first processor. The first processor extracts a point indicating an existing position of an object from an image of the object and outputs motion information indicating motion of the point indicating the existing position of the object along a predetermined coordinate axis at a frame rate of 1000 frames/second or more.

The first processor may output vector information of motion of a center point or a center of gravity of the object along the predetermined coordinate axis as the motion information. The first processor may output the vector information in regard to at least two points that are diagonals of vertexes of a quadrangle surrounding an outline of the object.

The image may include an infrared image. The image may include a visible light image and an infrared image that are synchronized with each other.

Vector information of motion of the point indicating the existing position of the object along each of three coordinate axes in a three-dimensional orthogonal coordinate system may be output as the motion information by using the two first processors.

The first processor may derive a distance to the object on the basis of a reflected wave of an electromagnetic wave emitted to the object from the object and output as the motion information, vector information of motion of the point indicating the existing position of the object along each of the three coordinate axes in the three-dimensional orthogonal coordinate system.

The information processing apparatus may further include: a second processor that outputs the image of the object at a frame rate of less than 1000 frames/second; and a third processor that performs response control to the object on the basis of the motion information and the image output from the second processor.

An information processing apparatus according to the disclosure technology includes a first processor. The first processor extracts a point indicating an existing position of an object from an image in which the object appears and outputs the point indicating the existing position of the object.

The information processing apparatus includes a camera with a changeable frame rate, and the first processor calculates a score related to an external environment, determines a frame rate of the camera in accordance with the score, outputs a control signal to provide an instruction for capturing an image at the determined frame rate to the camera, extracts a point indicating the existing position of the object from the image captured by the camera, and outputs the point indicating the existing position of the object.

The information processing apparatus is mounted in a vehicle, and the first processor calculates a level of danger related to traveling of the vehicle as the score related to the external environment, determines the frame rate of the camera in accordance with the level of danger, outputs a control signal to provide an instruction for capturing an image at the determined frame rate to the camera, extracts a point indicating the existing position of the object from the image captured by the camera, and outputs the point indicating the existing position of the object.

The first processor extracts the object from the image, extracts the point indicating the existing position of the object in a case in which the existing position of the object is within a predetermined region, and outputs the point indicating the existing position of the object.

The first processor extracts the object from the image, calculates the score for each object, extracts the point indicating the existing position of the object with the score of not less than a predetermined threshold value, and outputs the point indicating the existing position of the object.

The information processing apparatus according to the disclosed technology is an information processing apparatus including: a camera with a changeable frame rate; and a processor, in which the processor detects objects appearing in an image captured by the camera, and performs control to change the frame rate of the camera in accordance with at least one of the number of detected objects, accelerations of the objects, or sizes of the objects.

When the frame rate is changed in accordance with the number of objects, the processor may perform control to increase the frame rate as the number of objects increases, and perform control to decrease the frame rate as the number of objects decreases.

When the frame rate is changed in accordance with the accelerations of the objects, the processor may perform control to increase the frame rate as the accelerations of the objects increase, and perform control to decrease the frame rate as the accelerations of the objects decrease.

When the frame rate is changed in accordance with the sizes of the objects, the processor may perform control to increase the frame rate as the sizes of the objects increase, and perform control to decrease the frame rate as the sizes of the object decrease.

The processor may calculate a score related to an external environment in accordance with at least one of the number of objects, accelerations of the objects, or sizes of the objects, and perform control to change the frame rate in accordance with the score related to the external environment and a preset threshold value.

The processor may extract points indicating existing positions of the objects from the image captured by the camera and output the points indicating the existing positions of the objects.

The information processing apparatus may output, as the motion information, vector information of motion of the points indicating the existing positions of the objects along each of three coordinate axes in a three-dimensional orthogonal coordinate system by using the two processors.

An information processing method according to one aspect of the disclosure is an information processing method executed by an information processing apparatus including a camera with a changeable frame rate, and a processor, the information processing method including, by the processor: detecting objects that appear in an image captured by the camera; and performing control to change the frame rate of the camera in accordance with at least one of the number of detected objects, accelerations of the objects, or sizes of the objects.

An information processing program according to one aspect of the disclosure is an information processing program that causes a processor of an information processing apparatus including a camera with a changeable frame rate, and the processor to execute: detecting objects that appear in an image captured by the camera; and performing control to change the frame rate of the camera in accordance with at least one of the number of detected objects, accelerations of the objects, or sizes of the objects.

An information processing apparatus according to one aspect of the disclosure is an information processing apparatus including: a camera with a changeable frame rate; and a processor, in which the processor detects objects that appear in an image captured at each clock time by the camera, and performs control to change the frame rate of the camera in accordance with at least one of a time series of the numbers of detected objects, a time series of accelerations of the objects, or a time series of sizes of the objects.

When the frame rate is changed in accordance with the time series of the numbers of objects, the processor may perform control to increase the frame rate in a case in which the number of objects appearing in an image at a current clock time is larger than the number of objects appearing in an image at a previous clock time, and perform control to decrease the frame rate in a case in which the number of objects appearing in the image at the current clock time is smaller than the number of objects appearing in the image at the previous clock time.

When the frame rate is changed in accordance with the time series of the accelerations of objects, the processor may perform control to increase the frame rate in a case in which accelerations of objects appearing in an image at a current clock time are larger than accelerations of objects appearing in an image at a previous clock time, and perform control to decrease the frame rate in a case in which the accelerations of the objects appearing in the image at the current clock time are smaller than the accelerations of the objects appearing in the image at the previous clock time.

When the frame rate is changed in accordance with the time series of the sizes of objects, the processor may perform control to increase the frame rate in a case in which sizes of objects appearing in an image at a current clock time are larger than sizes of objects appearing in an image at a previous clock time, and perform control to decrease the frame rate in a case in which the sizes of the objects appearing in the image at the current clock time are smaller than the sizes of the objects appearing in the image at the previous clock time.

The processor may calculate a score related to an external environment in accordance with at least one of a time series of the numbers of objects, a time series of accelerations of the objects, or a time series of sizes of the objects, and perform control to change the frame rate in accordance with the score related to the external environment.

The processor may extract points indicating existing positions of the objects from the image captured by the camera and output the points indicating the existing positions of the objects.

The information processing apparatus may output, as the motion information, vector information of motion of the points indicating the existing positions of the objects along each of three coordinate axes in a three-dimensional orthogonal coordinate system by using the two processors.

An information processing method according to one aspect of the disclosure is an information processing method executed by an information processing apparatus including a camera with a changeable frame rate, and a processor, the information processing method including, by the processor: detecting objects that appear in an image captured at each clock time by the camera; and performing control to change the frame rate of the camera in accordance with at least one of a time series of the numbers of detected objects, a time series of accelerations of the objects, or a time series of sizes of the objects.

An information processing program according to one aspect of the disclosure is an information processing program that causes a processor of an information processing apparatus including a camera with a changeable frame rate, and the processor to execute: detecting objects that appear in an image captured at each clock time by the camera; and performing control to change the frame rate of the camera in accordance with at least one of a time series of the numbers of detected objects, a time series of accelerations of the objects, or a time series of sizes of the objects.

Note that the above summary of the disclosure does not enumerate all the necessary features of the disclosure. Furthermore, sub-combinations of these feature groups may also be the disclosure.

BRIEF DESCRIPTION OF DRAWINGS

Fig. 1 is a schematic diagram illustrating an example of a vehicle in which a central brain is mounted.

Fig. 2 is a first block diagram illustrating an example of a configuration of an information processing apparatus.

Fig. 3 is a second block diagram illustrating an example of the configuration of the information processing apparatus.

Fig. 4 is an explanatory diagram illustrating an example of point information output by an MoPU.

Fig. 5 is a third block diagram illustrating an example of the configuration of the information processing apparatus.

Fig. 6 is a fourth block diagram illustrating an example of the configuration of the information processing apparatus.

Fig. 7 is an explanatory diagram illustrating an example of association between the point information and label information.

Fig. 8 is an explanatory diagram illustrating a schematic configuration of the vehicle

Fig. 9 is a block diagram illustrating an example of a functional configuration of a cooling execution apparatus.

Fig. 10 is a fifth block diagram illustrating an example of the configuration of the information processing apparatus.

Fig. 11 is a sixth block diagram illustrating an example of the configuration of the information processing apparatus.

Fig. 12 is a diagram schematically illustrating coordinate detection of an object in a time series.

Fig. 13 is a seventh block diagram illustrating an example of the configuration of the information processing apparatus.

Fig. 14 is an explanatory diagram for explaining an image of an object captured by an event camera.

Fig. 15 is a conceptual diagram illustrating an example of an aspect of a plurality of vehicles traveling in a convoy on a road.

Fig. 16 is a conceptual diagram illustrating an example of configurations of a first information processing apparatus, a second information processing apparatus, and a third information processing apparatus.

Fig. 17 is a conceptual diagram illustrating an example of a configuration of each of the first information processing apparatus, a first condition sensor, and a second condition sensor mounted in a leading vehicle.

Fig. 18 is a conceptual diagram illustrating an example of content of processing of the first condition sensor, the second condition sensor, a first IPU, a second IPU, a first MoPU, and a second MoPU.

Fig. 19 is a conceptual diagram illustrating an example of a configuration of each of the second information processing apparatus, a third condition sensor, a fourth condition sensor, a fifth condition sensor, and a sixth condition sensor mounted in an intermediate vehicle.

Fig. 20 is a conceptual diagram illustrating an example of content of processing of a third low FR camera, a fourth low FR camera, a fifth low FR camera, a sixth low FR camera, a third IPU, a fourth IPU, a fifth IPU, and a sixth IPU.

Fig. 21 is a conceptual diagram illustrating an example of content of processing of a third high FR camera, a third radar, a fourth high FR camera, a fourth radar, a fifth high FR camera, a fifth radar, a sixth high FR camera, a sixth radar, a third MoPU, a fourth MoPU, a fifth MoPU, and a sixth MoPU.

Fig. 22 is a conceptual diagram illustrating an example of a configuration of each of the third information processing apparatus, a seventh condition sensor, and an eighth condition sensor mounted in a tail end vehicle.

Fig. 23 is a conceptual diagram illustrating an example of content of processing of the seventh condition sensor, the eighth condition sensor, a seventh IPU, an eighth IPU, a seventh MoPU, and an eighth MoPU.

Fig. 24 is a conceptual diagram illustrating an example of content of processing for acquiring information necessary for a first central brain to realize control of automatic driving of a convoy.

Fig. 25 is a conceptual diagram illustrating an example of content of processing for acquiring information necessary for a second central brain to realize control of automatic driving of the convoy.

Fig. 26 is a conceptual diagram illustrating an example of content of processing for acquiring information necessary for a third central brain to realize control of automatic driving of the convoy.

Fig. 27 is a conceptual diagram illustrating an example of content of processing performed to control the leading vehicle in order for the first central brain to realize the control of the automatic driving of the convoy.

Fig. 28 is a conceptual diagram illustrating an example of content of processing performed to control the intermediate vehicle in order for the second central brain to realize the control of the automatic driving of the convoy.

Fig. 29 is a conceptual diagram illustrating an example of content of processing performed to control the tail end vehicle in order for the third central brain to realize the control of the automatic driving of the convoy.

Fig. 30 is a flowchart illustrating an example of a flow of leading vehicle IPU processing performed by a leading vehicle processor.

Fig. 31 is a flowchart illustrating an example of a flow of leading vehicle MoPU processing performed by the leading vehicle processor.

Fig. 32 is a flowchart illustrating an example of a flow of first central brain processing performed by the leading vehicle processor.

Fig. 33 is a flowchart illustrating an example of a flow of intermediate vehicle IPU processing performed by an intermediate vehicle processor.

Fig. 34 is a flowchart illustrating an example of a flow of intermediate vehicle MoPU processing performed by the intermediate vehicle processor.

Fig. 35 is a flowchart illustrating an example of a flow of second central brain processing performed by the intermediate vehicle processor.

Fig. 36 is a flowchart illustrating an example of a flow of tail end vehicle IPU processing performed by a tail end vehicle processor.

Fig. 37 is a flowchart illustrating an example of a flow of tail end vehicle MoPU processing performed by the tail end vehicle processor.

Fig. 38 is a flowchart illustrating an example of a flow of third central brain processing performed by the tail end vehicle processor.

Fig. 39 is a conceptual diagram illustrating a first modification example in which a first control variable, a second control variable, and a third control variable are derived by the first central brain.

Fig. 40 is a conceptual diagram illustrating a second modification example in which the first control variable, the second control variable, and the third control variable are derived by the first central brain.

Fig. 41 is a conceptual diagram illustrating a third modification example in which the first control variable, the second control variable, and the third control variable are derived by the first central brain.

Fig. 42 is a conceptual diagram illustrating a fourth modification example in which the first control variable, the second control variable, and the third control variable are derived by the first central brain.

Fig. 43 is a diagram illustrating an example of conditions of data transfer from an MoPU to a central brain according to an embodiment of the disclosed technology.

Fig. 44 is a diagram illustrating an example of conditions of the data transfer from the MoPU to the central brain according to the embodiment of the disclosed technology.

Fig. 45 is a diagram illustrating an example of processing of the MoPU according to the embodiment of the disclosed technology.

Fig. 46 is a diagram illustrating an example of the processing of the MoPU according to the embodiment of the disclosed technology.

Fig. 47 is a block diagram illustrating an example of a configuration of an information processing apparatus according to the embodiment of the disclosed technology.

Fig. 48 is a block diagram illustrating an example of a configuration of the information processing apparatus according to the embodiment of the disclosed technology.

Fig. 49 is a diagram for explaining the embodiment of the disclosed technology.

Fig. 50 is an explanatory diagram schematically illustrating an example of a hardware configuration of a computer functioning as an information processing apparatus or a cooling execution apparatus.

DESCRIPTION OF EMBODIMENTS

Although embodiments of the disclosure will be described below, the following embodiments are not intended to limit the invention of the claims. In addition, not all combinations of features described in the embodiments are essential to the solution of the disclosure.

(First Embodiment)

First, a first embodiment according to the present embodiment will be described. In an example, at least a part of an information processing apparatus according to the disclosure is mounted in a vehicle 100 and performs automatic driving control of the vehicle 100. Furthermore, the information processing apparatus can provide a traveling system that can realize autonomous driving in real time on the basis of data obtained by various sensor inputs in AI/multivariate analysis/goal seek/strategy planning/optimal probability solution/optimal speed solution/optimal course management/edge at Level 6 and is adjusted on the basis of a delta optimal solution. The vehicle 100 is an example of the "target".

Here, "Level 6 " is a level representing automatic driving and corresponds to a level that is yet higher than Level 5 representing fully automatic driving. Although Level 5 represents fully automatic driving, Level 5 is the same level as human driving, and there is still a probability of occurrence of an accident or the like. Level 6 represents a level that is higher than Level 5 and corresponds to a level at which the probability of occurrence of an accident is lower than that at Level 5.

A calculation capability at Level 6 is about 1000 times a calculation capability at the Level 5. Therefore, high-performance driving control that cannot be realized at Level 5 can be realized.

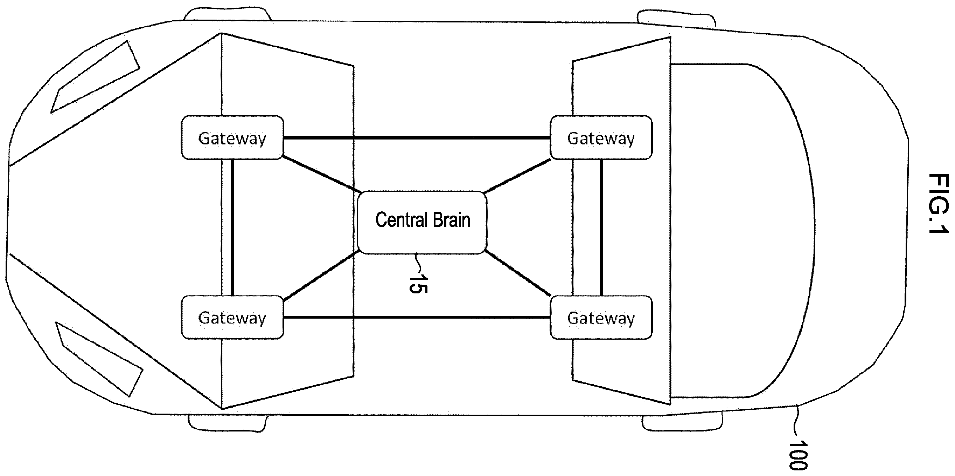

Fig. 1 is a schematic diagram illustrating an example of the vehicle 100 with a central brain 15 mounted therein. A plurality of gate ways are communicatively connected to the central brain 15. The central brain 15 is connected to an external cloud server via the gate ways. The central brain 15 is configured to be able to access the external cloud server via the gate ways. On the other hand, the central brain 15 is configured not to be able to directly access the central brain 15 from outside due to presence of the gate ways.

The central brain 15 outputs a request signal to the cloud server every time a predetermined time elapses. Specifically, the central brain 15 outputs a request signal representing an inquiry to the cloud server every 1/1 billion seconds. In an example, the central brain 15 controls automatic driving at LeveL 6 on the basis of a plurality of items of information acquired via the gate ways.

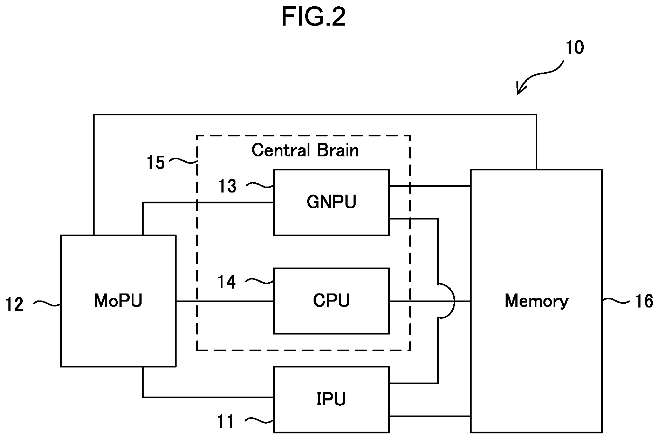

Fig. 2 is a first block diagram illustrating an example of a configuration of an information processing apparatus 10. The information processing apparatus 10 includes an image processing unit (IPU) 11, a motion processing unit (MoPU) 12, a central brain 15, and a memory 16. The central brain 15 is configured to include a graphics neural network processing unit (GNPU) 13 and a central processing unit (CPU) 14.

The IPU 11 is incorporated in an ultra-high-definition camera (not illustrated) installed in the vehicle 100. The IPU 11 performs predetermined image processing such as Bayer transformation, demosaicing, denoising, and sharpening on an image of an object that is present in the surroundings of the vehicle 100 captured by the ultra-high-definition camera and outputs the processed image of the object at a frame rate of 10 frames/second and a resolution of 12 million pixels, for example. In addition, the IPU 11 outputs identification information that identifies the imaged object from the image of the object captured by the ultra-high-definition camera. The identification information is information necessary for identifying what the imaged object is (for example, whether the object is a person or an obstacle). In the embodiment, the IPU 11 outputs label information (for example, information indicating which of a dog, a cat, or a bear the imaged object is (information by which the kind of the object can be specified)) indicating the type (kind) of the imaged object as the identification information. Furthermore, the IPU 11 outputs position information indicating the position of the imaged object in a camera coordinate system of the ultra-high-definition camera. The image, the label information, and the position information output from the IPU 11 are supplied to the central brain 15 and the memory 16. The IPU 11 is an example of the "second processor", and the ultra-high-definition camera is an example of the "second camera".

The MoPU 12 is used for various sensors (for example, an internal sensor (such as an acceleration sensor and/or a gyro sensor, for example) and an external sensor (such as a camera, a radar, and/or an optical distance measurement device using a laser, for example)) including another camera (not illustrated) different from the ultra-high-definition camera installed in the vehicle 100. For example, the MoPU 12 is a processing device that performs processing of recognizing the position and/or a motion of conditions (for example, an object) outside the vehicle 100 and the like. For example, the MoPU 12 is connected to the other camera installed in the vehicle 100 (in an example, the MoPU 12 is incorporated in the other camera (not illustrated) different from the ultra-high-definition camera installed in the vehicle 100 or is connected to the other camera). The MoPU 12 outputs point information (point information in which an object is expressed as a point) in which the imaged object is captured as a point from an image of the object captured at a frame rate of 100 frames/second or more by the other camera directed in a direction corresponding to the ultra-high-definition camera at a frame rate of 100 frames/second or more, for example. The point information output from the MoPU 12 is supplied to the central brain 15 and the memory 16. In this manner, the image used by the MoPU 12 to output the point information and the image used by the IPU 11 to output the identification information are images (images obtained by performing image capturing) captured by the other camera and the ultra-high-definition camera directed in the corresponding directions. Here, the "corresponding directions" are directions in which an imaging range of the other camera and an imaging range of the ultra-high-definition camera overlap. In the above case, the other camera images the object while being directed in the direction in which its imaging range overlaps the imaging range of the ultra-high-definition camera. Note that imaging the object by the ultra-high-definition camera and the other camera being directed in the corresponding directions is realized by obtaining a correspondence of camera coordinate systems of the ultra-high-definition camera and the other camera in advance, for example.

For example, the MoPU 12 outputs, as the point information, coordinate values of a point indicating an existing position of an object at least along two coordinate axes in a three-dimensional orthogonal coordinate system. The coordinate values indicate a center point (or a point of a center of gravity) of the object in an example. Furthermore, the MoPU 12 outputs, as the coordinate values along the two coordinate axes, a coordinate value (hereinafter, referred to as an "x coordinate value") along an axis (x axis) along the width direction in the three-dimensional orthogonal coordinate system and a coordinate value (hereinafter, referred to as a "y coordinate value") along an axis (y axis) along the height direction. Note that the x axis is an axis along the vehicle width direction of the vehicle 100 and the y axis is an axis along the height direction of the vehicle 100.

With the above configuration, the point information for one second output by the MoPU 12 includes the x coordinate value and the y coordinate value in 100 frames or more, and it is thus possible to grasp motion (a moving direction and a moving speed) of the object on the x axis and the y axis in the three-dimensional orthogonal coordinate system on the basis of the point information. In other words, the point information output by the MoPU 12 includes the position information indicating the position of the object in the three-dimensional orthogonal coordinate system and motion information indicating the motion of the object.

As described above, the point information output from the MoPU 12 does not include information necessary for identifying what the imaged object is (for example, whether it is a person or an obstacle), and includes only information indicating motion (the moving direction and the moving speed) of the center point (or the point of the center of gravity) of the object on the x axis and the y axis. Since the point information output from the MoPU 12 does not include image information, the amount of data to be output to the central brain 15 and the memory 16 can be dramatically reduced. The MoPU 12 is an example of the "first processor", and the other camera is an example of the "first camera".

As described above, the frame rate of the other camera incorporating the MoPU 12 is higher than the frame rate of the ultra-high-definition camera incorporating the IPU 11 in the present embodiment. Specifically, the frame rate of the other camera is 100 frames/second or more, and the frame rate of the ultra-high-definition camera is 10 frames/second. In other words, the frame rate of the other camera is 10 times or more the frame rate of the ultra-high-definition camera.

The central brain 15 associates the point information output from the MoPU 12 with the label information output from the IPU 11. For example, there is a state where the central brain 15 has not acquired the label information while it has acquired the point information regarding the object due to the frame rate difference between the other camera and the ultra-high-definition camera. In this state, the central brain 15 recognizes the x coordinate value and the y coordinate value of the object on the basis of the point information while it does not recognize what the object is.

In a case in which the label information regarding the object is acquired thereafter, the central brain 15 derives the type (for example, a person) of the label information. Then, the central brain 15 associates the label information with the above acquired point information. In this manner the central brain 15 recognizes the x coordinate value and the y coordinate value of the object on the basis of the point information and recognizes what the object is. The central brain 15 is an example of the "third processor".

Here, in a case in which a plurality of objects such as an object A and an object B, for example, are present as the objects imaged by the ultra-high-definition camera and the other camera, the central brain 15 associates the point information with the label information for each of the objects as follows. For example, there is a state where the central brain 15 has not acquired the label information while it has acquired the point information regarding the object A and the object B (hereinafter, referred to as "point information A" and "point information B") due to a frame rate difference between the other camera and the ultra-high-definition camera. In this state, the central brain 15 recognizes the x coordinate value and the y coordinate value of the object A on the basis of the point information A and recognizes the x coordinate value and the y coordinate value of the object B on the basis of the point information B while it does not recognize what the objects are.

In a case in which the label information regarding one of the objects is acquired thereafter, the central brain 15 derives the type (for example, a person) of the label information of the one of the objects. Then, the central brain 15 specifies the point information to be associated with the label information of the one of the objects on the basis of the position information output along with the label information of the one of the objects from the IPU 11 and the position information included in the acquired point information A and point information B. For example, the central brain 15 specifies point information including position information indicating a position that is the closest to the position of the object indicated by the position information output from the IPU 11 and associates the point information with the label information of the one of the objects. In a case in which the above specified point information is the point information A, the central brain 15 associates the label information of the one of the objects with the point information A, recognizes the x coordinate value and the y coordinate value of the object A on the basis of the point information A, and recognizes what the object A is.

As described above, in a case in which a plurality of objects imaged by the ultra-high-definition camera and the other camera are present, the central brain 15 associates the point information with the label information on the basis of the position information output from the IPU 11 and the position information included in the point information output from the MoPU 12.

In addition, the central brain 15 recognizes an object (a person, an animal, a road, a traffic signal, a traffic sign, a pedestrian crossing, an obstacle, a building, and the like) present in the surroundings of the vehicle 100 on the basis of the image and the label information output from the IPU 11. Furthermore, the central brain 15 recognizes the position and motion of the object that is present in the surroundings of the vehicle 100 and has been recognized as something on the basis of the point information output from the MoPU 12. The central brain 15 performs, for example, control (speed control) of a motor for driving wheels, brake control, and steering wheel control on the basis of the recognized information and controls automatic driving of the vehicle 100. For example, the central brain 15 controls the automatic driving of the vehicle 100 to avoid collision against the object from the position information and the motion information included in the point information output from the MoPU 12. In the central brain 15, the GNPU 13 may be in charge of processing related to image recognition, and the CPU 14 may be in charge of processing related to vehicle control.

In general, ultra-high-definition cameras are used to perform image recognition in automatic driving. Here, it is possible to recognize, from the image captured by the ultra-high-definition camera (the image obtained through image capturing performed by the ultra-high-definition camera), what the object included in the image is. However, this is not sufficient for the automatic driving in the Level 6 generation. In the Level 6 generation, it is also necessary to recognize motion of the object with higher accuracy. An avoidance operation in which the vehicle 100 traveling using automatic driving avoids an obstacle, for example, can be performed with higher accuracy by the MoPU 12 recognizing the motion of the object with higher accuracy. However, the ultra-high-definition camera can acquire only about 10 frames of images per second, and accuracy of analyzing the motion of the object is lower than that of the camera with the MoPU 12 mounted thereon. On the other hand, the camera with the MoPU 12 mounted thereon can perform an output at a frame rate that is as high as 100 frames/second, for example.

Thus, the information processing apparatus 10 according to the first embodiment includes two independent processors, namely the IPU 11 and the MoPU 12. The information processing apparatus 10 assigns the IPU 11 incorporated in the ultra-high-definition camera to a role in acquiring information necessary for identifying what the imaged object is and assigns the MoPU 12 incorporated in the other camera to a role in detecting the position and the motion of the object. The MoPU 12 captures the imaged object as a point and analyzes in which direction the coordinates of the point are moving at least on the x axis and the y axis in the three-dimensional orthogonal coordinate system and at what speed the object is moving. Since detection of the entire outline of the object and what the object is can be performed using the image from the ultra-high-definition camera, the MoPU 12 can ascertain how the entire object behaves as long as it knows how the center point of the object is moving, for example.

According to the method of analyzing only the movement and the speed of the center point of the object, it is possible to greatly reduce the amount of data to be output to the central brain 15 and to greatly reduce the amount of calculation in the central brain 15 as compared with the case in which how the entire image of the object moves is determined. In a case in which an image of 1000 pixels × 1000 pixels is output to the central brain 15 at a frame rate of 1000 frames/second, for example, and color information is included, data of 4 billion bits/second is output to the central brain 15. It is possible to compress the amount of data to be output to the central brain 15 to 20 thousand bit/second by the MoPU 12 outputting only the point information indicating the motion of the center point of the object. In other words, the amount of data to be output to the central brain 15 is compressed to 1/200,000.

It is thus possible to realize object recognition including the motion of the object with a small amount of data by using the image information and the label information at a low frame rate and with high resolution output from the IPU 11 and the point information at a high frame rate with a light weight output from the MoPU 12 in combination.

Furthermore, the information processing apparatus 10 can recognize information regarding what object is moving and what the motion is by the central brain 15 associating the point information output from the MoPU 12 with the label information output from the IPU 11.

(Second Embodiment)

Next, a second embodiment according to the present embodiment will be described while parts overlapping the above embodiment are omitted or simplified.

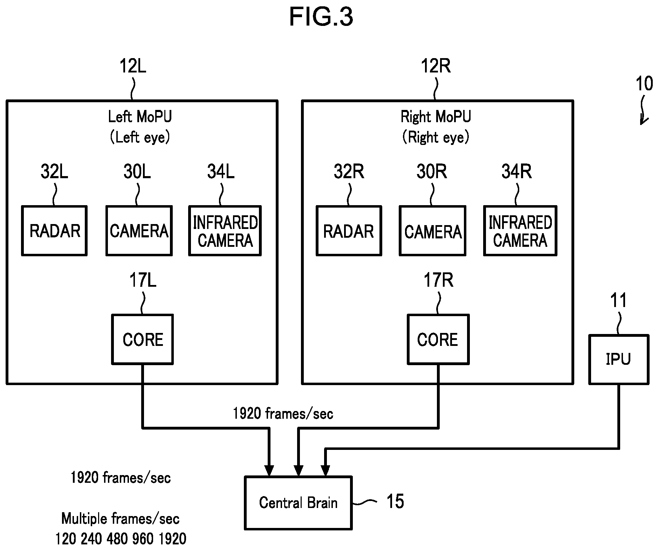

Fig. 3 is a second block diagram illustrating an example of a configuration of an information processing apparatus 10. As illustrated in Fig. 3, the information processing apparatus 10 mounted in a vehicle 100 includes an MoPU 12L corresponding to a left eye, an MoPU 12R corresponding to a right eye, an IPU 11, and a central brain 15.

The MoPU 12L includes a camera 30L, a radar 32L, an infrared camera 34L, and a core 17L. For example, the MoPU 12L includes the core 17L, and the camera 30L, the radar 32L, and the infrared camera 34L are connected to the core 17L. The MoPU 12R includes a camera 30R, a radar 32R, an infrared camera 34R, and a core 17R, and is configured similarly to the MoPU 12L. Note that, in the following description, the MoPU 12L and the MoPU 12R will be described as a "MoPU 12" in a case in which they are not distinguished from each other, the camera 30L and the camera 30R will be described as a "camera 30" in a case in which they are not distinguished from each other, the radar 32L and the radar 32R will be referred to as a "radar 32" in a case in which they are not distinguished from each other, the infrared camera 34L and the infrared camera 34R will be described as an "infrared camera 34" in a case in which they are not distinguished from each other, and the core 17L and the core 17R will be described as a "core 17" in a case in which they are not distinguished from each other.

The camera 30 included in the MoPU 12 images an object in a larger number of frames (120, 240, 480, 960, or 1920 frames/second) than that of an ultra-high-definition camera (for example, 10 frames/second) included in the IPU 11. The frame rate of the camera 30 is variable. The camera 30 is an example of the "first camera".

The radar 32 included in the MoPU 12 acquires a radar signal that is a signal based on a reflected wave of an electromagnetic wave emitted to an object from the object. The infrared camera 34 included in the MoPU 12 is a camera (a camera that acquires an infrared image indicating the object by imaging infrared rays from the object) that captures an infrared image.

The core 17 (configured of one or more CPUs, for example) included in the MoPU 12 extracts a feature point for each image of one frame captured by the camera 30 (an image in one frame obtained by being captured by the camera 30), and outputs an x coordinate value and a y coordinate value of the object in the three-dimensional orthogonal coordinate system as point information. The core 17 uses, for example, a center point (a point of a center of gravity) of the object extracted from the image as a feature point. Note that the point information output by the core 17 includes position information and motion information similarly to the above embodiment.

The IPU 11 includes an ultra-high-definition camera (not illustrated) and outputs an image of an object captured by the ultra-high-definition camera (an image obtained by imaging the object by the ultra-high-definition camera), label information indicating a type of the object, and position information indicating the position of the object in a camera coordinate system of the ultra-high-definition camera.

The central brain 15 acquires the point information output from the MoPU 12 and the image, the label information, and the position information output from the IPU 11. Then, the central brain 15 associates, with the point information, the label information for the object that is present at a position with which the position information included in the point information output from the MoPU 12 and the position information output from the IPU 11 are associated. In this manner, the information processing apparatus 10 can associate the information indicating what the object indicated by the label information is with the position and the motion of the object indicated by the point information.

Here, the MoPU 12 changes the frame rate of the camera 30 in accordance with a predetermined reason. In the present embodiment, the MoPU 12 changes the frame rate of the camera 30 in accordance with a score related to an external environment as an example of the predetermined reason. In this case, the MoPU 12 calculates a score related to the external environment of the vehicle 100 and changes the frame rate of the camera 30 in accordance with the calculated score. Then, the MoPU 12 outputs a control signal for causing the image to be captured at the changed frame rate to the camera 30. In this manner, the camera 30 captures the image at the frame rate indicated by the control signal (the camera 30 acquires the image through image capturing at the frame rate indicated by the control signal). With this configuration, it is possible to capture the image of the object at the frame rate suitable for the external environment (it is possible to image the object at the frame rate suitable for the external environment) according to the information processing apparatus 10.

Note that the information processing apparatus 10 mounted in the vehicle 100 includes a plurality of kinds of sensors, which are not illustrated. The MoPU 12 calculates a level of danger related to movement of the vehicle 100 as a score related to an external environment with respect to the vehicle 100 on the basis of sensor information (for example, movement of the center of gravity of the weight, detection of a material of a road, detection of the outside air temperature, detection of the outside air humidity, detection of vertical and lateral oblique inclination angles of a slope, a way of freezing of the road, detection of the moisture amount, a material of each tire, a wear state, detection of the air pressure, a road width, presence or absence of overtaking prohibition, vehicle type information of an oncoming vehicle and front and rear vehicles, a cruising state of these vehicles, surrounding situations (such as a bird, an animal, a soccer ball, an accident vehicle, an earthquake, housework, wind, typhoon, heavy rain, light rain, snowstorm, and fog), or the like) taken from a plurality of kinds of sensors and point information. The level of danger indicates a degree indicating how dangerous a place to which the vehicle 100 is traveling in the future is. In this case, the MoPU 12 changes the frame rate of the camera 30 in accordance with the calculated level of danger. The vehicle 100 is an example of the "moving body". With this configuration, it is possible to change the frame rate of the camera 30 in accordance with the level of danger related to the movement of the vehicle 100 according to the information processing apparatus 10. The sensor is an example of the "detection unit", and the sensor information is an example of the "detection information.

For example, the MoPU 12 increases the frame rate of the camera 30 as the calculated level of danger increases. In a case in which the calculated level of danger is less than a first threshold value, the MoPU 12 changes the frame rate of the camera 30 to 120 frames/second. Furthermore, in a case in which the calculated level of danger is the first threshold value or more but less than a second threshold value, the MoPU 12 changes the frame rate of the camera 30 to any of 240, 480, and 960 frames/second. Also, in a case in which the calculated level of danger is the second threshold value or more, the MoPU 12 changes the frame rate of the camera 30 to 1920 frames/second. Note that in a case in which the level of danger is any of the above values, the MoPU 12 may output a control signal to the radar 32 and the infrared camera 34 to acquire a radar signal and capture an infrared image with numerical values in accordance with the frame rate in addition to causing the camera 30 to capture the image at the selected frame rate (causing the camera 30 to perform image capturing at the selected frame rate).

For example, the MoPU 12 decreases the frame rate of the camera 30 as the calculated level of danger decreases. In a case in which the calculated level of danger is the first threshold value or more but less than the second threshold value in a state where the frame rate of the camera 30 is set to 1920 frames/second, the MoPU 12 changes the frame rate of the camera 30 to any of 240, 480, and 960 frames/second. In a case in which the calculated level of danger is less than the first threshold value in a state where the frame rate of the camera 30 is set to 1920 frames/second, the MoPU 12 changes the frame rate of the camera 30 to 120 frames/second. Furthermore, in a case in which the calculated level of danger is less than the first threshold value in a state where the frame rate of the camera 30 is set to any of 240, 480, and 960 frames/second, the MoPU 12 changes the frame rate of the camera 30 to 120 frames/second. Note that a control signal may be output to the radar 32 and the infrared camera 34 to acquire the radar signal and capture the infrared image with numerical values in accordance with the changed frame rate of the camera 30 (to perform image capturing to acquire the radar signal and obtain the infrared image with the numerical values in accordance with the changed frame rate of the camera 30) in this case as well similarly to the above case.

Furthermore, the MoPU 12 may calculate the level of danger using big data related to traveling that is known before the vehicle 100 travels, such as long incident artificial intelligence (AI) data (for example, trip data of the vehicle in which an automatic driving control scheme at Level 5 is mounted), map information, or the like as information for predicting the level of danger.

For example, the information processing apparatus 10 may be provided with a sensor that detects the position of the vehicle by a global positioning system (GPS) and may calculate the level of danger in accordance with the position of the vehicle while referring to the map information. In this case, a table or the like in which the position of the vehicle and the level of danger as associated is prepared in a storage device, which is not illustrated and is included in the information processing apparatus 10. In the table, a relatively high level of danger is associated with the vicinity of an intersection, a relatively low level of danger is associated with an expressway, and a relatively high level of danger is associated with a residential area.

In a case in which the vehicle is traveling near an intersection or in a residential area, the level of danger acquired with reference to the table is relatively high, and the MoPU 12 thus changes the frame rate to 1920 frames/second, for example. In a case in which the vehicle is traveling on an expressway, the level of danger acquired with reference to the table is relatively low, and the MoPU 12 thus changes the frame rate to 120 frames/second, for example.

Although the level of danger is calculated as the score related to the external environment in the above description, an indicator that serves as the score related to the external environment is not limited to the level of danger. For example, the MoPU 12 may calculate a score related to the external environment that is different from the level of danger on the basis of a moving direction, a speed, or the like of the object appearing in the camera 30 and change the frame rate of the camera 30 in accordance with the score. Hereinafter, a case in which the MoPU 12 calculates a speed score that is a score related to a speed of an object appearing in the camera 30 and changes the frame rate of the camera 30 in accordance with the speed score will be described. In an example, the speed score is set to be higher as the object speed increases and is set to be lower as the object speed decreases. Then, the MoPU 12 increases the frame rate of the camera 30 as the calculated speed score increases and decreases the frame rate of the camera 30 as the calculated speed score decreases. Therefore, in a case in which the calculated speed score is a threshold value or more due to a high speed of the object, the MoPU 12 changes the frame rate of the camera 30 to 1920 frames/second. In a case in which the calculated speed score is less than the threshold value due to a low speed of the object, the MoPU 12 changes the frame rate of the camera 30 to 120 frames/second. Note that a control signal may be output to the radar 32 and the infrared camera 34 to acquire the radar signal and capture the infrared image with numerical values in accordance with the changed frame rate of the camera 30 (to perform image capturing to acquire the radar signal and obtain the infrared image with the numerical values in accordance with the changed frame rate of the camera 30) in this case as well similarly to the above case.

Next, a case in which the MoPU 12 calculates a direction score that is a score related to the moving direction of the object appearing in the camera 30 and changes the frame rate of the camera 30 in accordance with the direction score will be described. In an example, the direction score is set to be higher as the moving direction of the object is a direction approaching a road and is set to be lower as the moving direction is a direction separating further away from the road. Then, the MoPU 12 increases the frame rate of the camera 30 as the calculated direction score increases and decreases the frame rate of the camera 30 as the direction score decreases. Specifically, the MoPU 12 specifies the moving direction of the object by using AI or the like and calculates the direction score on the basis of the specified moving direction. Then, in a case in which the moving direction of the object is the direction approaching the road and the calculated direction score is thus a threshold value or more, the MoPU 12 changes the frame rate of the camera 30 to 1920 frames/second. In a case in which the moving direction of the object is the direction separating further from the road and the calculated direction score is thus less than the threshold value, the MoPU 12 changes the frame rate of the camera 30 to 120 frames/second. Note that a control signal may be output to the radar 32 and the infrared camera 34 to acquire the radar signal and capture the infrared image with numerical values in accordance with the changed frame rate of the camera 30 in this case as well similarly to the above case.

Furthermore, the MoPU 12 may output the point information only for an object with the calculated score related to the external environment of not less than a predetermined threshold value. In this case, the MoPU 12 may determine whether or not to output the point information regarding the object in accordance with the moving direction of the object appearing in the camera 30, for example. For example, the MoPU 12 may not output the point information regarding an object that less affects the traveling of the vehicle 100. Specifically, the MoPU 12 calculates the moving direction of the object appearing in the camera 30 and does not output point information regarding an object such as a pedestrian walking away from the road. On the other hand, the MoPU 12 outputs point information regarding an object approaching the road (for example, an object such as a pedestrian who is likely to jump out into the road). With this configuration, there is no need for the information processing apparatus 10 to output the point information regarding the object that less affects the traveling of the vehicle 100.

Also, the MoPU 12 may calculate a score related to the external environment on the basis of the type of the object based on identification information output by the IPU 11 and change the frame rate of the camera 30 in accordance with the score. For example, a level of danger may be calculated as a score, and the frame rate of the camera 30 may be changed in accordance with the level of danger. Hereinafter, a case in which the frame rate of the camera 30 is changed in accordance with the score based on the type of the object will be described. In a case in which the object is an animal that moves quickly, such as a person, a dog, or a deer, for example, the level of danger related to the moving of the vehicle 100 is high. Therefore, the MoPU 12 calculates a relatively high score and increases the frame rate of the camera 30 in accordance with the calculated score. Specifically, the frame rate is changed to 1920 frames/second. On the other hand, in a case in which the object has a relatively small change in moving speed like a vehicle or is a still object, the level of danger related to the movement of the vehicle 100 is low. Therefore, the MoPU 12 calculates a relatively low score and decreases the frame rate of the camera 30 in accordance with the calculated score. Specifically, the frame rate of the camera 30 is changed to any of 240, 480, and 960 frames/second.

Note that the type of the object may be further finely classified, the level of danger may be changed in a stepwise manner in accordance with the classified type of the object, and the frame rate may be thereby changed in a stepwise manner in accordance with the level of danger changed in a stepwise manner. For example, animals other than persons, such as dogs and deer, move faster than persons. Therefore, the MoPU 12 may set the frame rate to be higher than that for persons in a case in which the type of the object is an animal other than a person. Specifically, the frame rate of the camera 30 may be changed to 1920 frames/second in a case in which the type of the object is an animal other than a person, and the frame rate of the camera 30 may be changed to 960 frames/second in a case in which the type of the object is a person.

Also, the IPU 11 may detect the number of identified objects, and the MoPU 12 may calculate the score related to the external environment on the basis of the types of the objects based on the identification information output by the IPU 11 and the number of objects and change the frame rate of the camera 30 in accordance with the calculated score. Hereinafter, a case in which the frame rate of the camera 30 is changed in accordance with the score based on the types of objects and the number of objects will be described. For example, the MoPU 12 increases the frame rate of the camera 30 as the number of objects increases. Here, the MoPU 12 derives a score S1 of a level of danger in accordance with the types of objects and a score S2 of a level of danger in accordance with the number of objects. The score S2 of the level of danger in accordance with the number of objects increases as the number of objects increases. For example, the score of the level of danger is set to a value of 0 or more but 1 or less, and first to fourth threshold values are set in accordance with the number of objects. As the first to fourth threshold values, 0.2, 0.4, 0.6, and 0.8, for example, are used.

Then, the MoPU 12 multiplies the score S1 in accordance with the types of the objects by the score S2 in accordance with the number of objects to thereby calculate the score S1·S2 related to the external environment on the basis of the types of the objects and the number of objects. In this case, the MoPU 12 changes the frame rate of the camera 30 on the basis of the calculated score S1·S2. Here, in a case in which the object is a person and a predetermined number or more of persons are detected, a level of danger related to movement of the vehicle 100 is high. Therefore, the MoPU 12 increases the frame rate of the camera 30. Specifically, the frame rate is changed to 1920 frames/second. On the other hand, in a case in which the number of persons is less than the predetermined number, the level of danger related to movement of the vehicle 100 slightly decreases, and the MoPU 12 thus changes the frame rate of the camera 30 to 960 frames/second. Here, in a case in which the objects are still objects, and a predetermined number or more of still objects are detected, the level of danger related to the movement of the vehicle 100 is lower than that of persons. Therefore, the MoPU 12 decreases the frame rate of the camera 30 as compared with the case in which the objects are persons. Specifically, the frame rate is changed to 240 frames/second. On the other hand, in a case in which the number of still objects is less than the predetermined number, the level of danger related to movement of the vehicle 100 is lower than that in the case in which the number of objects is the predetermined number or more, and the MoPU 12 thus changes the frame rate of the camera 30 to 120 frames/second, for example.

Furthermore, although the case in which the MoPU 12 calculates the level of danger has been exemplified in the above description, the disclosed technology is not limited to the aspect. For example, the central brain 15 may calculate the level of danger instead of the MoPU 12. In this case, the central brain 15 calculates the level of danger related to movement of the vehicle 100 as a score related to the external environment of the vehicle 100 on the basis of sensor information taken from a plurality of kinds of sensors and point information output from the MoPU 12. Then, the central brain 15 outputs an instruction to change the frame rate of the camera 30 to the MoPU 12 in accordance with the calculated level of danger.

Although the case in which the MoPU 12 outputs the point information on the basis of the image captured by the camera 30 (the image obtained by the camera 30 performing image capturing) has been exemplified in the above description, the disclosed technology is not limited to the aspect. For example, the MoPU 12 may output the point information on the basis of a radar signal and an infrared image instead of the image captured by the camera 30 (the image obtained by the camera 30 performing image capturing). The MoPU 12 can derive an x coordinate value and a y coordinate value of the object from the infrared image of the object captured by the infrared camera 34 similarly to the image captured by the camera 30 (the image obtained by the camera 30 performing image capturing). The radar 32 can acquire three-dimensional point cloud data of the object based on the radar signal. In other words, the radar 32 can detect a coordinate along a z axis in the three-dimensional orthogonal coordinate system. Here, the z axis is an axis along the depth direction of the object and the traveling direction of the vehicle 100, and hereinafter, a coordinate value along the z axis will be referred to as a "z coordinate value". In this case, the MoPU 12 uses the principle of a stereo camera to derive coordinate values along three coordinate axes (the x axis, the y axis, and the z axis) of the object as point information by combining an x coordinate value and a y coordinate value of the object imaged by the infrared camera 34 at the same timing as the radar 32 acquiring the three-dimensional point cloud data of the object and a z coordinate value of the object indicated by the three-dimensional point cloud data. Then, the MoPU 12 outputs the derived point information to the central brain 15.

Note that in a case in which the MoPU 12 derives the z coordinate value of the object in this manner, the frame rate of the camera 30 may be changed in accordance with the z coordinate value. The z coordinate value is an example of the coordinate value in the depth direction of the disclosure. As described above, since the z coordinate value is a coordinate value in the depth direction of the object and in the traveling direction of the vehicle 100, the object is present at a position separated further away from the vehicle 100 as the z coordinate value increases. Therefore, in a case in which a threshold value is set for the z coordinate value, and the z coordinate value is the threshold value or more, for example, the object is present at a position separated from the vehicle 100, the level of danger is thus relatively low, and the frame rate is set to be low (120 frames/second, for example). On the other hand, in a case in which the z coordinate value is less than the threshold value, the object is present at a position close to the vehicle 100, the level of danger is thus relatively high, and the frame rate is set to be high (1920 frames/second, for example).

In addition, the frame rate may be finely changed by finely setting the threshold value of the z coordinate value stepwise. For example, three threshold values, namely a first threshold value, a second threshold value, and a third threshold value increasing in this order may be set, the frame rate is set to 1920 frames/second, for example, in a case in which the z coordinate value is less than the first threshold value, the frame rate may be set to 960 frames/second, for example, in a case in which the z coordinate value is the first threshold value or more but less than the second threshold value, the frame rate may be set to 480 frames/second in a case in which the z coordinate value is the second threshold value or more but less than the third threshold value, and the frame rate may be set to 120 frames/second in a case in which the z coordinate value is the third threshold value or more.

Furthermore, although the case in which the MoPU 12 derives the point information has been exemplified in the above description, the disclosed technology is not limited to this aspect. For example, the central brain 15 may calculate the point information instead of the MoPU 12. The deriving of the point information by the central brain 15 is realized by combining information detected by the camera 30L, the camera 30R, the radar 32, and the infrared camera 34, for example. As a specific example, the central brain 15 derives coordinate values of the object along the three coordinate axes (the x axis, the y axis, and the z axis) as the point information by performing triangulation on the basis of the x coordinate value and the y coordinate value of the object imaged by the camera 30L and the x coordinate value and the y coordinate value of the object imaged by the camera 30R.

Furthermore, although the case in which the central brain 15 controls automatic driving of the vehicle 100 on the basis of the image and the label information output from the IPU 11 and the point information output from the MoPU 12 has been exemplified in the above description, the disclosed technology is not limited to the aspect. For example, the central brain 15 may perform operation control of a robot on the basis of the above information output from the IPU 11 and the MoPU 12. The robot may be a humanoid smart robot that performs work instead of a human. In this case, the central brain 15 performs operation control of arms, palms, fingers, feet, and the like of the robot on the basis of the above information output from the IPU 11 and the MoPU 12 and causes the robot to perform operations such as gripping, catching, holding, carrying on its back, moving, carrying, throwing, kicking, and avoiding an object. In a case in which the central brain 15 performs operation control of the robot, the IPU 11 and the MoPU 12 may be mounted at the positions of the right eye and the left eye of the robot. In other words, the IPU 11 and the MoPU 12 for the right eye may be mounted on the right eye, and the IPU 11 and the MoPU 12 for the left eye may be mounted on the left eye.

Furthermore, the MoPU 12 changes the frame rate of the camera 30 in accordance with position information as an example of the predetermined reason in the second aspect of the present embodiment. The position information described here can be the position of the camera 30 or the position the information processing apparatus 10 including the camera 30, or something that mounts the information processing apparatus 10 therein, specifically, the vehicle 100 or the robot. In the following description, a case in which the position information is the position information of the vehicle 100 will be exemplified. In this case, the MoPU 12 may change the frame rate of the camera 30 in consideration of whether or not the position where the vehicle 100 is traveling is a position where objects are likely to be detected.

In a case in which the position where the vehicle 100 is traveling is a position where the camera 30 is more likely to detect objects such as a road with many people, the MoPU 12 increases the frame rate of the camera 30. On the contrary, in a case in which the position where the vehicle 100 is traveling is a position where the camera 30 is less likely to detect objects such as a road with a small number of people, the MoPU 12 decreases the frame rate of the camera 30. If the frame rate of the camera 30 is changed in consideration of the likelihood that objects are detected, it is possible to further compress the amount of data to be output by the MoPU 12 to the central brain 15.

At the aforementioned position where the camera 30 is more likely to detect objects, the frame rate of the camera 30 is changed to 1920 frames/second, for example. On the other hand, at the position where the camera 30 is less likely to detect objects, the frame rate of the camera 30 is changed to 120 frames/second, for example. Note that the switching of the frame rate described above is an example, and it is also possible to perform the change among some selectable frame rates, for example, to any of 120, 240, 480, 960, and 1920 frames/second, for example, in accordance with the likelihood that the camera 30 will detect objects, for example.

In order to estimate the likelihood that objects are detected at the position where the vehicle 100 is traveling, the MoPU 12 may collect a frequency at which objects have been detected at each position in the surroundings of the camera 30 and generate collected data or a heat map. The frequency at which objects have been detected in the past can be collected by the central brain 15 acquiring the frequency from history information of the camera 30 having detected objects in the past and/or a server or the like, which is not illustrated, that records history information collected by a plurality of information processing apparatuses 10, for example, via a network. The MoPU 12 generates a heat map reflecting the detection frequency of objects in the past on the basis of the collected information and changes the frame rate of the camera 30 on the basis of the position information of the position where the vehicle 100 is traveling and the aforementioned heat map. It is possible to immediately and accurately estimate the likelihood that objects will be detected at the position where the vehicle 100 is traveling by changing the frame rate using the heat map in this manner.

The aforementioned first aspect and the second aspect of the present embodiment can be combined. In other words, the MoPU 12 can also change the frame rate of the camera 30 in accordance with the position information of the camera 30 and the score related to the external environment.

Furthermore, the MoPU 12 changes the frame rate of the camera 30 on the basis of information regarding a user acquired from the user as an example of the predetermined reason in a third aspect of the present embodiment. In this case, the MoPU 12 may specify an optimum frame rate of the camera 30 from information that can be acquired from a user, for example, a passenger of the vehicle 100 in which at least a part of the information processing apparatus 10 is mounted.

Although various kinds of information can be assumed as the information regarding the user acquired from the user, the information may include at least one of sound information from the user, image information obtained by imaging the user, or heart rate information of the user, for example. Note that the information regarding the user is not limited to the above information and may include information input by the user via an input means such as a button, for example.

In a case in which sound information from the user is adopted as the information regarding the user, the information processing apparatus 10 may be connected to a microphone, which is not illustrated, installed at an appropriate location in the vehicle 100, for example, in order to acquire the sound information. In a case in which the sound information acquired via the microphone includes sound such as "visibility is bad" or "there are many people" spoken by the user, for example, the MoPU 12 determines that the camera 30 is more likely to detect objects and increases the frame rate in order to immediately detect the objects. On the contrary, in a case in which the sound information acquired by the microphone includes sound such as "visibility is good" or "there are no people" spoken by the user, for example, the MoPU 12 determines that the camera 30 is less likely to detect objects and decreases the frame rate.

In a case in which image information obtained by imaging the user is adopted as the information regarding the user, the information processing apparatus 10 may be connected to an in-vehicle camera, which is not illustrated, installed at an appropriate location in the vehicle 100, for example, to acquire the image information. The in-vehicle camera is preferably set in a direction in which the in-vehicle camera can image a facial expression of the user inside the vehicle. In a case in which a nervous facial expression of the user or a facial expression showing that the user is carefully observing the surroundings is detected from the image information acquired via the intra-camera, the MoPU 12 determines that the camera 30 is more likely to detect objects and increases the frame rate to be able to immediately detect the objects. On the contrary, in a case in which the user shows a relaxed facial expression, the MoPU 12 determines that the camera 30 is less likely to detect objects and decreases the frame rate.

In a case in which the heart rate information of the user is adopted as the information regarding the user, the information processing apparatus 10 may be connected to a sensor, which is not illustrated, installed in a seat or the like inside the vehicle, for example, to acquire the heat rate information. In a case in which a heat rate per unit time included in the heart rate information acquired via the sensor is higher than a heart rate of the user at a normal time, it is determined that the user is nervous and the camera 30 is more likely to detect objects, and the frame rate is increased to be able to immediately detect the objects. On the contrary, in a case in which the heart rate per unit time included in the heart rate information acquired via the sensor is lower than the heart rate of the user at the normal time, the MoPU 12 determines that the camera 30 is less likely to detect objects and decreases the frame rate.

At the aforementioned position where the camera 30 is more likely to detect objects, the frame rate of the camera 30 is changed to 1920 frames/second, for example. On the other hand, at the position where the camera 30 is less likely to detect objects, the frame rate of the camera 30 is changed to 120 frames/second, for example. Note that the switching of the frame rate described above is an example, and it is also possible to perform the change among some selectable frame rates, for example, to any of 120, 240, 480, 960, and 1920 frames/second, for example, in accordance with the likelihood that the camera 30 will detect objects, for example.

It is possible to further compress the amount of data to be output by the MoPU 12 to the central brain 15 by estimating the likelihood that objects will be detected from the information regarding the user and changing the frame rate of the camera 30 as described above. In addition, the first aspect and the second aspect of the aforementioned embodiment can be combined. In other words, the MoPU 12 can also change the frame rate of the camera 30 in accordance with the information regarding the user acquired from the user and the score related to the external environment.

(Third Embodiment)

Next, a third embodiment according to the present embodiment will be described while parts overlapping the above embodiments are omitted or simplified.

In an example, an information processing apparatus 10 according to the third embodiment has a configuration illustrated in Fig. 2 similar to that of the first embodiment.

An MoPU 12 according to the third embodiment outputs coordinate values of at least two points that are diagonals of vertexes of a polygon surrounding an outline of an object recognized from an image captured by another camera (an image obtained by the other camera performing image capturing) as point information. Similarly to the first embodiment, the coordinate values are an x coordinate value and a y coordinate value of the object in the three-dimensional orthogonal coordinate system.

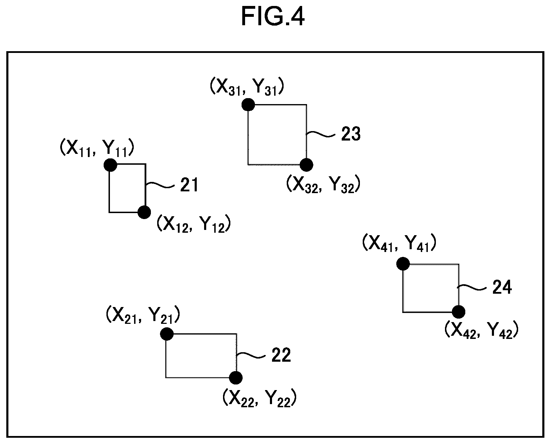

Fig. 4 is an explanatory diagram illustrating an example of point information output by the MoPU 12. Fig. 4 illustrates bounding boxes 21, 22, 23, and 24 each surrounding outlines of four objects included in an image captured by the other camera (the image obtained by the other camera performing image capturing) by quadrangles in the MoPU 12. Also, Fig. 4 illustrates an aspect in which the MoPU 12 outputs coordinate values at two points that are diagonals of vertexes of each of the quadrangular bounding boxes 21, 22, 23, and 24 surrounding the outlines of the objects as point information. In this manner, the MoPU 12 may regard the objects not as points but as objects having certain sizes.

Furthermore, in a case in which the objects are regarded as objects having certain sizes, the MoPU 12 may output coordinate values of a plurality of vertexes of polygons surrounding the outlines of the objects as point information instead of the coordinate values at the two points that are diagonals of the vertexes of the polygons surrounding the outlines of the objects recognized from the image captured by the other camera (the image obtained by the other camera performing image capturing). In the example in Fig. 4, the MoPU 12 may output, as the point information, the coordinate values of all the four vertexes of each of the bounding boxes 21, 22, 23, and 24 surrounding the outlines of the objects by quadrangles, for example.

(Fourth Embodiment)

Next, a fourth embodiment according to the present embodiment will be described while parts overlapping the above embodiments are omitted or simplified.

In an example, an information processing apparatus 10 according to the fourth embodiment has a configuration illustrated in Fig. 2 similar to that of the first embodiment.

A vehicle 100 in which the information processing apparatus 10 according to the fourth embodiment is mounted includes a sensor including at least one of a radar, a LiDAR, a high-pixel, telephoto, ultra-wide angle, 360-degree, and high-performance camera, a vision sensor, a sound sensor, an ultrasonic sensor, a vibration sensor, an infrared sensor, an ultraviolet sensor, a radio wave sensor, a temperature sensor, or a humidity sensor. Sensor information taken by the information processing apparatus 10 from the sensor includes movement of the center of gravity of the weight, detection of a material of a road, detection of the outside air temperature, detection of the outside air humidity, detection of vertical and lateral oblique inclination angles of a slope, a way of freezing of the road, detection of the moisture amount, a material of each tire, a wear state, detection of the air pressure, a road width, presence or absence of overtaking prohibition, vehicle type information of an oncoming vehicle and front and rear vehicles, a cruising state of these vehicles, and surrounding situations (such as a bird, an animal, a soccer ball, an accident vehicle, an earthquake, fire, wind, typhoon, heavy rain, light rain, snowstorm, and fog). The sensor is an example of the "detection unit", and the sensor information is an example of the "detection information.

A central brain 15 according to the fourth embodiment calculates a control variable for controlling automatic driving of the vehicle 100 on the basis of the sensor information detected by the sensor. The central brain 15 acquires the sensor information every 1/1 billion seconds. Specifically, the central brain 15 calculates control variables to control a wheel speed, inclination, and suspension of supporting the wheel for each of four wheels of the vehicle 100. Note that the inclination of the wheel includes both an inclination of the wheel with respect to an axis horizontal to the road and an inclination of the wheel with respect to an axis vertical to the road. In this case, the central brain 15 calculates a total of sixteen control variables for controlling the wheel speed of each of the four wheels, the inclination of each of the four wheels with respect to the axis horizontal to the road, the inclination of each of the four wheels with respect to the axis vertical to the road, and the suspension supporting each of the four wheels.

Then, the central brain 15 controls the automatic driving of the vehicle 100 on the basis of the above calculated control variables, the point information output from the MoPU 12, and the label information output from the IPU 11. Specifically, the central brain 15 performs automatic driving by controlling the in-wheel motor mounted on each of the four wheels on the basis of the sixteen control variables and thereby controlling the wheel speed and the inclination of each of the four wheels of the vehicle 100 and the suspension supporting each of the four wheels. Furthermore, the central brain 15 recognizes positions and motion of the objects that are present in the surroundings of the vehicle 100 and recognized as something on the basis of the point information and the label information and controls the automatic driving of the vehicle 100 to avoid collision against the objects, for example, on the basis of the recognized information. It is possible to perform optimal steering suitable for a mountain road in a case in which the vehicle 100 is traveling on the mountain road, for example, by the central brain 15 controlling the automatic driving of the vehicle 100 in this manner, and it is possible to cause the vehicle 100 to travel at an optimal angle suitable for a parking spot when the vehicle 100 is to be parked at the parking spot.

Here, the central brain 15 may be able to infer the control variables from the sensor information and information that can be acquired from a server or the like, which is not illustrated, via a network using machine learning, more specifically, deep learning. In other words, the central brain 15 can be configured of AI.

The central brain 15 may obtain control variables by performing multivariate analysis (for example, see Expression (2), for example) by an integration method as represented by Expression (1) below using the above sensor information of every 1/1 billion seconds and a calculation capability for realizing Level 6, which is a calculation capability of long tail incident AI data (hereinafter, also referred to as a "calculation capability of Level 6"). More specifically, each control variable may be obtained at an edge level and in real time while an integral value of a delta value of various ultra high resolutions is obtained by the calculation capability of Level 6, and a result generated in next 1/1 billion seconds (that is, each control variable) may be acquired at the highest probabilistic value. In order to realize this, an integral value obtained by time-integrating a delta value (for example, a minute time change value) of a function (in other words, a function indicating a behavior of each variable) capable of specifying each variable (for example, the sensor information and information that can be acquired via the network) such as an air resistance, a road resistance, a road element (for example, a trash), and a slip coefficient is input to a deep learning model (for example, a trained model obtained by performing deep learning on a neural network) of the central brain 15. The deep learning model of the central brain 15 outputs a control variable (for example, the control variable with the highest certainty factor (that is, an evaluation value)) corresponding to the input integral value. The output of the control variable is performed in units of 1/1 billion seconds.

[Math. 1]

$$V = \int_a^b f(A)dt \qquad (1)$$

[Math. 2]

$$V_n = DL\big(f(A,B,C,\ldots,N)(dA_n/dt)\big) \qquad (2)$$

Note that in an example, "f(A)" in Expression (1) is an expression of expressing, in a simplified manner, a function indicating a behavior of each variable such as an air resistance, a road resistance, a road element (for example, a trash), and a slip coefficient. Furthermore, Expression (1) is an expression indicating a time integral v of "f(A)" from a clock time a to a clock time b. In Expression (2), DL represents deep learning (for example, a deep learning model optimized by performing deep learning on a neural network), $dA_n/dt$ represents a delta value of f(A, B, C, D, ..., N), A, B, C, D, ..., N and each represent variables such as an air resistance, a road resistance, a road element (for example, a trash), and a slip coefficient, f(A, B, C, D, ..., N) represents a function representing functions indicating behaviors of A, B, C, D, ..., N, and $V_n$ represents a value (control variable) output from the deep learning model optimized by performing deep learning on the neural network.

Note that although an exemplary aspect in which the integral value obtained by time-integrating the delta value of the function is input to the deep learning model of the central brain 15 has been exemplified here, this is just an example. For example, an integral value (for example, a result generated in next 1/1 billion seconds) obtained by time-integrating the delta value of the function indicating a behavior of each variable such as an air resistance, a road resistance, a road element, or a slip coefficient may be inferred by the deep learning model of the central brain 15, and an integral value of the highest certainty factor (that is, the evaluation value) may be acquired as a result of the inferring by the central brain 15 every 1/1 billion seconds.

Furthermore, although the exemplary aspect in which the integral value is input to the deep learning model or the integral value is output from the deep learning model has been described here, this is just an example, and the disclosed technology is established without using the integral value. For example, at least one control variable may be inferred by a deep learning model optimized by performing deep learning on a neural network using teacher data in which values corresponding to A, B, C, D, ..., N are used as example data and values corresponding to the at least one control variable (for example, the result generated in next 1/1 billion seconds) is used as correct answer data.

The control variables obtained by the central brain 15 may be further refined by increasing the number of times deep learning is performed. For example, it is possible to calculate more accurate control variables by using enormous amount of data such as tires, rotation of a motor, a steering angle, a material of a road, weather, influences of trashes and at the time of secondary curved deceleration, slip, steering for collapse or re-acquisition of a balance, a speed control method, or the like, and long tail incident AI data.

(Fifth Embodiment)

Next, a fifth embodiment according to the present embodiment will be described while parts overlapping the above embodiments are omitted or simplified.

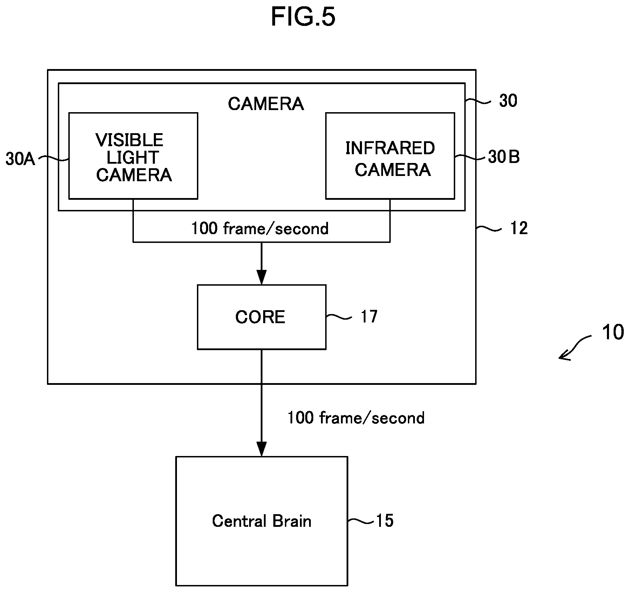

Fig. 5 is a third block diagram illustrating an example of a configuration of an information processing apparatus 10. Note that Fig. 5 illustrates only a part of the configuration of the information processing apparatus 10.

As illustrated in Fig. 5, each of a visible light image and an infrared image of an object captured by a camera 30 is input to a core 17 at a frame rate of 100 frames/second or more in an MoPU 12. The camera 30 is configured to include a visible light camera 30A capable of capturing a visible light image of the object and an infrared camera 30B capable of capturing an infrared image of the object. Then, the core 17 outputs point information to a central brain 15 on the basis of at least one of the input visible light image or infrared image.

Here, in a case in which the object can be identified from the visible light image of the object captured by the visible light camera 30A, the core 17 outputs the point information on the basis of the visible light image. On the other hand, in a case in which no objects can be captured from the visible light image for a predetermined reason, the core 17 outputs the point information on the basis of the infrared image of the object captured by the infrared camera 30B. For example, it is assumed that the core 17 cannot capture an object from the visible light image due to the influence of darkness as a predetermined reason. In this case, the core 17 detects heat of the object using the infrared camera 30B and outputs the point information of the object on the basis of the infrared image that is a result of the detection. Note that the core 17 is not limited thereto and may output the point information on the basis of the visible light image and the infrared image.

Furthermore, the MoPU 12 synchronizes a timing at which the visible light camera 30A captures the visible light image (the image capturing to obtain the visible light image is performed by the visible light camera 30A) with a timing at which the infrared camera 30B captures the infrared image (the image capturing to obtain the infrared image is performed by the infrared camera 30B). Specifically, the MoPU 12 outputs a control signal to the camera 30 to capture the visible light image and the infrared image at the same timing (the MoPU 12 performs visible light image capturing infrared light image capturing). In this manner, the number of images per second captured by the visible light camera 30A (the number of images per second obtained by the visible light camera 30A performs image capturing) and the number of images per second captured by the infrared camera 30B (the number of images per second obtained by the infrared camera 30B performing image capturing) are synchronized (1920 frames/second, for example).

(Sixth Embodiment)

Next, a sixth embodiment according to the present embodiment will be described while parts overlapping the above embodiments are omitted or simplified.

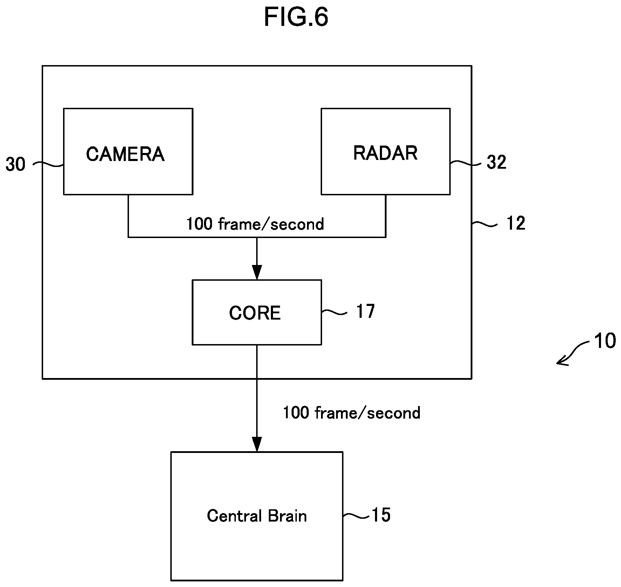

Fig. 6 is a fourth block diagram illustrating an example of a configuration of an information processing apparatus 10. Note that Fig. 6 illustrates only a part of the configuration of the information processing apparatus 10.

As illustrated in Fig. 6, each of an image of an object captured by a camera 30 and a radar signal based on a reflected wave of an electromagnetic wave emitted by a radar 32 to the object from the object is input to a core 17 at a frame rate of 100 frames/second or more in an MoPU 12. Then, the core 17 outputs point information to a central brain 15 on the basis of the input image of the object and the radar signal. The core 17 can derive an x coordinate value and a y coordinate value of the object from the input image of the object. As described above, the radar 32 can acquire three-dimensional point cloud data of the object based on the radar signal and detect a coordinate along a z axis in the three-dimensional orthogonal coordinate system. In this case, the core 17 uses the principle of a stereo camera to derive coordinate values along the three coordinate axes (the x axis, the y axis, and the z axis) of the object as point information by combining an x coordinate value and a y coordinate value of the object imaged by the camera 30 at the same timing as a timing at which the radar 32 acquires the three-dimensional point cloud data of the object and a z coordinate value of the object indicated by the three-dimensional point cloud data. Note that the image of the object input to the core 17 as described above may include at least one of a visible light image or an infrared image.

Also, the MoPU 12 synchronizes the timing at which the camera 30 captures the image (the camera 30 performs image capturing) with the timing at which the radar 32 acquires the three-dimensional point cloud data of the object based on the radar signal. Specifically, the MoPU 12 outputs a control signal to the camera 30 and the radar 32 in order to capture images at the same timing and acquire the three-dimensional point cloud data of the object. In this manner, the number of images per second captured by the camera 30 (the number of images per second obtained by the camera 30 performing image capturing) and the number of items of three-dimensional point cloud data per second acquired by the radar 32 are synchronized (1920 frames/second, for example). In this manner, the number of images per second captured by the camera 30 and the number of items of three-dimensional point cloud data per second acquired by the radar 32 are larger than a frame rate of an ultra-high-definition camera included in the IPU 11, that is, the number of images per second captured by the ultra-high-definition camera (the number of images per second obtained by the ultra-high-definition camera performing image capturing).

(Seventh Embodiment)

Next, a seventh embodiment according to the present embodiment will be described while parts overlapping the above embodiments are omitted or simplified.

In an example, an information processing apparatus 10 according to the seventh embodiment has a configuration illustrated in Fig. 2 similar to that of the first embodiment.

A central brain 15 according to the seventh embodiment associates point information output from an MoPU 12 at the same timing as the timing at which the IPU 11 outputs label information with the label information. Furthermore, in a case in which new point information is output from the MoPU 12 after the point information and the label information are associated, the central brain 15 also associates the new point information with the label information. The new point information is point information of the same object as the object indicated by the point information associated with the label information and is one or more items of point information until the next label information is output after the association. Similarly to the above embodiments, a frame rate of another camera incorporating the MoPU 12 is 100 frames/second or more (1920 frames/second, for example), and a frame rate of the ultra-high-definition camera incorporating the IPU 11 is 10 frames/second in the seventh embodiment.

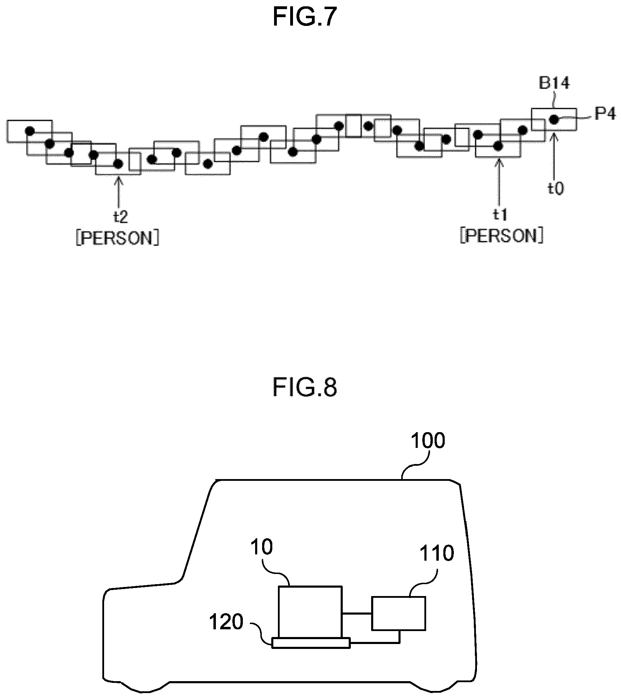

Fig. 7 is an explanatory diagram illustrating an example of the association between the point information and the label information. In the following description, the number of items of the point information per second output from the MoPU 12 will be referred to as an "output rate of the point information" while the number of items of label information per second output from the IPU 11 will be referred to as an "output rate of the label information".

Fig. 7 illustrates a time series of output rates of point information P4 of an object B14. The output rate of the point information P4 for the object B14 is 1920 frames/second. Also, the point information P4 is moving from the right to the left in the drawing. The output rate of the label information for the object B14 is 10 frames/second, which is lower than the output rate of the point information P4.

First, at a clock time t0, the label information regarding the object B14 has not been output from the IPU 11. Therefore, the central brain 15 does not recognize what the object B14 is while the central brain 15 recognizes coordinate values (position information) of the object B14 on the basis of the point information P4 at the clock time t0.

Next, at a clock time t1, label information regarding the object B14 is output from the IPU 11. Therefore, the central brain 15 derives label information "PERSON" for the object B14 on the basis of the label information. Then, the central brain 15 associates the label information "PERSON" derived at the clock time t1 with the coordinate values (position information) of the point information P4 output from the MoPU 12 at the clock time t1. In this manner, at the clock time t1, the central brain 15 recognizes the coordinate values (position information) of the object B14 on the basis of the point information P4 and also recognizes what the object B14 is.

In Fig. 7, the timing at which the next label information for the object B14 is output from the IPU 11 is a clock time t2. Therefore, at the clock time t2, the central brain 15 derives the label information "PERSON" for the object B14 on the basis of the label information output from the IPU 11. Then, the central brain 15 associates the label information "PERSON" derived at the clock time t2 with the coordinate values (position information) of the point information P4 output from the MoPU 12 at the clock time t2.

Here, the central brain 15 acquires the point information P4 for the object B14 while it does not acquire the label information in the period from the clock time t1 to the clock time t2 due to a frame rate difference between another camera incorporating the MoPU 12 and the ultra-high-definition camera incorporating the IPU 11. In this case, the central brain 15 associates the point information P4 acquired in the period from the clock time t1 to the clock time t2 with the label information "PERSON" associated with the point information P4 at the clock time t1 right before. Here, the point information P4 acquired by the central brain 15 in the period from the clock time t1 to the clock time t2 is an example of the "new point information". In the example illustrated in Fig. 7, a plurality of items of point information P4 are output from the MoPU 12 in the period from the clock time t1 to the clock time t2, and the central brain 15 thus acquires the plurality of items of point information P4. Therefore, the central brain 15 associates any of the plurality of items of point information P4 acquired in the period from the clock time t1 to the clock time t2 with the label information "PERSON" associated at the clock time t1 immediately before in the example illustrated in Fig. 7. In this case, in a case in which one item of point information P4 is output from the MoPU 12 in the period from the clock time t1 to the clock time t2 unlike the example illustrated in Fig. 7, the central brain 15 associates the one item of point information P4 with the label information "PERSON" associated at the clock time t1 immediately before.

Here, even if a period during which the type of the object, the motion of which is being tracked, is not sure occurs, the point information of the object is continuously output at a high frame rate, and a risk that the central brain 15 misses the coordinate values (position information) of the object is thus low. Therefore, in a case in which the point information and the label information are associated once, the central brain 15 can apply the previous label information to the point information acquired before the next label information is acquired in an estimated manner.

(Eighth Embodiment)

Next, an eighth embodiment according to the present embodiment will be described while parts overlapping the above embodiments are omitted or simplified.

Heat generation when an information processing apparatus 10 that controls automatic driving of a vehicle 100 performs advanced arithmetic processing is problematic. Thus, the vehicle 100 equipped with a cooling function for the information processing apparatus 10 is provided in the eighth embodiment.

Fig. 8 is an explanatory diagram illustrating a schematic configuration of the vehicle 100. As illustrated in Fig. 8, the information processing apparatus 10, a cooling execution apparatus 110, and a cooling unit 120 are mounted in the vehicle 100.

The information processing apparatus 10 according to the eighth embodiment is an apparatus that controls automatic driving of the vehicle 100 and includes a configuration illustrated in Fig. 2 similar to the first embodiment in an example. The cooling execution apparatus 110 acquires a result of detecting an object by the information processing apparatus 10 and causes the cooling unit 120 to execute cooling of the information processing apparatus 10 on the basis of the detection result. The cooling unit 120 cools the information processing apparatus 10 using at least one cooling means such as an air cooling means, a water cooling means, and a liquid nitrogen cooling means. Although the following description will be given on the assumption that the cooling target in the information processing apparatus 10 is a central brain 15 (specifically, a CPU 14 configuring the central brain 15) that controls automatic driving of the vehicle 100, the cooling target is not limited thereto.

The information processing apparatus 10 and the cooling execution apparatus 110 are communicatively connected via a network, which is not illustrated. The network may be any of a vehicle network, the Internet, a local area network (LAN), and a mobile communication network. The mobile communication network may conform to any of a 5th generation (5G) communication scheme, a long term evolution (LTE) communication scheme, a 3rd generation (3G) communication scheme, and a communication scheme after a 6th generation (6G) communication scheme.

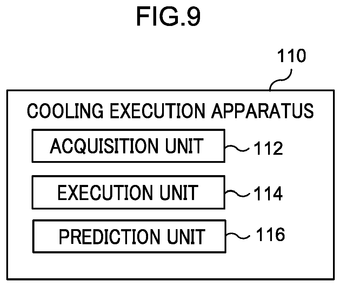

Fig. 9 is a block diagram illustrating an example of a functional configuration of the cooling execution apparatus 110. As illustrated in Fig. 9, the cooling execution apparatus 110 includes, as functional configurations, an acquisition unit 112, an execution unit 114, and a prediction unit 116.

The acquisition unit 112 acquires a result of detecting an object by the information processing apparatus 10. For example, the acquisition unit 112 acquires point information of the object output from the MoPU 12 as the detection result.

The execution unit 114 causes cooling to be performed on the central brain 15 on the basis of the result of detecting the object acquired by the acquisition unit 112. In a case in which the execution unit 114 recognizes that the object is moving on the basis of the point information of the object output from the MoPU 12, for example, the execution unit 114 causes the cooling unit 120 to start the cooling of the central brain 15.

Note that the execution unit 114 is not limited to causing the cooling to be performed on the central brain 15 on the basis of the result of detecting the object and may cause the cooling to be executed on the central brain 15 on the basis of a result of predicting an operating status of the information processing apparatus 10.

Here, the prediction unit 116 predicts the operating status of the information processing apparatus 10, specifically, the central brain 15 on the basis of the result of detecting the object acquired by the acquisition unit 112. For example, the prediction unit 116 acquires a learning model stored in a predetermined storage region. Then, the prediction unit 116 predicts the operating status of the central brain 15 by inputting the point information of the object output from the MoPU 12 and acquired by the acquisition unit 112 to the learning model. Here, the learning model outputs a computing power status and the amount of change of the central brain 15 as the operating status. Furthermore, the prediction unit 116 may predict and output a temperature change in the information processing apparatus 10, specifically, the central brain 15 along with the operating status. For example, the prediction unit 116 predicts the temperature change in the central brain 15 on the basis of the number of items of point information of the object output from the MoPU 12 and acquired by the acquisition unit 112. In this case, the prediction unit 116 predicts that the temperature change will increase as the number of items of point information increases and predicts that the temperature change will decrease as the number of items of point information decreases.

In the above case, the execution unit 114 causes the cooling unit 120 to start the cooling of the central brain 15 on the basis of the result of predicting the operating status of the central brain 15 by the prediction unit 116. In a case in which the computing power status and the amount of change of the central brain 15 predicted as the operating status exceed predetermined threshold values, for example, the execution unit 114 causes the cooling unit 120 to start cooling. In a case in which the temperature based on the temperature change in the central brain 15 predicted as the operating status exceeds a predetermined threshold value, the execution unit 114 causes the cooling unit 120 to start cooling.

Also, the execution unit 114 may use a cooling means in accordance with the result of predicting the temperature change in the central brain 15 by the prediction unit 116 to cause the cooling of the central brain 15 to be executed. For example, the execution unit 114 may cause the cooling unit 120 to execute the cooling by using a larger number of cooling means as the predicted temperature of the central brain 15 is higher. In a specific example, the execution unit 114 causes the cooling unit 120 to execute cooling using one cooling means in a case in which it is predicted that the temperature of the central brain 15 will exceed a first threshold value. On the other hand, the execution unit 114 causes the cooling unit 120 to execute the cooling using a plurality of cooling means in a case in which it is predicted that the temperature of the central brain 15 will exceed a second threshold value that is higher than the first threshold value.

Also, the execution unit 114 may cause the cooling to be executed on the central brain 15 by using a stronger cooling means as the predicted temperature of the central brain 15 is higher. In the case in which it is predicted that the temperature of the central brain 15 will exceed the first threshold value, for example, the execution unit 114 causes the cooling unit 120 to execute the cooling using an air cooling means. In the case in which it is predicted that the temperature of the central brain 15 will exceed the second threshold value that is higher than the first threshold value, the execution unit 114 causes the cooling unit 120 to execute cooling using a water cooling means. Furthermore, in a case in which it is predicted that the temperature of the central brain 15 will exceed a third threshold value that is higher than the second threshold value, the execution unit 114 causes the cooling unit 120 to execute cooling using a liquid nitrogen cooling means.

Furthermore, the execution unit 114 may determine the cooling means to be used for the cooling on the basis of the number of items of point information of the object output from the MoPU 12 and acquired by the acquisition unit 112. In this case, the execution unit 114 may cause the cooling to be executed on the central brain 15 using a stronger cooling means as the number of items of point information increases. In a case in which the number of items of point information exceeds a first threshold value, for example, the execution unit 114 causes the cooling unit 120 to execute cooling using an air cooling means. In a case in which the number of items of point information exceeds a second threshold value that is higher than the first threshold value, the execution unit 114 causes the cooling unit 120 to execute cooling using a water cooling means. Furthermore, in a case in which the number of items of point information exceeds a third threshold value that is higher than the second threshold value, the execution unit 114 causes the cooling unit 120 to execute cooling using a liquid nitrogen cooling means.

Incidentally, there is a case in which a moving object present on a roadway is detected as a trigger for the central brain 15 operating. In a case in which a moving object present on a roadway is detected when the vehicle 100 is performing automatic driving, for example, the central brain 15 may perform arithmetic processing to control the vehicle 100 on the object. As described above, heat generation when the central brain 15 that controls the automatic driving of the vehicle 100 performs advanced arithmetic processing is problematic. Thus, the cooling execution apparatus 110 according to the eighth embodiment predicts heat dissipation of the central brain 15 on the basis of the result of detecting the object by the information processing apparatus 10 and causes the cooling of the central brain 15 to be executed before the start of heat dissipation or at the same time with the start of heat dissipation. In this manner, a temperature rise in the central brain 15 during the automatic driving of the vehicle 100 is suppressed, and it is possible to perform advanced arithmetic processing during the automatic driving.

(Ninth Embodiment)

Next, a ninth embodiment according to the present embodiment will be described while parts overlapping the above embodiments are omitted or simplified.

An MoPU 12 included in an information processing apparatus 10 according to the ninth embodiment derives a z coordinate value of an object as point information from an image of the object captured by a camera 30. Hereinafter, each aspect of the information processing apparatus 10 according to the ninth embodiment will be described in order.

The information processing apparatus 10 according to a first aspect has a configuration illustrated in Fig. 3 similar to the second embodiment.

In the above first aspect, the MoPU 12 derives the z coordinate value of the object as the point information from images of the object captured by a plurality of cameras 30, specifically, a camera 30L and a camera 30R. As described above, it is possible to derive an x coordinate value and a y coordinate value of the object as the point information in a case in which one MoPU 12 is used. Here, in a case in which two MoPUs 12 are used, it is possible to derive the z coordinate value of the object as the point information on the basis of images of the object captured by two cameras 30 using the principle of a stereo camera. Therefore, in the first aspect, the z coordinate value of the object is derived as the point information on the basis of the image of the object captured by each of the camera 30L of the MoPU 12L and the camera 30R of the MoPU 12R using the principle of a stereo camera.

The information processing apparatus 10 according to a second aspect has a configuration illustrated in Fig. 3 similar to the second embodiment.

In the second aspect, the MoPU 12 derives an x coordinate value, a y coordinate value, and a z coordinate value of an object as point information from an image of the object captured by the camera 30 and a radar signal based on a reflected wave of an electromagnetic wave emitted by a radar 32 to the object from the object. As described above, the radar 32 can acquire three-dimensional point cloud data of the object based on the radar signal. In other words, the radar 32 can detect a coordinate along a z axis in the three-dimensional orthogonal coordinate system. In this case, the MoPU 12 derives coordinate values of the object along the three coordinate axes as the point information by combining the x coordinate value and the y coordinate value of the object captured by the camera 30 at the same timing as the timing at which the radar 32 acquires the three-dimensional point cloud data of the object and the z coordinate value of the object indicated by the three-dimensional point cloud data by using the principle of a stereo camera.

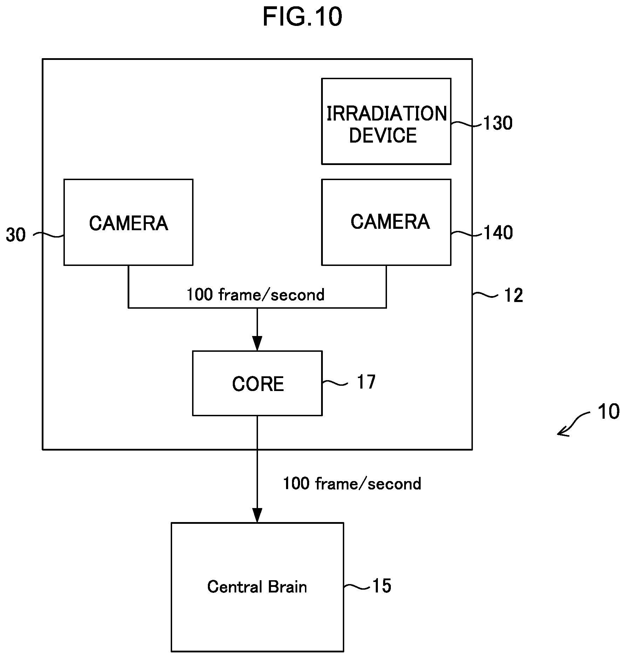

The information processing apparatus 10 according to a third aspect has a configuration illustrated in Fig. 10. Fig. 10 is a fifth block diagram illustrating an example of the configuration of the information processing apparatus 10. Note that Fig. 10 illustrates only a part of the configuration of the information processing apparatus 10.

In the third aspect, the MoPU 12 derives the z coordinate value of the object as the point information from the image of the object captured by the camera 30 and a result of imaging structured light emitted by an irradiation device 130 to the object.

As illustrated in Fig. 10, each of the image of the object captured by the camera 30 and distortion information indicating distortion of a pattern of structured light which is a result of imaging the structured light emitted by the irradiation device 130 to the object by a camera 140 is input to the core 17 at a frame rate of 100 frames/second or more in the MoPU 12. Then, the core 17 outputs the point information to the central brain 15 on the basis of the input image of the object and the distortion information input.

Here, there is a structured light scheme as one method for identifying the three-dimensional position or the shape of the object. The structured light scheme is adapted to irradiate the object with the structured light patterned into a dotted shape and acquire depth information from distortion of the pattern. The structured light scheme is disclosed, for example, in a reference document (http://ex-press.jp/wp-content/uploads/2018/10/018_teledyne_3rd.pdf).

The irradiation device 130 illustrated in Fig. 10 irradiates the object with the structured light. In addition, the camera 140 images the structured light emitted by the irradiation device 130 to the object. Then, the camera 140 outputs the distortion information based on the distortion of the pattern of the imaged structured light to the core 17.

Also, the MoPU 12 synchronizes a timing at which the camera 30 captures the image (the camera 30 performs image capturing) with a timing at which the camera 140 images the structured light. Specifically, the MoPU 12 outputs a control signal to the camera 30 and the camera 140 to capture the images at the same timing (to image the object at the same timing). In this manner, the number of images per second captured by the camera 30 (the number of images per second obtained by the camera 30 performing image capturing) and the number of images per second captured by the camera 140 (the number of images per second obtained by the camera 140 performing image capturing) are synchronized (1920 frames/second, for example). In this manner, the number of images per second captured by the camera 30 (the number of images per second obtained by the camera 30 performing image capturing) and the number of images per second captured by the camera 140 (the number of images per second obtained by the camera 140 performing image capturing) are larger than the frame rate of the ultra-high-definition camera included in the IPU 11, that is, the number of images per second captured by the ultra-high-definition camera.

Then, the core 17 derives the z coordinate value of the object as the point information by combining the x coordinate value and the y coordinate value of the object imaged by the camera 30 at the same timing as the timing at which the camera 140 images the structured light with the distortion information based on the distortion of the pattern of the structured light.

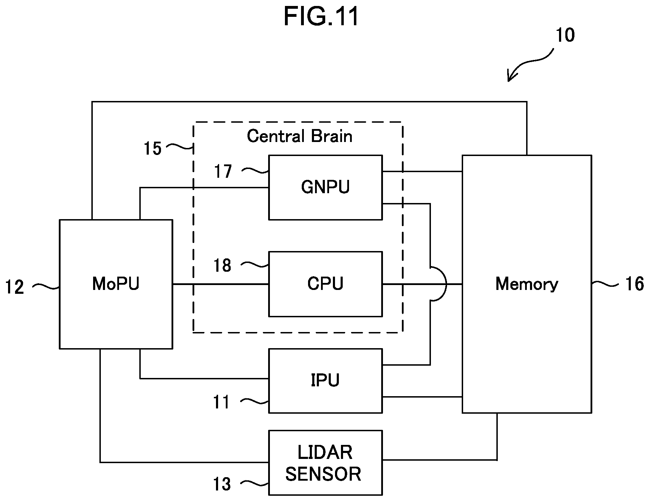

The information processing apparatus 10 according to a fourth aspect has a configuration illustrated in Fig. 11. Fig. 11 is a sixth block diagram illustrating an example of the configuration of the information processing apparatus 10. Note that Fig. 11 illustrates only a part of the configuration of the information processing apparatus 10.

The block diagram illustrated in Fig. 11 is obtained by adding a lidar sensor 18 to the configuration in the block diagram illustrated in Fig. 2. The lidar sensor 18 is a sensor that acquires point cloud data including an object that is present in a three-dimensional space and a road surface on which the vehicle 100 is traveling. The information processing apparatus 10 can derive the position information of the object in the depth direction, that is, the z coordinate value of the object by using the point cloud data acquired by the lidar sensor 18. Note that it is assumed that the point cloud data acquired by the lidar sensor 18 is acquired at intervals longer than those of the x coordinate value and the y coordinate value of the object output from the MoPU 12. Furthermore, the MoPU 12 includes a camera 30 similarly to the above-described aspect of the ninth embodiment.

In the fourth aspect, the MoPU 12 uses the principle of a stereo camera and derives the coordinate values of the object along the three coordinate axes as point information by combining the x coordinate value and the y coordinate value of the object imaged by the camera 30 at the same timing as the timing at which the lidar sensor 18 acquires the point cloud data of the object with the z coordinate value of the object indicated by the point cloud data.

Here, in the fourth aspect, the MoPU 12 derives the z coordinate value of the object at the clock time t + 1 as the point information from the x coordinate value, the y coordinate value, and the z coordinate value of the object at the clock time t and the x coordinate value and the y coordinate value of the object at the point following the clock time t (the clock time t + 1, for example). The clock time t is an example of the "first clock time", and the clock time t + 1 is an example of the "second clock time". In the fourth aspect, the z coordinate value of the object at clock time t + 1 is derived using shape information, that is, geometry. This will be described in detail below.

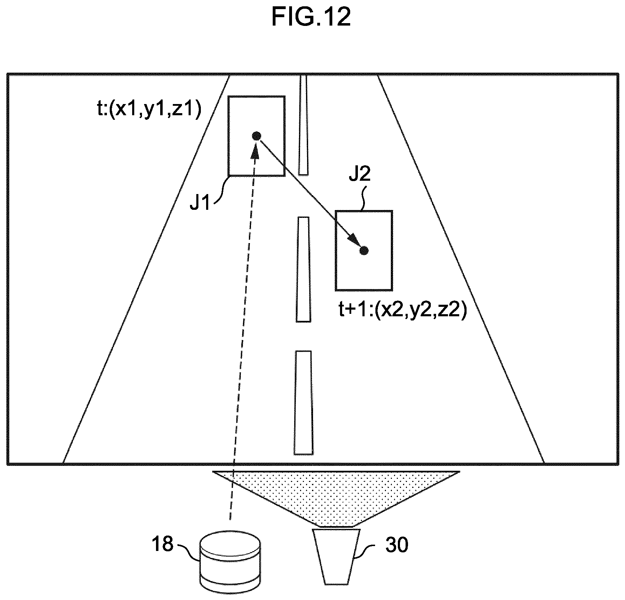

Fig. 12 is a diagram schematically illustrating coordinate detection of objects in a time series. In Fig. 12, J indicates a position of an object represented by a rectangle, and the position of the object moves from J1 to J2 in a time series. In Fig. 12, coordinate values of the object at the clock time t at which the object is located at J1 are (x1, y1, z1), and coordinate values of the object at the clock time t + 1 at which the object is located at J2 are (x2, y2, z2).

First, the clock time t will be described.

The MoPU 12 derives the x coordinate value and the y coordinate value of the object from the image of the object captured by the camera 30. Subsequently, the MoPU 12 integrates the z coordinate value of the object indicated by the point cloud data acquired from the lidar sensor 18 with the x coordinate value and the y coordinate value to derive the three-dimensional coordinate values (x1, y1, z1) of the object at the clock time t.

Next, the clock time t + 1 will be described.

The MoPU 12 derives the z coordinate value of the object at the clock time t + 1 on the basis of the geometry of the space and changes in x coordinate value and y coordinate value of the object from the clock time t to the clock time t + 1. The geometry of the space includes the shape of the road surface obtained from the image captured by the ultra-high-definition camera included in the IPU 11 (the image obtained by the ultra-high-definition camera performing image capturing) and the point cloud data of the lidar sensor 18 and the shape of the vehicle 100.

The geometry indicating the shape of the road surface is generated in advance at the clock time t. The MoPU 12 can simulate a case in which the vehicle 100 travels on the road surface by using the geometry indicating the shape of the vehicle 100 together with the geometry indicating the shape of the road surface and can estimate the amount of movement along each of the x axis, the y axis, and the z axis.

The MoPU 12 thus derives the x coordinate value and the y coordinate value of the object at the clock time t + 1 from the image of the object captured by the camera 30. The MoPU 12 can derive the z coordinate value of the object at the clock time t + 1 by calculating, through the simulation, the amount of movement along the z axis when the object changes from the x coordinate value and the y coordinate value (x1, y1) at the clock time t to the x coordinate value and the y coordinate value (x2, y2) at the clock time t + 1. Subsequently, the MoPU 12 integrates the x coordinate value and the y coordinate value with the z coordinate value to derive the three-dimensional coordinate values (x2, y2, z2) of the object at the clock time t + 1.

As illustrated in Fig. 12, the object moves in the depth direction together with the movement of the plane coordinates (that is, along the x axis and the y axis), and it is thus necessary to detect the movement in the z-axis direction as well in order to control the automatic driving of the vehicle 100 with high accuracy. Here, the MoPU 12 may not be able to acquire the z coordinate value of the object, which can be derived from the point cloud data of the lidar sensor 18, at a speed that is as high as the speed for the x coordinate value and the y coordinate value of the object. Therefore, the MoPU 12 derives the z coordinate value of the object at the clock time t + 1 from the x coordinate value, the y coordinate value, and the z coordinate value of the object at the clock time t and the x coordinate value and the y coordinate value of the object at the clock time t + 1 in the fourth aspect. Therefore, the MoPU 12 can realize three-dimensional motion detection along with two-dimensional motion detection at a high speed frame shot with high performance and low dosage of data by the information processing apparatus 10 according to the fourth aspect.

Although the case in which the MoPU 12 derives the z coordinate value of the object as the point information from the image of the object captured by the camera 30 has been exemplified in the above description, the disclosed technology is not limited to the aspect. For example, the central brain 15 may derive the z coordinate value of the object as the point information instead of the MoPU 12. In this case, the central brain 15 derives the z coordinate value of the object as the point information by performing the processing executed by the MoPU 12 in the above description on the image of the object captured by the camera 30. In an example, the central brain 15 derives the z coordinate value of the object as the point information from images of the object captured by the plurality of cameras 30, specifically the camera 30L and the camera 30R. In this case, the central brain 15 derives the z coordinate value of the object as the point information on the basis of the image of the object captured by each of the camera 30L of the MoPU 12L and the camera 30R of the MoPU 12R using the principle of a stereo camera.

(Tenth Embodiment)

Next, a tenth embodiment according to the present embodiment will be described while parts overlapping the above embodiments are omitted or simplified.

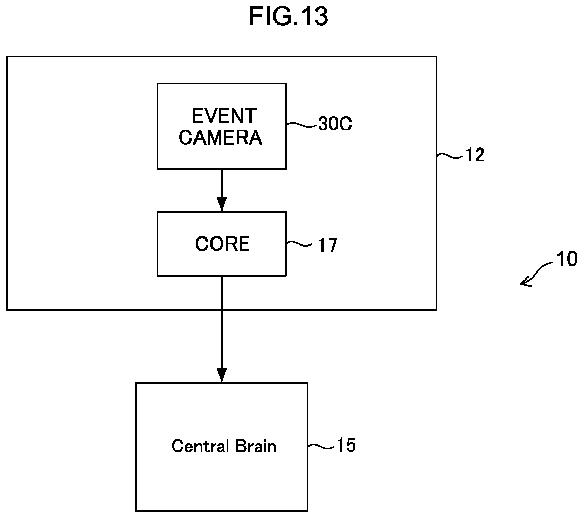

Fig. 13 is a seventh block diagram illustrating an example of the configuration of the information processing apparatus 10. Note that Fig. 13 illustrates only a part of the configuration of the information processing apparatus 10.

As illustrated in Fig. 13, an image of an object captured by an event camera 30C (hereinafter, also described as an "event image") is input to a core 17 in an MoPU 12. Then, the core 17 outputs point information to a central brain 15 on the basis of the input event image. Note that the event camera is disclosed in, for example, a reference document (https://dendenblog.xyz/event-based-camera/).

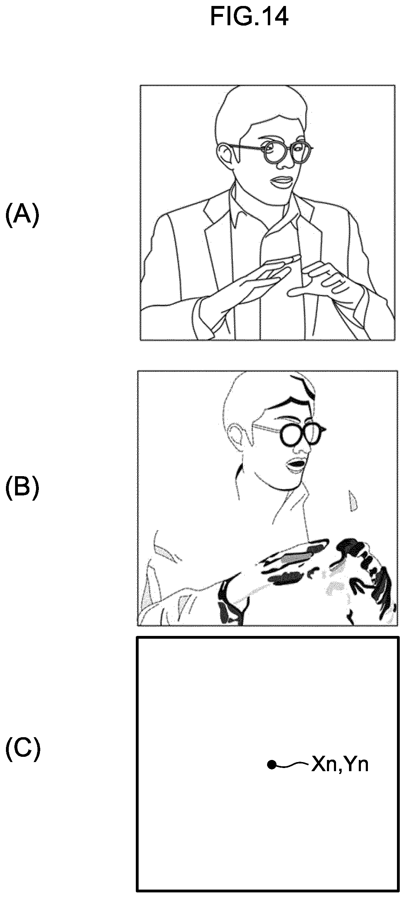

Fig. 14 is an explanatory diagram for explaining the image of the object captured by the event camera 30C (event image). Fig. 14(A) is a diagram illustrating the object as a target of image capturing performed by the event camera 30C. Fig. 14(B) is a diagram illustrating an example of the event image. Fig. 14(C) is a diagram illustrating an example in which a center of gravity of different portions between an image captured at a current clock time (an image obtained by image capturing being performed at the current clock time) and an image captured at a previous clock time (an image obtained by image capturing performed at the previous clock time), which is represented by the event image, is calculated as point information. In the event image, different portions between the image captured at the current clock time (the image obtained by the image capturing being performed at the current clock time) and the image captured at the previous clock time (the image obtained by the image capturing being performed at the previous clock time) are extracted as points. Therefore, in a case in which the event camera 30C is used, points of moving locations in a person area illustrated in Fig. 14(A) are extracted as illustrated in Fig. 14(B), for example.

On the other hand, the core 17 extracts coordinates of a feature point representing the person area (only one point, for example) after extracting the person which is the object as illustrated in Fig. 14(C). It is thus possible to reduce the amount of data to be transferred to the central brain 15 and a memory 16. Since it is possible to extract the person as the object at an arbitrary frame rate from the even image, it is also possible to extract the object at a frame rate that is the maximum frame rate (e.g. 1920 frames/second) of the camera 30 mounted in the MoPU 12 in the above embodiments or more and to accurately catch the point information of the object in the case of the event camera 30C.

Note that in the information processing apparatus 10 according to the tenth embodiment, the MoPU 12 may include a visible light camera 30A in addition to the event camera 30C similarly to the above embodiments. In this case, each of a visible light image of the object captured by the visible light camera 30A and the event image is input to the core 17 in the MoPU 12. Then, the core 17 outputs the point information to the central brain 15 on the basis of at least one of the visible light image or the event image input.

For example, the core 17 outputs the point information on the basis of the visible light image in a case in which it is possible to identify the object from the visible light image of the object captured by the visible light camera 30A. On the other hand, the core 17 outputs the point information on the basis of the event image in a case in which it is not possible to catch the object from the visible light image for a predetermined reason. The predetermined reason includes at least one of a case in which the moving speed of the object is a predetermined value or more or a case in which a change in light amount of environment light per unit time is a predetermined value or more. In a case in which it is not possible to catch the object from the visible light image due to the high speed of the motion of the object, for example, the core 17 identifies the object on the basis of the event image and outputs the x coordinate value and the y coordinate value of the object as the point information. In a case in which it is not possible to catch the object from the visible light image due to a sudden change in light amount of the environment light such as back light, the core 17 identifies the object on the basis of the event image and outputs the x coordinate value and the y coordinate value of the object as the point information. With this configuration, it is possible to use the cameras 30 to image the object in a distinguished manner in accordance with the predetermined reason according to the information processing apparatus 10.

(Eleventh Embodiment)

Next, an eleventh embodiment will be described while parts overlapping the above embodiments are omitted or simplified. Also, the present eleventh embodiment will also be described on the assumption that an MoPU performs processing at a higher speed than an IPU similarly to each of the above embodiments.

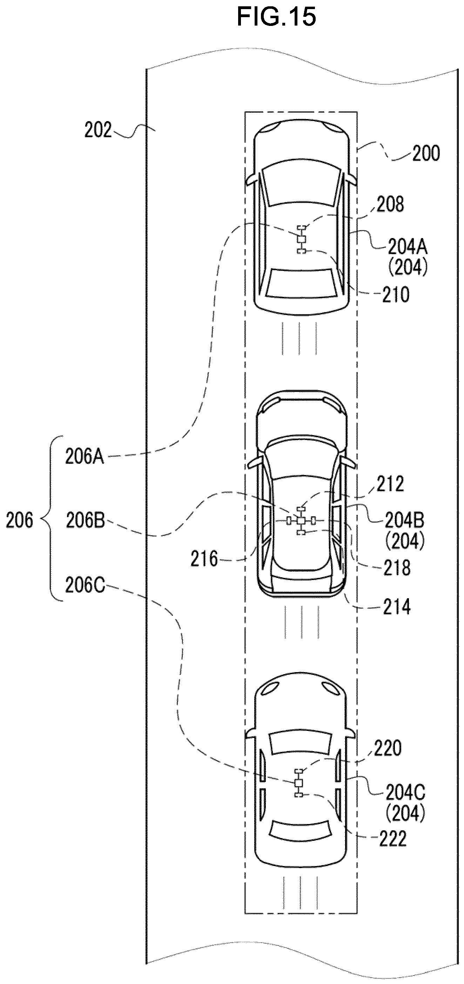

Fig. 15 is a schematic plan view illustrating an example of a plurality of vehicles 204 traveling on a road 202 in a state where they are in a convoy 200. In the example illustrated in Fig. 15, three vehicles 204 are illustrated as an example of the plurality of vehicles 204, and the three vehicles 204 is a leading vehicle 204A located at the leading head of the convoy 200, an intermediate vehicle 204B located at an intermediate of the convoy 200, and a tail end vehicle 204C located at the tail end of the convoy 200. The leading vehicle 204A, the intermediate vehicle 204B, and the tail end vehicle 204C form the convoy 200 and travel on the road 202 using automatic driving. The intermediate vehicle 204B follows the leading vehicle 204A and travels, and the tail end vehicle 204C follows the intermediate vehicle 204B and travels. For example, the leading vehicle 204A, the intermediate vehicle 204B, and the tail end vehicle 204C travel in a state where specific intervals are maintained from each other.

Here, the convoy 200 is an example of the "convoy" in the disclosure. Furthermore, the plurality of vehicles 204 are an example of the "plurality of moving bodies moving in a convoy" of the disclosure. Also, the leading vehicle 204A is an example of the "leading moving body" of the disclosure. The intermediate vehicle 204B is an example of the "specific moving body" and the "intermediate moving body" of the disclosure. Furthermore, the tail end vehicle 204C is an example of the "tail end moving body" of the disclosure.

An information processing apparatus 206 is used for the convoy 200. Automatic driving of the convoy 200 (that is, automatic driving of the leading vehicle 204A, the intermediate vehicle 204B, and the tail end vehicle 204C) is realized by the information processing apparatus 206 being used. The information processing apparatus 206 is an example of the "information processing apparatus" and the "computer" of the disclosure.

The information processing apparatus 206 includes a first information processing apparatus 206A, a second information processing apparatus 206B, and a third information processing apparatus 206C. The first information processing apparatus 206A is used for the leading vehicle 204A, the second information processing apparatus 206B is used for the intermediate vehicle 204B, and the third information processing apparatus 206C is used for the tail end vehicle 204C. In the example illustrated in Fig. 15, the first information processing apparatus 206A is mounted in the leading vehicle 204A, the second information processing apparatus 206B is mounted in the intermediate vehicle 204B, and the third information processing apparatus 206C is mounted in the tail end vehicle 204C.

A first condition sensor 208 and a second condition sensor 210 are mounted in the leading vehicle 204A. The first condition sensor 208 and the second condition sensor 210 are connected to the first information processing apparatus 206A. The first condition sensor 208 is a sensor that acquires information regarding conditions in front of the leading vehicle 204A. The second condition sensor 210 is a sensor that acquires information regarding conditions behind the leading vehicle 204A. An example of the conditions in front of the leading vehicle 204A is a first front object. The first front object refers to at least one object that is present in front of the leading vehicle 204A. An example of the conditions behind the leading vehicle 204A is a first rear object. The first rear object refers to at least one object that is present behind the leading vehicle 204A (in other words, at least one object that is present on the side of the intermediate vehicle 204B when seen from the leading vehicle 204A).

A third condition sensor 212, a fourth condition sensor 214, a fifth condition sensor 216, and a sixth condition sensor 218 are mounted in the intermediate vehicle 204B. The third condition sensor 212, the fourth condition sensor 214, the fifth condition sensor 216, and the sixth condition sensor 218 are connected to the second information processing apparatus 206B.

The third condition sensor 212 is a sensor that acquires information regarding conditions in front of the intermediate vehicle 204B. The fourth condition sensor 214 is a sensor that acquires information regarding conditions behind the intermediate vehicle 204B. The fifth condition sensor 216 is a sensor that acquires information regarding conditions on the left side of the intermediate vehicle 204B. The sixth condition sensor 218 is a sensor that acquires information regarding conditions on the right side of the intermediate vehicle 204B. The left side of the intermediate vehicle 204B and the right side of the intermediate vehicle 204B are examples of "lateral sides" according to the disclosed technology.

An example of the conditions in front of the intermediate vehicle 204B includes a second front object. The second front object refers to at least one object that is present in front of the intermediate vehicle 204B (in other words, at least one object that is present on the side of the leading vehicle 204A when seen from the intermediate vehicle 204B). An example of the conditions behind the intermediate vehicle 204B is a second rear object. The second rear object refers to at least one object that is present behind the intermediate vehicle 204B (in other words, at least one object that is present on the side of the tail end vehicle 204C when seen from the intermediate vehicle 204B).

An example of the conditions on the left side of the intermediate vehicle 204B is a left-side object. The left-side object refers to at least one object that is present on the left side of the intermediate vehicle 204B. An example of the conditions on the right side of the intermediate vehicle 204B is a right-side object. The right-side object refers to at least one object that is present on the right side of the intermediate vehicle 204B.

A seventh condition sensor 220 and an eighth condition sensor 222 are mounted in the tail end vehicle 204C. The seventh condition sensor 220 and the eighth condition sensor 222 are connected to the third information processing apparatus 206C. The seventh condition sensor 220 is a sensor that acquires information regarding conditions in front of the tail end vehicle 204C. The eighth condition sensor 222 is a sensor that acquires information regarding conditions behind the tail end vehicle 204C. An example of the conditions in front of the tail end vehicle 204C is a third front object. The third front object refers to at least one object that is present in front of the tail end vehicle 204C (in other words, at least one object that is present on the side of the intermediate vehicle 204B when seen from the tail end vehicle 204C). An example of the conditions behind the tail end vehicle 204C is a third rear object. The third rear object refers to at least one object that is present behind the tail end vehicle 204C.

Note that the front side of the leading vehicle 204A is the front side of the convoy 200 in other words in the present eleventh embodiment. Also, the left side of the intermediate vehicle 204B is the left side of the convoy 200 in other words in the present eleventh embodiment. The right side of the intermediate vehicle 204B is the right side of the convoy 200 in other words in the present eleventh embodiment. Furthermore, the rear side of the tail end vehicle 204C is the rear side of the convoy 200 in other words in the present eleventh embodiment.

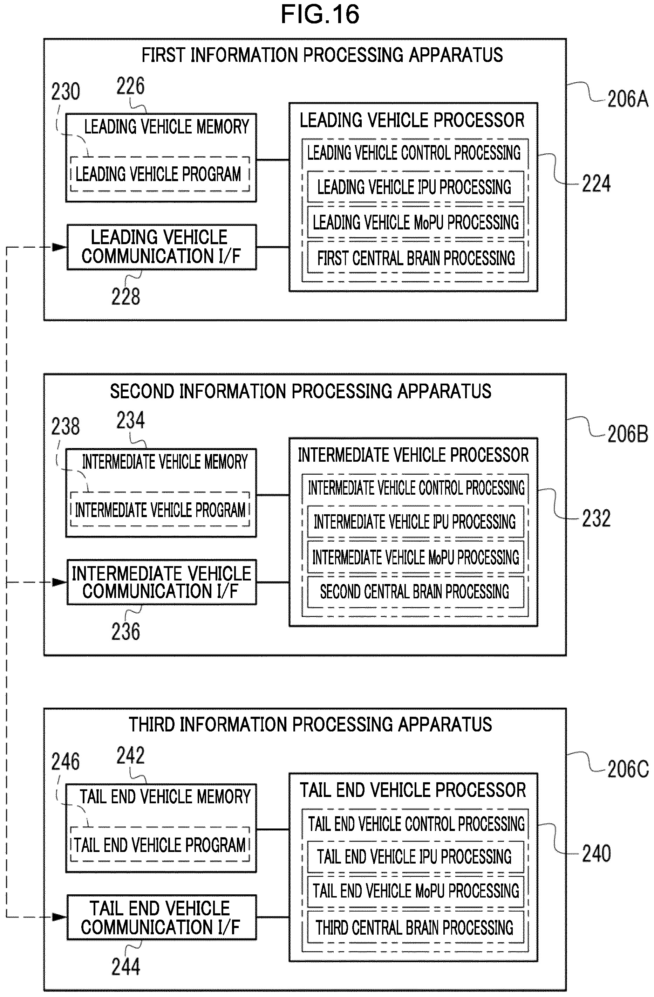

Fig. 16 is a conceptual diagram illustrating an example of configurations of the first information processing apparatus 206A, the second information processing apparatus 206B, and the third information processing apparatus 206C.

The first information processing apparatus 206A includes a leading vehicle processor 224, a leading vehicle memory 226, and a leading vehicle communication I/F 228. Here, the I/F is an abbreviation of "Interface".

The leading vehicle memory 226 is a computer-readable non-transitory storage medium (for example, a nonvolatile memory such as a flash memory). A leading vehicle program 230 is stored in the leading vehicle memory 226. The leading vehicle program 230 is an example of the "information processing program" of the disclosure.

The leading vehicle processor 224 performs leading vehicle control processing. The leading vehicle control processing is realized by the leading vehicle processor 224 reading and executing the leading vehicle program 230 from the leading vehicle memory 226. Although detailed description will be given later, the leading vehicle control processing includes leading vehicle IPU processing, leading vehicle MoPU processing, and first central brain processing.

The leading vehicle communication I/F 228 is an interface for communication including a communication processor, an antenna, and the like and is included in the gate way illustrated in Fig. 1. The leading vehicle communication I/F 228 is in charge of communication between different vehicles 204 (see Fig. 1). Examples of communication standards applied to the leading vehicle communication I/F 228 include wireless communication standards such as Wi-Fi (registered trademark) and 5th generation mobile communication system (5G).

The second information processing apparatus 206B includes an intermediate vehicle processor 232, an intermediate vehicle memory 234, and an intermediate vehicle communication I/F 236.

The intermediate vehicle memory 234 is a computer-readable non-transitory storage medium (for example, a non-transitory memory such as a flash memory). An intermediate vehicle program 238 is stored in the intermediate vehicle memory 234. The intermediate vehicle program 238 is an example of the "information processing program" of the disclosure.

The intermediate vehicle processor 232 performs intermediate vehicle control processing. The intermediate vehicle control processing is realized by the intermediate vehicle processor 232 reading and executing the intermediate vehicle program 238 from the intermediate vehicle memory 234. Although detailed description will be given later, the intermediate vehicle control processing includes intermediate vehicle IPU processing, intermediate vehicle MoPU processing, and second central brain processing.

The intermediate vehicle communication I/F 236 has the same configuration as that of the leading vehicle communication I/F 228 and is in charge of communication between different vehicles 204 (see Fig. 1).

The third information processing apparatus 206C includes a tail end vehicle processor 240, a tail end vehicle memory 242, and a tail end vehicle communication I/F 244.

The tail end vehicle memory 242 is a computer-readable non-transitory storage medium (for example, a nonvolatile memory such as a flash memory). The tail end vehicle memory 242 stores a tail end vehicle program 246. The tail end vehicle program 246 is an example of the "information processing program" of the disclosure.

The tail end vehicle processor 240 performs tail end vehicle control processing. The tail end vehicle control processing is realized by the tail end vehicle processor 240 reading and executing the tail end vehicle program 246 from the tail end vehicle memory 242. Although detailed description will be given later, the tail end vehicle control processing includes tail end vehicle IPU processing, tail end vehicle MoPU processing, and third central brain processing.

The tail end vehicle communication I/F 244 has the same configuration as that of the leading vehicle communication I/F 228 and is in charge of communication between different vehicles 204 (see Fig. 1).

Note that the aforementioned leading vehicle processor 224, the intermediate vehicle processor 232, and the tail end vehicle processor 240 are examples of the "processor" of the disclosure.

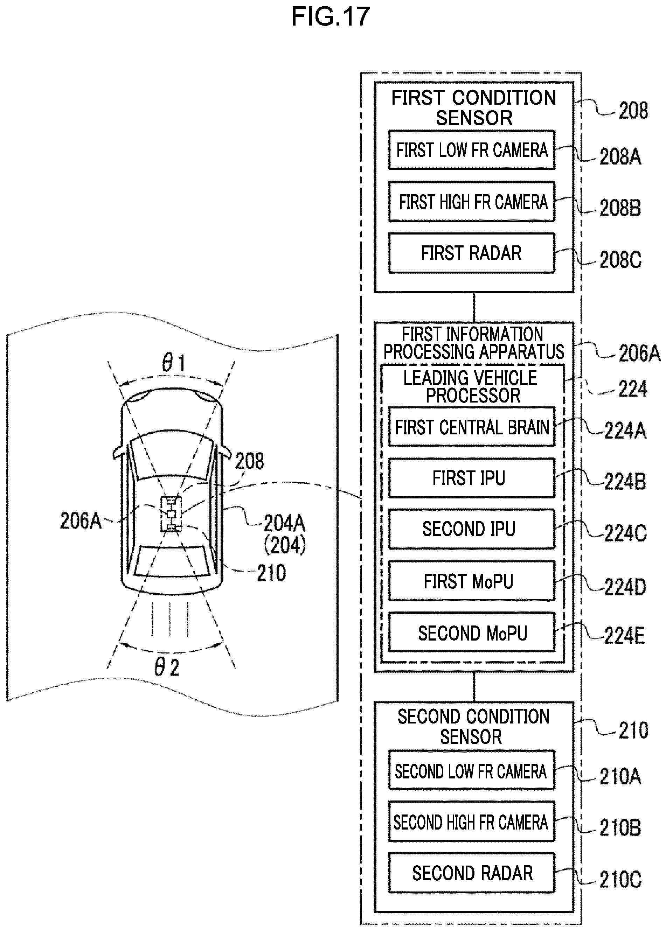

Fig. 17 is a conceptual diagram illustrating an example of a configuration of each of the first information processing apparatus 206A, the first condition sensor 208, and the second condition sensor 210 mounted in the leading vehicle 204A.

In the first information processing apparatus 206A, the leading vehicle processor 224 includes a first central brain 224A, a first IPU 224B, a second IPU 224C, a first MoPU 224D, and a second MoPU 224E. The first central brain 224A is a processing device corresponding to the central brain 15 described in each of the above embodiments. Each of the first IPU 224B and the second IPU 224C is a processing device corresponding to the IPU 11 described in each of the above embodiments. Each of the first MoPU 224D and the second MoPU 224E is a processing device corresponding to the MoPU 12 described in each of the above embodiments. In the example illustrated in Fig. 17, the first IPU 224B is an example of the "front recognition processor" of the disclosure.

The first condition sensor 208 includes a first low FR camera 208A, a first high FR camera 208B, and a first radar 208C. The first low FR camera 208A is an example of the "front camera" of the disclosure.

Here, FR is an abbreviation of a "frame rate". The first low FR camera 208A is a high-definition camera used for the IPU 11 illustrated in Fig. 2, for example. The first high FR camera 208B is a camera used for the MoPU 12 illustrated in Fig. 2 and the like. The first low FR camera 208A images the front side of the leading vehicle 204A at a first low frame rate which is a frame rate of the first low FR camera 208A. The first high FR camera 208B images the front side of the leading vehicle 204A at a first high frame rate which is a frame rate of the first high FR camera 208B. A relationship of "the first low frame rate < the first high frame rate" is established between the first low frame rate and the first high frame rate. The first low frame rate is, for example, a frame rate of 10 frames/second or more, and the first high frame rate is, for example, a frame rate of 100 frames/second or more.

An imaging direction and an imaging range of the first low FR camera 208A coincide with an imaging direction and an imaging range of the first high FR camera 208B. The first low FR camera 208A and the first high FR camera 208B image the front side of the leading vehicle 204A at an image angle θ1.

The first radar 208C is a radar corresponding to the radar 32 described in the second embodiment, emits an electromagnetic wave toward the front side of the leading vehicle 204A, and receives a first front object reflected wave which is a reflected wave obtained by the emitted electromagnetic wave being reflected by the first front object.

The second condition sensor 210 includes a second low FR camera 210A, a second high FR camera 210B, and a second radar 210C. The second low FR camera 210A is a camera with a specification similar to that of the first low FR camera 208A, and the second high FR camera 210B is a camera with a specification similar to that of the first high FR camera 208B. The second low FR camera 210A images the rear side of the leading vehicle 204A (that is, the side of the intermediate vehicle 204B when seen from the leading vehicle 204A) at a second low frame rate. The second high FR camera 210B images the rear side of the leading vehicle 204A at a second high frame rate. The second low frame rate is the same as the first low frame rate, and the second high frame rate is the same as the first high frame rate.

An imaging direction and an imaging range of the second low FR camera 210A coincide with an imaging direction and an imaging range of the second high FR camera 210B. The second low FR camera 210A and the second high FR camera 210B image the rear side of the leading vehicle 204A at an image angle θ2. An example of the image angle θ2 is the same image angle as the image angle θ1.

The second radar 210C is a radar with a specification similar to that of the first radar 208C, emits an electromagnetic wave toward the rear side of the leading vehicle 204A, and receives a first rear object reflected wave which is a reflected wave obtained by the emitted electromagnetic wave being reflected by the first rear object.

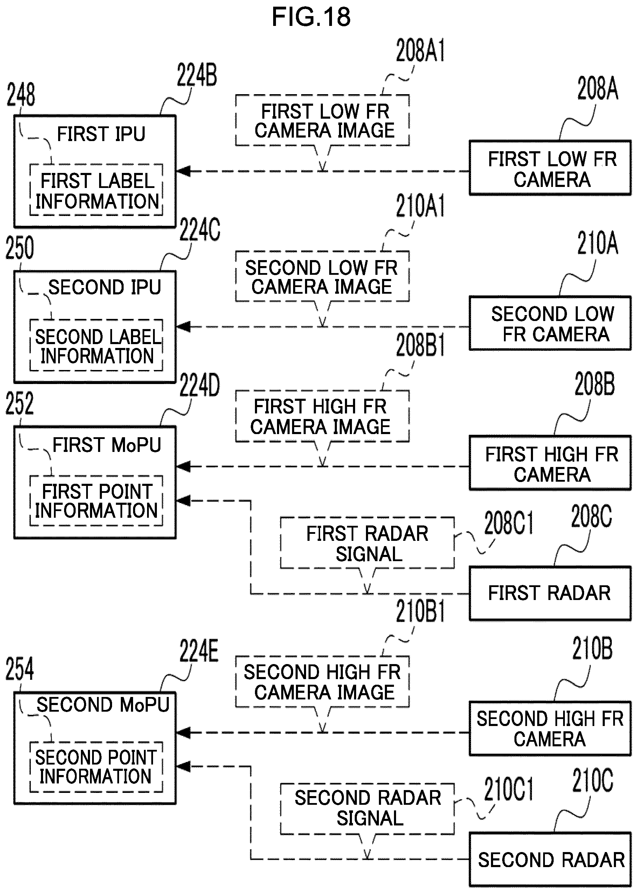

Fig. 18 is a conceptual diagram illustrating an example of content of processing of the first condition sensor 208, the second condition sensor 210, the first IPU 224B, the second IPU 224C, the first MoPU 224D, and the second MoPU 224E.

The first low FR camera 208A generates a first low FR camera image 208A1, which is an image showing conditions in front of the leading vehicle 204A, by imaging the front side of the leading vehicle 204A at the first low frame rate. The first low FR camera image 208A1 is an example of the "front image" of the disclosure.

The first IPU 224B acquires a first low FR camera image 208A1 from the first low FR camera 208A at time intervals defined in accordance with the first low frame rate. Then, the first IPU 224B recognizes the conditions in front of the leading vehicle 204A on the basis of the first low FR camera image 208A1 every time the first low FR camera image 208A1 is acquired, and generates first label information 248 indicating the recognition result. The first label information 248 is information with the same concept as that of the label information described above in the first embodiment and the like. An example of the first label information 248 is information labeled such that the kind of the first front object can be specified.

The second low FR camera 210A generates a second low FR camera image 210A1, which is an image showing conditions behind the leading vehicle 204A, by imaging the rear side of the leading vehicle 204A at the second low frame rate.

The second IPU 224C acquires the second low FR camera image 210A1 from the second low FR camera 210A at time intervals defined in accordance with the second low frame rate. Then, the second IPU 224C recognizes conditions behind the leading vehicle 204A on the basis of the second low FR camera image 210A1 every time the second low FR camera image 210A1 is acquired, and generates second label information 250 indicating the recognition result. The second label information 250 is information corresponding to the label information described above in the first embodiment and the like. An example of the second label information 250 is information labeled such that the kind of the first rear object can be specified.

The first high FR camera 208B generates a first high FR camera image 208B1, which is an image showing front conditions, by imaging the front side of the leading vehicle 204A at the first high frame rate.

The first radar 208C receives a first front object reflected wave at time intervals defined in accordance with the first high frame rate. Then, the first radar 208C generates a first radar signal 208C1 with which the position where the first front object is present can be specified, on the basis of the received first front object reflected wave every time the first front object reflected wave is received.

The first MoPU 224D acquires the first high FR camera image 208B1 from the first high FR camera 208B at time intervals defined in accordance with the first high frame rate and acquires the first radar signal 208C1 from the first radar 208C. Then, the first MoPU 224D recognizes the first front object on the basis of the first high FR camera image 208B1 and the first radar signal 208C1 and generates first point information 252 indicating the recognition result. For example, the first front object is recognized as a point here. The first point information 252 is information with the same concept as that of the point information described above in the first embodiment and the like. In other words, the first point information 252 is point information (for example, three-dimensional coordinates) in which the first front object is captured as a point.

The second high FR camera 210B generates a second high FR camera image 210B1, which is an image showing conditions behind the leading vehicle 204A, by imaging the rear side of the leading vehicle 204A at the second high frame rate.

The second radar 210C receives a first rear object reflected wave at time intervals defined in accordance with the second high frame rate. Then, the second radar 210C generates a second radar signal 210C1 with which the position where the first rear object is present can be specified, on the basis of the received first rear object reflected wave every time the first rear object reflected wave is received.

The second MoPU 224E acquires the second high FR camera image 210B1 from the second high FR camera 210B at time intervals defined in accordance with the second high frame rate and acquires the second radar signal 210C1 from the second radar 210C. Then, the second MoPU 224E recognizes the first rear object on the basis of the second high FR camera image 210B1 and the second radar signal 210C1 and generates second point information 254 indicating the recognition result. For example, the first rear object is recognized as a point here. The second point information 254 is information with the same concept as that of the point information described above in the first embodiment and the like. In other words, the second point information 254 is point information (for example, three-dimensional coordinates) in which the first rear object is captured as a point.

In the example illustrated in Fig. 18, the first high FR camera image 208B1 is an example of the "first image" of the disclosure. In addition, the first high frame rate is an example of a "fourth frame rate" of the disclosure.

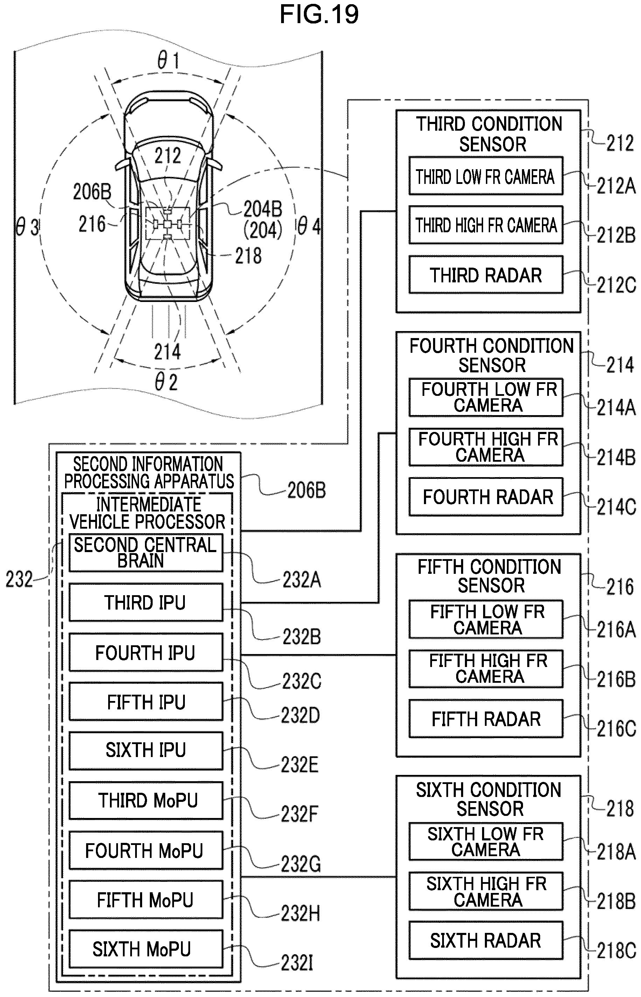

Fig. 19 is a conceptual diagram illustrating an example of a configuration of each of the second information processing apparatus 206B, the third condition sensor 212, the fourth condition sensor 214, the fifth condition sensor 216, and the sixth condition sensor 218 mounted in the intermediate vehicle 204B.

In the second information processing apparatus 206B, the intermediate vehicle processor 232 includes a second central brain 232A, a third IPU 232B, a fourth IPU 232C, a fifth IPU 232D, a sixth IPU 232E, a third MoPU 232F, a fourth MoPU 232G, a fifth MoPU 232H, and a sixth MoPU 232I.

The second central brain 232A is a processing device corresponding to the central brain 15 described in each of the above embodiments. Each of the third IPU 232B, the fourth IPU 232C, the fifth IPU 232D, and the sixth IPU 232E is a processing device corresponding to the IPU 11 described in each of the above embodiments. Each of the third MoPU 232F, the fourth MoPU 232G, the fifth MoPU 232H, and the sixth MoPU 232I is a processing device corresponding to the MoPU 12 described in each of the above embodiments. In the example illustrated in Fig. 19, the fifth MoPU 232H and the sixth MoPU 232I are examples of the "lateral-side recognition processor" of the disclosure.

The third condition sensor 212 includes a third low FR camera 212A, a third high FR camera 212B, and a third radar 212C. The third low FR camera 212A is an example of the "leading side camera" of the disclosure.

The third low FR camera 212A is a camera with a specification similar to that of the first low FR camera 208A, and the third high FR camera 212B is a camera with a specification similar to that of the first high FR camera 208B.

The third low FR camera 212A images the side of the leading vehicle 204A when seen from the intermediate vehicle 204B (that is, the front side of the intermediate vehicle 204B) at a third frame rate. The third high FR camera 212B images the side of the leading vehicle 204A when seen from the intermediate vehicle 204B at a third high frame rate. The third low frame rate is the same as the first low frame rate, and the third high frame rate is the same as the first high frame rate.

An imaging direction and an imaging range of the third low FR camera 212A coincide with an imaging direction and an imaging range of the third high FR camera 212B. The third low FR camera 212A and the third high FR camera 212B image the side of the leading vehicle 204A at the image angle θ1.

The third radar 212C is a radar with a specification similar to that of the first radar 208C, emits an electromagnetic wave toward the side of the leading vehicle 204A, and receives a second front object reflected wave which is a reflected wave obtained by the emitted electromagnetic wave being reflected by the second front object.

The fourth condition sensor 214 includes a fourth low FR camera 214A, a fourth high FR camera 214B, and a fourth radar 214C. The fourth low FR camera 214A is an example of the "tail end-side camera" of the disclosure.

The fourth low FR camera 214A is a camera with a specification similar to that of the first low FR camera 208A, and the fourth high FR camera 214B is a camera with a specification similar to that of the first high FR camera 208B.

The fourth low FR camera 214A images the side of the tail end vehicle 204C when seen from the intermediate vehicle 204B (that is, the rear side of the intermediate vehicle 204B) at a fourth low frame rate. The fourth high FR camera 214B captures the side of the tail end vehicle 204C when seen from the intermediate vehicle 204B at a fourth high frame rate. The fourth low frame rate is the same as the first low frame rate, and the fourth high frame rate is the same as the first high frame rate.

An imaging direction and an imaging range of the fourth low FR camera 214A coincide with an imaging direction and an imaging range of the fourth high FR camera 214B. The fourth low FR camera 214A and the fourth high FR camera 214B image the side of the tail end vehicle 204C at the image angle θ2.

The fourth radar 214C is a radar with a specification similar to that of the first radar 208C, emits an electromagnetic wave toward the side of the tail end vehicle 204C, and receives a second rear object reflected wave which is a reflected wave obtained by the emitted electromagnetic wave being reflected by the second rear object.

The fifth condition sensor 216 includes a fifth low FR camera 216A, a fifth high FR camera 216B, and a fifth radar 216C. The fifth high FR camera 216B is an example of the "lateral camera" of the disclosure.

The fifth low FR camera 216A is a camera with a specification similar to that of the first low FR camera 208A, and the fifth high FR camera 216B is a camera with a specification similar to that of the first high FR camera 208B.

The fifth low FR camera 216A images the left side of the intermediate vehicle 204B (in other words, the left side of the convoy 200) at a fifth low frame rate. The fifth high FR camera 216B images the left side of the intermediate vehicle 204B at a fifth high frame rate. The fifth low frame rate is the same as the first low frame rate, and the fifth high frame rate is the same as the first high frame rate.

An imaging direction and an imaging range of the fifth low FR camera 216A coincide with an imaging direction and an imaging range of the fifth high FR camera 216B. The fifth low FR camera 216A and the fifth high FR camera 216B image the left side of the intermediate vehicle 204B at an image angle θ3. The image angle θ3 is an image angle that is wider than the image angles θ1 and θ2. The image angle θ3 entirely includes the left side of the convoy 200 as a subject.

The fifth radar 216C is a radar with a specification similar to that of the first radar 208C, emits an electromagnetic wave toward the left side of the intermediate vehicle 204B, and receives a left-side object reflected wave which is a reflected wave obtained by the emitted electromagnetic wave being reflected by the left side object.

The sixth condition sensor 218 includes a sixth low FR camera 218A, a sixth high FR camera 218B, and a sixth radar 218C. The sixth high FR camera 218B is an example of the "lateral camera" of the disclosure.

The sixth low FR camera 218A is a camera with a specification similar to that of the first low FR camera 208A, and the sixth high FR camera 218B is a camera with a specification similar to that of the first high FR camera 208B.

The sixth low FR camera 218A images the right side of the intermediate vehicle 204B (in other words, the right side of the convoy 200) at a sixth low frame rate. The sixth high FR camera 218B images the right side of the intermediate vehicle 204B at a sixth high frame rate. The sixth low frame rate is the same as the first low frame rate, and the sixth high frame rate is the same as the first high frame rate.

An imaging direction and an imaging range of the sixth low FR camera 218A coincide with an imaging direction and an imaging range of the sixth high FR camera 218B. The sixth low FR camera 218A and the sixth high FR camera 218B image the right side of the intermediate vehicle 204B at an image angle θ4. The image angle θ4 is an image angle that is wider than the image angles θ1 and θ2. The image angle θ4 entirely includes the right side of the convoy 200 as a subject.

The sixth radar 218C is a radar with a specification similar to that of the first radar 208C, emits an electromagnetic wave toward the right side of the intermediate vehicle 204B, and receives a right-side object reflected wave which is a reflected wave obtained by the emitted electromagnetic wave being reflected by the right-side object.

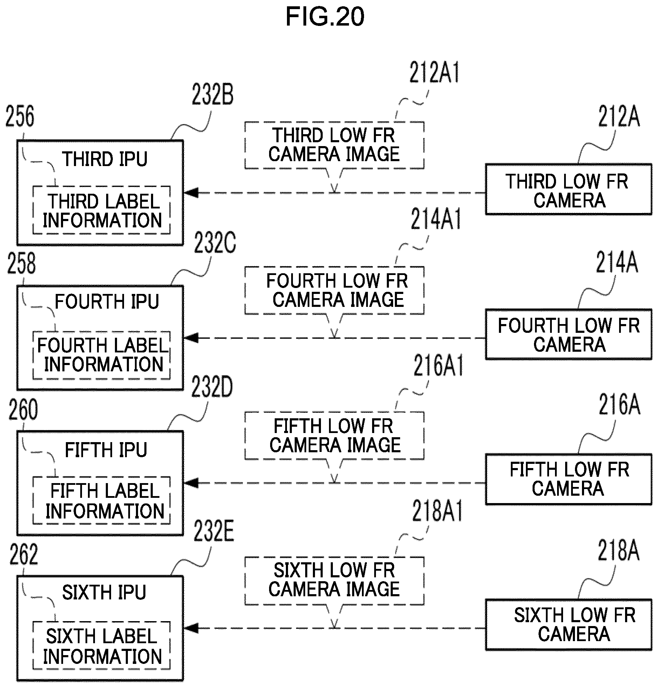

Fig. 20 is a conceptual diagram illustrating an example of content of processing of the third low FR camera 212A, the fourth low FR camera 214A, the fifth low FR camera 216A, and the sixth low FR camera 218A, the third IPU 232B, the fourth IPU 232C, the fifth IPU 232D, and the sixth IPU 232E.

The third low FR camera 212A generates a third low FR camera image 212A1, which is an image showing conditions on the side of the leading vehicle 204A, by imaging the side of the leading vehicle 204A when seen from the intermediate vehicle 204B (hereinafter, simply referred to as a "side of the leading vehicle 204A") at the third low frame rate.

The third IPU 232B acquires the third low FR camera image 212A1 from the third low FR camera 212A at time intervals defined in accordance with the third low frame rate. Then, the third IPU 232B recognizes conditions on the side of the leading vehicle 204A on the basis of the third low FR camera image 212A1 every time the third low FR camera image 212A1 is acquired, and generates third label information 256 indicating the recognition result. The third label information 256 is information corresponding to the label information described above in the first embodiment and the like. An example of the third label information 256 is information labeled such that the kind of the second front object can be specified.

The fourth low FR camera 214A generates a fourth low FR camera image 214A1, which is an image showing conditions on the side of the tail end vehicle 204C, by imaging the side of the tail end vehicle 204C when seen from the intermediate vehicle 204B (hereinafter, simply referred to as a "side of the tail end vehicle 204C") at the fourth low frame rate.

The fourth IPU 232C acquires the fourth low FR camera image 214A1 from the fourth low FR camera 214A at time intervals defined in accordance with the fourth low frame rate. Then, the fourth IPU 232C recognizes conditions on the side of the tail end vehicle 204C on the basis of the fourth low FR camera image 214A1 every time the fourth low FR camera image 214A1 is acquired, and generates fourth label information 258 indicating the recognition result. The fourth label information 258 is information corresponding to the label information described above in the first embodiment and the like. An example of the fourth label information 258 is information labeled such that the kind of the second rear object can be specified.

The fifth low FR camera 216A generates a fifth low FR camera image 216A1, which is an image showing conditions on the left side of the intermediate vehicle 204B, by imaging the left side of the intermediate vehicle 204B at the fifth low frame rate.

The fifth IPU 232D acquires the fifth low FR camera image 216A1 from the fifth low FR camera 216A at time intervals defined in accordance with the fifth low frame rate. Then, the fifth IPU 232D recognizes conditions on the left side of the intermediate vehicle 204B on the basis of the fifth low FR camera image 216A1 every time the fifth low FR camera image 216A1 is acquired, and generates fifth label information 260 indicating the recognition result. The fifth label information 260 is information corresponding to the label information described above in the first embodiment and the like. An example of the fifth label information 260 is information labeled such that the kind of the left-side object can be specified.

The sixth low FR camera 218A generates a sixth low FR camera image 218A1, which is an image showing conditions on the right side of the intermediate vehicle 204B, by imaging the right side of the intermediate vehicle 204B at the sixth low frame rate.

The sixth IPU 232E acquires the sixth low FR camera image 218A1 from the sixth low FR camera 218A at time intervals defined in accordance with the sixth low frame rate. Then, the sixth IPU 232E recognizes conditions on the right side of the intermediate vehicle 204B on the basis of the sixth low FR camera image 218A1 every time the sixth low FR camera image 218A1 is acquired, and generates sixth label information 262 indicating the recognition result. The sixth label information 262 is information corresponding to the label information described above in the first embodiment and the like. An example of the sixth label information 262 is information labeled such that the kind of the right-side object can be specified.

In the example illustrated in Fig. 20, the fifth low FR camera image 216A1 is an example of the "leading moving body-side-side image" of the disclosure. Also, the sixth low FR camera image 218A1 is an example of the "tail end moving body-side image" of the disclosure. The fifth low frame rate is an example of the "second frame rate" of the disclosure. The sixth low frame rate is an example of the "third frame rate" of the disclosure.

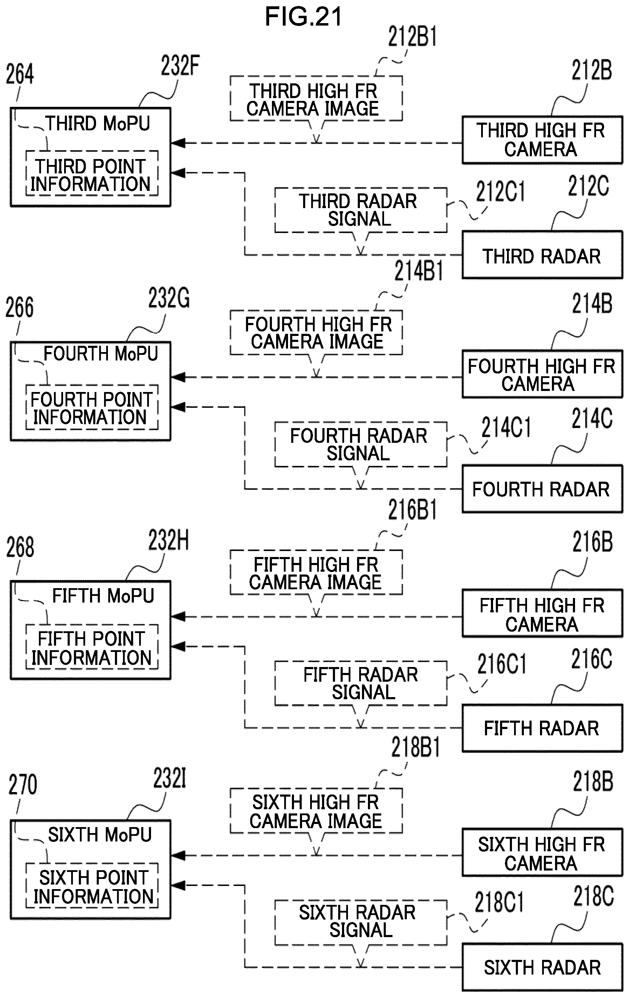

Fig. 21 is a conceptual diagram illustrating an example of content of processing of the third high FR camera 212B, the third radar 212C, the fourth high FR camera 214A, the fourth radar 214C, the fifth high FR camera 216A, the fifth radar 216C, the sixth high FR camera 218B, the sixth radar 218C, the third MoPU 232F, the fourth MoPU 232G, the fifth MoPU 232H, and the sixth MoPU 232I.

The third high FR camera 212B generates a third high FR camera image 212B1, which is an image showing conditions on the side of the leading vehicle 204A, by imaging the side of the leading vehicle 204A at the third high frame rate.

The third radar 212C receives the second front object reflected wave at time intervals defined in accordance with the third high frame rate. Then, the third radar 212C generates a third radar signal 212C1 with which the position where the second front object is present can be specified, on the basis of the received second front object reflected wave every time the second front object reflected wave is received.

The third MoPU 232F acquires the third high FR camera image 212B1 from the third high FR camera 212B at time intervals defined in accordance with the third high frame rate and acquires the third radar signal 212C1 from the third radar 212C. Then, the third MoPU 232F recognizes the second front object on the basis of the third high FR camera image 212B1 and the third radar signal 212C1 and generates third point information 264 indicating the recognition result. For example, the second front object is recognized as a point here. The third point information 264 is information with the same concept as that of the point information described above in the first embodiment and the like. In other words, the third point information 264 is point information (for example, three-dimensional coordinates) in which the second front object is captured as a point.

The fourth high FR camera 214B generates a fourth high FR camera image 214B1, which is an image showing conditions on the side of the tail end vehicle 204C, by imaging the side of the tail end vehicle 204C at the fourth high frame rate.

The fourth radar 214C receives the second rear object reflected wave at time intervals defined in accordance with the fourth high frame rate. Then, the fourth radar 214C generates a fourth radar signal 214C1 with which the position where the second rear object is present can be specified, on the basis of the received second rear object reflected wave every time the second rear object reflected wave is received.

The fourth MoPU 232G acquires the fourth high FR camera image 214B1 from the fourth high FR camera 214B at time intervals defined in accordance with the fourth high frame rate and acquires the fourth radar signal 214C1 from the fourth radar 214C. Then, the fourth MoPU 232G recognizes the second rear object on the basis of the fourth high FR camera image 214B1 and the fourth radar signal 214C1 and generates fourth point information 266 indicating the recognition result. For example, the first rear object is recognized as a point here. The fourth point information 266 is information with the same concept as that of the point information described above in the first embodiment and the like. In other words, the fourth point information 266 is point information (for example, three-dimensional coordinates) in which the second rear object is captured as a point.

The fifth high FR camera 216B generates a fifth high FR camera image 216B1, which is an image showing conditions on the left side of the intermediate vehicle 204B, by imaging the left side of the intermediate vehicle 204B at the fifth high frame rate.

The fifth radar 216C receives the left-side object reflected wave at time intervals defined in accordance with the fifth high frame rate. Then, the fifth radar 216C generates a fifth radar signal 216C1 with which the position where the left-side object is present can be specified, on the basis of the received left-side object reflected wave every time the left-side object reflected wave is received.

The fifth MoPU 232H acquires the fifth high FR camera image 216B1 from the fifth high FR camera 216B at time intervals defined in accordance with the fifth high frame rate and acquires the fifth radar signal 216C1 from the fifth radar 216C. Then, the fifth MoPU 232H recognizes left-side object on the basis of the fifth high FR camera image 216B1 and the fifth radar signal 216C1 and generates fifth point information 268 indicating the recognition result. For example, the left-side object is recognized as a point here. The fifth point information 268 is information with the same concept as that of the point information described above in the first embodiment and the like. In other words, the fifth point information 268 is point information (for example, three-dimensional coordinates) in which the left-side object is captured as a point.

The sixth high FR camera 218B generates a sixth high FR camera image 218B1, which is an image showing conditions on the right side of the intermediate vehicle 204B, by imaging the right side of the intermediate vehicle 204B at the sixth high frame rate.

The sixth radar 218C receives the right-side object reflected wave at time intervals defined in accordance with the sixth high frame rate. Then, the sixth radar 218C generates a sixth radar signal 218C1 with which the position where the right-side object is present can be specified, on the basis of the received right-side object reflected wave every time the right-side object reflected wave is received.

The sixth MoPU 232I acquires the sixth high FR camera image 218B1 from the sixth high FR camera 218B at time intervals defined in accordance with the sixth high frame rate and acquires the sixth radar signal 218C1 from the sixth radar 218C. Then, the sixth MoPU 232I recognizes the right-side object on the basis of the sixth high FR camera image 218B1 and the sixth radar signal 218C1 and generates sixth point information 270 indicating the recognition result. For example, the right-side object is recognized as a point here. The sixth point information 270 is information with the same concept as that of the point information described above in the first embodiment and the like. In other words, the sixth point information 270 is point information (for example, three-dimensional coordinates) in which the right-side object is captured as a point.

In the example illustrated in Fig. 21, the fifth point information 268 and the sixth point information 270 are examples of the "lateral point information" of the disclosure. In addition, the fifth high frame rate and the sixth high frame rate are examples of the "first frame rate" of the disclosure.

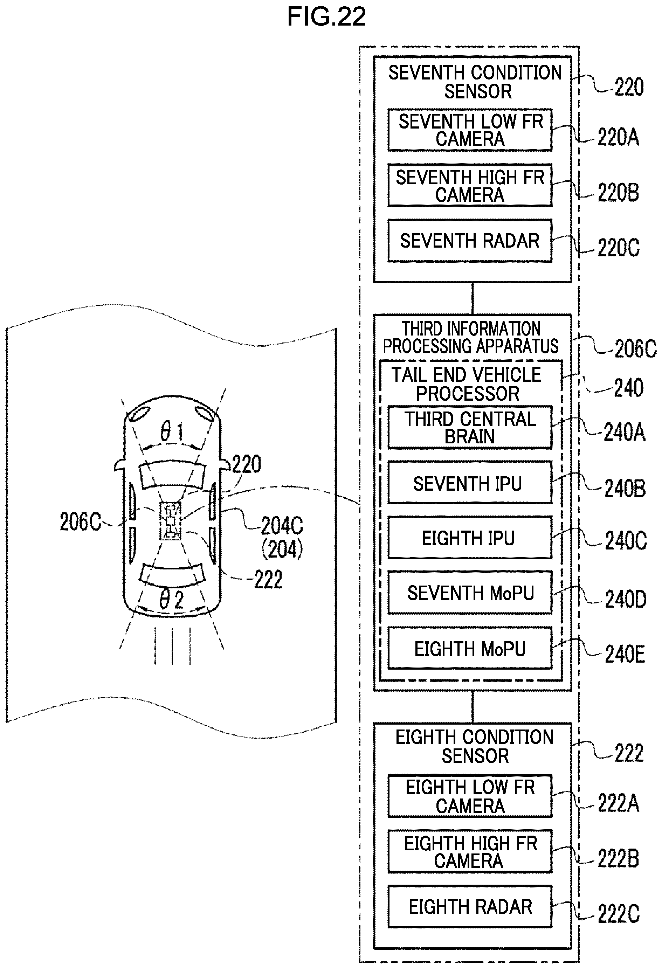

Fig. 22 is a conceptual diagram illustrating an example of a configuration of each of the third information processing apparatus 206C, the seventh condition sensor 220, and the eighth condition sensor 222 mounted in the tail end vehicle 204C.

In the third information processing apparatus 206C, the tail end vehicle processor 240 includes a third central brain 240A, a seventh IPU 240B, an eighth IPU 240C, a seventh MoPU 240D, and an eighth MoPU 240E. The third central brain 240A is a processing device corresponding to the central brain 15 described above in the first embodiment and the like. Each of the seventh IPU 240B and the eighth IPU 240C is a processing device corresponding to the IPU 11 described above in the first embodiment and the like. Each of the seventh MoPU 240D and the eighth MoPU 240E is a processing device corresponding to the MoPU 12 described above in the first embodiment and the like. In the example illustrated in Fig. 22, the eighth IPU 240C is an example of the "rear-side recognition processor" of the disclosure.

The seventh condition sensor 220 includes a seventh low FR camera 220A, a seventh high FR camera 220B, and a seventh radar 220C.

The seventh low FR camera 220A is a camera with a specification similar to that of the first low FR camera 208A, and the seventh high FR camera 220B is a camera with a specification similar to that of the first high FR camera 208B. The seventh low FR camera 220A images the front side of the tail end vehicle 204C (that is, the side of the intermediate vehicle 204B when seen from the tail end vehicle 204C) at a seventh low frame rate. The seventh high FR camera 220B images the front side of the tail end vehicle 204C at a seventh high frame rate. The seventh low frame rate is the same as the first low frame rate, and the seventh high frame rate is the same as the first high frame rate.

An imaging direction and an imaging range of the seventh low FR camera 220A coincide with an imaging direction and an imaging range of the seventh high FR camera 220B. The seventh low FR camera 220A and the seventh high FR camera 220B image the front side of the tail end vehicle 204C at the image angle $\theta 1$.

The seventh radar 220C is a radar with a specification similar to that of the first radar 208C, emits an electromagnetic wave toward the front side of the tail end vehicle 204C, and receives a third front object reflected wave which is a reflected wave obtained by the emitted electromagnetic wave being reflected by the third front object.

The eighth condition sensor 222 includes an eighth low FR camera 222A, an eighth high FR camera 222B, and an eighth radar 222C. The eighth low FR camera 222A is an example of the "rear camera" of the disclosure.

The eighth low FR camera 222A is a camera with a specification similar to that of the first low FR camera 208A, and the eighth high FR camera 222B is a camera with a specification similar to that of the first high FR camera 208B. The eighth low FR camera 222A images the rear side of the tail end vehicle 204C at an eighth low frame rate. The eighth high FR camera 222B images the rear side of the tail end vehicle 204C at an eighth high frame rate. The eighth low frame rate is the same as the first low frame rate, and the eighth high frame rate is the same as the first high frame rate.

An imaging direction and an imaging range of the eighth low FR camera 222A coincide with an imaging direction and an imaging range of the eighth high FR camera 222B. The eighth low FR camera 222A and the eighth high FR camera 222B images the rear side of the tail end vehicle 204C at the image angle $\theta 2$.

The eighth radar 222C is a radar with a specification similar to that of the first radar 208C, emits an electromagnetic wave to the rear side of the tail end vehicle 204C, and receives a third rear object reflected wave which is a reflected wave obtained by the emitted electromagnetic wave being reflected by the third rear object.

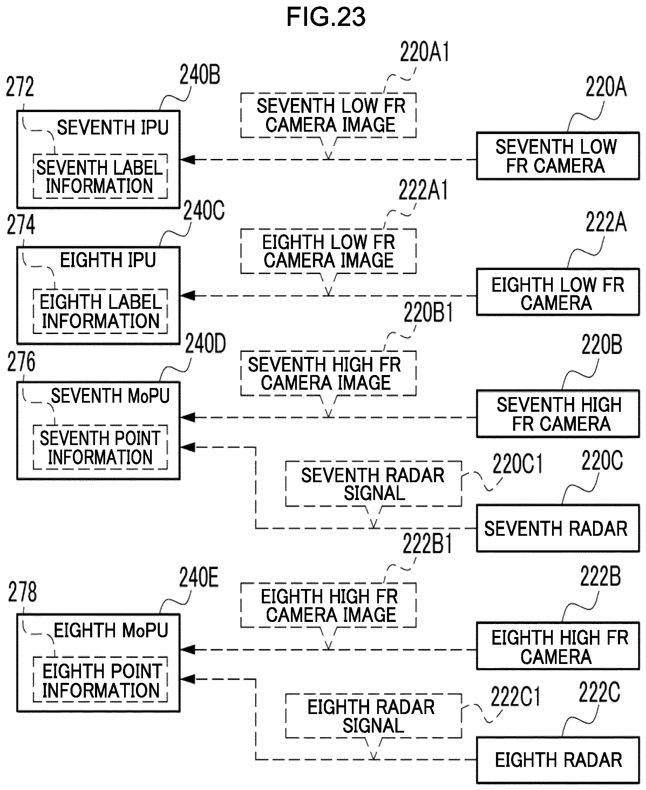

Fig. 23 is a conceptual diagram illustrating an example of content of processing of the seventh condition sensor 220, the eighth condition sensor 222, the seventh IPU 240B, the eighth IPU 240C, the seventh MoPU 240D, and the eighth MoPU 240E.

The seventh low FR camera 220A generates a seventh low FR camera image 220A1, which is an image showing conditions in front of the tail end vehicle 204C, by imaging the front side of the tail end vehicle 204C at the seventh low frame rate.

The seventh IPU 240B acquires a seventh low FR camera image 220A1 from the seventh low FR camera 220A at time intervals defined in accordance with the seventh low frame rate. Then, the seventh IPU 240B recognizes conditions in front of the tail end vehicle 204C on the basis of the seventh low FR camera image 220A1 every time the seventh low FR camera image 220A1 is acquired, and generates seventh label information 272 indicating the recognition result. The seventh label information 272 is information corresponding to the label information described above in the first embodiment and the like. An example of the seventh label information 272 is information labeled such that the kind of the third front object can be specified.

The eighth low FR camera 222A generates an eighth low FR camera image 222A1, which is an image showing conditions behind the tail end vehicle 204C, by imaging the rear side of the tail end vehicle 204C at the eighth low frame rate. The eighth low FR camera image 222A1 is an example of the "rear image" of the disclosure.

The eighth IPU 240C acquires the eighth low FR camera image 222A1 from the eighth low FR camera 222A at time intervals defined in accordance with the eighth low frame rate. Then, the eighth IPU 240C recognizes conditions behind the tail end vehicle 204C on the basis of the eighth low FR camera image 222A1 every time the eighth low FR camera image 222A1 is acquired, and generates eighth label information 274 indicating the recognition result. The eighth label information 274 is information corresponding to the label information described above in the first embodiment and the like. An example of the eighth label information 274 is information labeled such that the kind of the third rear object can be specified.

The seventh high FR camera 220B generates a seventh high FR camera image 220B1, which is an image showing conditions on the front side, by imaging the front side of the tail end vehicle 204C at the seventh high frame rate.

The seventh radar 220C receives the third front object reflected wave at time intervals defined in accordance with the seventh high frame rate. Then, the seventh radar 220C generates a seventh radar signal 220C1 with which the position where the third front object is present can be specified, on the basis of the received third front object reflected wave every time the third front object reflected wave is received.

The seventh MoPU 240D acquires the seventh high FR camera image 220B1 from the seventh high FR camera 220B at time intervals defined in accordance with the seventh high frame rate and acquires the seventh radar signal 220C1 from the seventh radar 220C. Then, the seventh MoPU 240D recognizes the third front object on the basis of the seventh high FR camera image 220B1 and the seventh radar signal 220C1 and generates seventh point information 276 indicating the recognition result. For example, the third front object is recognized as a point here. The seventh point information 276 is information with the same concept as that of the point information described above in the first embodiment and the like. In other words, the seventh point information 276 is point information (for example, three-dimensional coordinates) in which the third front object is captured as a point.

The eighth high FR camera 222B generates an eighth high FR camera image 222B1, which is an image showing conditions behind the tail end vehicle 204C, by imaging the rear side of the tail end vehicle 204C at the eighth high frame rate.

The eighth radar 222C receives the third rear object reflected wave at time intervals defined in accordance with the eighth high frame rate. Then, the eighth radar 222C generates an eighth radar signal 222C1 with which the position where the third rear object is present can be specified, on the basis of the received third rear object reflected wave every time the third rear object reflected wave is received.

The eighth MoPU 240E acquires the eighth high FR camera image 222B1 from the eighth high FR camera 222B and acquires the eighth radar signal 222C1 from the eighth radar 222C at time intervals defined in accordance with the eighth high frame rate. Then, the eighth MoPU 240E recognizes the third rear object on the basis of the eighth high FR camera image 222B1 and the eighth radar signal 222C1 and generates eighth point information 278 indicating the recognition result. For example, the third rear object is recognized as a point here. The eighth point information 278 is information with the same concept as that of the point information described above in the first embodiment and the like. In other words, the eighth point information 278 is point information (for example, three-dimensional coordinates) in which the third rear object is captured as a point.

In the example illustrated in Fig. 23, the eighth high FR camera image 222B1 is an example of the "second image" of the disclosure. In addition, the eighth high frame rate is an example of the "fifth frame rate" of the disclosure.

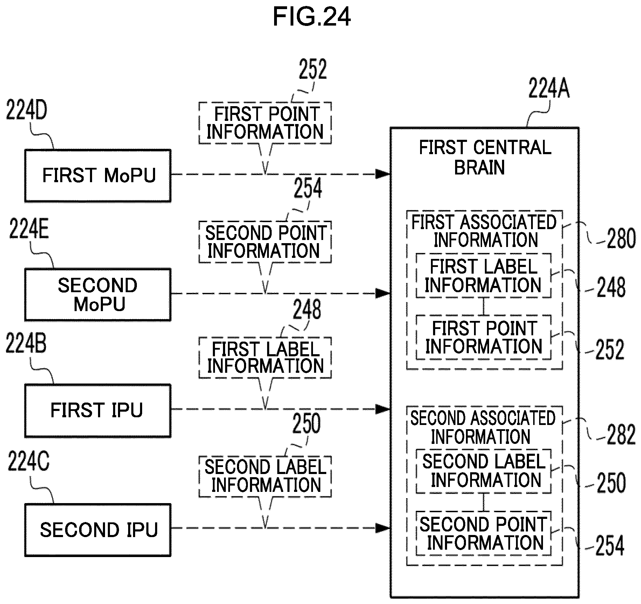

Fig. 24 is a conceptual diagram illustrating an example of content of processing to acquire information necessary for the first central brain 224A to realize control of automatic driving of the convoy 200.

The first central brain 224A acquires the first label information 248 from the first IPU 224B and acquires the first point information 252 from the first MoPU 224D. Then, the first central brain 224A generates first associated information 280 on the basis of the first label information 248 and the first point information 252. The first associated information 280 is information in which the first label information 248 and the first point information 252 are associated in a way similar to that described above in the first embodiment and the like.

In a way similar to this, the first central brain 224A generates second associated information 282 on the basis of the second label information 250 acquired from the second IPU 224C and the second point information 254 acquired from the second MoPU 224E.

In the example illustrated in Fig. 24, the first associated information 280 is an example of the "front associated information" of the disclosure. Also, the first point information 252 is an example of the "front point information" of the disclosure. Moreover, the first label information 248 is an example of the "front object information" of the disclosure.

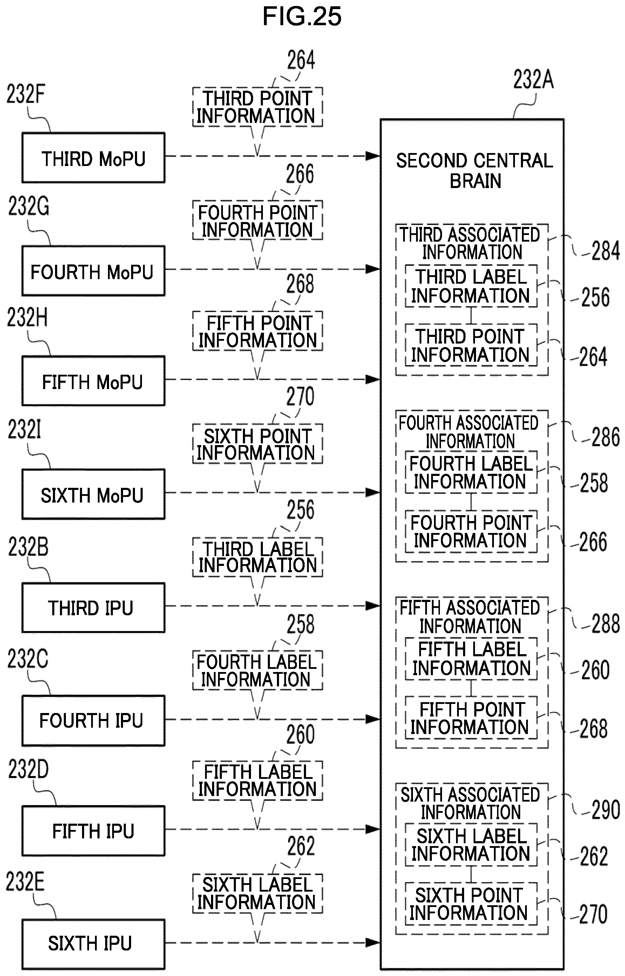

Fig. 25 is a conceptual diagram illustrating an example of content of processing to acquire information necessary for the second central brain 232A to realize control of automatic driving of the convoy 200.

The second central brain 232A acquires the third label information 256 from the third IPU 232C and acquires the third point information 264 from the third MoPU 232F. Then, the second central brain 232A generates third associated information 284 on the basis of the third label information 258 and the third point information 264. The third associated information 284 is information in which the third label information 256 and the third point information 264 are associated in a way similar to that described above in the first embodiment and the like.

In a way similar to this, the second central brain 232A generates fourth associated information 286 on the basis of the fourth label information 258 acquired from the fourth IPU 232C and the fourth point information 266 acquired from the fourth MoPU 232G. Also, the second central brain 232A generates fifth associated information 288 on the basis of the fifth label information 260 acquired from the fifth IPU 232D and the fifth point information 268 acquired from the fifth MoPU 232H. Furthermore, the second central brain 232A generates sixth associated information 290 on the basis of the sixth label information 262 acquired from the sixth IPU 232E and the sixth point information 270 acquired from the sixth MoPU 232I.

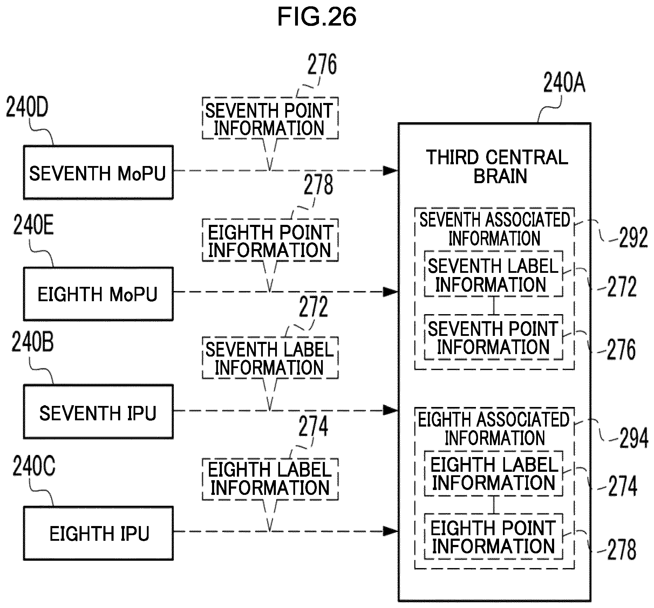

Fig. 26 is a conceptual diagram illustrating an example of content of processing to acquire information necessary for the third central brain 240A to realize control of automatic driving of the convoy 200.

The third central brain 240A acquires the seventh label information 272 from the seventh IPU 240B and acquires the seventh point information 276 acquired from the seventh MoPU 240D. Then, the third central brain 240A generates seventh associated information 292 on the basis of the seventh label information 272 and the seventh point information 276. The seventh associated information 292 is information in which the seventh label information 272 and the seventh point information 276 are associated in a way similar to that described above in the first embodiment and the like.

In a way similar to this, the third central brain 240A generates eighth associated information 294 on the basis of the eighth label information 274 acquired from the eighth IPU 240C and the eighth point information 278 acquired from the eighth MoPU 240E.

In the example illustrated in Fig. 26, the eighth associated information 294 is an example of the "rear associated information" of the disclosure. Also, the eighth point information 278 is an example of the "rear point information" of the disclosure. Moreover, the eighth label information 274 is an example of the "rear object information" of the disclosure.

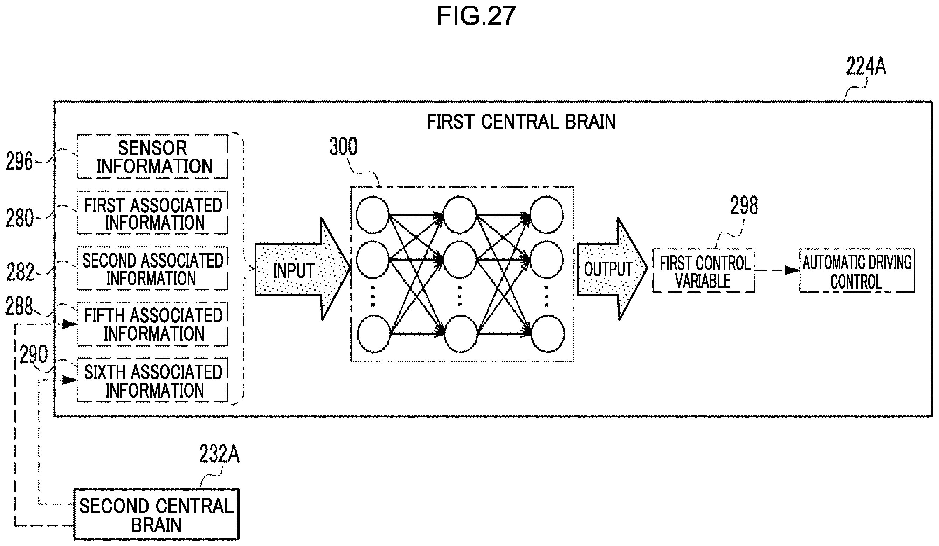

Fig. 27 is a conceptual diagram illustrating an example of content of processing performed to control automatic driving of the leading vehicle 204A when the first central brain 224A realizes control of automatic driving of the convoy 200.

The first central brain 224A acquires the fifth associated information 288 and the sixth associated information 290 from the second central brain 232A. Then, the first central brain 224A derives a first control variable 298 on the basis of sensor information 296, the first associated information 280, the second associated information 282, the fifth associated information 288, and the sixth associated information 290.

The sensor information 296 is information with the same concept as that of the sensor information described above in the first embodiment and the like and is obtained from a plurality of kinds of sensors mounted in the leading vehicle 204A. The first control variable 298 is a variable with the same concept as that of the control variable described above in the first embodiment and the like and is a variable used to control the automatic driving of the leading vehicle 204A to realize the control of the automatic driving of the convoy 200.

The first central brain 224A includes a deep learning model 300 and derives the first control variable 298 using the deep learning model 300.

The deep learning model 300 is a trained model obtained by performing deep learning using teacher data on a neural network. An example of the teacher data used here is a data set in which example data and correct answer data assuming the first control variable 298 are associated. Examples of the example data include each item of data obtained in advance by a test, computer simulation, and/or the like by an actual machine as each item of data assuming the sensor information 296, and each item of data obtained in advance by a test, computer simulation, and/or the like by an actual machine as each item of data assuming each of the first associated information 280, the second associated information 282, the fifth associated information 288, and the sixth associated information 290.

The first central brain 224A inputs the sensor information 296, the first associated information 280, the second associated information 282, the fifth associated information 288, and the sixth associated information 290 to the deep learning model 300. The deep learning model 300 outputs the first control variable 298 (for example, a control variable with the highest certainty factor) corresponding to the sensor information 296, the first associated information 280, the second associated information 282, the fifth associated information 288, and the sixth associated information 290 input.

Note that although the deriving method in which the first control variable 298 is derived by using the deep learning model 300 is exemplified here, this is just an example, and the first control variable 298 may be derived by using various deriving methods (for example, multivariate analysis based on an integration method) described above in the fourth embodiment.

The first central brain 224A controls the automatic driving of the leading vehicle 204A on the basis of the first control variable 298 in a way similar to that described above in the first embodiment and the like.

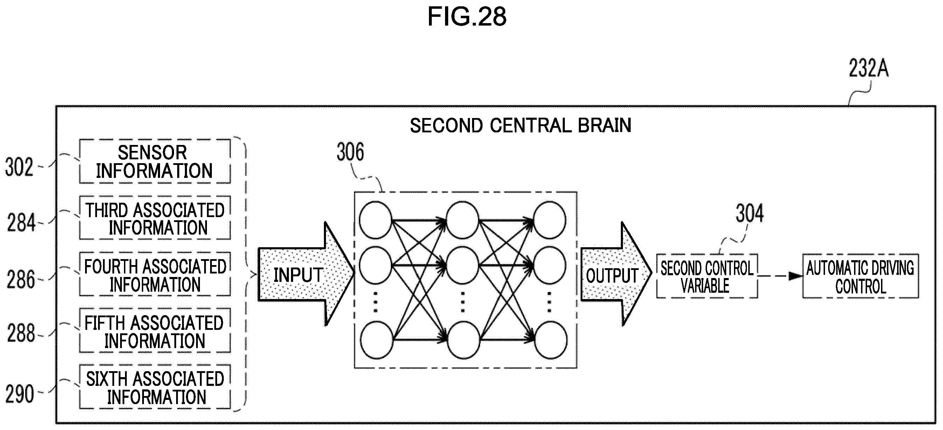

Fig. 28 is a conceptual diagram illustrating an example of content of processing performed to control automatic driving of the intermediate vehicle 204B when the second central brain 232A realizes the control of the automatic driving of the convoy 200.

The second central brain 232A derives a second control variable 304 on the basis of sensor information 302, the third associated information 284, the fourth associated information 286, the fifth associated information 288, and the sixth associated information 290.

The sensor information 302 is information with the same concept as that of the sensor information described above in the first embodiment and the like and is obtained by a plurality of kinds of sensors mounted in the intermediate vehicle 204B. The second control variable 304 is a variable with the same concept as that of the control variable described above in the first embodiment and the like and is a variable used to control the automatic driving of the intermediate vehicle 204B in order to realize the control of the automatic driving of the convoy 200.

The second central brain 232A includes a deep learning model 306 and derives a second control variable 304 using the deep learning model 306.

The deep learning model 306 is a trained model obtained by performing deep learning using teacher data on a neural network. An example of the teacher data used here is a data set in which example data and correct answer data assuming the second control variable 304 are associated. Examples of the example data include each item of data obtained in advance by a test, computer simulation, and/or the like by an actual machine as each item of data assuming the sensor information 302, and each item of data obtained in advance by a test, computer simulation, and/or the like by an actual machine as each item of data assuming each of the third associated information 284, the fourth associated information 286, the fifth associated information 288, and the sixth associated information 290.

The second central brain 232A inputs the sensor information 302, the third associated information 284, the fourth associated information 286, the fifth associated information 288, and the sixth associated information 290 to the deep learning model 306. The deep learning model 306 outputs a second control variable 304 (for example, a control variable with the highest certainty factor) corresponding to the sensor information 302, the third associated information 284, the fourth associated information 286, the fifth associated information 288, and the sixth associated information 290 input.

Note that although the deriving method in which the second control variable 304 is derived by using the deep learning model 306 is exemplified here, this is just an example, and the second control variable 304 may be derived by using various deriving methods (for example, multivariate analysis based on an integration method) described above in the fourth embodiment.

The second central brain 232A controls the automatic driving of the intermediate vehicle 204B on the basis of the second control variable 304 in a way similar to that described above in the first embodiment and the like.

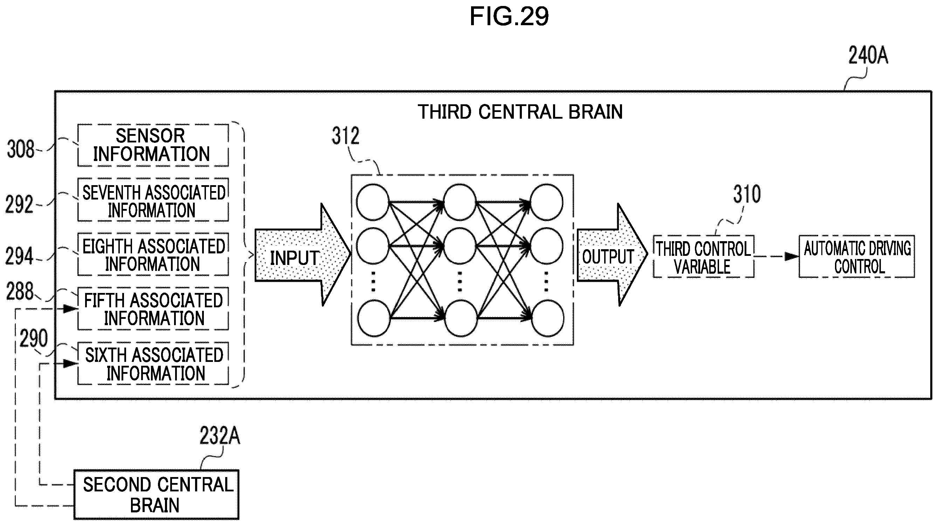

Fig. 29 is a conceptual diagram illustrating an example of content of processing performed to control automatic driving of the tail end vehicle 204C when the third central brain 240A realizes control of the automatic driving of the convoy 200.

The third central brain 240A acquires the fifth associated information 288 and the sixth associated information 290 from the second central brain 232A. Then, the third central brain 240A derives a third control variable 310 on the basis of the sensor information 308, the fifth associated information 288, the sixth associated information 290, the seventh associated information 292, and the eighth associated information 294.

The sensor information 308 is information with the same concept as that of the sensor information described above in the first embodiment and the like and is obtained from a plurality of kinds of sensors mounted in the tail end vehicle 204C. The third control variable 310 is a variable with the same concept as that of the control variable described above in the first embodiment and the like and is a variable used to control automatic driving of the tail end vehicle 204C in order to realize the control of the automatic driving of the convoy 200.

The third central brain 240A includes a deep learning model 312 and derives the third control variable 310 using the deep learning model 312.

The deep learning model 312 is a trained model obtained by performing deep learning using teacher data on a neural network. An example of the teacher data used here is a data set in which example data and correct answer data assuming the third control variable 310 are associated. Examples of the example data include each item of data obtained in advance by a test, computer simulation, and/or the like by an actual machine as each item of data assuming the sensor information 308, and each item of data obtained in advance by a test, computer simulation, and/or the like by an actual machine as each item of data assuming each of the fifth associated information 288, the sixth associated information 290, the seventh associated information 292, and the eighth associated information 294.

The third central brain 240A inputs the sensor information 308, the fifth associated information 288, the sixth associated information 290, the seventh associated information 292, and the eighth associated information 294 to the deep learning model 312. The deep learning model 312 outputs a third control variable 310 (for example, a control variable with the highest certainty factor) corresponding to the sensor information 308, the fifth associated information 288, the sixth associated information 290, the seventh associated information 292, and the eighth associated information 294 input.

Note that although the deriving method in which the third control variable 310 is derived by using the deep learning model 312 is exemplified here, this is just an example, and the third control variable 310 may be derived by using various deriving methods (for example, multivariate analysis based on an integration method) described above in the fourth embodiment.

The third central brain 240A controls the automatic driving of the tail end vehicle 204C on the basis of the third control variable 310 in a way similar to that described above in the first embodiment and the like.

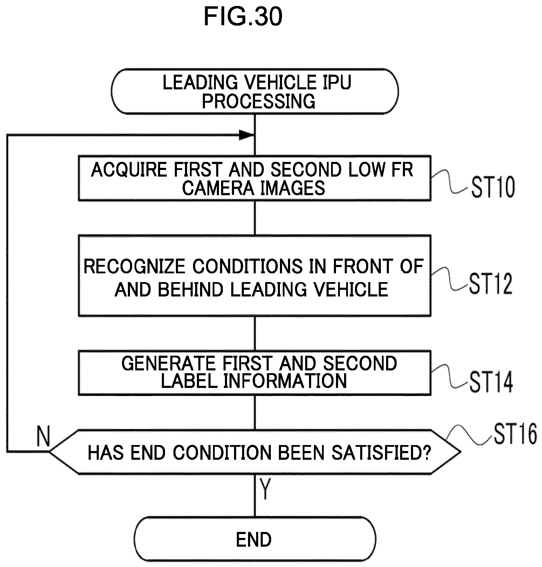

Next, effects of the information processing apparatus 206 according to the present eleventh embodiment will be described with reference to Figs. 30 to 38.

Fig. 30 is a flowchart illustrating an example of a flow of leading vehicle IPU processing performed by the leading vehicle processor 224.

In the leading vehicle IPU processing illustrated in Fig. 30, the first IPU 224B acquires the first low FR camera image 208A1 from the first low FR camera 208A in step ST10 first. In addition, the second IPU 224C acquires the second low FR camera image 210A1 from the second low FR camera 210A. After the processing in step ST10 is executed, the leading vehicle IPU processing proceeds to step ST12.

In step ST12, the first IPU 224B recognizes conditions (for example, a kind of the first front object) in front of the leading vehicle 204A on the basis of the first low FR camera image 208A1. In addition, the second IPU 224C recognizes a condition (for example, the kind of the first rear object) behind the leading vehicle 204A based on the second low FR camera image 210A1. After the processing in step ST12 is executed, the leading vehicle IPU processing proceeds to step ST14.

In step ST14, the first IPU 224B generates the first label information 248 indicating a result of recognizing the conditions in front of the leading vehicle 204A. Also, the second IPU 224C generates the second label information 250 indicating a result of recognizing the conditions behind the leading vehicle 204A. After the processing in step ST14 is executed, the leading vehicle IPU processing proceeds to step ST16.

In step ST16, the leading vehicle processor 224 determines whether or not a condition under which the leading vehicle IPU processing is to be ended has been satisfied. An example of the condition under which the leading vehicle IPU processing is to be ended is a condition that an instruction to end the leading vehicle IPU processing has been provided to the leading vehicle processor 224. In a case in which the condition under which the leading vehicle IPU processing is to be ended is not satisfied in step ST16, the determination is denied, and the leading vehicle IPU processing moves on to step ST10. In a case in which the condition under which the leading vehicle IPU processing is to be ended is satisfied in step ST16, the determination is affirmed, and the leading vehicle IPU processing is ended.

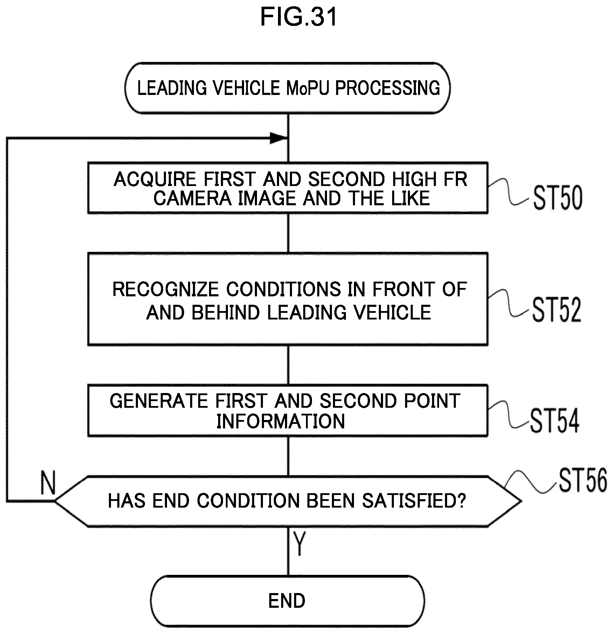

Fig. 31 is a flowchart illustrating an example of a flow of leading vehicle MoPU processing performed by the leading vehicle processor 224.

In the leading vehicle IPU processing illustrated in Fig. 31, the first MoPU 224D acquires the first high FR camera image 208B1 from the first high FR camera 208B in step ST50 first. Also, the first MoPU 224D acquires the first radar signal 208C1 from the first radar 208C. The second MoPU 224E acquires the second high FR camera image 210B1 from the second high FR camera 210B. Furthermore, the second MoPU 224E acquires the second radar signal 210C1 from the second radar 210C. After the processing in step ST50 is executed, the leading vehicle MoPU processing moves on to step ST52.

In step ST52, the first MoPU 224D recognizes conditions in front of the leading vehicle 204A (for example, the first front object) as a point on the basis of the first high FR camera image 208B1 and the first radar signal 208C1. Also, the second MoPU 224E recognizes conditions behind the leading vehicle 204A (for example, the first rear object) as a point on the basis of the second high FR camera image 210B1 and the second radar signal 210C1. After the processing in step ST52 is executed, the leading vehicle MoPU processing moves on to step ST54.

In step ST54, the first MoPU 224D generates the first point information 252 indicating the result of recognizing the conditions in front of the leading vehicle 204A as a point. Also, the second MoPU 224E generates second point information 254 indicating the result of recognizing the conditions behind the leading vehicle 204A as a point. After the processing in step ST54 is executed, the leading vehicle MoPU processing moves on to step ST56.

In step ST56, the leading vehicle processor 224 determines whether or not a condition under which the leading vehicle MoPU processing is to be ended has been satisfied. An example of the condition under which the leading vehicle MoPU processing is to be ended is a condition that an instruction to end the leading vehicle MoPU processing has been provided to the leading vehicle processor 224. In a case in which the condition under which the leading vehicle MoPU processing is to be ended is not satisfied in step ST56, the determination is denied, and the leading vehicle MoPU processing moves on to step ST50. In a case in which the condition under which the leading vehicle MoPU processing is to be ended is satisfied in step ST56, the determination is affirmed, and the leading vehicle MoPU processing is ended.

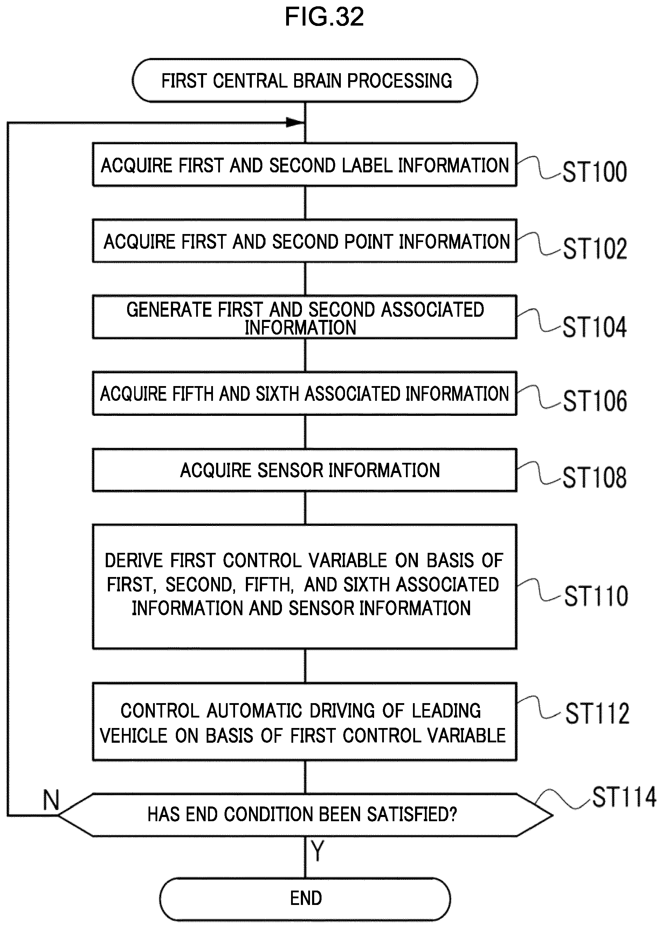

Fig. 32 is a flowchart illustrating an example of a flow of first central brain processing performed by the leading vehicle processor 224.

In the first central brain processing illustrated in Fig. 32, the first central brain 224A acquires the first label information 248 from the first IPU 224B and acquires the second label information 250 from the second IPU 224C in step ST100 first. After the processing in step ST100 is executed, the first central brain processing moves on to step ST102.

In step ST102, the first central brain 224A acquires the first point information 252 from the first MoPU 224D and acquires the second point information 254 from the second MoPU 224E. After the processing in step ST102 is executed, the first central brain processing moves on to step ST104.

In step ST104, the first central brain 224A generates the first associated information 280 by associating the first label information 248 with the first point information 252. Also, the first central brain 224A generates the second associated information 282 by associating the second label information 250 with the second point information 254. After the processing in step ST104 is executed, the first central brain processing moves on to step ST106.

In step ST106, the first central brain 224A acquires the fifth associated information 288 and the sixth associated information 290 from the second central brain 232A. After the processing in step ST106 is executed, the first central brain processing moves on to step ST108.

In step ST108, the first central brain 224A acquires the sensor information 296 from a plurality of kinds of sensors in the leading vehicle 204A. After the processing in step ST108 is executed, the first central brain processing moves on to step ST110.

In step ST110, the first central brain 224A derives the first control variable 298 on the basis of the sensor information 296, the first associated information 280, the second associated information 282, the fifth associated information 288, and the sixth associated information 290. After the processing in step ST110 is executed, the first central brain processing moves on to step ST112.

In step ST112, the first central brain 224A controls the automatic driving of the leading vehicle 204A on the basis of the first control variable 298. After the processing in step ST112 is executed, the first central brain processing moves on to step ST114.

In step ST114, the first central brain 224A determines whether or not the condition under which the first central brain processing is to be ended has been satisfied. An example of the condition under which the first central brain processing is to be ended is a condition that an instruction to end the first central brain processing has been provided to the leading vehicle processor 224. In a case in which the condition under which the first central brain processing is to be ended is not satisfied in step ST114, the determination is denied, and the first central brain processing moves on to step ST100. In a case in which the condition under which the first central brain processing is to be ended is satisfied in step ST114, the determination is affirmed, and the first central brain processing is ended.

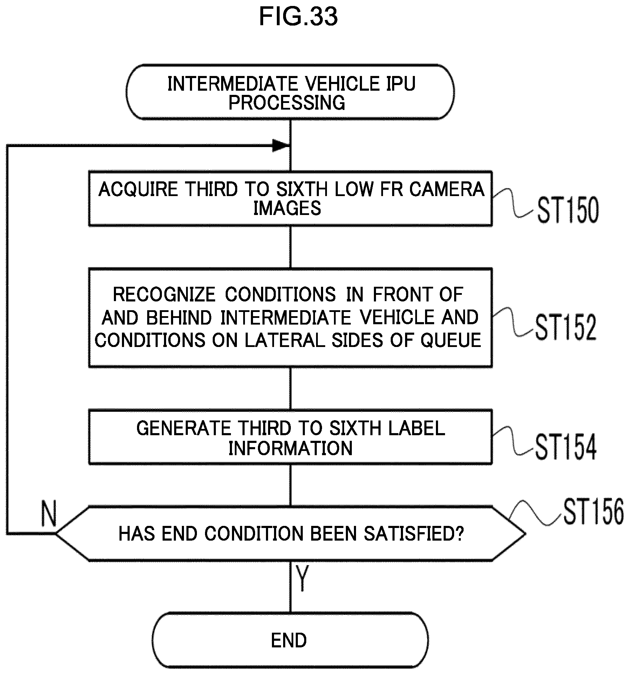

Fig. 33 is a flowchart illustrating an example of a flow of intermediate vehicle IPU processing performed by the intermediate vehicle processor 232.

In the intermediate vehicle IPU processing illustrated in Fig. 33, the third IPU 232B acquires the third low FR camera image 212A1 from the third low FR camera 212A in step ST150 first. Also, the fourth IPU 232C acquires the fourth low FR camera image 214A1 from the fourth low FR camera 214A. The fifth IPU 232D acquires the fifth low FR camera image 216A1 from the fifth low FR camera 216A. Furthermore, the sixth IPU 232E acquires the sixth low FR camera image 218A1 from the sixth low FR camera 218A. After the processing in step ST150 is executed, the intermediate vehicle IPU processing moves on to step ST152.

In step ST152, the third IPU 232B recognizes conditions in front of the intermediate vehicle 204B (for example, the kind of the second front object) on the basis of the third low FR camera image 212A1. Also, the fourth IPU 232C recognizes conditions behind the intermediate vehicle 204B (for example, the kind of the second rear object) on the basis of the fourth low FR camera image 214A1. Also, the fifth IPU 232D recognizes conditions on the left side of the intermediate vehicle 204B (for example, the kind of the left-side object) on the basis of the fifth low FR camera image 216A1. Furthermore, the sixth IPU 232E recognizes conditions on the right side of the intermediate vehicle 204B (for example, a kind of the right-side object) on the basis of the sixth low FR camera image 218A1. After the processing in step ST152 is executed, the intermediate vehicle IPU processing moves on to step ST154.

In step ST154, the third IPU 232B generates the third label information 256 indicating the result of recognizing the conditions in front of the intermediate vehicle 204B. Also, the fourth IPU 232C generates the fourth label information 258 indicating the result of recognizing the conditions behind the intermediate vehicle 204B. The fifth IPU 232D generates the fifth label information 260 indicating the result of recognizing the conditions on the left side of the intermediate vehicle 204B. Furthermore, the sixth IPU 232E generates the sixth label information 262 indicating the result of recognizing the conditions on the right side of the intermediate vehicle 204B. After the processing in step ST154 is executed, the intermediate vehicle IPU processing moves on to step ST156.

In step ST156, the intermediate vehicle processor 232 determines whether or not a condition under which the intermediate vehicle IPU processing is to be ended has been satisfied. An example of the condition under which the intermediate vehicle IPU processing is to be ended is a condition that an instruction to end the intermediate vehicle IPU processing has been provided to the intermediate vehicle processor 232. In a case in which the condition under which the intermediate vehicle IPU processing is to be ended is not satisfied in step ST156, the determination is denied, and the intermediate vehicle IPU processing moves on to step ST150. In a case in which the condition under which the intermediate vehicle IPU processing is to be ended is satisfied in step ST156, the determination is affirmed, and the intermediate vehicle IPU processing is ended.

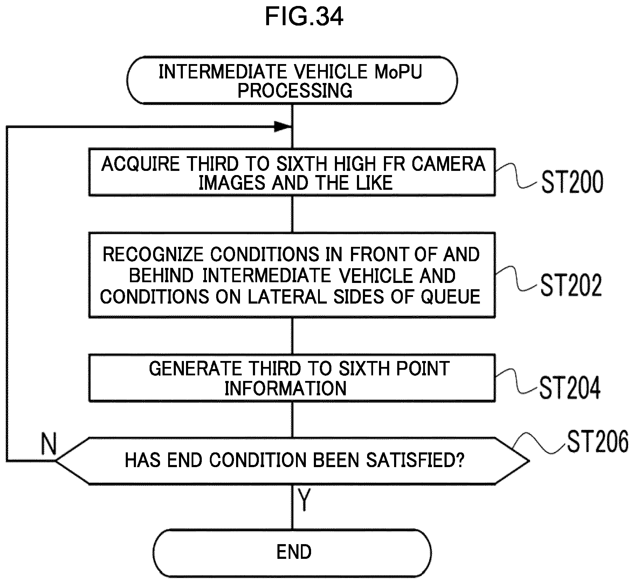

Fig. 34 is a flowchart illustrating an example of a flow of intermediate vehicle MoPU processing performed by the intermediate vehicle processor 232.

In the intermediate vehicle MoPU processing illustrated in Fig. 34, the third MoPU 232F acquires the third high FR camera image 212B1 from the third high FR camera 212B in step ST200 first. Also, the third MoPU 232F acquires the third radar signal 212C1 from the third radar 212C. The fourth MoPU 232G acquires the fourth high FR camera image 214B1 from the fourth high FR camera 214B. The fourth MoPU 232G acquires the fourth radar signal 214C1 from the fourth radar 214C. The fifth MoPU 232H acquires the fifth high FR camera image 216B1 from the fifth high FR camera 216B. The fifth MoPU 232H acquires the fifth radar signal 216C1 from the fifth radar 216C. The sixth MoPU 232I acquires the sixth high FR camera image 218B1 from the sixth high FR camera 218B. Furthermore, the sixth MoPU 232I acquires the sixth radar signal 218C1 from the sixth radar 218C. After the processing in step ST200 is executed, the intermediate vehicle MoPU processing moves on to step ST202.

In step ST202, the third MoPU 232F recognizes conditions in front of the intermediate vehicle 204B (for example, the second front object) as a point on the basis of the third high FR camera image 212B1 and the third radar signal 212C1. Also, the fourth MoPU 232G recognizes conditions behind the intermediate vehicle 204B (for example, the second rear object) as a point on the basis of the fourth high FR camera image 214B1 and the fourth radar signal 214C1. The fifth MoPU 232H recognizes conditions on the left side of the intermediate vehicle 204B (for example, the left-side object) as a point on the basis of the fifth high FR camera image 216B1 and the fifth radar signal 216C1. Furthermore, the sixth MoPU 232I recognizes conditions on the right side of the intermediate vehicle 204B (for example, the right-side object) on the basis of the sixth high FR camera image 218B1 and the sixth radar signal 218C1. After the processing in step ST202 is executed, the intermediate vehicle MoPU processing moves on to step ST204.

In step ST204, the third MoPU 232F generates the third point information 264 indicating the result of recognizing the conditions in front of the intermediate vehicle 204B as a point. The fourth MoPU 232G generates the fourth point information 266 indicating the result of recognizing the conditions behind the intermediate vehicle 204B as a point. The fifth MoPU 232H generates the fifth point information 268 indicating the result of recognizing the conditions on the left side of the intermediate vehicle 204B as a point. Furthermore, the sixth MoPU 232I generates the sixth point information 270 indicating the result of recognizing the conditions on the right side of the intermediate vehicle 204B as a point. After the processing in step ST204 is executed, the intermediate vehicle MoPU processing moves on to step ST206.

In step ST206, the intermediate vehicle processor 232 determines whether or not a condition under which the intermediate vehicle MoPU processing is to be ended has been satisfied. An example of the condition under which the intermediate vehicle MoPU processing is to be ended is a condition that an instruction to end the intermediate vehicle MoPU processing has been provided to the intermediate vehicle processor 232. In a case in which the condition under which the intermediate vehicle MoPU processing is to be ended is not satisfied in step ST206, the determination is denied, and the intermediate vehicle MoPU processing moves on to step ST200. In a case in which the condition under which the intermediate vehicle MoPU processing is to be ended is satisfied in step ST206, the determination is affirmed, and the intermediate vehicle MoPU processing is ended.

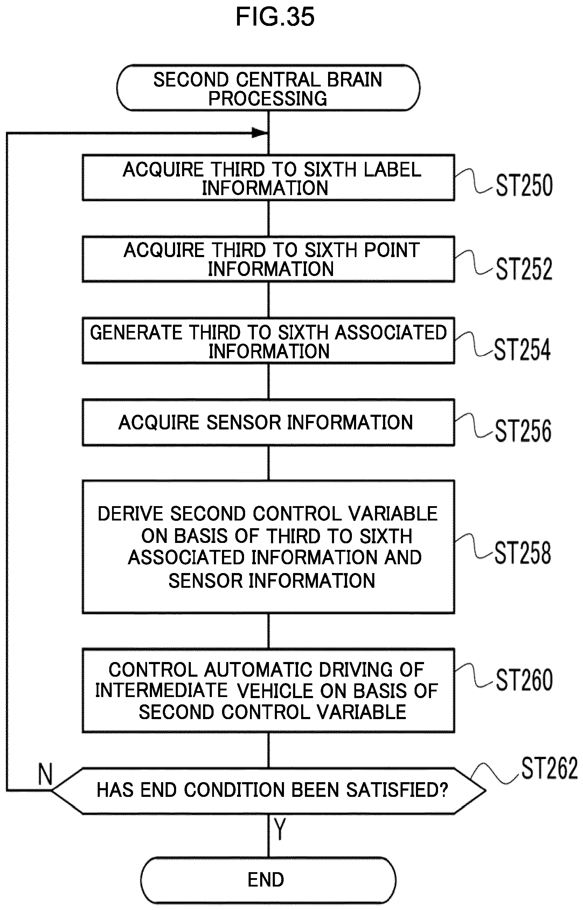

Fig. 35 is a flowchart illustrating an example of a flow of second central brain processing performed by the intermediate vehicle processor 232.

In the second central brain processing illustrated in Fig. 35, the second central brain 232A acquires the third label information 256 from the third IPU 232B, acquires the fourth label information 258 from the fourth IPU 232C, acquires the fifth label information 260 from the fifth IPU 232D, and acquires the sixth label information 262 from the sixth IPU 232E in step ST250 first. After the processing in step ST250 is executed, the second central brain processing moves on to step ST252.

In step ST252, the second central brain 232A acquires the third point information 264 from the third MoPU 232F, acquires the fourth point information 266 from the fourth MoPU 232G, acquires the fifth point information 268 from the fifth MoPU 232H, and acquires the sixth point information 270 from the sixth MoPU 232I. After the processing in step ST252 is executed, the second central brain processing moves on to step ST254.

In step ST254, the second central brain 232A generates the third associated information 284 by associating the third label information 256 with the third point information 264. Also, the second central brain 232A generates the fourth associated information 286 by associating the fourth label information 258 with the fourth point information 266. The second central brain 232A generates the fifth associated information 288 by associating the fifth label information 260 with the fifth point information 268. Furthermore, the second central brain 232A generates the sixth associated information 290 by associating the sixth label information 262 with the sixth point information 270. After the processing in step ST254 is executed, the second central brain processing moves on to step ST256.

In step ST256, the second central brain 232A acquires the sensor information 302 from a plurality of kinds of sensors in the intermediate vehicle 204B. After the processing in step ST256 is executed, the second central brain processing moves on to step ST258.

In step ST258, the second central brain 232A derives the second control variable 304 on the basis of the sensor information 302, the third associated information 284, the fourth associated information 286, the fifth associated information 288, and the sixth associated information 290. After the processing in step ST258 is executed, the second central brain processing moves on to step ST260.

In step ST260, the second central brain 232A controls the automatic driving of the intermediate vehicle 204B on the basis of the second control variable 304. After the processing in step ST260 is executed, the second central brain processing moves on to step ST262.

In step ST262, the second central brain 232A determines whether or not a condition under which the second central brain processing is to be ended has been satisfied. An example of the condition under which the second central brain processing is to be ended is a condition that an instruction to end the second central brain processing has been provided to the intermediate vehicle processor 232. In a case in which the condition under which the second central brain processing is to be ended is not satisfied in step ST262, the determination is denied, and the second central brain processing moves on to step ST250. In a case in which the condition under which the second central brain processing is to be ended is satisfied in step ST262, the determination is affirmed, and the second central brain processing is ended.

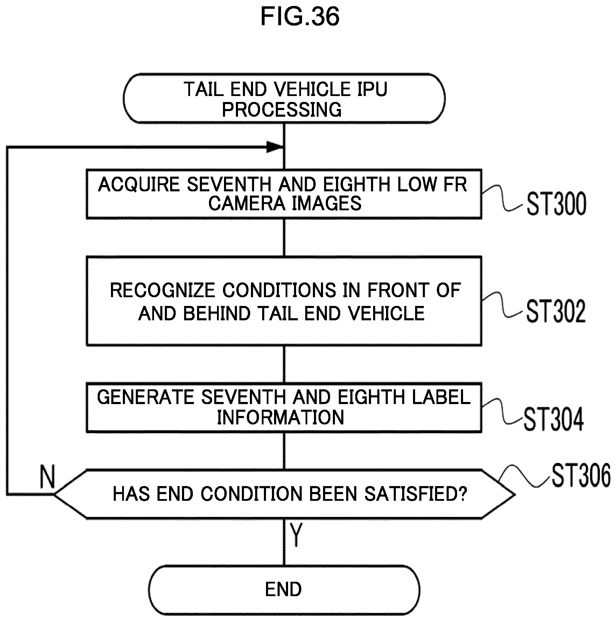

Fig. 36 is a flowchart illustrating an example of a flow of tail end vehicle IPU processing performed by the tail end vehicle processor 240.

In the tail end vehicle IPU processing illustrated in Fig. 36, the seventh IPU 240B acquires the seventh low FR camera image 220A1 from the seventh low FR camera 220A in step ST300 first. Also, the eighth IPU 240C acquires the eighth low FR camera 222A1 from the eighth low FR camera 222A. After the processing in step ST300 is executed, the tail end vehicle IPU processing moves on to step ST302.

In step ST302, the seventh IPU 240B recognizes conditions in front of the tail end vehicle 204C (for example, a kind of the third front object) on the basis of the seventh low FR camera image 220A1. Also, the eighth IPU 240C recognizes conditions behind the tail end vehicle 204C (for example, a kind of the third rear object) on the basis of the eighth low FR camera image 222A1. After the processing in step ST302 is executed, the tail end vehicle IPU processing moves on to step ST304.

In step ST304, the seventh IPU 240B generates the seventh label information 272 indicating the result of recognizing the conditions in front of the tail end vehicle 204C. The eighth IPU 240C generates the eighth label information 274 indicating the result of recognizing the conditions behind the tail end vehicle 204C. After the processing in step ST304 is executed, the tail end vehicle IPU processing moves on to step ST306.

In step ST306, the tail end vehicle processor 240 determines whether or not a condition under which the tail end vehicle IPU processing is to be ended has been satisfied. An example of the condition under which the tail end vehicle IPU processing is to be ended is a condition that an instruction to end the tail end vehicle IPU processing has been provided to the tail end vehicle processor 240. In a case in which the condition under which the tail end vehicle IPU processing is to be ended is not satisfied in step ST306, the determination is denied, and the tail end vehicle IPU processing moves on to step ST300. In a case in which the condition under which the tail end processing vehicle IPU processing is to be ended is satisfied in step ST306, the determination is affirmed, and the tail end vehicle IPU processing is ended.

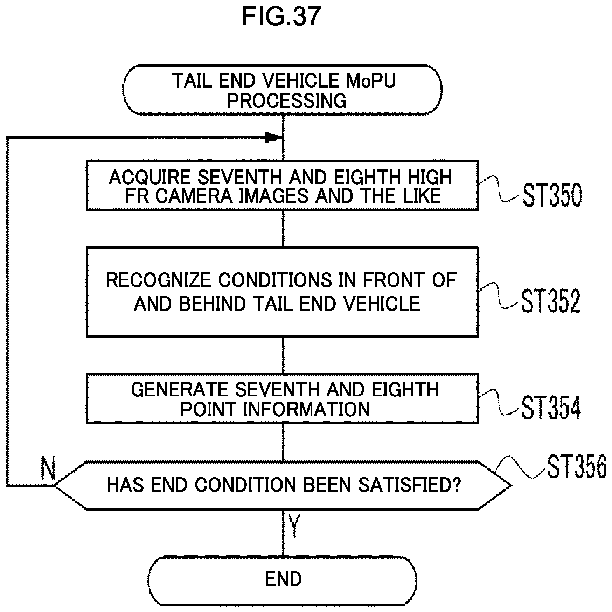

Fig. 37 is a flowchart illustrating an example of a flow of tail end vehicle MoPU processing performed by the tail end vehicle processor 240.

In the tail end vehicle MoPU processing illustrated in Fig. 37, the seventh MoPU 240D acquires the seventh high FR camera image 220B1 from the seventh high FR camera 220B in step ST350 first. Also, the seventh MoPU 240D acquires the seventh radar signal 220C1 from the seventh radar 220C. The eighth MoPU 240E acquires the eighth high FR camera image 222B1 from the eighth high FR camera 222B. Furthermore, the eighth MoPU 240E acquires the eighth radar signal 222C1 from the eighth radar 222C. After the processing in step ST350 is executed, the tail end vehicle MoPU processing moves on to step ST352.

In step ST352, the seventh MoPU 240D recognizes conditions in front of the tail end vehicle 204C (for example, the third front object) as a point on the basis of the seventh high FR camera image 220B1 and the seventh radar signal 220C1. In addition, the eighth MoPU 240E recognizes conditions behind the tail end vehicle 204C (for example, the third rear object) as a point on the basis of the eighth high FR camera image 222B1 and the eighth radar signal 222C1. After the processing in step ST352 is executed, the tail end vehicle MoPU processing moves on to step ST354.

In step ST354, the seventh MoPU 240D generates the seventh point information 276 indicating the result of recognizing the conditions in front of the tail end vehicle 204C as a point. Also, the eighth MoPU 240E generates the eighth point information 278 indicating the result of recognizing the conditions behind the tail end vehicle 204C as a point. After the processing in step ST354 is executed, the tail end vehicle MoPU processing moves on to step ST356.

In step ST356, the tail end vehicle processor 240 determines whether or not a condition under which the tail end vehicle MoPU processing is to be ended has been satisfied. An example of the condition under which the tail end vehicle MoPU processing is to be ended is a condition that an instruction to end the tail end vehicle MoPU processing has been provided to the tail end vehicle processor 240. In a case in which the condition under which the tail end vehicle MoPU processing is to be ended is not satisfied in step ST356, the determination is denied, and the tail end vehicle MoPU processing moves on to step ST350. In a case in which the condition under which the tail end processing vehicle MoPU processing is to be ended is satisfied in step ST356, the determination is affirmed, and the tail end vehicle MoPU processing is ended.

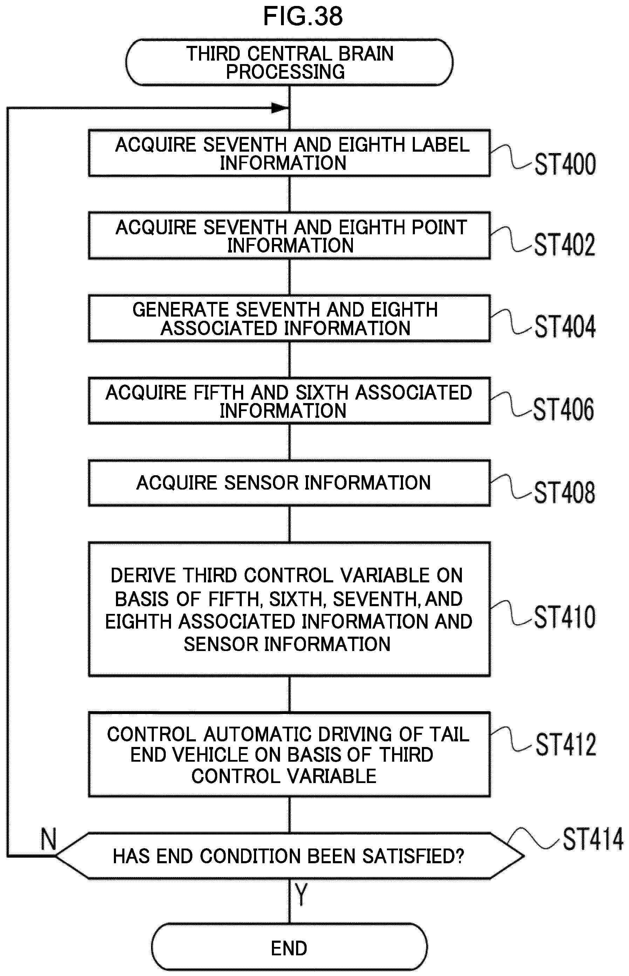

Fig. 38 is a flowchart illustrating an example of a flow of third central brain processing performed by the tail end vehicle processor 240.

In the third central brain processing illustrated in Fig. 38, the third central brain 240A acquires the seventh label information 272 from the seventh IPU 240B and acquires the eighth label information 274 from the eighth IPU 240C in step ST400 first. After the processing in step ST400 is executed, the third central brain processing moves on to step ST402.

In step ST402, the third central brain 240A acquires the seventh point information 276 from the seventh MoPU 240D and acquires the eighth point information 278 from the eighth MoPU 240E. After the processing in step ST402 is executed, the third central brain processing moves on to step ST404.

In step ST404, the third central brain 240A generates the seventh associated information 292 by associating the seventh label information 272 with the seventh point information 276. The third central brain 240A generates the eighth associated information 294 by associating the eighth label information 274 with the eighth point information 278. After the processing in step ST404 is executed, the third central brain processing moves on to step ST406.

In step ST406, the third central brain 240A acquires the fifth associated information 288 and the sixth associated information 290 from the second central brain 232A. After the processing in step ST406 is executed, the third central brain processing moves on to step ST408.

In step ST408, the third central brain 240A acquires the sensor information 308 from a plurality of kinds of sensors in the tail end vehicle 204C. After the processing in step ST408 is executed, the third central brain processing moves on to step ST410.

In step ST410, the third central brain 240A derives the third control variable 310 on the basis of the sensor information 308, the fifth associated information 288, the sixth associated information 290, the seventh associated information 292, and the eighth associated information 294. After the processing in step ST410 is executed, the third central brain processing moves on to step ST412.

In step ST412, the third central brain 240A controls automatic driving of the tail end vehicle 204C on the basis of the third control variable 310. After the processing in step ST412 is executed, the third central brain processing moves on to step ST414.

In step ST414, the third central brain 240A determines whether or not a condition under which the third central brain processing is to be ended has been satisfied. An example of the condition under which the third central brain processing is to be ended is a condition that an instruction to end the third central brain processing has been provided to the tail end vehicle processor 240. In a case in which the condition under which the third central brain processing is to be ended is not satisfied in step ST414, the determination is denied, and the third central brain processing moves on to step ST400. In a case in which the condition under which the third central brain processing is to be ended is satisfied in step ST414 the determination is affirmed, and the third central brain processing is ended.

As described above, the conditions in front of the convoy 200 are recognized by the first IPU 224B on the basis of the first low FR camera image 208A1 in the present eleventh embodiment. Also, the conditions behind the convoy 200 are recognized by the eighth IPU 240D on the basis of the eighth low FR camera image 222A1. Furthermore, the conditions on the left side of the convoy 200 are recognized by the fifth MoPU 232H1 on the basis of the fifth high FR camera image 216B1, and the conditions on the right side of the convoy 200 are recognized by the sixth MoPU 232I on the basis of the sixth high FR camera image 218B1.

Here, the fifth high FR camera image 216B is an image obtained by the fifth high FR camera 216B that is mounted in the intermediate vehicle 204B imaging the left side of the convoy 200, and the sixth high FR camera image 218B1 is an image obtained by the sixth high FR camera 218B that is mounted in the intermediate vehicle 204B imaging the right side of the convoy 200. In other words, the lateral sides of the convoy 200 are not imaged by each of the cameras provided in each of all the vehicles 204 forming the convoy 200, and the lateral sides (here, the left side and the right side of the convoy 200 in an example) of the convoy 200 are imaged by the fifth high FR camera 216B and the sixth high FR camera 218B mounted in one intermediate vehicle 204B configuring the convoy 200.

Therefore, according to the present eleventh embodiment, the information processing apparatus 206 can recognize conditions on each of the front side, the rear side, and the lateral sides of the convoy 200 without a processing load imparted thereon as compared with a case in which the information processing apparatus 206 recognizes the conditions on the lateral sides of the convoy 200 on the basis of all images obtained by each camera provided in each of all the vehicles 204 forming the convoy 200 imaging the lateral sides of the convoy 200.

Also, the fifth high FR camera 216A and the sixth high FR camera 218B are provided in the intermediate vehicle 204B instead of the leading vehicle 204A and the tail end vehicle 204C in the present eleventh embodiment. Here, the conditions on the left side of the convoy 200 are recognized on the basis of the fifth high FR camera image 218B1 obtained by the fifth high FR camera 216A imaging the left side of the convoy 200, and the conditions on the right side of the convoy 200 are recognized on the basis of the sixth high FR camera image 218B1 obtained by the sixth high FR camera 218B imaging the right side of the convoy 200. The automatic driving of the convoy 200 is controlled on the basis of the result of recognizing the conditions on the left side of the convoy 200 and the conditions on the right side of the convoy 200 in the present eleventh embodiment. Therefore, in a case in which the convoy 200 is automatically driven, the conditions on the lateral sides at the intermediate position of the entire convoy 200 are grasped by the information processing apparatus 206, and it is thus possible to cause the entire convoy 200 to accurately move as compared with a case in which the fifth high FR camera 216A and the sixth high FR camera 218B are provided in the leading vehicle 204A or the tail end vehicle 204C instead of the intermediate vehicle 204B.

Also, the lateral sides of the convoy 200 are imaged by the fifth high FR camera 216B and the sixth high FR camera 218B at the fifth high frame rate and the sixth high frame rate, which are frame rates that are higher than the frame rates of the first low FR camera 208A and the eighth low FR camera 222A in the present eleventh embodiment. Therefore, the fifth MoPU 232H and the sixth MoPU 232I can recognize conditions on the lateral sides of the convoy 200 at shorter time intervals than the time intervals at which the first IPU 224B recognizes the conditions in front of the convoy 200 on the basis of the first low FR camera image 208A1 and the time intervals at which the eighth IPU 240C recognizes conditions behind the convoy 200 on the basis of the eighth low FR camera image 222A1 according to the present eleventh embodiment.

Furthermore, all the images obtained by all the lateral cameras performing image capturing are not processed in a condition in which each of all the vehicles 204 forming the convoy 200 is provided with the lateral camera that images the lateral sides of the convoy 200 at the same frame rate as those of the fifth high FR camera 216B and the sixth high FR camera 218B in the present eleventh embodiment. In other words, the conditions on the lateral sides of the convoy 200 are recognized by the fifth MoPU 232H and the sixth MoPU 232I on the basis of the fifth high FR camera image 216B1 and the sixth high FR camera image 218B1 obtained only by the fifth high FR camera 216B and the sixth high FR camera 218B provided only in the intermediate vehicle 204B imaging the lateral sides of the convoy 200. Therefore, it is possible to reduce the processing load imparted to the information processing apparatus 206 as compared with the case in which the information processing apparatus 206 recognizes the lateral sides of the convoy 200 on the basis of all the images obtained by each lateral camera provided in each of all the vehicles 204 forming the convoy 200 imaging the lateral sides of the convoy 200 according to the present eleventh embodiment.

Also, the fifth MoPU 232H recognizes the conditions on the left side of the convoy 200 on the basis of the obtained fifth high FR camera image 216B1 every time the fifth high FR camera image 216B1 is obtained by the left side of the convoy 200 being imaged at the fifth high frame rate that is a frame rate higher than the frame rates of the first low FR camera 208A and the eighth low FR camera 222A in the present eleventh embodiment. Also, the sixth MoPU 232I recognizes the conditions on the right side of the convoy 200 on the basis of the obtained sixth high FR camera image 218B1 every time the sixth high FR camera image 218B1 is obtained by the right side of the convoy 200 being imaged at the sixth high frame rate that is a frame rate higher than the frame rates of the first low FR camera 208A and the eighth low FR camera 222A. Therefore, according to the present eleventh embodiment, the information processing apparatus 206 can finely recognize the lateral sides of the convoy 200.

Furthermore, the conditions in front of the convoy 200 are recognized by the first IPU 224B recognizing the kind of the first front object on the basis of the first low FR camera image 208A1, and the conditions behind the convoy 200 are recognized by the eighth IPU 240C recognizing the kind of the third rear object on the basis of the eighth low FR camera image 222A1 in the present eleventh embodiment. Therefore, according to the present eleventh embodiment, the information processing apparatus 206 and the like can finely grasp each of the conditions on the front side and the rear side of the convoy 200.

In addition, the conditions in front of the convoy 200 are recognized by the first IPU 224B, the conditions behind the convoy 200 are recognized by the eighth IPU 240C, and the conditions on the lateral sides of the convoy 200 are recognized by the fifth MoPU 232H and the sixth MoPU 232I in the present eleventh embodiment. Then, the automatic driving (for example, the automatic driving of each of the leading vehicle 204A, the intermediate vehicle 204B, and the tail end vehicle 204C) of the convoy 200 is controlled on the basis of the conditions in front of the convoy 200, the conditions behind the convoy 200, and the conditions on the lateral sides of the convoy 200. Therefore, according to the present eleventh embodiment, safe automatic driving of the convoy 200 can be realized.

Furthermore, the automatic driving of the convoy 200 is controlled on the basis of the first associated information 280 and the eighth associated information 294 in the present eleventh embodiment. The first associated information 280 indicates the result of recognizing the conditions in front of the convoy 200 and is information in which the first label information 248 that allows the kind of the first front object to be specified and the first point information 252 that expresses the first front object as a point are associated. Also, the eighth associated information 294 indicates the result of recognizing the conditions behind the convoy 200 and is information in which the eighth label information 274 that allows the kind of the third rear object to be specified and the eighth point information 278 that expresses the third rear object as a point are associated. Therefore, according to the present eleventh embodiment, it is possible to realize safe automatic driving of the convoy 200 in the front-rear direction by controlling the automatic driving of the convoy 200 on the basis of the first associated information 280 and the eighth associated information 294.

Furthermore, the automatic driving of the convoy 200 is controlled on the basis of the fifth associated information 288 and the sixth associated information 290 in the present eleventh embodiment. The fifth associated information 288 indicates the result of recognizing the conditions on the left side of the convoy 200 and is information in which the fifth label information 260 that allows the kind of the left-side object to be specified and the fifth point information 268 that expresses the left-side object as a point are associated. The sixth associated information 290 indicates the result of recognizing the conditions on the right side of the convoy 200 and is information in which the sixth label information 262 that allows the kind of right-side object to be specified and the sixth point information 270 that expresses the right-side object as a point are associated. Therefore, according to the present eleventh embodiment, it is possible to secure safety on the left side and the right side of the convoy 200 moving using automatic driving by the automatic driving of the convoy 200 being controlled on the basis of the fifth associated information 288 and the sixth associated information 290.

Note that although the example in which the automatic driving of the convoy 200 is controlled on the basis of the fifth associated information 288 and the sixth associated information 290 has been described here, this is just an example, and the automatic driving of the convoy 200 may be controlled on the basis of the fifth label information 260 or the fifth point information 268 and the sixth label information 262 or the sixth point information 270.

In addition, the conditions in front of the convoy 200 are recognized by the first IPU 224B, the conditions behind the convoy 200 are recognized by the eighth IPU 240C, and the conditions on the lateral sides of the convoy 200 are recognized by the fifth MoPU 232H and the sixth MoPU 232I in the present eleventh embodiment. Therefore, according to the present eleventh embodiment, it is possible to reduce the processing load imparted to the one processor mounted in the information processing apparatus 206 as compared with a case in which the conditions in front of the convoy 200, the conditions behind the convoy 200, and the conditions on the lateral sides of the convoy 200 are recognized only by the single processor mounted in the information processing apparatus 206.

Furthermore, the conditions on the lateral sides of the convoy 200 are recognized by the processing being performed by the fifth MoPU 232H and the sixth MoPU 232I at a higher speed than the first IPU 224B and the eighth IPU 240C on the basis of the fifth high FR camera image 216B1 and the sixth high FR camera image 218B1 in the present eleventh embodiment. Therefore, according to the present eleventh embodiment, the fifth MoPU 232H and the sixth MoPU 232I can recognize the conditions on the lateral sides of the convoy 200 in a shorter period of time than the time required by the first IPU 224B to recognize the conditions in front of the convoy 200 and the time required by the eighth IPU 240C to recognize the conditions behind the convoy 200.

Note that although the case in which the third high frame rate and the fourth high frame rate are the frame rates that are the same as the first high frame rate and the second high frame rate has been described in the above eleventh embodiment, the disclosed technology is not limited thereto. For example, the third high frame rate and the fourth high frame rate may be lower than the first high frame rate and the second high frame rate. Examples of the third high frame rate and the fourth high frame rate in this case are frame rates that are the first low frame rate and the second low frame rate or less. It is possible to reduce the processing load imparted to the intermediate vehicle processor 232 by setting the third high frame rate and the fourth high frame rate to be lower than the first high frame rate and the second high frame rate in this manner. As a result, the processing load on the entire information processing apparatus 206 is also reduced.

Although the exemplary aspect in which the first control variable 298 is derived by the first central brain 224A, the second control variable 304 is derived by the second central brain 232A, and the third control variable 310 is derived by the third central brain 240A is exemplified in the above eleventh embodiment, the disclosed technology is not limited thereto. For example, two or more of the first control variable 298, the second control variable 304, and the third control variable 310 may be derived by one processor.

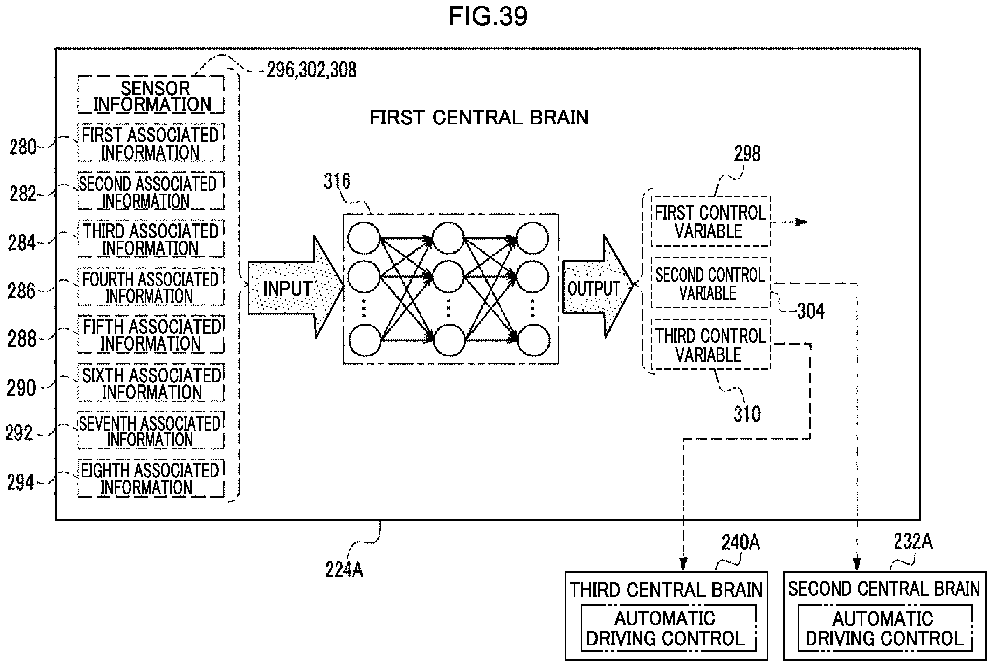

Fig. 39 illustrates an exemplary aspect in which the first control variable 298, the second control variable 304, and the third control variable 310 are derived by the first central brain 224A. In the example illustrated in Fig. 39, the first central brain 224A includes a deep learning model 314 and derives the first control variable 298, the second control variable 304, and the third control variable 310 using the deep learning model 314.

The deep learning model 314 is a trained model obtained by performing deep learning using teacher data on a neural network. An example of the teacher data used here is a data set in which example data and correct answer data assuming the first control variable 298, the second control variable 304, and the third control variable 310 are associated. Examples of the example data include each item of data obtained in advance by a test, computer simulation, and/or the like by an actual machine as each item of data assuming the sensor information 296, 302, and 308 and each item of data obtained in advance by a test, computer simulation, and/or the like by an actual machine as each item of data assuming each of the first associated information 280, the second associated information 282, the third associated information 284, the fourth associated information 286, the fifth associated information 288, the sixth associated information 290, the seventh associated information 292, and the eighth associated information 294.

The first central brain 224A inputs the sensor information 296, 302, and 308 and the first associated information 280, the second associated information 282, the third associated information 284, the fourth associated information 286, the fifth associated information 288, the sixth associated information 290, the seventh associated information 292, and the eighth associated information 294 to the deep learning model 314. The deep learning model 314 outputs the first control variable 298, the second control variable 304, and the third control variable 310 (control variables with the highest certainty factors) corresponding to the sensor information 296, 302, and 308 and the first associated information 280, the second associated information 282, the third associated information 284, the fourth associated information 286, the fifth associated information 288, the sixth associated information 290, the seventh associated information 292, and the eighth associated information 294 output.

Note that although the deriving method in which the first control variable 298, the second control variable 304, and the third control variable 310 are derived by using the deep learning model 314 is exemplified here, this is just an example, and the first control variable 298, the second control variable 304, and the third control variable 310 may be derived by using various deriving methods (for example, multivariate analysis based on an integration method) described above in the fourth embodiment.

Once the first control variable 298, the second control variable 304, and the third control variable 310 are derived by the first central brain 224A, the first control variable 298 is used to control the automatic driving of the leading vehicle 204A by the first central brain 224A, the second control variable 304 is used to control the automatic driving of the intermediate vehicle 204B by the second central brain 232A, and the third control variable 310 is used to control the automatic driving of the tail end vehicle 204C by the third central brain 240A similarly to the above eleventh embodiment.

In the above eleventh embodiment, the exemplary aspect in which the kind of the left-side object that is present on the left side of the convoy 200 is recognized on the basis of the fifth low FR camera image 216A1 and the left-side object that is present on the left side of the convoy 200 is recognized as a point on the basis of the fifth high FR camera image 216B1 has been described. Also, in the above eleventh embodiment, the exemplary aspect in which the kind of the right-side object that is present on the right side of the convoy 200 is recognized on the basis of the sixth low FR camera image 218A1 and the right-side object that is present on the right side of the convoy 200 is recognized as a point on the basis of the sixth high FR camera image 218B1 has been described. However, the disclosed technology is not limited thereto. For example, the processing of recognizing the left-side object that is present on the left side of the convoy 200 as a point on the basis of the fifth high FR camera image 216B1 may be performed without the processing of recognizing the kind of the left-side object that is present on the left side of the convoy 200 being performed. Also, the processing of recognizing the right-side object that is present on the right side of the convoy 200 as a point on the basis of the sixth high FR camera image 218B1 may be performed without the processing of recognizing the kind of the right-side object that is present on the right side of the convoy 200 being performed. In this manner, the information processing apparatus 206 can recognize each of the conditions on the left side and the right side of the convoy 200 with a lighter processing load as compared with the case in which the kind of the left-side object that is present on the left side of the convoy 200 is recognized as conditions on the left side of the convoy 200 and the kind of the right-side object that is present on the right side of the convoy 200 is recognized as the conditions on the right side of the convoy 200.

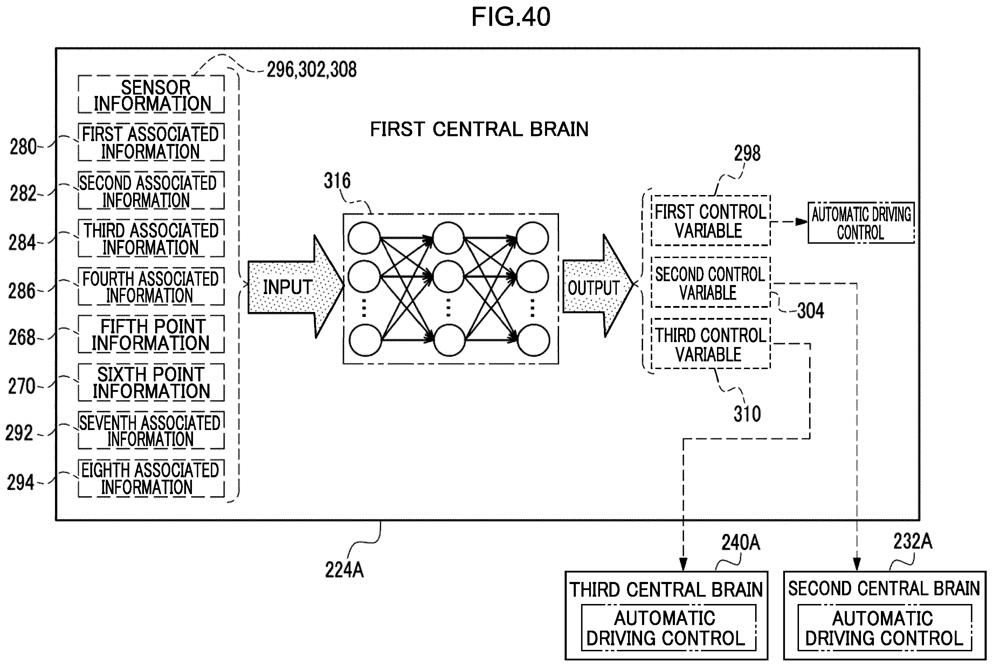

In this manner, it is possible to use the fifth point information 268 instead of the fifth associated information 288 and the sixth point information 270 instead of the sixth associated information 290 in a case in which control variables necessary to control the automatic driving (in the example illustrated in Fig. 40, the first control variable 298, the second control variable 304, and the third control variable 310 in an example) are derived as illustrated in Fig. 40, for example.

In the example illustrated in Fig. 40, the first control variable 298, the second control variable 304, and the third control variable 310 are derived by using the deep learning model 316. The deep learning model 316 is a trained model obtained by performing deep learning using teacher data on a neural network. An example of the teacher data used here is a data set in which example data and correct answer data assuming the first control variable 298, the second control variable 304, and the third control variable 310 are associated. Examples of the example data include each item of data obtained in advance by a test, computer simulation, and/or the like by an actual machine as each item of data assuming the sensor information 296, 302, and 308, each item of data obtained in advance by a test, computer simulation, and/or the like by an actual machine as each item of data assuming each of the first associated information 280, the second associated information 282, the third associated information 284, the fourth associated information 286, the seventh associated information 292, and the eighth associated information 294, and each item of data obtained in advance by a test, computer simulation, and/or the like by an actual machine as each item of data assuming each of the fifth point information 268 and the sixth point information 270.

In this manner, it is possible to reduce a processing load regarding the deriving of the control variables by using the fifth point information 268 instead of the fifth associated information 288 and using the sixth point information 270 instead of the sixth associated information 290. Furthermore, it is possible to reduce a load required to create the deep learning model 316 (a load required for deep learning, for example) as compared with a case in which the deep learning model 314 is created. Also, the fifth label information 260 and the sixth label information 262 are not needed by using the fifth point information 268 instead of the fifth associated information 288 and using the sixth point information 270 instead of the sixth associated information 290. In this case, the processing of the fifth low FR camera image 216A1 and the sixth low FR camera image 218A1 are not needed, and the fifth IPU 232D and the sixth IPU 232E are also not needed. In addition, the fifth low FR camera 2216A and the sixth low FR camera 218A are also not needed. Therefore, it is possible to reduce a processing load imparted to the second information processing apparatus 206B. Also, it is possible to reduce the number of components to be mounted in the intermediate vehicle 204B, and as a result, it is possible to contribute to cost reduction.

Note that although the exemplary aspect in which the fifth point information 268 is used instead of the fifth associated information 288 and the sixth point information 270 is used instead of the sixth associated information 290 has been described here, the fifth label information 260 may be used instead of the fifth associated information 288, and the sixth label information 262 may be used instead of the sixth associated information 290.

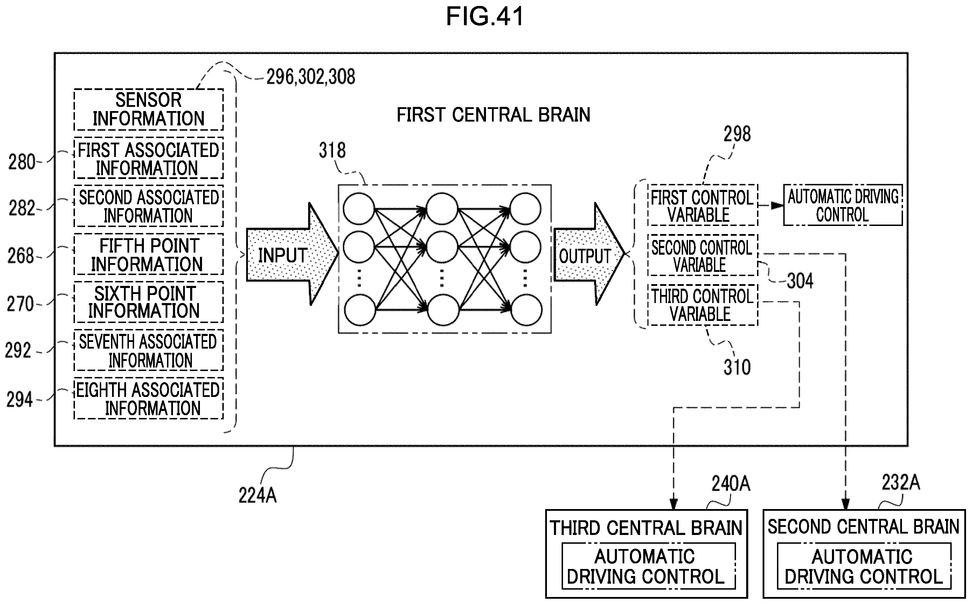

Although the exemplary aspect in which the first control variable 298, the second control variable 304, and the third control variable 310 are derived on the basis of the sensor information 296, 302, and 308, the first associated information 280, the second associated information 282, the third associated information 284, the fourth associated information 286, the seventh associated information 292, and the eighth associated information 294, and the fifth point information 268 and the sixth point information 270 has been described in the example illustrated in Fig. 40, the disclosed technology is not limited thereto. For example, the first control variable 298, the second control variable 304, and the third control variable 310 may be derived on the basis of the sensor information 296, 302, and 308, the first associated information 280, the second associated information 282, the seventh associated information 292, and the eighth associated information 294, and the fifth point information 268 and the sixth point information 270 as illustrated in Fig. 41.

In this case, the first control variable 298, the second control variable 304, and the third control variable 310 are derived by using a deep learning model 318. The deep learning model 318 is a trained model obtained by performing deep learning using teacher data on a neural network. An example of the teacher data used here is a data set in which example data and correct answer data assuming the first control variable 298, the second control variable 304, and the third control variable 310 are associated. Examples of the example data include each item of data obtained in advance by a test, computer simulation, and/or the like by an actual machine as each item of data assuming the sensor information 296, 302, and 308, each item of data obtained in advance by a test, computer simulation, and/or the like by an actual machine as each item of data assuming each of the first associated information 280, the second associated information 282, the seventh associated information 292, and the eighth associated information 294, and each item of data obtained in advance by a test, computer simulation, and/or the like by an actual machine as each item of data assuming each of the fifth point information 268 and the sixth point information 270.

Since the third associated information 284 and the fourth associated information 286 are not used in the example illustrated in Fig. 41 in this manner, the third label information 256, the third point information 264, the fourth label information 258, and the fourth point information 266 are not needed. Therefore, the processing of the third low FR camera image 212A1, the third high FR camera image 212B1, the fourth low FR camera image 214A1, the fourth high FR camera image 214B1, the third radar signal 212C1, and the fourth radar signal 214C1 is not needed, and the third IPU 232B, the third MoPU 232F, the fourth IPU 232C, and the fourth MoPU 232G are thus not needed. Also, the third low FR camera image 212A1, the third high FR camera image 212B1, the fourth low FR camera image 214A1, the fourth high FR camera image 214B1, the third radar signal 212C1, and the fourth radar signal 214C1 are not needed, and the third low FR camera 212A, the third high FR camera 212B, the fourth low FR camera 214A, the fourth high FR camera 214B, the third radar 212C, and the fourth radar 214C are thus not needed. It is thus possible to reduce a processing load imparted to the second information processing apparatus 206B. Also, it is possible to reduce the number of components to be mounted in the intermediate vehicle 204B, and as a result, it is possible to contribute to cost reduction.

Although the exemplary aspect in which the third associated information 284 and the fourth associated information 286 are not used has been described in the example illustrated in Fig. 41, this is just an example, and the third associated information 284 or the fourth associated information 286 may be used. Also, the third label information 256 or the third point information 264 may be used instead of the third associated information 284, and the fourth label information 258 or the fourth point information 266 may be used instead of the fourth associated information 286.

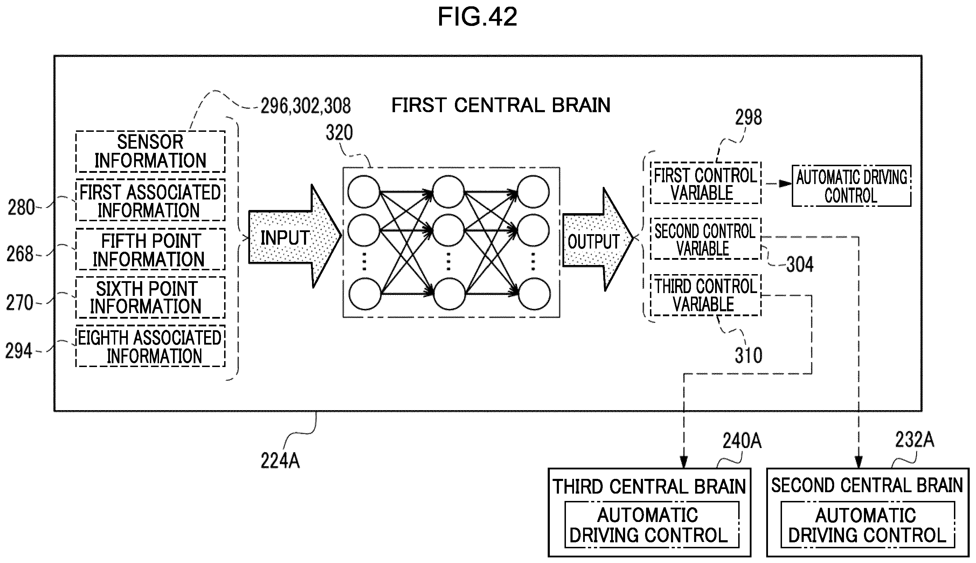

Although the exemplary aspect in which the first control variable 298, the second control variable 304, and the third control variable 310 are derived on the basis of the sensor information 296, 302, and 308, the first associated information 280, the second associated information 282, the seventh associated information 292, and the eighth associated information 294, and the fifth point information 268 and the sixth point information 270 has been described in the example illustrated in Fig. 41, the disclosed technology is not limited thereto. For example, the first control variable 298, the second control variable 304, and the third control variable 310 may be derived on the basis of the sensor information 296, 302, and 308, the first associated information 280 and the eighth associated information 294, and the fifth point information 268 and the sixth point information 270 as illustrated in Fig. 42.

In this case, the first control variable 298, the second control variable 304, and the third control variable 310 are derived by using a deep learning model 320. The deep learning model 320 is a trained model obtained by performing deep learning using teacher data for the neural network. An example of the teacher data used here is a data set in which example data and correct answer data assuming the first control variable 298, the second control variable 304, and the third control variable 310 are associated. Examples of the example data include each item of data obtained in advance by a test, computer simulation, and/or the like by an actual machine as each item of data assuming the sensor information 296, 302, and 308, each item of data obtained in advance by a test, computer simulation, and/or the like by an actual machine as each item of data assuming each of the first associated information 280 and the eighth associated information 294, and each item of data obtained in advance by a test, computer simulation, and/or the like by an actual machine as each item of data assuming each of the fifth point information 268 and the sixth point information 270.

Since the second associated information 282 and the seventh associated information 292 are not used in the example illustrated in Fig. 42 in this manner, the second label information 250, the second point information 254, the seventh label information 272, and the seventh point information 276 are not needed. Therefore, processing of the second low FR camera image 210A1, the second high FR camera image 210B1, the second radar signal 210C1, the seventh low FR camera image 220A1, the seventh high FR camera image 220B1, and the seventh radar signal 220C1 is not needed, and the second IPU 224C, the second MoPU 224E, the seventh IPU 240B, and the seventh MoPU 240D are thus not needed. The second low FR camera image 210A1, the second high FR camera image 210B1, the second radar signal 210C1, the seventh low FR camera image 220A1, the seventh high FR camera image 220B1, and the seventh radar signal 220C1 are not needed, and the second low FR camera 210A, the second high FR camera 210B, the second radar 210C, the seventh low FR camera 220A, the seventh high FR camera 220B, and the seventh radar 220C are thus not needed. It is thus possible to reduce a processing load imparted to the first information processing apparatus 206B and the third information processing apparatus 206C. Also, it is possible to reduce the number of components to be mounted in the leading vehicle 204A and the tail end vehicle 204C, and as a result, it is possible to contribute to cost reduction.

Although the exemplary aspect in which the second associated information 282 and the seventh associated information 292 are not used has been described in the example illustrated in Fig. 42, the second associated information 282 or the seventh associated information 292 may be used. Moreover, the second label information 250 or the second point information 254 may be used instead of the second associated information 282. Also, the seventh label information 272 or the seventh point information 276 may be used instead of the seventh associated information 292.

Although the first associated information 280, the second associated information 282, the third associated information 284, the fourth associated information 286, the fifth associated information 288, the sixth associated information 290, the seventh associated information 292, and the eighth associated information 294 have been exemplified in each of the above exemplary aspects, the disclosed technology is not limited thereto. For example, the disclosed technology is established even if the first label information 248 or the first point information 252 is used instead of the first associated information 280. Also, the disclosed technology is established even if the second label information 250 or the second point information 254 is used instead of the second associated information 282. The disclosed technology is established even if the third label information 256 or the third point information 264 is used instead of the third associated information 284. The disclosed technology is established even if the fourth label information 258 or the fourth point information 266 is used instead of the fourth associated information 286. The disclosed technology is established even if the fifth label information 260 or the fifth point information 268 is used instead of the fifth associated information 288. The disclosed technology is established even if the sixth label information 262 or the sixth point information 270 is used instead of the sixth associated information 290. The disclosed technology is established even if the seventh label information 272 or the seventh point information 276 is used instead of the seventh associated information 292. The disclosed technology is established even if the eighth label information 274 or the eighth point information 278 is used instead of the eighth associated information 294.

Although one intermediate vehicle 204B is exemplified in each of the above exemplary aspects, the disclosed technology is not limited thereto, and a plurality of intermediate vehicles 204B may be included. In this case, the fifth condition sensor 216 and the sixth condition sensor 218 are mounted in at least one of the plurality of intermediate vehicles 204B. For example, the fifth condition sensor 216 and the sixth condition sensor 218 are mounted in at least one intermediate vehicle 204B located at the center of the convoy 200. It is only necessary for the number of vehicles 206 in each of which the fifth condition sensor 216 and the sixth condition sensor 218 are mounted to be less than the total number of vehicles 206 that form the convoy 200. Each vehicle 206 in which the fifth condition sensor 216 and the sixth condition sensor 218 are mounted is preferably the intermediate vehicle 204B.

Although the convoy 200 is formed of the leading vehicle 204A, the intermediate vehicle 204B, and the tail end vehicle 204C in each of the above exemplary aspects, the intermediate vehicle 204B may not be included. In this case, it is only necessary that the fifth condition sensor 216 and the sixth condition sensor 218 be mounted in the leading vehicle 204A or the tail end vehicle 204C, and it is only necessary that the processing of the information obtained by the fifth condition sensor 216 and the sixth condition sensor 218 be performed by the first information processing apparatus 206A or the second information processing apparatus 206C.

Although the leading vehicle processor 224 performs the leading vehicle control processing in each of the above exemplary aspects, at least one processor other than the leading vehicle processor 224 may perform the leading vehicle control processing, or the leading vehicle processor 224 and at least one processor other than the leading vehicle processor 224 may perform the leading vehicle control processing in a distributed manner. Also, although the intermediate vehicle processor 232 performs the intermediate vehicle control processing in each of the above exemplary aspects, at least one processor other than the leading vehicle processor 224 may perform the intermediate vehicle control processing, or the intermediate vehicle processor 232 and at least one processor other than the intermediate vehicle processor 232 may perform the intermediate vehicle control processing in a distributed manner. Also, although the tail end vehicle processor 240 performs the tail end vehicle control processing in each of the above exemplary aspects, at least one processor other than the tail end vehicle processor 240 may perform the tail end vehicle control processing, or the tail end vehicle processor 240 and at least one processor other than the tail end vehicle processor 240 may perform the tail end vehicle control processing in a distributed manner.

Although the case in which the information processing apparatus 10 is mounted in the convoy 200 has been described in each of the above embodiments, the disclosed technology is not limited thereto. At least a part of the information processing apparatus 10 may be an external device (for example, a server) provided at a location other than the convoy 200, and at least some of the leading vehicle control processing, the intermediate vehicle control processing, and the tail end vehicle control processing may be performed by the external device.

Although the vehicle 204 has been exemplified in each of the above embodiments, this is just an example, and the disclosed technology can be applied to a moving body other than the vehicle 204. Examples of the moving body other than the vehicle 204 include an aircraft, a ship, a traveling robot (for example, a traveling robot used for transporting products or the like or a traveling robot used for cleaning or the like), and the like.

(Twelfth Embodiment)

Next, a twelfth embodiment will be described while parts overlapping the above embodiments are omitted or simplified. An information processing apparatus according to the twelfth embodiment may obtain an index value necessary for driving control with high accuracy on the basis of a lot of information related to control of a vehicle. Therefore, the information processing apparatus of the disclosure may be at least partially mounted in a vehicle and realize control of the vehicle.

An information processing apparatus 10 includes an image processing unit (IPU) 11, a motion processing unit (MoPU) 12, a central brain 15, and a memory 16 as illustrated in Fig. 2. The central brain 15 is configured to include a graphics neural network processing unit (GNPU) 13 and a central processing unit (CPU) 14.

The IPU 11 may be incorporated in an ultra-high-definition camera (not illustrated) installed in the vehicle. The IPU 11 performs predetermined image processing such as Bayer transformation, demosaicing, denoising, and sharpening on an image of an object that is present in the surroundings of the vehicle and outputs the processed image of the object at a frame rate of 10 frames/second and with a resolution of 12 million pixels, for example. The image output from the IPU 11 is supplied to the central brain 15 and the memory 16. The IPU 11 is an example of the "second processor" of the disclosed technology.

The MoPU 12 may be incorporated in a camera that is different from the ultra-high-definition camera installed in the vehicle. The MoPU 12 outputs motion information indicating motion of an imaged object from an image of the object, which has been captured at a frame rate of 1000 frames/second or more, at a frame rate of 1000 frames/second or more, for example. In other words, the output frame rate of the MoPU 12 is 100 times the output frame rate of the IPU 11. The MoPU 12 outputs vector information of motion of a point indicating an existing position of the object along a predetermined coordinate axis as motion information. In other words, the motion information output from the MoPU 12 does not include information necessary to identify what the imaged object is (for example, whether it is a person or an obstacle) and includes only information indicating motion (a moving direction and a moving speed) of a center point (or a point of a center of gravity) of the object along coordinate axes (an x axis, a y axis, and a z axis). The information output from the MoPU 12 is supplied to the central brain 15 and the memory 16. Since the motion information does not include image information, it is possible to dramatically reduce the amount of information to be transferred to the central brain 15 and the memory 16. The MoPU 12 is an example of the "first processor" of the disclosed technology.

The central brain 15 executes driving control of the vehicle as response control to the object on the basis of an image output from the IPU 11 and the motion information output from the MoPU 12. For example, the central brain 15 recognizes objects (a person, an animal, a road, a traffic signal, a traffic sign, a pedestrian crossing, an obstacle, a building, and the like) present in the surroundings of the vehicle on the basis of the image output from the IPU 11. Also, the central brain 15 recognizes motion of the object that is present in the surroundings of the vehicle and has been recognized as something on the basis of the motion information output from the MoPU 12. The central brain 15 performs, for example, control (speed control) of a motor for driving wheels, brake control, and steering wheel control on the basis of the recognized information. In the central brain 15, the GNPU 13 may be in charge of processing related to image recognition, and the CPU 14 may be in charge of processing related to vehicle control. The central brain 15 is an example of the "third processor" of the disclosed technology.

In general, ultra-high-definition cameras are used to perform image recognition in automatic driving. It is possible to recognize, from an image captured by a high-definition camera, what an object included in the image is. However, this is not sufficient for the automatic driving in the Level 6 generation. In the Level 6 generation, it is also necessary to recognize motion of the object with higher accuracy. An avoidance operation in which the vehicle traveling using automatic driving avoids an obstacle, for example, can be performed with higher accuracy by the MoPU 12 recognizing the motion of the object with higher accuracy. However, the high-definition camera can acquire only about 10 frames of images per second, and accuracy of analyzing the motion of the object is lower than that of the camera with the MoPU 12 mounted thereon. On the other hand, the camera with the MoPU 12 mounted thereon can perform an output at a frame rate that is as high as 1000 frames/second, for example.

Therefore, two independent processors, namely the IPU 11 and the MoPU 12 are used in the disclosed technology. The high-definition camera (IPU 11) is assigned to a role in acquiring image information necessary to recognize what a captured object is, and the MoPU 12 is assigned to a role in detecting motion of the object. The MoPU 12 captures an object as a point and analyzes in which of the x axis, the y axis, and the z axis the coordinates of the point move and at what speed the object moves. Since it is possible to detect an entire outline of the object and what the object is from an image from the high-definition camera, it is possible to ascertain how the entire object behaves as long as the MoPU 12 ascertains how the center point of the object moves, for example.

According to the method of analyzing only the movement and the speed of the center point of the object, it is possible to greatly reduce the amount of information to be transferred to the central brain 15 and to greatly reduce the amount of calculation in the central brain 15 as compared with a method of determining how the entire image of the object moves. In a case in which an image of 1000 pixels × 1000 pixels is transmitted to the central brain 15 at a frame rate of 1000 frames/second, for example, and color information is included therein, data of 4 billion bits/second is transmitted to the central brain 15. It is possible to compress the amount of data to be transferred to the central brain 15 to 20 thousand bits/second by transmitting only motion information indicating motion of the center point of the object. In other words, the amount of data to be transferred to the central brain 15 is compressed to 1/ 200,000.

It is possible to realize object recognition including motion of the object with a small amount of data by using an image at a low frame rate and with a high resolution output from the IPU 11 and motion information at a high frame rate with a light weight output from the MoPU 12 in combination.

Note that in a case in which one MoPU 12 is used, it is possible to acquire vector information of motion of a point indicating the existing position of the object along each of two coordinate axes (the x axis and the y axis) in a three-dimensional orthogonal coordinate system. Vector information of motion of the point indicating the existing position of the object along each of three coordinate axes (the x axis, the y axis, and the z axis) in the three-dimensional orthogonal coordinate system may be output using two MoPUs 12 using the principle of a stereo camera. The z axis is an axis along the depth method (traveling of the vehicle).

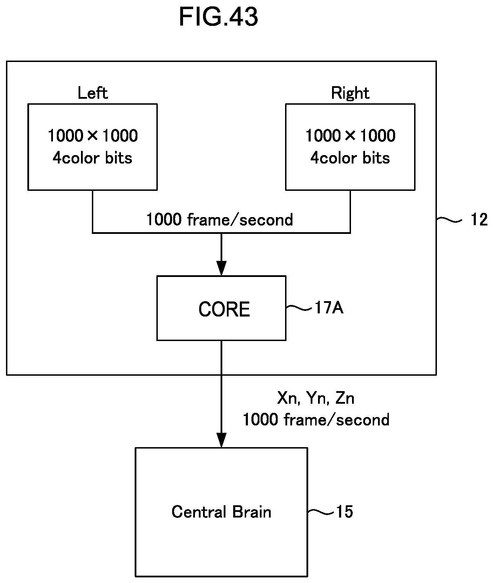

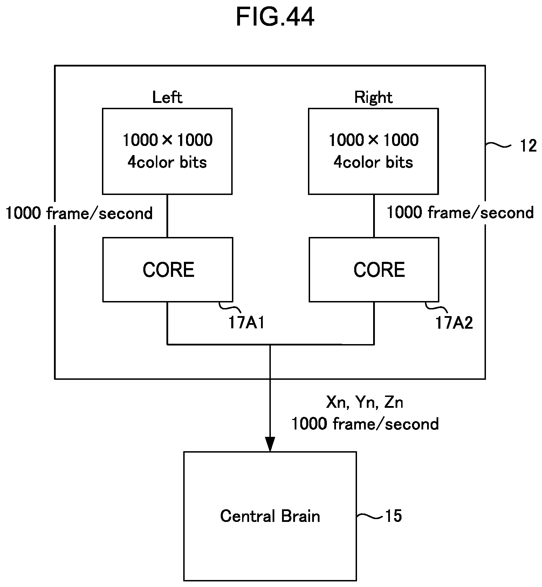

Furthermore, an image from a camera attached to the left side of the vehicle and an image from a camera attached to the right side of the vehicle may be input to a core 17A of the MoPU 12 as illustrated in Fig. 43. Each of these images is an image including color information of 1000 pixels × 1000 pixels and may be input to the core 17A at a frame rate of 1000 frames/second. The core 17A of the MoPU 12 may transfer the vector information of motion along each of the three coordinate axes (the x axis, the y axis, and the z axis) in the three-dimensional orthogonal coordinate system to the central brain 15 at a frame rate of 1000 frames/second on the basis of these images. Furthermore, the image from the camera attached to the left side of the vehicle and the image from the camera attached to the right side of the vehicle may be processed using different cores 17A1 and 17A2, respectively, as illustrated in Fig. 44.

Also, the aspect in which the MoPU 12 outputs the motion information indicating the motion of the center point of the object has been exemplified in the above description. However, the disclosed technology is not limited to the aspect. The MoPU 12 may output motion information regarding at least two coordinate points that are diagonals of vertexes of a quadrangle surrounding an outline of an object recognized from an image captured by a camera. Fig. 5 illustrates, as an example, an aspect in which the MoPU 12 sets bounding boxes 21, 22, 23, and 24 surrounding outlines of four objects included in an image and outputs motion information regarding two coordinate points that are diagonals of vertexes of each of the bounding boxes 21, 22, 23, and 24. In this manner, the MoPU 12 may regard the objects not as points but as objects having certain sizes. In a case in which the objects are regarded as decorative ornaments having certain sizes, there is no need to output only the at least two coordinate points that are diagonals of the vertexes of the quadrangle surrounding the outline of each object recognized from the image captured by the camera, and a plurality of coordinate points including the outline may be extracted.

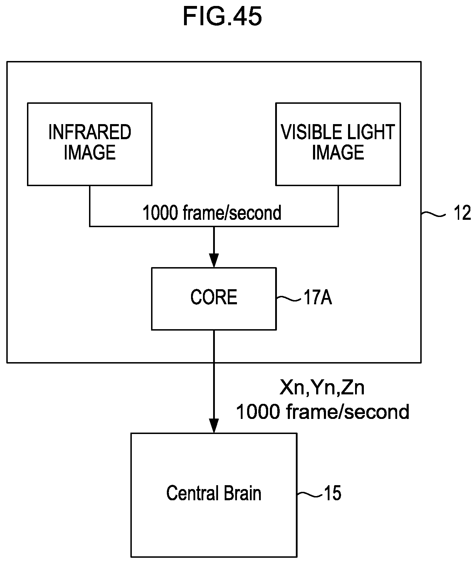

Also, the MoPU 12 may output the motion information on the basis of at least one of a visible light image or an infrared image as illustrated in Fig. 45. The visible light image is an image captured by a visible light camera, and the infrared image is an image captured by an infrared camera. The visible light image and the infrared image are input to the core 17A at a frame rate of 1000 frames/second or more. The visible light image and the infrared image are preferably synchronized with each other. It is possible to detect the object even in a case in which it is difficult to detect the object using the visible light image during night time, for example, by using the infrared image in the detection of the object by the MoPU 12. The MoPU 12 may output the motion information on the basis of only the infrared image out of the visible light image and the infrared image or may output the motion information on the basis of both the visible light image and the infrared image.

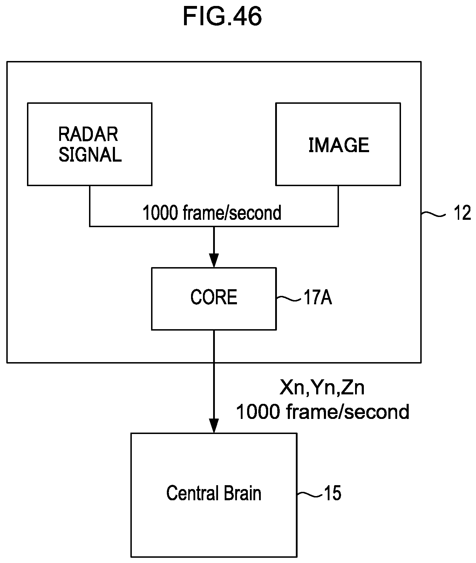

Also, the MoPU 12 may output the motion information on the basis of an image and a radar signal as illustrated in Fig. 46. The radar signal is a signal based on a reflected wave of an electromagnetic wave emitted to an object from the object. The MoPU 12 may derive the distance to the object on the basis of an image and the radar signal and output, as motion information, vector information of motion of a point indicating the existing position of the object along each of the three axes in the three-dimensional orthogonal coordinate system. The image may include at least one of a visible light image or an infrared image. The image and the radar signal are input to the core 17A at a frame rate of 1000 frames/second or more.

Although the case in which the central brain 15 executes driving control of the vehicle on the basis of the image output from the IPU 11 and the motion information output from the MoPU 12 has been exemplified in the above description, the disclosed technology is not limited to the aspect. The central brain 15 may perform response control to the object and perform robot operation control on the basis of the image output from the IPU 11 and the motion information output from the MoPU 12. The robot may be a humanoid smart robot that performs work instead of a person. For example, the central brain 15 may perform operation control of arms, palms, fingers, feet, and the like of the robot on the basis of the image output from the IPU 11 and the motion information output from the MoPU 12 and perform operation control such as gripping, catching, holding, carrying on its back, moving, carrying, throwing, kicking, and avoiding an object. For example, the IPU 11 and the MoPU 12 may be mounted at the positions of the right eye and the left eye of the robot. In other words, the IPU 11 and the MoPU 12 for the right eye may be mounted on the right eye, and the IPU 11 and the MoPU 12 for the left eye may be mounted on the left eye.

(Thirteenth Embodiment)

Next, a thirteenth embodiment will be described. The thirteenth embodiment is different from the twelfth embodiment in a point that a frame rate when an image is captured is variable and the like.

(Information processing apparatus mounted in vehicle: smart car)

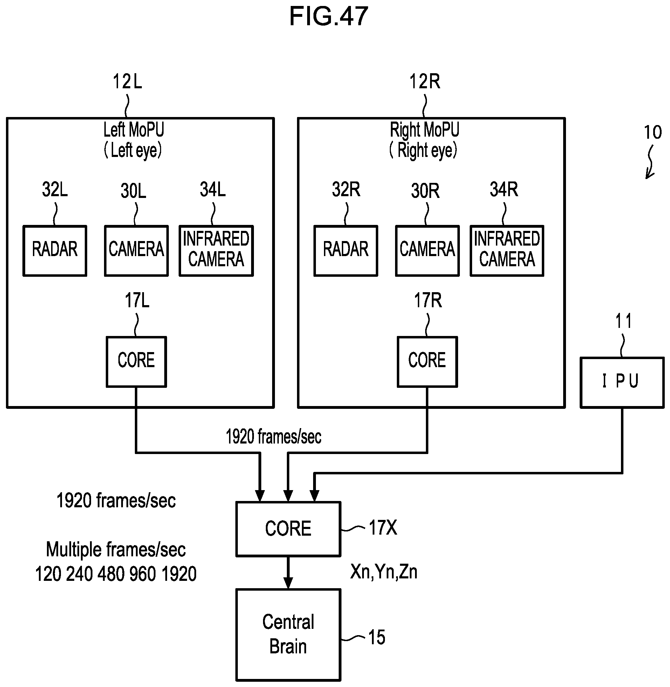

Fig. 47 is a block diagram of an information processing apparatus 10 according to the thirteenth embodiment that is mounted in a vehicle. As illustrated in Fig. 47, the information processing apparatus 10 mounted in a vehicle includes an MoPU 12L corresponding to a left eye, an MoPU 12R corresponding to a right eye, an IPU 11, a core 17X, and a central brain 15.

The MoPU 12L includes a camera 30L, a radar 32L, and an infrared camera 34L. The MoPU 12R includes a camera 30R, a radar 32R, and an infrared camera 34R. The radars 32L and 32R detect a radar signal as described above. The infrared cameras 34L and 34R acquire an infrared image described above.

The IPU 11 includes a high-definition camera (not illustrated) as described above, detects an object from a high-definition image captured by the high-definition camera, and outputs information representing the type of the object (hereinafter, simply referred to as "label information").

Note that only processing of the MoPU 12L corresponding to the left eye will be described below.

The camera 30L included in the MoPU 12L captures images such that the number of frames (120, 240, 480, 960, or 1920 frames/second) is larger than that of the high-definition camera (that captures images at 10 frames/second, for example) included in the IPU 11. The camera 30L is a camera with a changeable frame rate.

The core 17L (configured of one or more CPUs, for example) of the MoPU 12L extracts a feature point for each frame of image captured by 30L and outputs coordinate values (X, Y) thereof. The MoPU 12ML outputs a center point (a point of a center of gravity) of an object extracted from the image as feature points, for example. Note that feature points may be two diagonal vertexes of a rectangle surrounding an object in a pseudo manner. In a case in which the object is regarded as a decorative ornament having a certain size, there is no need to output only the at least two coordinate points that are diagonals of vertexes of a quadrangle surrounding the outline of the object recognized from the image captured by the camera, and a plurality of coordinate points including the outline may be extracted.

Specifically, the MoPU 12L outputs coordinate values (X, Y) of the feature point extracted from one object. Note that in a case in which a plurality of objects (for example, an object A, an object B, and an object C) are captured in one image, for example, the MoPU 12L may output coordinate values (Xn, Yn) of a feature point extracted from each of the plurality of objects. A series of feature points in images captured at each clock time corresponds to motion information of the object.

Also, a case in which the MoPU 12L cannot identify objects due to an influence of darkness, for example, is assumed. In this case, the MoPU 12L may detect heat of the object using the infrared camera 34L and output coordinates (Xn, Yn) of the object on the basis of an infrared image as a result of the detection and an image captured by the camera 30L. Also, the image capturing performed by the camera 30L and the image capturing of the infrared image performed by the infrared camera 34L may be synchronized. In this case, the number of images per second captured by the camera 30L and the number of images per second captured by the infrared camera 34L, for example, are synchronized (1920 frames/second, for example).

Furthermore, the MoPU 12L may acquire coordinate value of the object along the Z axis on the basis of three-dimensional point cloud data acquired by the radar 32L. Note that in this case, the image capturing performed by the camera 30L and the acquisition of the three-dimensional point cloud data performed by the radar 32L may be synchronized. For example, the number of items of three-dimensional point cloud data per second acquired by the radar 32L and the number of images per second imaged by the camera 30L are synchronized (1920 frames/second, for example).

In addition, the number of images per second captured by the camera 30L, the number of images per second captured by the infrared camera 34L, and the number of items of three-dimensional point cloud data per second acquired by the radar 32L may be set to the same to thereby synchronize the data acquisition timing.

The core 17X acquires the coordinates of the feature point output from the MoPU 12L and label information of the object (information indicating which of a dog, a cat, or a bear the object is) output from the IPU 11. Then, the core 17X outputs the label information and the coordinates corresponding to the feature point in an associated manner. This makes it possible to associate information indicating what the object represented by the feature point represents with motion information of the object represented by the feature point.

The processing of the MoPU 12L corresponding to the left eye has been described hitherto. The MoPU 12R corresponding to the right eye executes processing similar to that of the MoPU 12L corresponding to the left eye.

Note that a coordinate value Zn of the feature point in the depth direction may be further calculated using the principle of a stereo camera on the basis of an image captured by the camera 30L of the MoPU 12L and an image captured by 30R of the MoPU 12R.

(Information processing apparatus mounted in robot: smart robot)

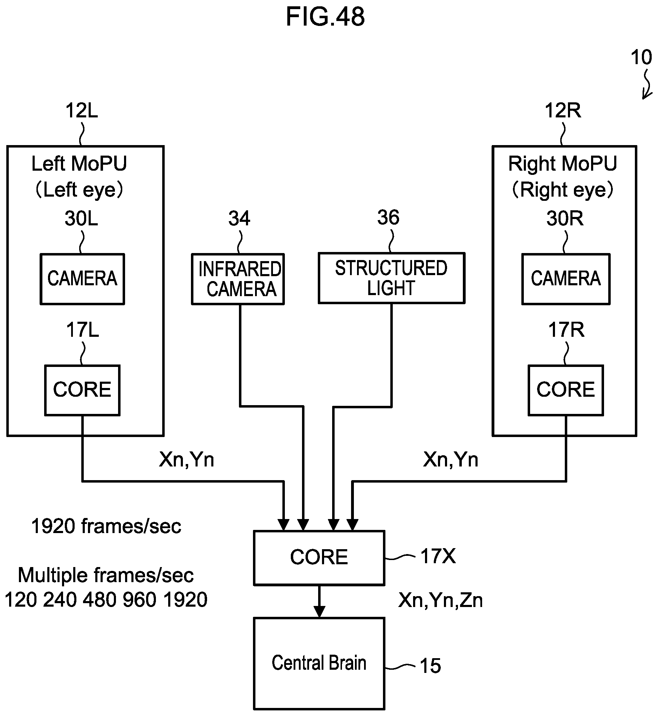

Fig. 48 is a block diagram of an information processing apparatus 10 according to the thirteenth embodiment mounted in a robot. As illustrated in Fig. 48, the information processing apparatus 10 mounted in a robot includes an MoPU 12L corresponding to a left eye, an MoPU 12R corresponding to a right eye, an infrared camera 34, a structured light 36, a core 17X, and a central brain 15. The information processing apparatus 10 mounted in a robot has functions similar to those of the information processing apparatus 10 to be mounted in a vehicle.

In a case in which the MoPU 12L cannot identify an object due to an influence of darkness, for example, the MoPU 12L detects heat of the object using the infrared camera 34 and outputs coordinates (Xn, Yn) of the object on the basis of an infrared image that is a result of the detection and an image captured by the camera 30L. Also, the image capturing performed by the camera 30L and the image capturing of the infrared image performed by the infrared camera 34 may be synchronized. In this case, the number of images per second captured by the camera 30L and the number of images per second captured by the infrared camera 34, for example, are synchronized (1920 frames/second, for example).

Also, the core 17X may use the structured light 36 to acquire a coordinate Zn of an object in the depth direction. The structured light 36 is disclosed, for example, in a reference document (http://ex-press.jp/wp-content/uploads/2018/10/018_teledyne_3rd.pdf). In this case, the image capturing performed by the cameras 30L and 30R and measurement of three-dimensional data with the structured light 36 may be synchronized. For example, the numbers of images per second captured by the cameras 30L and 30R and the three-dimensional data per second measured with the structured light 36 may be synchronized (1920 frames/second, for example).

Furthermore, both the infrared image captured by the infrared camera 34 and the three-dimensional data measured with the structured light 36 may be used together.

(Change in frame rate in accordance with external environment)

The information processing apparatus 10 may change the frame rate of the camera in accordance with an external environment. For example, the information processing apparatus 10 calculates a score regarding the external environment and determines the frame rates of the cameras 30L and 30R in accordance with the score. Then, the information processing apparatus 10 outputs a control signal to provide an instruction to capture images at the determined frame rate to the cameras 30L and 30R. The cameras 30L and 30R capture images at the determined frame rate. Then, the information processing apparatus 10 extracts a point indicating the existing position of the object from the images captured by the cameras 30L and 30R and outputs the point indicating the existing position of the object.

Note that the information processing apparatus 10 mounted in the vehicle include a plurality of kinds of sensors, which are not illustrated. One or more processors included in the information processing apparatus 10 mounted in a vehicle calculate a level of danger related to how dangerous a place to which the host vehicle will travel in the future is as the score related to the external environment on the basis of sensor information (for example, movement of the center of gravity of the weight, detection of a material of a road, detection of the outside air temperature, detection of the outside air humidity, detection of vertical and lateral oblique inclination angles of a slope, a way of freezing of the road, detection of the moisture amount, a material of each tire, a wear state, detection of the air pressure, a road width, presence or absence of overtaking prohibition, vehicle type information of an oncoming vehicle and front and rear vehicles, a cruising state of these vehicles, surrounding situations (such as a bird, an animal, a soccer ball, an accident vehicle, an earthquake, housework, wind, typhoon, heavy rain, light rain, snowstorm, and fog), or the like) taken from a plurality of kinds of sensors (not illustrated).

Then, the one or more processors included in the information processing apparatus 10 switch the number of images captured per second (frame rate) on the basis of the calculated level of danger and a threshold value. The level of danger is, for example, a value from 0 to 1.0. In this case, a first threshold value, a second threshold value, a third threshold value, and a fourth threshold value are set in advance as the threshold values, for example. For example, the first threshold value = 0.2, the second threshold value = 0.4, the third threshold value = 0.6, and the fourth threshold value = 0.8 may be set.

In a case in which the level of danger is less than the first threshold value, for example, the one or more processors included in the information processing apparatus 10 select 120 frames/second and output control signals to the cameras 30L and 30R, the radars 32L and 32R, and the infrared cameras 34L and 34R such that image capturing, the radar signal acquisition, and the infrared image capturing are performed at the frame rate.

Furthermore, in a case in which the level of danger is the first threshold value or more but less than the fourth threshold value, for example, the one or more processors included in the information processing apparatus 10 select any of 240, 480, and 960 frames/second and output a control signal to each device to acquire each kind of data at the frame rate. In a case in which the level of danger is the first threshold value or more but less than the second threshold value, the one or more processors included in the information processing apparatus 10 select a frame rate of 240 frames/second and output a control signal to each device to acquire each kind of data at the frame rate. In a case in which the level of danger is the second threshold value or more but less than the third threshold value, the one or more processors included in the information processing apparatus 10 select a frame rate of 480 frames/second and output a control signal to each device to acquire each kind of data at the frame rate. In a case in which the level of danger is the third threshold value or more but less than the fourth threshold value, the one or more processors included in the information processing apparatus 10 select a frame rate of 960 frames/second and output a control signal to each device to acquire each kind of data at the frame rate. Furthermore, in a case in which the level of danger is the fourth threshold value or more, the one or more processor included in the information processing apparatus 10 selects 1920 frames/second and outputs a control signal to each device to acquire each kind of data at the frame rate.

Also, the one or more processors included in the information processing apparatus 10 may use big data related to traveling that is known before the vehicle travels, such as long tale incident artificial intelligence (AI) data (for example, trip data of a vehicle equipped with an automatic driving control scheme at Level 5) or map information as information for predicting the level of danger to predict the level of danger.

Furthermore, the one or more processors included in the information processing apparatus 10 mounted in the robot may calculate the score related to the external environment on the basis of a speed and the like of the object captured by the cameras 30L and 30R, for example, and change the frame rate in accordance with the score. For example, the score related to the external environment is calculated to be larger as the speed of the object increases. Therefore, one or more processors included in the information processing apparatus 310 mounted in the robot select 1920 frames/second in a case in which the score related to the external environment is large, and output a control signal to each device to acquire each kind of data at the frame rate. Also, the one or more processors included in the information processing apparatus 10 mounted in the robot select 120 frames/second in a case in which the score related to the external environment is small and output a control signal to each device to acquire each kind of data at the frame rate. Other control is similar to that of the information processing apparatus 10 mounted in the vehicle described above.

(Output of feature point in accordance with region where object has been detected)

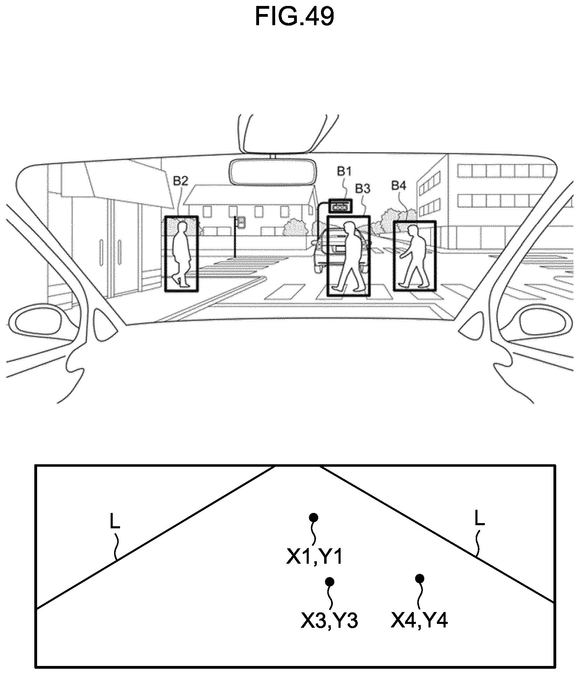

In a case in which an existing position of an object appearing in an image is a predetermined region, the information processing apparatus 10 may do a point indicating the existing position of the object. In this case, the information processing apparatus 10 determines whether or not to output a feature point of the object in accordance with the region where the object has been detected. For example, the cores 17L and 17R of the information processing apparatus 10 mounted in the vehicle do not extract feature points from an object (for example, an object that is present on a sidewalk) that is different from the object detected in a road region where the vehicle travels. Fig. 49 illustrates a diagram for explaining processing performed in a case in which a feature point is not extracted from the object that is present on the sidewalk, for example.

In Fig. 49(A), objects B1 to B4 are extracted. Originally, coordinates representing a feature point of each of the objects B1 to B4 are supposed to be extracted.

In this case, the cores 17L and 17R included in the information processing apparatus 10 mounted in the vehicle sequentially detect a road boundary L from an image in front of the vehicle using a known technology as illustrated in Fig. 49(B), for example. Then, the cores 17L and 17R included in the information processing apparatus 10 extract coordinates representing feature points only from the objects B1 to B3 located on the road specified by the road boundary L.

Furthermore, the cores 17L and 17R included in the information processing apparatus 10 may extract coordinates representing feature points only from the objects B1 to B3 without extracting the object region itself of the object B4 that is different from the objects B1 to B3 located on the road.

(Output of feature point in accordance with motion of object)

The information processing apparatus 10 may calculate a score for each object appearing in the image and extract the point indicating the existing position of the object with the score of not less than a predetermined threshold value. In this case, the information processing apparatus 10 may determine whether or not to output the feature point of the object in accordance with motion of the object, for example. For example, the cores 17L and 17R of the information processing apparatus 10 may not extract a feature point from an object that does not affects traveling of the vehicle. Specifically, the cores 17L and 17R of the information processing apparatus 10 calculates a moving direction, a speed, or the like of the object appearing in the image by using AI or the like. Then, the cores 17L and 17R of the information processing apparatus 10 do not extract a feature point from a pedestrian or the like walking away from the road. On the other hand, the cores 17L and 17R of the information processing apparatus 10 extract a feature point from an object approaching the road (for example, a child who is about to jump out into the road).

Furthermore, the one or more processors included in the information processing apparatus 10 can also extract a feature point from an image captured by an event camera (https://dendenblog.xyz/event-based-camera/), for example.

As illustrated in Fig. 14, different portions between an image captured at a current clock time and an image captured at a previous clock time are extracted as points in the image captured by the event camera. Therefore, only a point at each moving location in a person region illustrated in Fig. 14(A) is extracted as illustrated in Fig. 14(B), for example, in the case in which the event camera is used.

On the other hand, the one or more processors included in the information processing apparatus 10 extract coordinate values of a feature point (for example, only one point) representing the person region after the person, which is an object, is extracted as illustrated in Fig. 14(C). It is thus possible to reduce the amount of information to be transferred to the central brain 15 and the memory 16. Since it is possible to extract the person, which is an object, from the image captured by the event camera at an arbitrary frame rate, the frame rate in the case of the event camera is not limited to 1920 frames/second while the cameras 30L and 30R mounted in the MoPUs 12L and 12R capture the image at a frame rate of maximum of 1920 frames/second, and it is also possible to extract the person at another frame rate and to more accurately capture motion information of the object.

As described above, the information processing apparatus 10 according to the thirteenth embodiment extracts the point indicating the existing position of the object from the image in which the object appears and outputs the point indicating the existing position of the object. It is thus possible to reduce the amount of information to be transferred to the core 17X, the central brain 15, and the memory 16. In addition, information regarding what kind of object is moving and what the motion is grasped by associating the point indicating the existing position of the object with label information output from the IPU 11. In particular, the cameras 30L and 30R mounted in the MoPUs 12L and 12R can capture images at a frame rate of maximum of 1920 frames/second and can thus accurately capture motion information of the object.

For example, the information processing apparatus 10 includes the cameras 30L and 30R with changeable frame rates, calculates a score related to the external environment, and determines the frame rates of the cameras in accordance with the score. Then, the information processing apparatus 10 outputs control signals to provide an instruction to capture images at the determined frame rate to the cameras 30L and 30R, extracts the point indicating the existing position of the object from the images captured by the cameras 30L and 30R, and outputs the point indicating the existing position of the object. It is thus possible to capture the images at the frame rate suitable for the external environment.

Also, the information processing apparatus 10 calculates a level of danger related to traveling of the vehicle as a score related to the external environment, determines a frame rate of the cameras 30L and 30R in accordance with the level of danger, outputs control signals to provide an instruction to capture images at the determined frame rate to the cameras 30L and 30R, and extracts the point indicating the existing position of the object from the images captured by the cameras 30L and 30R. It is thus possible to change the frame rate in accordance with the level of danger related to traveling of the vehicle.

Also, the information processing apparatus 10 extracts an object from an image, and in a case in which the existing position of the object is in a predetermined region, the information processing apparatus 10 extracts a point indicating the existing position of the object and outputs the point indicating the existing position of the object. It is thus not necessary for the cores 17L and 17R of the information processing apparatus 10 to acquire points in regions at lower levels of importance for control processing.

Also, the information processing apparatus 10 extracts objects from an image, calculates a score for each object, extracts points indicating existing positions of the objects with scores of not less than a predetermined threshold value, and outputs the points indicating the existing positions of the objects. It is thus not necessary for the cores 17L and 17R of the information processing apparatus 10 to acquire points in regions at lower levels of importance for control processing.

(Fourteenth Embodiment)

Next, a fourteenth embodiment will be described. Note that since a configuration of an information processing apparatus according to the fourteenth embodiment is similar to the configuration of the twelfth embodiment or the thirteenth embodiment, the same reference signs will be applied, and description will be omitted. The information processing apparatus of the fourteenth embodiment is different from those of the twelfth embodiment and the thirteenth embodiment in that control is performed to change a frame rate of a camera (for example, at least one of a camera 30L, a radar 32L, an infrared camera 34L, a camera 30R, a radar 32R, or an infrared camera 34R) in accordance with at least one of the number of objects appearing in an image, accelerations of the objects appearing in the image, or sizes of the objects appearing in the image.

Similar to the twelfth embodiment or the thirteenth embodiment, a case in which an image is captured by a camera mounted in a vehicle or a robot and driving of the vehicle or the robot is controlled in accordance with motion of an object appearing in the image will be considered. In this case, for example, when there are a plurality of objects appearing in the image, it is necessary to control driving of the vehicle or the robot in accordance with motion of each of the plurality of objects.

Therefore, in a case in which there are a lot of objects appearing in the image, it is preferable to acquire more images by setting a higher frame rates for the camera mounted in the vehicle or the robot and to use the images for controlling the vehicle or the robot. Also, it is preferable to acquire more images by setting a higher frame rate for the camera in a similar manner in a case in which an acceleration of an object appearing in the image is high as well. In a case in which the size of an object appearing in the image is large, there may be a case in which it represents that the object is present at a location close to the vehicle or the robot, and it is preferable to acquire more images by setting a higher frame rate for the camera in a similar manner.

Therefore, at least one processor (for example, at least one of a core 17L, a core 17R, or a core 17X) of the information processing apparatus according to the fourteenth embodiment detects an object appearing in an image captured by the camera. Then, at least one processor of the information processing apparatus performs control to change the frame rate of the camera in accordance with at least one of the number of detected objects, acceleration of the objects, or sizes of the objects.

For example, at least one processor of the information processing apparatus performs control to increase the frame rate of the camera as the number of objects appearing in the image increases. Also, at least one processor of the information processing apparatus performs control to decrease the frame rate of the camera as the number of objects appearing in the image decreases.

Specifically, at least one processor of the information processing apparatus calculates a level of danger as an example of the score related to the external environment similarly to the thirteenth embodiment.

In this case, at least one processor of the information processing apparatus calculates the level of danger to increase as the number of objects appearing in the object increases. Also, at least one processor of the information processing apparatus calculates the level of danger to decrease as the number of objects appearing in the image decreases. Note that a first threshold value, a second threshold value, a third threshold value, and a fourth threshold value are set in advance as threshold values similarly to the thirteenth embodiment and the first threshold value = 0.2, the second threshold value = 0.4, the third threshold value = 0.6, and the fourth threshold value = 0.8, for example, may be set.

In a case in which the number of objects appearing in the image is one, for example, at least one processor of the information processing apparatus calculates the level of danger, which is an example of the score related to the external environment, as 0.1. The level of danger calculated in this case is less than the first threshold value. Therefore, at least one processor of the information processing apparatus selects 120 frames/seconds and outputs control signals to the cameras 30L and 30R, the radars 32L and 32R, and the infrared cameras 34L and 34R such that image capturing, radar signal acquisition, or infrared image capturing is performed at the frame rate.

Also, in a case in which the number of objects appearing in the image is nine, for example, at least one processor of the information processing apparatus calculates the level of danger, which is an example of the score related to the external environment, as 0.9. The level of danger calculated in this case is higher than the fourth threshold value. Therefore, at least one processor of the information processing apparatus selects 1920 frames/second and outputs control signals to the cameras 30L and 30R, the radars 32L and 32R, and the infrared cameras 34L and 34R such that image capturing, radar signal acquisition, or infrared image capturing is performed at the frame rate.

In a case in which the level of danger is the first threshold value or more but less than the second threshold value, for example, at least one processor of the information processing apparatus selects a frame rate of 240 frames/second and outputs a control signal to each device to acquire each kind of data at the frame rate. In a case in which the level of danger is the second threshold value or more but less than the third threshold value, at least one processor of the information processing apparatus selects a frame rate of 480 frames/second and outputs a control signal to each device to acquire each kind of data at the frame rate. In a case in which the level of danger is the third threshold value or more but less than the fourth threshold value, at least one processor of the information processing apparatus selects a frame rate of 960 frames/second and outputs a control signal to each device to acquire each kind of data at the frame rate.

Then, the information processing apparatus according to the fourteenth embodiment outputs, as motion information, vector information of motion of a point indicating the existing position of an object along each of three coordinate axes in a three-dimensional orthogonal coordinate system using the cores 17L and 17R which are two processors.

In this manner, at least one processor of the information processing apparatus performs control to increase the frame rate of the camera as the number of objects appearing in the image increases. Also, at least one processor of the information processing apparatus performs control to decrease the frame rate of the camera as the number of objects appearing in the image decreases. In this manner, it is possible to accurately capture motion of each of a plurality of objects appearing in the image and to appropriately control the vehicle or the robot in accordance with the motion of the plurality of objects.

Also, at least one processor of the information processing apparatus may perform control to change the frame rate of the camera in accordance with an acceleration of an object appearing in an image similarly to the above description. In this case, at least one processor of the information processing apparatus calculates the acceleration of the object appearing in the image using a known technology on the basis of an image at each clock time captured by the camera. Then, at least one processor of the information processing apparatus performs control to increase the frame rate of the camera as the acceleration of the object appearing in the image increases. On the other hand, at least one processor of the information processing apparatus performs control to decrease the frame rate as the acceleration of the object appearing in the image decreases. Note that in a case in which a plurality of objects appear in the image, at least one processor of the information processing apparatus may perform control to change the frame rate in accordance with the maximum or minimum acceleration from among the respective accelerations of the plurality of objects. Alternatively, in the case in which a plurality of objects appear in the image, at least one processor of the information processing apparatus may perform control to change the frame rate in accordance with an average value of the respective accelerations of the plurality of objects.

Also, at least one processor of the information processing apparatus may perform control to change the frame rate of the camera in accordance with the size of an object appearing in the image similarly to the above description. In this case, at least one processor of the information processing apparatus performs control to increase the frame rate of the camera as the size of the object appearing in the image increases. On the other hand, at least one processor of the information processing apparatus performs control to decrease the frame rate as the size of the object appearing in the image decreases. Note that in a case in which a plurality of objects appear in the image, at least one processor of the information processing apparatus may perform control to change the frame rate in accordance with the maximum or minimum size from among the respective sizes of the plurality of objects. Alternatively, in the case in which a plurality of objects appear in the image, at least one processor of the information processing apparatus may perform control to change the frame rate in accordance with an average value of the respective sizes of the plurality of objects.

As described above, the information processing apparatus of the fourteenth embodiment performs control to change the frame rate of the camera (for example, at least one of the camera 30L, the radar 32L, the infrared camera 34L, the camera 30R, the radar 32R, or the infrared camera 34R) in accordance with at least one of the number of objects appearing in the image, accelerations of the objects appearing in the image, or the sizes of the objects appearing in the image. Then, the information processing apparatus of the fourteenth embodiment extracts points indicating the existing positions of the objects from the image in which the objects appear and outputs the points indicating the existing positions of the objects. This makes it possible to acquire an appropriate number of images at the respective clock times in accordance with the number of objects appearing in the image, the accelerations of the objects appearing in the image, or the sizes of the objects appearing in the image, and it is possible to appropriately control the vehicle or the robot. More specifically, the information processing apparatus of the fourteenth embodiment can acquire images at shorter time intervals by performing control to increase the frame rate of the camera as the number of objects appearing in the image increases and can appropriately control the vehicle or the robot. Also, the information processing apparatus of the fourteenth embodiment can acquire images at shorter time intervals by performing control to increase the frame rate of the camera as the accelerations of the objects appearing in the image increase and can appropriately control the vehicle or the robot. Also, the information processing apparatus of the fourteenth embodiment can acquire images at shorter time intervals by performing control to increase the frame rate of the camera as the sizes of the objects appearing in the image increase and can appropriately control the vehicle or the robot.

(Fifteenth Embodiment)

Next, a fifteenth embodiment will be described. Note that since a configuration of an information processing apparatus according to the fifteenth embodiment is similar to the configuration of the twelfth embodiment or the thirteenth embodiment, the same reference signs will be applied, and description will be omitted. The information processing apparatus of the fifteenth embodiment is different from those of the twelfth embodiment and the thirteenth embodiment in that control is performed to change a frame rate of a camera (for example, at least one of a camera 30L, a radar 32L, an infrared camera 34L, a camera 30R, a radar 32R, or an infrared camera 34R) in accordance with at least one of a time series of the numbers of objects appearing in images, a time series of accelerations of the objects appearing in the images, or a time series of sizes of the objects appearing in the images.

Similar to the twelfth embodiment or the thirteenth embodiment, a case in which images are captured by a camera mounted in a vehicle or a robot and driving of the vehicle or the robot is controlled in accordance with motion or the like of the objects appearing in the images will be considered. In this case, when the number of objects appearing in an image captured at a current clock time is larger than the number of objects appearing in an image captured at a previous clock time, the number of objects appearing in the images has increased, and it is thus preferable to acquire more images by setting a higher frame rate for the camera mounted in the vehicle or the robot. Similarly, it is preferable to acquire more images by setting a higher frame rate for the camera in a case in which the accelerations of the objects appearing in the image at the current clock time are larger than the accelerations of the objects appearing in the image at the previous clock time. This is because the objects are being accelerated and it is preferable to acquire the images at shorter time intervals in this case. In a case in which the size of an object appearing in the image at the current clock time is larger than the size of the object appearing in the image at the previous clock time, this represents that the object is approaching the vehicle or the robot, and it is thus preferable to acquire more images by increasing the frame rate of the camera in a similar manner.

Thus, at least one processor (for example, at least one of a core 17L, a core 17R, or a core 17X) of the information processing apparatus of the fifteenth embodiment detects objects appearing in the image at each clock time captured by the camera. Then, at least one processor of the information processing apparatus performs control to change the frame rate of the camera in accordance with at least one of the time series of the numbers of objects, the time series of the accelerations of the objects, or the time series of the sizes of the objects detected.

In a case in which the number of objects appearing in the image at the current clock time is larger than the number of objects appearing at the previous clock time, for example, at least one processor of the information processing apparatus performs control to increase the frame rate of the camera. In a case in which the number of objects appearing in the image at the current clock time is smaller than the number of objects appearing at the previous clock time, at least one processor of the information processing apparatus performs control to decrease the frame rate of the camera.

Specifically, at least one processor of the information processing apparatus calculates a level of danger as an example of the score related to the external environment similarly to the thirteenth embodiment.

In this case, when the number of objects appearing in the images has increased from the previous clock time to the current clock time, at least one processor of the information processing apparatus calculates a level of danger to increase the value of the level of danger. Also, in a case in which the number of objects appearing in the images has decreased from the previous clock time to the current clock time, at least one processor of the information processing apparatus calculates the level of danger to decrease the value of the level of danger. Note that a first threshold value, a second threshold value, a third threshold value, and a fourth threshold value are set in advance as threshold values similarly to the thirteenth embodiment and the first threshold value = 0.2, the second threshold value = 0.4, the third threshold value = 0.6, and the fourth threshold value = 0.8, for example, may be set.

In a case in which the number of objects appearing in the image is one and the number of objects has not changed from the previous clock time to the current clock time, for example, at least one processor of the information processing apparatus calculates the level of danger, which is an example of a score related to an external environment, as 0.1. The level of danger calculated in this case is less than the first threshold value. Therefore, at least one processor of the information processing apparatus selects 120 frames/seconds and outputs control signals to the cameras 30L and 30R, the radars 32L and 32R, and the infrared cameras 34L and 34R such that image capturing, radar signal acquisition, or infrared image capturing is performed at the frame rate.

In a case in which the number of objects appearing in the image has increased to ten from the previous clock time to the current clock time, for example, at least one processor of the information processing apparatus calculates a level of danger, which is an example of the score related to the external environment, as 0.9. The level of danger calculated in this case is higher than the fourth threshold value. Therefore, at least one processor of the information processing apparatus selects 1920 frames/second and outputs control signals to the cameras 30L and 30R, the radars 32L and 32R, and the infrared cameras 34L and 34R such that image capturing, radar signal acquisition, or infrared image capturing is performed at the frame rate.

In a case in which the level of danger is the first threshold value or more but less than the second threshold value, for example, at least one processor of the information processing apparatus selects a frame rate of 240 frames/second and

58

outputs a control signal to each device to acquire each kind of data at the frame rate. In a case in which the level of danger is the second threshold value or more but less than the third threshold value, at least one processor of the information processing apparatus selects a frame rate of 480 frames/second and outputs a control signal to each device to acquire each kind of data at the frame rate. In a case in which the level of danger is the third threshold value or more but less than the fourth threshold value, at least one processor of the information processing apparatus selects a frame rate of 960 frames/second and outputs a control signal to each device to acquire each kind of data at the frame rate.

Then, the information processing apparatus according to the fifteenth embodiment outputs, as motion information, vector information of motion of a point indicating the existing position of an object along each of three coordinate axes in a three-dimensional orthogonal coordinate system using the cores 17L and 17R which are two processors.

In a case in which the number of objects appearing in the image has increased in a time period between the current clock time and the previous clock time, at least one processor of the information processing apparatus performs control to increase the frame rate of the camera in this manner. In a case in which the number of objects appearing in the image has decreased in the time period between the current clock time and the previous clock time, at least one processor of the information processing apparatus performs control to decrease the frame rate of the camera. In this manner, it is possible to accurately capture motion of each of these objects in a case in which the number of objects appearing in the images has increased, and it is possible to appropriately control the vehicle or the robot in accordance with the motion of the objects. Moreover, it is possible to save the amount of electricity required to drive the camera, for example, since many images are not captured by decreasing the frame rate in the case in which the number of objects has decreased.

In a case in which the amount of change representing a difference between the number of objects appearing in the image at the previous clock time and the number of objects appearing in the image at the current clock time is less than a threshold value related to the amount of change in number of objects, at least one processor of the information processing apparatus does not change the frame rate of the camera. On the other hand, in a case in which the amount of change representing a difference between the number of objects appearing in the image at the previous clock time and the number of objects appearing in the image at the current clock time is not less than the threshold value related to the amount of change in number of objects, at least one processor of the information processing apparatus performs control to change the frame rate of the camera. In a case in which the amount of change in number of objects shows a decrease in number of objects, for example, at least one processor of the information processing apparatus performs control to decrease the frame rate of the camera. On the other hand, in a case in which the amount of change in number of objects shows an increase in number of objects, at least one processor of the information processing apparatus performs control to increase the frame rate of the camera.

Also, at least one processor of the information processing apparatus may perform control to change the frame rate of the camera in accordance with a time series of accelerations of an object appearing in images similarly to the above description. In this case, at least one processor of the information processing apparatus calculates the acceleration of the object appearing in the image at each clock time using a known technology on the basis of the image at each clock time captured by the camera. In a case in which the acceleration of the object appearing in the image at the current clock time is larger than the acceleration appearing in the image at the previous clock time, at least one processor of the information processing apparatus performs control to change the frame rate of the camera. On the other hand, in a case in which the acceleration of the object appearing in the image at the current clock time is larger than the acceleration of the object appearing in the image at the previous clock time, at least one processor of the information processing apparatus performs control to decrease the frame rate. Note that in a case in which a plurality of objects appear in the images, at least one processor of the information processing apparatus may perform control to change the frame rate in accordance with the maximum or minimum acceleration from among the accelerations of the plurality of objects. Alternatively, in the case in which a plurality of objects appear in the image, at least one processor of the information processing apparatus may perform control to change the frame rate in accordance with an average value of the accelerations of the plurality of objects.

In a case in which the amount of change representing a difference between the acceleration of an object appearing in the image at the previous clock time and the acceleration of the object appearing in the image at the previous clock time is less than a threshold value related to the amount of change in acceleration of the object, at least one processor of the information processing apparatus does not change the frame rate of the camera. On the other hand, in a case in which the amount of change representing the difference between the number of objects appearing in the image at the previous clock time and the number of objects appearing in the image at the current clock time is not less than the threshold value related to the amount of change in number of objects, at least one processor of the information processing apparatus performs control to change the frame rate of the camera. In a case in which the amount of change in acceleration of an object shows a decrease in acceleration of the object, for example, at least one processor of the information processing apparatus performs control to decrease the frame rate of the camera. On the other hand, in a case in which the amount of change in acceleration of the object shows an increase in acceleration of the object, at least one processor of the information processing apparatus performs control to increase the frame rate of the camera.

Also, at least one processor of the information processing apparatus may perform control to change the frame rate of the camera in accordance with a time series of sizes of an object appearing in an image similarly to the above description. In this case, when the size of the object appearing in the image at the current clock time is larger than the size of the object appearing in the image at the previous clock time, at least one processor of the information processing apparatus performs control to increase the frame rate of the camera. On the other hand, in a case in which the size of the object appearing in the image at the current clock time is smaller than the size of the object appearing in the image at the previous clock time, at least one processor of the information processing apparatus performs control to decrease the frame rate. Note that in a case in which a plurality of objects appear in the image, at least one processor of the information processing apparatus may perform control to change the frame rate in accordance with the maximum or minimum size from among the respective sizes of the plurality of objects. Alternatively, in the case in which a plurality of objects appear in the image, at least one processor of the information processing apparatus may perform control to change the frame rate in accordance with an average value of the respective sizes of the plurality of objects.

In a case in which the amount of change representing a difference between the size of the object appearing in the image at the previous clock time and the size of the object appearing in the image at the current clock time is less than a threshold value related to the amount of change in size of the object, at least one processor of the information processing apparatus does not change the frame rate of the camera. On the other hand, in a case in which the amount of change representing the difference between the size of the object appearing in the image at the previous clock time and the size of the object appearing in the image at the current clock time is not less than the threshold value related to the amount of change in size of the object, at least one processor of the information processing apparatus performs control to change the frame rate of the camera. In a case in which the amount of change in size of the object shows a decrease in size of the object, for example, at least one processor of the information processing apparatus performs control to decrease the frame rate of the camera. On the other hand, in a case in which the amount of change in acceleration of the object shows an increase in size of the object, at least one processor of the information processing apparatus performs control to increase the frame rate of the camera.

As described above, the information processing apparatus of the fifteenth embodiment performs control to change the frame rate of the camera (for example, at least one of the camera 30L, the radar 32L, the infrared camera 34L, the camera 30R, the radar 32R, or the infrared camera 34R) in accordance with at least one of the time series of the numbers of objects appearing in images, the time series of accelerations of objects appearing in images, or the time series of sizes of objects appearing in images. Then, the information processing apparatus of the fifteenth embodiment extracts points indicating the existing positions of the objects from the images in which the objects appear and outputs the points indicating the existing positions of the objects. This makes it possible to acquire an appropriate number of images at the respective clock times in accordance with the time series of the numbers of objects appearing in images, the time series of accelerations of objects appearing in images, and the time series of sizes of the objects appearing in images, and it is possible to appropriately control the vehicle or the robot. More specifically, in a case in which the number of objects appearing in the images has increased, the information processing apparatus of the fifteenth embodiment can acquire the images at shorter time intervals by performing control to increase the frame rate of the camera and can appropriately control the vehicle or the robot. Also, in a case in which the accelerations of the objects appearing in the images have increased, the information processing apparatus of the fifteenth embodiment can acquire the images at shorter time intervals by performing control to increase the frame rate of the camera and can appropriately control the vehicle or the robot. Also, in a case in which the sizes of the objects appearing in the images have increased, the information processing apparatus of the fifteenth embodiment can acquire the images at shorter time intervals by performing control to increase the frame rate of the camera and can appropriately control the vehicle or the robot.

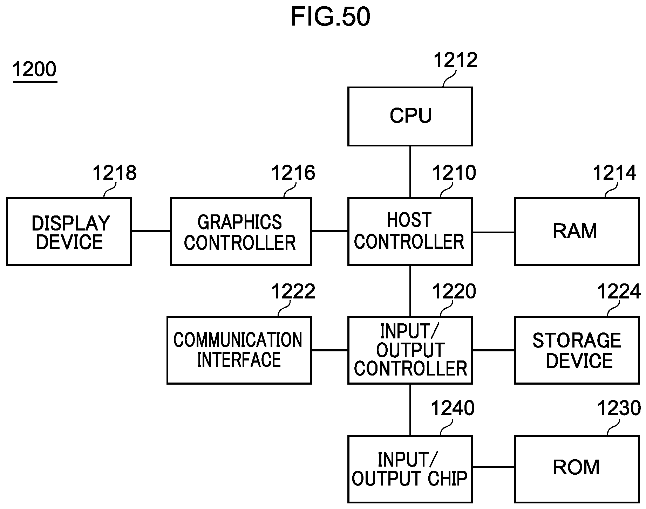

Fig. 50 schematically illustrates an example of a hardware configuration of a computer 1200 that functions as the information processing apparatus 10 or the cooling execution apparatus 110. Programs installed in the computer 1200 can cause the computer 1200 to function as one or more "units" of the apparatus according to the present embodiment, or can cause the computer 1200 to execute the operations or the one or more "units" associated with the apparatus according to the present embodiment, and/or can cause the computer 1200 to execute the processes or the steps of the processes according to the present embodiment. Such programs may be executed by a CPU 1212 to cause the computer 1200 execute specific operations associated with some or all of the flowcharts and blocks in the block diagrams described in the specification.

The computer 1200 according to the present embodiment includes the CPU 1212, a RAM 1214, and a graphics controller 1216, which are connected to each other by a host controller 1210. The computer 1200 also includes a communication interface 1222, a storage device 1224, a DVD drive, and an input/output unit such as an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output unit such as a keyboard, which are connected to the input/output controller 1220 via an input/output chip 1240.

The CPU 1212 operates in accordance with programs stored in the ROM 1230 and the RAM 1214 and thereby controls each unit. The graphics controller 1216 acquires a frame buffer or the like provided in the RAM 1214 or image data generated by the CPU 1212 in the RAM 1214 itself such that the image data is displayed on a display device 1218.

The communication interface 1222 communicates with other electronic devices via a network. The storage device 1224 stores programs and data used by the CPU 1212 in the computer 1200. The DVD drive reads the programs or data from a DVD-ROM or the like and provides the programs or the data to the storage device 1224. The IC card drive reads programs and data from the IC card and/or writes programs and the data in the IC card.

The ROM 1230 stores therein a boot program or the like executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The programs are provided by a computer-readable storage medium such as a DVD-ROM or an IC card. The programs are read from the computer-readable storage medium, are installed in the storage device 1224, the RAM 1214, or the ROM 1230, which is also an example of the computer-readable storage medium, and are executed by the CPU 1212. The information processing described in these programs is read by the computer 1200 and provides cooperation between the programs and the various types of hardware resources. The apparatus or method may be configured by implementing operations or processing of information in accordance with utilization of the computer 1200.

In a case in which communication is executed between the computer 1200 and the external device, for example, the CPU 1212 may execute a communication program loaded in the RAM 1214 and order the communication interface 1222 to perform communication processing on the basis of processing described in the communication program. Under the control of the CPU 1212, the communication interface 1222 reads transmission data stored in a transmission buffer region provided in a recording medium such as the RAM 1214, the storage device 1224, the DVD-ROM, or the IC card, and transmits the read transmission data to a network, or writes reception data received from the network in a reception buffer region or the like provided on the recording medium.

In addition, the CPU 1212 may cause an entirety or a necessary part of a file or a database stored in the storage device 1224 or an external recording medium such as a DVD drive (DVD-ROM) or an IC card to be read in the RAM 1214 and execute various types of processing on data in the RAM 1214. Next, the CPU 1212 may write back the processed data in the external recording medium.

Various types of information such as various types of programs, data, tables, and databases may be stored in a recording medium and subjected to information processing. The CPU 1212 may execute various types of processing, including various types of operations, information processing, condition determination, conditional branching, unconditional branching, information retrieval/replacement, and the like, which are described throughout the disclosure and specified by instruction sequences of programs on the data read from the RAM 1214 and writes a result back in the RAM 1214. In addition, the CPU 1212 may search for information in a file, a database, or the like in the recording medium. In a case in which a plurality of entries with attribute values of a first attribute each associated with attribute values of a second attribute are stored in a recording medium, for example, the CPU 1212 may search an entry with an attribute value of the first attribute matching a designated condition from the plurality of entries, read an attribute value of the second attribute stored in the entry, and thereby acquire the attribute value of the second attribute associated with the first attribute that satisfies the predefined condition.

The programs described above and software modules may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, and the programs are thereby provided to the computer 1200 via the network.

The flowcharts and blocks in the block diagrams in the present embodiment may represent "units" of the apparatus that plays a role in executing steps of the process by which an operation is executed or the operation. Certain steps and "units" may be implemented by a dedicated circuit, a programmable circuit that is supplied together with computer-readable instructions stored in a computer-readable storage medium, and/or a processor that is supplied together with computer-readable instructions stored in a computer-readable storage medium. The dedicated circuit may include a digital and/or analog hardware circuit or may include an integrated circuit (IC) and/or a discrete circuit. The programmable circuit may include a reconfigurable hardware circuit including, for example, logical products, disjunction, exclusive disjunction, NAND, NOR, and other logical operations, flip-flops, registers, and memory elements, such as field programmable gate arrays (FPGAs) and programmable logic arrays (PLAs).

The computer-readable storage medium may include any tangible device capable of storing instructions to be executed by an appropriate device, and as a result, the computer-readable storage medium having instructions stored therein includes products that include instructions that may be executed to create means for executing operations designated by the flowchart or the block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided to a general-purpose computer, a special-purpose computer, a processor in another programmable data processing apparatus, or a programmable circuit locally or via a local area network (LAN) or a wide area network (WAN) such as the Internet in order for the general-purpose computer, the special-purpose computer, or the processor in another programmable data processing apparatus, or the programmable circuit to execute the computer-readable instructions to generate means for executing operations designated by the flowchart or the block diagram. Examples of the processor include a computer processor, a processing unit, a microprocessor, a digital signal processor, a controller, a microcontroller, and the like.

Although the disclosure has been described above using the embodiments, the technical scope of the disclosure is not limited to the scope described in the embodiment. It is apparent to those skilled in the art that various modifications or improvements can be made to the above embodiments. It is apparent from the description of the claims that aspects achieved by adding various modifications or improvements can be included in the technical scope of the disclosure.

It should be noted that the execution order of each processing step such as an operation, a procedure, a step, and a stage in the apparatus, the system, the program, and the method described in the claims, the specification, and the drawings can be realized as an arbitrary order unless "before", "prior", and the like are not specially and explicitly indicated and unless an output of previous processing is used for the following processing. Even if the operation flows in the claims, the specification, and the drawings have been described using "first", "next", and the like for convenience, it does not mean that the performing the operation flows in the orders is essential.

In the above embodiments, the processing to be executed by each processor (e.g. the IPU 11, the MoPU 12, and the central brain 15) is just an example, and the processor to execute each processing step is not limited thereto. For example, the processing executed by the MoPU 12 in the above embodiments may be executed by the central brain 15 instead of the MoPU 12 or may be executed by another processor other than the IPU 11, the MoPU 12, and the central brain 15.

<Supplement 1>

(1) An information processing apparatus including:

a first processor that outputs, from an image of an object captured by a first camera, point information in which the imaged object is captured as a point; and
a second processor that outputs, from an image of the object captured by a second camera directed in a direction corresponding to the first camera, identification information that identifies the imaged object.

(2) The information processing apparatus according to (1), including:
a third processor that associates the point information output from the first processor with the identification information output from the second processor.

(3) The information processing apparatus according to (1) or (2), in which a frame rate of the first camera is variable, and
the first processor changes the frame rate of the first camera in accordance with a predetermined reason.

(4) The information processing apparatus according to (3), in which the first processor calculates a score related to an external environment of a predetermined target.

(5) The information processing apparatus according to (4), in which the first processor changes the frame rate of the first camera in accordance with the calculated score related to the external environment.

(6) An information processing method including executing, by a computer, processing of:

outputting, from an image of an object captured by a first camera, point information in which the imaged object is captured as a point; and
outputting, from an image of the object captured by a second camera directed in a direction corresponding to the first camera, identification information that identifies the imaged object.

(7) An information processing program for causing a computer to execute processing of:

outputting, from an image of an object captured by a first camera, point information in which the imaged object is captured as a point; and

outputting, from an image of the object captured by a second camera directed in a direction corresponding to the first camera, identification information that identifies the imaged object.

<Supplement 2>

(1) An information processing apparatus including:

a first processor that outputs, from an image of an object captured by a first camera, coordinate values of a point indicating an existing position of the imaged object along at least two coordinate axes in a three-dimensional orthogonal coordinate system;

a second processor that outputs, from an image of the object captured by a second camera directed in a direction corresponding to the first camera, identification information that identifies the imaged object; and

a third processor that associates the point information output from the first processor with the identification information output from the second processor.

(2) The information processing apparatus according to (1), in which the first processor outputs the coordinate values of at least two points that are diagonals of vertexes of a polygon surrounding an outline of the object recognized in an image captured by the first camera.

(3) The information processing apparatus according to (2), in which the first processor outputs the coordinate values of the plurality of vertexes of the polygon surrounding the outline of the object recognized in the image captured by the first camera.

(4) An information processing method including executing, by a computer, processing of:

outputting, from an image of an object captured by a first camera, coordinate values of a point indicating an existing position of the imaged object along at least two coordinate axes in a three-dimensional orthogonal coordinate system;

outputting, from an image of the object captured by a second camera directed in a direction corresponding to the first camera, identification information that identifies the imaged object; and

associating the point information with the identification information.

(5) An information processing program for causing a computer to execute processing of:

outputting, from an image of an object captured by a first camera, coordinate values of a point indicating an existing position of the imaged object along at least two coordinate axes in a three-dimensional orthogonal coordinate system;

outputting, from an image of the object captured by a second camera directed in a direction corresponding to the first camera, identification information that identifies the imaged object; and

associating the point information with the identification information.

<Supplement 3>

(1) An information processing apparatus including:

a first processor that outputs, from an image of an object captured by a first camera, point information in which the imaged object is captured as a point;

a second processor that outputs, from an image of the object captured by a second camera directed in a direction corresponding to the first camera, identification information that identifies the imaged object; and

a third processor that associates the point information output from the first processor with the identification information output from the second processor and controls automatic driving of a moving body.

(2) The information processing apparatus according to (1), in which the third processor

calculates a control variable for controlling the automatic driving of the moving body on the basis of detection information detected by a detection unit, and

controls the automatic driving of the moving body on the basis of the calculated control variable, the point information, and the identification information.

(3) An information processing method including executing, by a computer, processing of:

outputting, from an image of an object captured by a first camera, point information in which the imaged object is captured as a point;

outputting, from an image of the object captured by a second camera directed in a direction corresponding to the first camera, identification information that identifies the imaged object; and

associating the point information with the identification information and controlling automatic driving of a moving body on the basis of the point information and the identification information.

(4) An information processing program for causing a computer to execute processing of:

outputting, from an image of an object captured by a first camera, point information in which the imaged object is captured as a point;

outputting, from an image of the object captured by a second camera directed in a direction corresponding to the first camera, identification information that identifies the imaged object; and

associating the point information with the identification information and controlling automatic driving of a moving body on the basis of the point information and the identification information.

<Supplement 4>

(1) An information processing apparatus including:

a first processor that outputs, from an image of an object captured by a first camera, point information in which the imaged object is captured as a point;

a second processor that outputs, from an image of the object captured by a second camera directed in a direction corresponding to the first camera, identification information that identifies the imaged object; and

a third processor that associates the point information output from the first processor with the identification information output from the second processor,

in which a frame rate of the first camera is higher than a frame rate of the second camera.

(2) The information processing apparatus according to (1), in which the frame rate of the first camera is 10 times or more the frame rate of the second camera.

(3) The information processing apparatus according to (2), in which the frame rate of the first camera is 100 frames/second or more, and the frame rate of the second camera is 10 frames/second.

(4) An information processing method including executing, by a computer, processing of:

outputting, from an image of an object captured by a first camera, point information in which the imaged object is captured as a point;

outputting, from an image of the object captured by a second camera having a lower frame rate than the first camera and directed in a direction corresponding to the first camera, identification information that identifies the imaged object; and

associating the point information with the identification information.

(5) An information processing program for causing a computer to execute processing of:

outputting, from an image of an object captured by a first camera, point information in which the imaged object is captured as a point;

outputting, from an image of the object captured by a second camera having a lower frame rate than the first camera and directed in a direction corresponding to the first camera, identification information that identifies the imaged object; and
associating the point information with the identification information.

<Supplement 5>

(1) An information processing apparatus including:

a first processor that outputs, from an image of an object captured by a first camera, point information in which the imaged object is captured as a point;
a second processor that outputs, from an image of the object captured by a second camera directed in a direction corresponding to the first camera, identification information that identifies the imaged object; and
a third processor that associates the point information output from the first processor with the identification information output from the second processor,
in which the first processor calculates a level of danger related to moving of a predetermined moving body as a score related to an external environment of the moving body on the basis of detection information detected by a detection unit and the point information.

(2) The information processing apparatus according to (1), in which a frame rate of the first camera is variable, and the first processor changes the frame rate of the first camera in accordance with the calculated level of danger.
(3) The information processing apparatus according to (1) or (2), in which the level of danger indicates a degree of how dangerous a place to which the moving body is going to travel in the future is.
(4) An information processing apparatus including:

a first processor that outputs, from an image of an object captured by a first camera, point information in which the imaged object is captured as a point;
a second processor that outputs, from an image of the object captured by a second camera directed in a direction corresponding to the first camera, identification information that identifies the imaged object; and
a third processor that associates the point information output from the first processor with the identification information output from the second processor,
in which the third processor calculates a level of danger related to moving of a predetermined moving body as a score related to an external environment of the moving body on the basis of detection information detected by a detection unit and the point information.

(5) The information processing apparatus according to (4),

in which a frame rate of the first camera is variable, and
the third processor outputs an instruction for changing the frame rate of the first camera in accordance with the calculated level of danger to the first processor.

(6) An information processing method including executing, by a computer, processing of:

outputting, from an image of an object captured by a first camera, point information in which the imaged object is captured as a point;
outputting, from an image of the object captured by a second camera directed in a direction corresponding to the first camera, identification information that identifies the imaged object;
associating the point information with the identification information; and
calculating a level of danger related to moving of a predetermined moving body as a score related to an external environment of the moving body on the basis of detection information detected by a detection unit and the point information.

(7) An information processing program for causing a computer to execute processing of:

outputting, from an image of an object captured by a first camera, point information in which the imaged object is captured as a point;
outputting, from an image of the object captured by a second camera directed in a direction corresponding to the first camera, identification information that identifies the imaged object;

associating the point information with the identification information; and

calculating a level of danger related to moving of a predetermined moving body as a score related to an external environment of the moving body on the basis of detection information detected by a detection unit and the point information.

<Supplement 6>

(1) An information processing apparatus including:

a first processor that outputs point information in which the imaged object is captured as a point on the basis of at least one of a visible light image or an infrared image of the object captured by a first camera;

a second processor that outputs, from an image of the object captured by a second camera directed in a direction corresponding to the first camera, identification information that identifies the imaged object; and

a third processor that associates the point information output from the first processor with the identification information output from the second processor.

(2) The information processing apparatus according to (1), in which the first processor outputs the point information on the basis of the infrared image of the object captured by an infrared camera included in the first camera in a case in which the object is not able to be captured from the visible light image of the object captured by a visible light camera included in the first camera for a predetermined reason.

(3) The information processing apparatus according to (2), in which the first processor synchronizes a timing at which the visible light image is captured by the visible light camera with a timing at which the infrared image is captured by the infrared camera.

(4) An information processing method including executing, by a computer, processing of:

outputting point information in which the imaged object is captured as a point on the basis of at least one of a visible light image or an infrared image of the object captured by a first camera;

outputting, from an image of the object captured by a second camera directed in a direction corresponding to the first camera, identification information that identifies the imaged object; and

associating the point information with the identification information.

(5) An information processing program for causing a computer to execute processing of:

outputting point information in which the imaged object is captured as a point on the basis of at least one of a visible light image or an infrared image of the object captured by a first camera;

outputting, from an image of the object captured by a second camera directed in a direction corresponding to the first camera, identification information that identifies the imaged object; and

associating the point information with the identification information.

<Supplement 7>

(1) An information processing apparatus including:

a first processor that outputs, from an image of an object captured by a first camera and a radar signal based on a reflected wave of an electromagnetic wave emitted from the object by a radar from the object, point information in which the imaged object is captured as a point;

a second processor that outputs, from an image of the object captured by a second camera directed in a direction corresponding to the first camera, identification information that identifies the imaged object; and

a third processor that associates the point information output from the first processor with the identification information output from the second processor.

(2) The information processing apparatus according to (1), in which the first processor synchronizes a timing at which the image is captured by the first camera with a timing at which the radar acquires three-dimensional point cloud data of the object based on the radar signal.

(3) The information processing apparatus according to (1) or (2), in which the number of images per unit time captured by the first camera and the number of items of three-dimensional point cloud data per unit time acquired by the radar are larger than the number of images per unit time captured by the second camera.

(4) An information processing method including executing, by a computer, processing of:

outputting, from an image of an object captured by a first camera or a radar signal based on a reflected wave of an electromagnetic wave emitted to the object by a radar from the object, point information in which the imaged object is captured as a point;

outputting, from an image of the object captured by a second camera directed in a direction corresponding to the first camera, identification information that identifies the imaged object; and

associating the point information with the identification information.

(5) An information processing program for causing a computer to execute processing of:

outputting, from an image of an object captured by a first camera or a radar signal based on a reflected wave of an electromagnetic wave emitted to the object by a radar from the object, point information in which the imaged object is captured as a point;

outputting, from an image of the object captured by a second camera directed in a direction corresponding to the first camera, identification information that identifies the imaged object; and

associating the point information with the identification information.

<Supplement 8>

(1) An information processing apparatus including:

a first processor that outputs, from an image of an object captured by a first camera, point information in which the imaged object is captured as a point;

a second processor that outputs, from an image of the object captured by a second camera directed in a direction corresponding to the first camera, label information indicating a type of the imaged object; and

a third processor that associates the point information output from the first processor with the label information output from the second processor.

(2) The information processing apparatus according to (1), in which the third processor associates position information of the object indicated by the point information with the label information of the object that exists at the position indicated by the position information.

(3) The information processing apparatus according to (2), in which the third processor associates the point information output from the first processor at a same timing as a timing at which the second processor outputs the label information with the label information.

(4) The information processing apparatus according to (2) or (3), in which the third processor also associates the new point information with the label information in a case in which the new point information is output from the first processor after the point information and the label information are associated.

(5) An information processing method including executing, by a computer, processing of:

outputting, from an image of an object captured by a first camera, point information in which the imaged object is captured as a point;

outputting, from an image of the object captured by a second camera directed in a direction corresponding to the first camera, label information that indicates a type of the imaged object; and

associating the point information with the label information.

(6) An information processing program for causing a computer to execute processing of:

outputting, from an image of an object captured by a first camera, point information in which the imaged object is captured as a point;

outputting, from an image of the object captured by a second camera directed in a direction corresponding to the first camera, label information that indicates a type of the imaged object; and

associating the point information with the label information.

<Supplement 9>

(1) A cooling execution apparatus including:

an acquisition unit that acquires a detection result of an object obtained by an information processing apparatus that outputs point information in which the object is captured as a point from images of the object captured by a plurality of cameras directed in a corresponding direction and identification information that identifies the object and associates the point information with the identification information; and
an execution unit that causes cooling of the information processing apparatus to be executed on the basis of the detection result acquired by the acquisition unit.

(2) The cooling execution apparatus according to (1), including:

a prediction unit that predicts an operating status of the information processing apparatus on the basis of the detection result acquired by the acquisition unit,
in which the execution unit causes the cooling of the information processing apparatus to be executed on the basis of a prediction result of the operating status of the information processing apparatus obtained by the prediction unit.

(3) The cooling execution apparatus according to (2),

in which the prediction unit predicts a temperature change of the information processing apparatus, and
the execution unit causes the cooling of the information processing apparatus to be executed using a cooling means in accordance with a prediction result of the temperature change of the information processing apparatus obtained by the prediction unit.

(4) The cooling execution apparatus according to any one of (1) to (3), in which the detection result acquired by the acquisition unit is the point information.
(5) A cooling execution method including:

acquiring a detection result of an object obtained by an information processing apparatus that outputs point information in which the object is captured as a point from images of the object captured by a plurality of cameras directed in a corresponding direction and identification information that identifies the object and associates the point information with the identification information; and
causing cooling of the information processing apparatus to be executed on the basis of the acquired detection result.

(6) A cooling execution program for causing a computer to execute processing of:

acquiring a detection result of an object obtained by an information processing apparatus that outputs point information in which the object is captured as a point from images of the object captured by a plurality of cameras directed in a corresponding direction and identification information that identifies the object and associates the point information with the identification information; and
causing cooling of the information processing apparatus to be executed on the basis of the acquired detection result.

<Supplement 10>

(1) An information processing apparatus including:

a first processor that outputs, from an image of an object captured by a first camera, point information in which the imaged object is captured as a point;
a second processor that outputs, from an image of the object captured by a second camera directed in a direction corresponding to the first camera, identification information that identifies the imaged object; and

a third processor that associates the point information output from the first processor with the identification information output from the second processor,

in which the first processor derives coordinate values of a point indicating an existing position of the object as the point information in a depth direction of the object in a three-dimensional orthogonal coordinate system from the image of the object captured by the first camera.

(2) The information processing apparatus according to (1), in which the first processor derives the coordinate values in the depth direction as the point information from images of the object captured by a plurality of the first cameras.

(3) The information processing apparatus according to (1) or (2), in which the first processor derives coordinate values of the object in a width direction, a height direction, and the depth direction as the point information from the image of the object captured by the first camera and a radar signal based on a reflected wave of an electromagnetic wave emitted to the object by a radar from the object.

(4) The information processing apparatus according to any one of (1) to (3), in which the first processor derives coordinate values of the object in a width direction, a height direction, and the depth direction as the point information from the image of the object captured by the first camera and a result of imaging structured light emitted to the object by an irradiation device.

(5) The information processing apparatus according to any one of (1) to (4), in which the first processor derives, from coordinate values of the object in a width direction, a height direction, and the depth direction in the three-dimensional orthogonal coordinate system at a first clock time and coordinate values in the width direction and the height direction at a second clock time which is a clock time following the first clock time, coordinate values in the depth direction at the second clock time as the point information.

(6) An information processing apparatus including:

a first processor that outputs, from an image of an object captured by a first camera, point information in which the imaged object is captured as a point;

a second processor that outputs, from an image of the object captured by a second camera directed in a direction corresponding to the first camera, identification information that identifies the imaged object; and

a third processor that associates the point information output from the first processor with the identification information output from the second processor,

in which the third processor derives coordinate values of a point indicating an existing position of the object as the point information in a depth direction of the object in a three-dimensional orthogonal coordinate system from the image of the object captured by the first camera.

(7) An information processing method including executing, by a computer processing of:

outputting, from an image of an object captured by a first camera, point information in which the imaged object is captured as a point;

outputting, from an image of the object captured by a second camera directed in a direction corresponding to the first camera, identification information that identifies the imaged object;

associating the point information with the identification information; and

deriving, from the image of the object captured by the first camera, coordinate values of the point indicating an existing position of the object as the point information in a depth direction of the object in a three-dimensional orthogonal coordinate system.

(8) An information processing program for causing a computer to execute processing of:

outputting, from an image of an object captured by a first camera, point information in which the imaged object is captured as a point;

outputting, from an image of the object captured by a second camera directed in a direction corresponding to the first camera, identification information that identifies the imaged object;

associating the point information with the identification information; and

deriving, from the image of the object captured by the first camera, coordinate values of the point indicating an existing position of the object as the point information in a depth direction of the object in a three-dimensional orthogonal coordinate system.

<Supplement 11>

(1) An information processing apparatus including:

a first processor that outputs, from an image of an object captured by an event camera, point information in which the imaged object is captured as a point;

a second processor that outputs, from an image of the object captured by a second camera directed in a direction corresponding to the event camera, identification information that identifies the imaged object; and

a third processor that associates the point information output from the first processor with the identification information output from the second processor.

(2) The information processing apparatus according to (1), in which the first processor outputs the point information on the basis of the image of the object captured by the event camera in a case in which the object is not able to be captured from a visible light image of the object captured by a visible light camera for a predetermined reason.

(3) The information processing apparatus according to (2), in which the predetermined reason includes at least one of a case in which a moving speed of the object is a predetermined value or more or a case in which a change in light amount of environment light per unit time is a predetermined value or more.

(4) The information processing apparatus according to any one of (1) to (3), in which the event camera is a camera that outputs an event image representing different portions between an image captured at a current clock time and an image captured at a previous clock time.

(5) An information processing method including executing, by a computer, processing of:

outputting, from an image of an object captured by an event camera, point information in which the imaged object is captured as a point;

outputting, from an image of the object captured by a second camera directed in a direction corresponding to the event camera, identification information that identifies the imaged object; and

associating the point information with the identification information.

(6) An information processing program for causing a computer to execute processing of:

outputting, from an image of an object captured by an event camera, point information in which the imaged object is captured as a point;

outputting, from an image of the object captured by a second camera directed in a direction corresponding to the event camera, identification information that identifies the imaged object; and

associating the point information with the identification information.

<Supplement 12>

(1) An information processing apparatus including:

a first processor that outputs, from an image of an object captured by a first camera with a changeable frame rate, point information in which the imaged object is captured as a point; and

a second processor that outputs, from an image of the object captured by a second camera directed in a direction corresponding to the first camera, identification information that identifies the imaged object;

in which the first processor changes the frame rate of the first camera in accordance with a type of the object based on the identification information.

(2) The information processing apparatus according to (1), in which the first processor

increases the frame rate in a case in which the object is an object moving quickly, and

decreases the frame rate in a case in which the object is an object moving slowly or a still object.

(3) The information processing apparatus according to (1) or (2), in which the first processor also changes the frame rate of the first camera in accordance with the number of objects.

(4) The information processing apparatus according to (3),

in which the first processor
increases the frame rate as the number of objects increases, and

decreases the frame rate as the number of objects decreases.

(5) The information processing apparatus according to any one of (1) to (4), in which the first processor

    calculates a score related to an external environment in accordance with a type of the object, and
    changes the frame rate in accordance with the score related to the external environment.

(6) The information processing apparatus according to (4) or (5), in which the first processor

    calculates a score related to an external environment in accordance with types of the objects and the number of objects, and
    changes the frame rate in accordance with the score related to the external environment.

(7) The information processing apparatus according to any one of (1) to (6), in which the first processor extracts a point indicating an existing position of the object from the image captured by the first camera and outputs the point indicating the existing position of the object.
(8) An information processing method including:

    outputting, from an image of an object captured by a first camera with a changeable frame rate, point information in which the imaged object is captured as a point;
    outputting, from an image of the object captured by a second camera directed in a direction corresponding to the first camera, identification information that identifies the imaged object; and
    changing the frame rate of the first camera in accordance with a type of the object based on the identification information.

(9) An information processing program for causing a computer to execute processing of:

    outputting, from an image of an object captured by a first camera with a changeable frame rate, point information in which the imaged object is captured as a point;
    outputting, from an image of the object captured by a second camera directed in a direction corresponding to the first camera, identification information that identifies the imaged object; and
    changing the frame rate of the first camera in accordance with a type of the object based on the identification information.

<Supplement 13>

(1) An information processing apparatus including:

    a first processor that outputs, from an image of an object captured by a first camera with a changeable frame rate, point information in which the imaged object is captured as a point;
    a second processor that outputs, from an image of the object captured by a second camera directed in a direction corresponding to the first camera, identification information that identifies the imaged object; and
    a third processor that associates the point information output from the first processor with the identification information output from the second processor,
    in which the first processor derives coordinate values of a point indicating an existing position of the object as the point information in a depth direction of the object in a three-dimensional orthogonal coordinate system from the image of the object captured by the first camera, and
    the first processor changes the frame rate of the first camera in accordance with the coordinate values in the depth direction.

(2) The information processing apparatus according to (1), in which the first processor derives the coordinate values in the depth direction as the point information from images of the object captured by a plurality of the first cameras.
(3) The information processing apparatus according to (1) or (2), in which the first processor derives coordinate values of the object in a width direction, a height direction, and the depth direction as the point information from the image of the object captured by the first camera and a radar signal based on a reflected wave of an electromagnetic wave emitted to the object by a radar from the object.

(4) The information processing apparatus according to any one of (1) to (3), in which the first processor derives coordinate values of the object in a width direction, a height direction, and the depth direction as the point information from the image of the object captured by the first camera and a result of imaging structured light emitted to the object by an irradiation device.

(5) The information processing apparatus according to any one of (1) to (4), in which the first processor derives, from coordinate values of the object in a width direction, a height direction, and the depth direction in the three-dimensional orthogonal coordinate system at a first clock time and coordinate values in the width direction and the height direction at a second clock time which is a clock time following the first clock time, coordinate values in the depth direction at the second clock time as the point information.

(6) An information processing method including:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object;

associating the point information with the identification information;

deriving, from the image of the object captured by the first camera, coordinate values of the point indicating an existing position of the object as the point information in a depth direction of the object in a three-dimensional orthogonal coordinate system; and

changing the frame rate of the first camera in accordance with the coordinate values in the depth direction.

(7) An information processing program for causing a computer to execute processing of:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object;

associating the point information with the identification information;

deriving, from the image of the object captured by the first camera, coordinate values of the point indicating an existing position of the object as the point information in a depth direction of the object in a three-dimensional orthogonal coordinate system; and

changing the frame rate of the first camera in accordance with the coordinate values in the depth direction.

<Supplement 14>

(1) An information processing apparatus mounted in a vehicle, including:

a first processor that outputs, from an image of an object captured by a first camera with a changeable frame rate, point information in which the imaged object is captured as a point,

in which the first processor changes the frame rate of the first camera in accordance with a position of the vehicle.

(2) The information processing apparatus according to (1), in which the first processor

calculates a score related to an external environment in accordance with the position of the vehicle, and changes the frame rate in accordance with the score related to the external environment.

(3) The information processing apparatus according to (1) or (2), in which the first processor extracts a point indicating an existing position of the object from the image captured by the first camera and outputs the point indicating the existing position of the object.

(4) The information processing apparatus according to any one of (1) to (3), in which the first processor changes the frame rate of the first camera in accordance with a type of the position of the vehicle.

(5) The information processing apparatus according to any one of (1) to (4), further including:

a second processor that outputs, from an image of the object captured by a second camera directed in a direction corresponding to the first camera, identification information that identifies the imaged object; and

a third processor that associates the point information output from the first processor with the identification information output from the second processor.

(6) An information processing method in an information processing apparatus mounted in a vehicle, the information processing method including:

outputting, from an image of an object captured by a first camera with a changeable frame rate, point information in which the imaged object is captured as a point; and
changing the frame rate of the first camera in accordance with a position of the vehicle.

(7) An information processing program for causing a computer to execute an information processing method in an information processing apparatus mounted in a vehicle, the information processing program being for causing the computer to execute processing of:

outputting, from an image of an object captured by a first camera with a changeable frame rate, point information in which the imaged object is captured as a point; and
changing the frame rate of the first camera in accordance with a position of the vehicle.

<Supplement 15>

(1) An information processing apparatus including:

a first processor that outputs, from an image of an object captured by a first camera, point information in which the imaged object is captured as a point; and
a second processor that outputs, from an image of the object captured by a second camera directed in a direction corresponding to the first camera, identification information that identifies the imaged object,
in which a frame rate of the first camera is variable, and
the first processor changes the frame rate of the first camera in accordance with position information.

(2) The information processing apparatus according to (1), including:
a third processor that associates the point information output from the first processor with the identification information output from the second processor.
(3) The information processing apparatus according to (1) or (2), in which the first processor generates a heat map on the basis of a frequency at which the object has been detected previously at each position in surroundings of the first camera.
(4) The information processing apparatus according to (3), in which the first processor changes the frame rate of the first camera in accordance with the position information and the heat map.
(5) An information processing method including executing, by a computer, processing of:

changing a frame rate of a first camera in accordance with position information;
outputting, from an image of an object captured by the first camera, point information in which the imaged object is captured as a point; and
outputting, from an image of the object captured by a second camera directed in a direction corresponding to the first camera, identification information that identifies the imaged object.

(6) An information processing program for causing a computer to execute processing of:

changing a frame rate of a first camera in accordance with position information;
outputting, from an image of an object captured by the first camera, point information in which the imaged object is captured as a point; and
outputting, from an image of the object captured by a second camera directed in a direction corresponding to the first camera, identification information that identifies the imaged object.

<Supplement 16>

(1) An information processing apparatus including:

a first processor that outputs, from an image of an object captured by a first camera, point information in which the imaged object is captured as a point; and

a second processor that outputs, from an image of the object captured by a second camera directed in a direction corresponding to the first camera, identification information that identifies the imaged object,

in which a frame rate of the first camera is variable, and

the first processor changes the frame rate of the first camera on the basis of information regarding a user acquired from the user.

(2) The information processing apparatus according to (1), including:
a third processor that associates the point information output from the first processor with the identification information output from the second processor.

(3) The information processing apparatus according to (1) or (2), in which the information of the user includes at least one of sound information from the user, image information obtained by imaging the user, or heart rate information of the user.

(4) The information processing apparatus according to any one of (1) to (3), in which the user is a passenger of a vehicle in which at least a part of the information processing apparatus is mounted.

(5) An information processing method including executing, by a computer, processing of:

changing a frame rate of a first camera on the basis of information regarding a user acquired from the user;

outputting, from an image of an object captured by the first camera, point information in which the imaged object is captured as a point; and

outputting, from an image of the object captured by a second camera directed in a direction corresponding to the first camera, identification information that identifies the imaged object.

(6) An information processing program for causing a computer to execute processing of:

changing a frame rate of a first camera on the basis of information regarding a user acquired from the user;

outputting, from an image of an object captured by the first camera, point information in which the imaged object is captured as a point; and

outputting, from an image of the object captured by a second camera directed in a direction corresponding to the first camera, identification information that identifies the imaged object.

<Supplement 17>

(1) An information processing apparatus including:

a processor,

in which the processor

recognizes, on the basis of a front image obtained by imaging a front side of a convoy by a front camera that is provided in a leading moving body from among a plurality of moving bodies moving in a convoy and is able to image the front side, conditions on the front side;

recognizes, on the basis of a rear image obtained by imaging a rear side of the convoy by a rear camera that is provided in a tail end moving body from among the plurality of moving bodies and is able to image the rear side, conditions on the rear side; and

recognizes, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

(2) The information processing apparatus according to (1), in which the lateral cameras image the lateral sides at a first frame rate that is a higher frame rate than frame rates of the front camera and the rear camera.

(3) The information processing apparatus according to (2), in which the processor recognizes the conditions on the lateral sides on the basis of the obtained lateral images every time the lateral images are obtained by imaging the lateral sides at the first frame rate.

(4) The information processing apparatus according to any one of (1) to (3),

in which the plurality of moving bodies are three or more moving bodies, and
the specific moving bodies are intermediate moving bodies that are located between the leading moving body and the tail end moving body.

(5) The information processing apparatus according to (4),

in which each of the plurality of moving bodies is a moving body that is able to be automatically driven,
the intermediate moving bodies are provided with at least one of a leading-side camera that is able to image a side of the leading moving body or a tail end-side camera that is able to image a side of the tail end moving body,
the processor controls the automatic driving of the intermediate moving bodies on the basis of at least one of a leading moving body-side image obtained by the leading-side camera imaging the leading moving body side or a tail end moving body-side image obtained by the tail end-side camera imaging the tail end moving body side, and
a second frame rate that is a frame rate of the leading-side camera and a third frame rate that is a frame rate of the tail end-side camera are lower than a frame rate of the front camera and a frame rate of the rear camera.

(6) The information processing apparatus according to (4),

in which each of the plurality of moving bodies is a moving body that is able to be automatically driven, and
the processor controls the automatic driving of the intermediate moving bodies without using at least one of a leading moving body-side image obtained by the leading moving body side being imaged from a side of the intermediate moving body or a tail end moving body-side image obtained by the tail end moving body side being imaged from the intermediate moving body side.

(7) The information processing apparatus according to any one of (1) to (6), in which the processor

recognizes conditions on the front side by recognizing a kind of a front object that is present on the front side on the basis of the front image, and
recognizes conditions on the rear side by recognizing a kind of a rear object that is present on the rear side on the basis of the rear image.

(8) The information processing apparatus according to any one of (1) to (6), in which the processor recognizes conditions on the lateral sides by recognizing a lateral object that is present on the lateral sides as a point on the basis of the lateral images.
(9) The information processing apparatus according to any one of (1) to (8),

in which each of the plurality of moving bodies is a moving body that is able to be automatically driven, and
the processor controls the automatic driving on the basis of the conditions on the front side, the conditions on the rear side, and the conditions on the lateral sides.

(10) The information processing apparatus according to any one of (1) to (9),

in which each of the plurality of moving bodies is a moving body that is able to be automatically driven,
the processor
acquires front object information, by which a kind of a front object that is present on the front side is able to be specified, by recognizing the kind of the front object on the basis of the front image,
acquires rear object information, by which a kind of a rear object that is present on the rear side is able to be specified, by recognizing the kind of the rear object on the basis of the rear image, and
controls the automatic driving on the basis of front associated information and rear associated information,
the front associated information is information in which front point information and the front object information are associated, the front point information expressing the front object as a point on the basis of a first image obtained by imaging the front side at a fourth frame rate that is a higher frame rate than a frame rate of the front camera, and
the rear associated information is information in which rear point information and the rear object information are associated, the rear point information expressing the rear object as a point on the basis of a second image obtained by imaging the rear side at a fifth frame rate that is a higher frame rate than a frame rate of the rear camera.

(11) The information processing apparatus according to (10), in which the processor

acquires lateral point information that expresses a lateral object that is present on the lateral sides as a point by recognizing the lateral object as a point on the basis of the lateral images, and
controls the automatic driving on the basis of the front associated information, the rear associated information, and the lateral point information.

(12) The information processing apparatus according to any one of (1) to (11),

in which the processor includes a front side recognition processor, a rear side recognition processor, and a lateral side recognition processor,
the front side recognition processor recognizes conditions on the front side on the basis of the front image,
the rear side recognition processor recognizes conditions on the rear side on the basis of the rear image, and
the lateral-side recognition processor recognizes conditions on the lateral sides on the basis of the lateral images.

(13) The information processing apparatus according to (12), in which the lateral-side recognition processor recognizes conditions on the lateral sides by performing processing at a higher speed than the front side recognition processor and the rear side recognition processor on the basis of the lateral images.
(14) An information processing method including:

recognizing, on the basis of a front image obtained by imaging a front side of a convoy by a front camera that is provided in a leading moving body from among a plurality of moving bodies moving in a convoy and is able to image the front side, conditions on the front side;
recognizing, on the basis of a rear image obtained by imaging a rear side of the convoy by a rear camera that is provided in a tail end moving body from among the plurality of moving bodies and is able to image the rear side, conditions on the rear side; and
recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

(15) An information processing program for causing a computer to execute processing including:

recognizing, on the basis of a front image obtained by imaging a front side of a convoy by a front camera that is provided in a leading moving body from among a plurality of moving bodies moving in a convoy and is able to image the front side, conditions on the front side;
recognizing, on the basis of a rear image obtained by imaging a rear side of the convoy by a rear camera that is provided in a tail end moving body from among the plurality of moving bodies and is able to image the rear side, conditions on the rear side; and
recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

<Supplement 18>

(1) An information processing apparatus including:

a first processor,
in which the first processor extracts a point indicating an existing position of an object from an image of the object and outputs motion information indicating motion of the point indicating the existing position of the object along a predetermined coordinate axis at a frame rate of 1000 frames/second or more.

(2) The information processing apparatus according to (1), in which the first processor outputs vector information of motion of a center point or a center of gravity of the object along the predetermined coordinate axis as the motion information.

(3) The information processing apparatus according to (1), in which the first processor outputs vector information of motion of at least two points that are diagonals of vertexes of a quadrangle surrounding an outline of the object along a predetermined coordinate axis as the motion information.

(4) The information processing apparatus according to (1), in which the image includes an infrared image.

(5) The information processing apparatus according to (1), in which the image includes a visible light image and an infrared image that are synchronized with each other.

(6) The information processing apparatus according to (1), in which the information processing apparatus outputs, as the motion information, vector information of motion of the point indicating the existing position of the object along each of three coordinate axes in a three-dimensional orthogonal coordinate system by using the two first processors.

(7) The information processing apparatus according to (6), in which the first processor derives a distance to the object on the basis of a reflected wave of an electromagnetic wave emitted to the object from the object and outputs, as the motion information, vector information of motion of the point indicating the existing position of the object along each of the three coordinate axes in the three-dimensional orthogonal coordinate system.

(8) The information processing apparatus according to (1), further including:

a second processor that outputs the image of the object at a frame rate of less than 1000 frames/second; and
a third processor that performs response control to the object on the basis of the motion information and the image output from the second processor.

(9) An information processing apparatus including:

a camera with a changeable frame rate; and
a processor,
in which the processor
detects objects appearing in an image captured by the camera, and
performs control to change the frame rate of the camera in accordance with at least one of the number of detected objects, accelerations of the objects, or sizes of the objects.

(10) The information processing apparatus according to (9), in which when the frame rate is changed in accordance with the number of objects, the processor

performs control to increase the frame rate as the number of objects increases, and
performs control to decrease the frame rate as the number of objects decreases.

(11) The information processing apparatus according to (9) or (10), in which when the frame rate is changed in accordance with the accelerations of the objects, the processor

performs control to increase the frame rate as the accelerations of the objects increase, and
performs control to decrease the frame rate as the accelerations of the objects decrease.

(12) The information processing apparatus according to any one of (9) to (11), in which when the frame rate is changed in accordance with the sizes of the objects, the processor

performs control to increase the frame rate as the sizes of the object increase, and
performs control to decrease the frame rate as the sizes of the object decrease.

(13) The information processing apparatus according to any one of (9) to (12), in which the processor

calculates a score related to an external environment in accordance with at least one of the number of objects, accelerations of the objects, or sizes of the objects, and
performs control to change the frame rate in accordance with the score related to the external environment and a preset threshold value.

(14) The information processing apparatus according to any one of (9) to (13), in which the processor extracts points indicating existing positions of the objects from the image captured by the camera and outputs the points indicating the existing positions of the objects.

(15) The information processing apparatus according to any one of (9) to (14), in which the information processing apparatus outputs, as the motion information, vector information of motion of the points indicating the existing positions of the objects along each of three coordinate axes in a three-dimensional orthogonal coordinate system by using the two processors.

(16) An information processing method executed by an information processing apparatus including

a camera with a changeable frame rate, and
a processor,
the information processing method including, by the processor:

detecting objects that appear in an image captured by the camera; and
performing control to change the frame rate of the camera in accordance with at least one of the number of detected objects, accelerations of the objects, or sizes of the objects.

(17) An information processing program that causes a processor of an information processing apparatus including

a camera with a changeable frame rate, and
the processor
to execute:

detecting objects that appear in an image captured by the camera; and
performing control to change the frame rate of the camera in accordance with at least one of the number of detected objects, accelerations of the objects, or sizes of the objects.

<Supplement 19>

(1) An information processing apparatus including:

a first processor,
in which the first processor extracts a point indicating an existing position of an object from an image of the object and outputs motion information indicating motion of the point indicating the existing position of the object along a predetermined coordinate axis at a frame rate of 1000 frames/second or more.

(2) The information processing apparatus according to (1), in which the first processor outputs vector information of motion of a center point or a center of gravity of the object along the predetermined coordinate axis as the motion information.

(3) The information processing apparatus according to (1), in which the first processor outputs vector information of motion of at least two points that are diagonals of vertexes of a quadrangle surrounding an outline of the object along a predetermined coordinate axis as the motion information.

(4) The information processing apparatus according to (1), in which the image includes an infrared image.

(5) The information processing apparatus according to (1), in which the image includes a visible light image and an infrared image that are synchronized with each other.

(6) The information processing apparatus according to (1), in which the information processing apparatus outputs, as the motion information, vector information of motion of the point indicating the existing position of the object along each of three coordinate axes in a three-dimensional orthogonal coordinate system by using the two first processors.

(7) The information processing apparatus according to (6), in which the first processor derives a distance to the object on the basis of a reflected wave of an electromagnetic wave emitted to the object from the object and outputs, as the motion information, vector information of motion of the point indicating the existing position of the object along each of the three coordinate axes in the three-dimensional orthogonal coordinate system.

(8) The information processing apparatus according to (1), further including:

a second processor that outputs the image of the object at a frame rate of less than 1000 frames/second; and
a third processor that performs response control to the object on the basis of the motion information and the image output from the second processor.

(9) An information processing apparatus including:

a camera with a changeable frame rate; and

a processor;
in which the processor
detects objects that appear in an image captured at each clock time by the camera, and
performs control to change the frame rate of the camera in accordance with at least one of a time series of the numbers of detected objects, a time series of accelerations of the objects, or a time series of sizes of the objects.

(10) The information processing apparatus according to (9), in which when the frame rate is changed in accordance with the time series of the numbers of objects, the processor

performs control to increase the frame rate in a case in which the number of objects appearing in an image at a current clock time is larger than the number of objects appearing in an image at a previous clock time, and performs control to decrease the frame rate in a case in which the number of objects appearing in the image at the current clock time is smaller than the number of objects appearing in the image at the previous clock time.

(11) The information processing apparatus according to (9) or (10), in which when the frame rate is changed in accordance with the time series of the accelerations of objects, the processor

performs control to increase the frame rate in a case in which accelerations of objects appearing in an image at a current clock time are larger than accelerations of objects appearing in an image at a previous clock time, and performs control to decrease the frame rate in a case in which the accelerations of the objects appearing in the image at the current clock time are smaller than the accelerations of the objects appearing in the image at the previous clock time.

(Supplement 12)

The information processing apparatus according to any one of (9) to (11), in which when the frame rate is changed in accordance with the time series of the sizes of objects, the processor

performs control to increase the frame rate in a case in which sizes of objects appearing in an image at a current clock time are larger than sizes of objects appearing in an image at a previous clock time, and performs control to decrease the frame rate in a case in which the sizes of the objects appearing in the image at the current clock time are smaller than the sizes of the objects appearing in the image at the previous clock time.

(13) The information processing apparatus according to any one of (9) to (12), in which the processor

calculates a score related to an external environment in accordance with at least one of a time series of the numbers of objects, a time series of accelerations of the objects, or a time series of sizes of the objects, and performs control to change the frame rate in accordance with the score related to the external environment.

(14) The information processing apparatus according to any one of (9) to (13), in which the processor extracts points indicating existing positions of the objects from the image captured by the camera and outputs the points indicating the existing positions of the objects.
(15) The information processing apparatus according to any one of (9) to (14), in which the information processing apparatus outputs, as the motion information, vector information of motion of the points indicating the existing positions of the objects along each of three coordinate axes in a three-dimensional orthogonal coordinate system by using the two processors.
(16) An information processing method executed by an information processing apparatus including

a camera with a changeable frame rate, and
a processor,
the information processing method including, by the processor:

detecting objects that appear in an image captured at each clock time by the camera; and
performing control to change the frame rate of the camera in accordance with at least one of a time series of the numbers of detected objects, a time series of accelerations of the objects, or a time series of sizes of the objects.

(17) An information processing program that causes a processor of an information processing apparatus including

**EP 4 610 941 A1**

a camera with a changeable frame rate, and

the processor

to execute:

detecting objects that appear in an image captured at each clock time by the camera; and
performing control to change the frame rate of the camera in accordance with at least one of a time series of the numbers of detected objects, a time series of accelerations of the objects, or a time series of sizes of the objects.

The disclosure of Japanese Patent Application No. 2022-170165 filed on October 24, 2022, the disclosure of Japanese Patent Application No. 2022-172777 filed on October 27, 2022, the disclosure of Japanese Patent Application No. 2022-175679 filed on November 1, 2022, the disclosure of Japanese Patent Application No. 2022-181362 filed on November 11, 2022, the disclosure of Japanese Patent Application No. 2022-182131 filed on November 14, 2022, the disclosure of Japanese Patent Application No. 2022-186040 filed on November 21, 2022, the disclosure of Japanese Patent Application No. 2022-187648 filed on November 24, 2022, the disclosure of Japanese Patent Application No. 2022-187649 filed on November 24, 2022, the disclosure of Japanese Patent Application No. 2022-189546 filed on November 28, 2022, the disclosure of Japanese Patent Application No. 2023-000320 filed on January 4, 2023, the disclosure of Japanese Patent Application No. 2023-004742 filed on January 16, 2023, the disclosure of Japanese Patent Application No. 2023-036967 filed on March 9, 2023, the disclosures of Japanese Patent Application No. 2023-036970 filed on March 9, 2023, the disclosure of Japanese Patent Application No. 2023-036971 filed on March 9, 2023, the disclosure of Japanese Patent Application No. 2023-066683 filed on April 14, 2023, the disclosure of Japanese Patent Application No. 2023-066684 filed on April 14, 2023, the disclosure of Japanese Patent Application No. 2023-066685 filed on April 14, 2023, the disclosure of Japanese Patent Application No. 2023-080410 filed on May 15, 2023, the disclosure of Japanese Patent Application No. 2023-088201 filed on May 29, 2023, and the disclosure of Japanese Patent Application No. 2023-088202 filed on May 29, 2023 are entirely incorporated herein by reference.
All documents, patent applications, and technical standards described in the present specification are incorporated herein by reference to the same extent as if each document, patent application, and technical standard were specifically and individually indicated to be incorporated by reference.

**Claims**

1. An information processing apparatus comprising:

a first processor that outputs, from an image of an object captured by a first camera, point information in which the imaged object is captured as a point;
a second processor that outputs, from an image of the object captured by a second camera directed in a direction corresponding to the first camera, identification information that identifies the imaged object; and
a third processor that associates the point information output from the first processor with the identification information output from the second processor,
wherein a frame rate of the first camera is higher than a frame rate of the second camera.

2. The information processing apparatus according to claim 1, wherein the frame rate of the first camera is 10 times or more the frame rate of the second camera.

3. The information processing apparatus according to claim 2, wherein the frame rate of the first camera is 100 frames/second or more, and the frame rate of the second camera is 10 frames/second.

4. An information processing method comprising executing, by a computer, processing of:

outputting, from an image of an object captured by a first camera, point information in which the imaged object is captured as a point;
outputting, from an image of the object captured by a second camera having a lower frame rate than the first camera and directed in a direction corresponding to the first camera, identification information that identifies the imaged object; and
associating the point information with the identification information.

5.  An information processing program for causing a computer to execute processing of:

    outputting, from an image of an object captured by a first camera, point information in which the imaged object is captured as a point;
    outputting, from an image of the object captured by a second camera having a lower frame rate than the first camera and directed in a direction corresponding to the first camera, identification information that identifies the imaged object; and
    associating the point information with the identification information.

6.  An information processing apparatus comprising:

    a first processor that outputs, from an image of an object captured by a first camera, point information in which the imaged object is captured as a point;
    a second processor that outputs, from an image of the object captured by a second camera directed in a direction corresponding to the first camera, identification information that identifies the imaged object; and
    a third processor that associates the point information output from the first processor with the identification information output from the second processor,
    wherein the first processor calculates a level of danger related to moving of a predetermined moving body as a score related to an external environment of the moving body on the basis of detection information detected by a detection unit and the point information.

7.  The information processing apparatus according to claim 6, wherein a frame rate of the first camera is variable, and the first processor changes the frame rate of the first camera in accordance with the calculated level of danger.

8.  The information processing apparatus according to claim 6, wherein the level of danger indicates a degree of how dangerous a place to which the moving body is going to travel in the future is.

9.  An information processing apparatus comprising:

    a first processor that outputs, from an image of an object captured by a first camera, point information in which the imaged object is captured as a point;
    a second processor that outputs, from an image of the object captured by a second camera directed in a direction corresponding to the first camera, identification information that identifies the imaged object; and
    a third processor that associates the point information output from the first processor with the identification information output from the second processor,
    wherein the third processor calculates a level of danger related to moving of a predetermined moving body as a score related to an external environment of the moving body on the basis of detection information detected by a detection unit and the point information.

10. The information processing apparatus according to claim 9,

    wherein a frame rate of the first camera is variable, and
    the third processor outputs an instruction for changing the frame rate of the first camera in accordance with the calculated level of danger to the first processor.

11. An information processing method comprising executing, by a computer, processing of:

    outputting, from an image of an object captured by a first camera, point information in which the imaged object is captured as a point;
    outputting, from an image of the object captured by a second camera directed in a direction corresponding to the first camera, identification information that identifies the imaged object;
    associating the point information with the identification information; and
    calculating a level of danger related to moving of a predetermined moving body as a score related to an external environment of the moving body on the basis of detection information detected by a detection unit and the point information.

12. An information processing program for causing a computer to execute processing of:

outputting, from an image of an object captured by a first camera, point information in which the imaged object is captured as a point;

outputting, from an image of the object captured by a second camera directed in a direction corresponding to the first camera, identification information that identifies the imaged object;

associating the point information with the identification information; and

calculating a level of danger related to moving of a predetermined moving body as a score related to an external environment of the moving body on the basis of detection information detected by a detection unit and the point information.

13. An information processing apparatus comprising:

a first processor that outputs, from an image of an object captured by a first camera with a changeable frame rate, point information in which the imaged object is captured as a point; and

a second processor that outputs, from an image of the object captured by a second camera directed in a direction corresponding to the first camera, identification information that identifies the imaged object,

wherein the first processor changes the frame rate of the first camera in accordance with a type of the object based on the identification information.

14. The information processing apparatus according to claim 13, wherein the first processor

increases the frame rate in a case in which the object is an object moving quickly, and

decreases the frame rate in a case in which the object is an object moving slowly or a still object.

15. The information processing apparatus according to claim 13, wherein the first processor also changes the frame rate of the first camera in accordance with the number of objects.

16. The information processing apparatus according to claim 15, wherein the first processor

increases the frame rate as the number of objects increases, and

decreases the frame rate as the number of objects decreases.

17. The information processing apparatus according to claim 13, wherein the first processor

calculates a score related to an external environment in accordance with a type of the object, and

changes the frame rate in accordance with the score related to the external environment.

18. The information processing apparatus according to claim 15 or 16, wherein the first processor

calculates a score related to an external environment in accordance with types of the objects and the number of objects, and

changes the frame rate in accordance with the score related to the external environment.

19. The information processing apparatus according to claim 13, wherein the first processor extracts a point indicating an existing position of the object from the image captured by the first camera and outputs the point indicating the existing position of the object.

20. The information processing apparatus according to claim 13, comprising:
a third processor that associates the point information output from the first processor with the identification information output from the second processor.

21. An information processing method comprising:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object; and

changing the frame rate of the first camera in accordance with a type of the object based on the identification information.

22. An information processing program for causing a computer to execute processing of:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object; and

changing the frame rate of the first camera in accordance with a type of the object based on the identification information.

23. An information processing apparatus comprising:

a first processor that outputs, from an image of an object captured by a first camera with a changeable frame rate, point information in which the imaged object is captured as a point;

a second processor that outputs, from an image of the object captured by a second camera directed in a direction corresponding to the first camera, identification information that identifies the imaged object; and

a third processor that associates the point information output from the first processor with the identification information output from the second processor,

wherein the first processor derives coordinate values of a point indicating an existing position of the object as the point information in a depth direction of the object in a three-dimensional orthogonal coordinate system from the image of the object captured by the first camera, and

the first processor changes the frame rate of the first camera in accordance with the coordinate values in the depth direction.

24. The information processing apparatus according to claim 23, wherein the first processor derives the coordinate values in the depth direction as the point information from images of the object captured by a plurality of the first cameras.

25. The information processing apparatus according to claim 23 or 24, wherein the first processor derives coordinate values of the object in a width direction, a height direction, and the depth direction as the point information from the image of the object captured by the first camera and a radar signal based on a reflected wave of an electromagnetic wave emitted to the object by a radar from the object.

26. The information processing apparatus according to claim 23 or 24, wherein the first processor derives coordinate values of the object in a width direction, a height direction, and the depth direction as the point information from the image of the object captured by the first camera and a result of imaging structured light emitted to the object by an irradiation device.

27. The information processing apparatus according to claim 23 or 24, wherein the first processor derives, from coordinate values of the object in a width direction, a height direction, and the depth direction in the three-dimensional orthogonal coordinate system at a first clock time and coordinate values in the width direction and the height direction at a second clock time which is a clock time following the first clock time, coordinate values in the depth direction at the second clock time as the point information.

28. An information processing method comprising:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object;

associating the point information with the identification information;

deriving, from the image of the object captured by the first camera, coordinate values of the point indicating an existing position of the object as the point information in a depth direction of the object in a three-dimensional orthogonal coordinate system; and

changing the frame rate of the first camera in accordance with the coordinate values in the depth direction.

29. An information processing program for causing a computer to execute processing of:

outputting, from an image of an object captured by a first camera with a changeable frame rate, point information in which the imaged object is captured as a point;

outputting, from an image of the object captured by a second camera directed in a direction corresponding to the first camera, identification information that identifies the imaged object;

associating the point information with the identification information;

deriving, from the image of the object captured by the first camera, coordinate values of the point indicating an existing position of the object as the point information in a depth direction of the object in a three-dimensional orthogonal coordinate system; and

changing the frame rate of the first camera in accordance with the coordinate values in the depth direction.

30. An information processing apparatus mounted in a vehicle, comprising:

a first processor that outputs, from an image of an object captured by a first camera with a changeable frame rate, point information in which the imaged object is captured as a point,

wherein the first processor changes the frame rate of the first camera in accordance with a position of the vehicle.

31. The information processing apparatus according to claim 30, wherein the first processor

calculates a score related to an external environment in accordance with the position of the vehicle, and changes the frame rate in accordance with the score related to the external environment.

32. The information processing apparatus according to claim 30 or 31, wherein the first processor extracts a point indicating an existing position of the object from the image captured by the first camera and outputs the point indicating the existing position of the object.

33. The information processing apparatus according to claim 30 or 31, wherein the first processor changes the frame rate of the first camera in accordance with a type of the position of the vehicle.

34. The information processing apparatus according to claim 30 or 31, further comprising:

a second processor that outputs, from an image of the object captured by a second camera directed in a direction corresponding to the first camera, identification information that identifies the imaged object; and

a third processor that associates the point information output from the first processor with the identification information output from the second processor.

35. An information processing method in an information processing apparatus mounted in a vehicle, the information processing method comprising:

outputting, from an image of an object captured by a first camera with a changeable frame rate, point information in which the imaged object is captured as a point; and

changing the frame rate of the first camera in accordance with a position of the vehicle.

36. An information processing program for causing a computer to execute an information processing method in an information processing apparatus mounted in a vehicle, the information processing program being for causing the computer to execute processing of:

outputting, from an image of an object captured by a first camera with a changeable frame rate, point information in which the imaged object is captured as a point; and

changing the frame rate of the first camera in accordance with a position of the vehicle.

37. An information processing apparatus comprising:

a first processor that outputs, from an image of an object captured by a first camera, point information in which the imaged object is captured as a point; and

a second processor that outputs, from an image of the object captured by a second camera directed in a direction corresponding to the first camera, identification information that identifies the imaged object,

wherein a frame rate of the first camera is variable, and

the first processor changes the frame rate of the first camera in accordance with position information.

38. The information processing apparatus according to claim 37, comprising:

a third processor that associates the point information output from the first processor with the identification information output from the second processor.

39. The information processing apparatus according to claim 37, wherein the first processor generates a heat map on the basis of a frequency at which the object has been detected previously at each position in surroundings of the first camera.

40. The information processing apparatus according to claim 39, wherein the first processor changes the frame rate of the first camera in accordance with the position information and the heat map.

41. An information processing method comprising executing, by a computer, processing of:

changing a frame rate of a first camera in accordance with position information;
outputting, from an image of an object captured by the first camera, point information in which the imaged object is captured as a point; and
outputting, from an image of the object captured by a second camera directed in a direction corresponding to the first camera, identification information that identifies the imaged object.

42. An information processing program for causing a computer to execute processing of:

changing a frame rate of a first camera in accordance with position information;
outputting, from an image of an object captured by the first camera, point information in which the imaged object is captured as a point; and
outputting, from an image of the object captured by a second camera directed in a direction corresponding to the first camera, identification information that identifies the imaged object.

43. An information processing apparatus comprising:

a first processor that outputs, from an image of an object captured by a first camera, point information in which the imaged object is captured as a point; and
a second processor that outputs, from an image of the object captured by a second camera directed in a direction corresponding to the first camera, identification information that identifies the imaged object,
wherein a frame rate of the first camera is variable, and
the first processor changes the frame rate of the first camera on the basis of information regarding a user acquired from the user.

44. The information processing apparatus according to claim 43, comprising:
a third processor that associates the point information output from the first processor with the identification information output from the second processor.

45. The information processing apparatus according to claim 43, wherein the information of the user includes at least one of sound information from the user, image information obtained by imaging the user, or heart rate information of the user.

46. The information processing apparatus according to claim 43, wherein the user is a passenger of a vehicle in which at least a part of the information processing apparatus is mounted.

47. An information processing method comprising executing, by a computer, processing of:

changing a frame rate of a first camera on the basis of information regarding a user acquired from the user;
outputting, from an image of an object captured by the first camera, point information in which the imaged object is captured as a point; and
outputting, from an image of the object captured by a second camera directed in a direction corresponding to the first camera, identification information that identifies the imaged object.

48. An information processing program for causing a computer to execute processing of:

changing a frame rate of a first camera on the basis of information regarding a user acquired from the user;

outputting, from an image of an object captured by the first camera, point information in which the imaged object is captured as a point; and

outputting, from an image of the object captured by a second camera directed in a direction corresponding to the first camera, identification information that identifies the imaged object.

49. An information processing apparatus comprising:

a processor,
wherein the processor
recognizes, on the basis of a front image obtained by imaging a front side of a convoy by a front camera that is provided in a leading moving body from among a plurality of moving bodies moving in a convoy and is able to image the front side, conditions on the front side;
recognizes, on the basis of a rear image obtained by imaging a rear side of the convoy by a rear camera that is provided in a tail end moving body from among the plurality of moving bodies and is able to image the rear side, conditions on the rear side; and
recognizes, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

50. The information processing apparatus according to claim 49, wherein the lateral cameras image the lateral sides at a first frame rate that is a higher frame rate than frame rates of the front camera and the rear camera.

51. The information processing apparatus according to claim 50, wherein the processor recognizes the conditions on the lateral sides on the basis of the obtained lateral images every time the lateral images are obtained by imaging the lateral sides at the first frame rate.

52. The information processing apparatus according to claim 49,

wherein the plurality of moving bodies are three or more moving bodies, and
the specific moving bodies are intermediate moving bodies that are located between the leading moving body and the tail end moving body.

53. The information processing apparatus according to claim 52,

wherein each of the plurality of moving bodies is a moving body that is able to be automatically driven,
the intermediate moving bodies are provided with at least one of a leading-side camera that is able to image a side of the leading moving body or a tail end-side camera that is able to image a side of the tail end moving body,
the processor controls the automatic driving of the intermediate moving bodies on the basis of at least one of a leading moving body-side image obtained by the leading-side camera imaging the leading moving body side or a tail end moving body-side image obtained by the tail end-side camera imaging the tail end moving body side, and
a second frame rate that is a frame rate of the leading-side camera and a third frame rate that is a frame rate of the tail end-side camera are lower than a frame rate of the front camera and a frame rate of the rear camera.

54. The information processing apparatus according to claim 52,

wherein each of the plurality of moving bodies is a moving body that is able to be automatically driven, and
the processor controls the automatic driving of the intermediate moving bodies without using at least one of a leading moving body-side image obtained by the leading moving body side being imaged from a side of the intermediate moving body or a tail end moving body-side image obtained by the tail end moving body side being imaged from the intermediate moving body side.

55. The information processing apparatus according to claim 49, wherein the processor

recognizes conditions on the front side by recognizing a kind of a front object that is present on the front side on the basis of the front image, and
recognizes conditions on the rear side by recognizing a kind of a rear object that is present on the rear side on the basis of the rear image.

56. The information processing apparatus according to claim 49, wherein the processor recognizes conditions on the lateral sides by recognizing a lateral object that is present on the lateral sides as a point on the basis of the lateral images.

57. The information processing apparatus according to claim 49,

wherein each of the plurality of moving bodies is a moving body that is able to be automatically driven, and the processor controls the automatic driving on the basis of conditions on the front side, conditions on the rear side, and conditions on the lateral sides.

58. The information processing apparatus according to claim 49,

wherein each of the plurality of moving bodies is a moving body that is able to be automatically driven, the processor
acquires front object information, by which a kind of a front object that is present on the front side is able to be specified, by recognizing the kind of the front object on the basis of the front image,
acquires rear object information, by which a kind of a rear object that is present on the rear side is able to be specified, by recognizing the kind of the rear object on the basis of the rear image, and
controls the automatic driving on the basis of front associated information and rear associated information,
the front associated information is information in which front point information and the front object information are associated, the front point information expressing the front object as a point on the basis of a first image obtained by imaging the front side at a fourth frame rate that is a higher frame rate than a frame rate of the front camera, and
the rear associated information is information in which rear point information and the rear object information are associated, the rear point information expressing the rear object as a point on the basis of a second image obtained by imaging the rear side at a fifth frame rate that is a higher frame rate than a frame rate of the rear camera.

59. The information processing apparatus according to claim 58, wherein the processor

acquires lateral point information that expresses a lateral object that is present on the lateral sides as a point by recognizing the lateral object as a point on the basis of the lateral images, and
controls the automatic driving on the basis of the front associated information, the rear associated information, and the lateral point information.

60. The information processing apparatus according to claim 49,

wherein the processor includes a front side recognition processor, a rear side recognition processor, and a lateral side recognition processor,
the front side recognition processor recognizes conditions on the front side on the basis of the front image,
the rear side recognition processor recognizes conditions on the rear side on the basis of the rear image, and
the lateral-side recognition processor recognizes conditions on the lateral sides on the basis of the lateral images.

61. The information processing apparatus according to claim 60, wherein the lateral-side recognition processor recognizes conditions on the lateral sides by performing processing at a higher speed than the front side recognition processor and the rear side recognition processor on the basis of the lateral images.

62. An information processing method comprising:

recognizing, on the basis of a front image obtained by imaging a front side of a convoy by a front camera that is provided in a leading moving body from among a plurality of moving bodies moving in a convoy and is able to image the front side, conditions on the front side;
recognizing, on the basis of a rear image obtained by imaging a rear side of the convoy by a rear camera that is provided in a tail end moving body from among the plurality of moving bodies and is able to image the rear side, conditions on the rear side; and
recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

**63.** An information processing program for causing a computer to execute processing comprising:

recognizing, on the basis of a front image obtained by imaging a front side of a convoy by a front camera that is provided in a leading moving body from among a plurality of moving bodies moving in a convoy and is able to image the front side, conditions on the front side;

recognizing, on the basis of a rear image obtained by imaging a rear side of the convoy by a rear camera that is provided in a tail end moving body from among the plurality of moving bodies and is able to image the rear side, conditions on the rear side; and

recognizing, on the basis of lateral images obtained by imaging lateral sides of the convoy by lateral cameras that are provided in specific moving bodies, the number of which is less than the number of the plurality of moving bodies, from among the plurality of moving bodies and are able to image the lateral sides, conditions on the lateral sides.

**64.** An information processing apparatus comprising:

a camera with a changeable frame rate; and
a processor;
wherein the processor
detects objects that appear in an image captured by the camera, and
performs control to change the frame rate of the camera in accordance with at least one of the number of detected objects, accelerations of the objects, or sizes of the objects.

**65.** The information processing apparatus according to claim 64, wherein when the frame rate is changed in accordance with the number of objects, the processor

performs control to increase the frame rate as the number of objects increases, and
performs control to decrease the frame rate as the number of objects decreases.

**66.** The information processing apparatus according to claim 64, wherein when the frame rate is changed in accordance with the accelerations of the objects, the processor

performs control to increase the frame rate as the accelerations of the objects increase, and
performs control to decrease the frame rate as the accelerations of the objects decrease.

**67.** The information processing apparatus according to claim 64, wherein when the frame rate is changed in accordance with the sizes of the objects, the processor

performs control to increase the frame rate as the sizes of the object increase, and
performs control to decrease the frame rate as the sizes of the object decrease.

**68.** The information processing apparatus according to claim 64, wherein the processor

calculates a score related to an external environment in accordance with at least one of the number of objects, accelerations of the objects, or sizes of the objects, and
performs control to change the frame rate in accordance with the score related to the external environment and a preset threshold value.

**69.** The information processing apparatus according to claim 64, wherein the processor extracts points indicating existing positions of the objects from the image captured by the camera and outputs the points indicating the existing positions of the objects.

**70.** The information processing apparatus according to claim 64, wherein the information processing apparatus outputs, as the motion information, vector information of motion of the points indicating the existing positions of the objects along each of three coordinate axes in a three-dimensional orthogonal coordinate system by using the two processors.

**71.** An information processing method executed by an information processing apparatus including

a camera with a changeable frame rate, and
a processor,
the information processing method comprising, by the processor:

detecting objects that appear in an image captured by the camera; and
performing control to change the frame rate of the camera in accordance with at least one of the number of detected objects, accelerations of the objects, or sizes of the objects.

72. An information processing program that causes a processor of an information processing apparatus including

a camera with a changeable frame rate, and
the processor
to execute:

detecting objects that appear in an image captured by the camera; and
performing control to change the frame rate of the camera in accordance with at least one of the number of detected objects, accelerations of the objects, or sizes of the objects.

73. An information processing apparatus comprising:

a camera with a changeable frame rate; and
a processor;
wherein the processor
detects objects that appear in an image captured at each clock time by the camera, and
performs control to change the frame rate of the camera in accordance with at least one of a time series of the numbers of detected objects, a time series of accelerations of the objects, or a time series of sizes of the objects.

74. The information processing apparatus according to claim 73, wherein when the frame rate is changed in accordance with the time series of the numbers of objects, the processor

performs control to increase the frame rate in a case in which the number of objects appearing in an image at a current clock time is larger than the number of objects appearing in an image at a previous clock time, and
performs control to decrease the frame rate in a case in which the number of objects appearing in the image at the current clock time is smaller than the number of objects appearing in the image at the previous clock time.

75. The information processing apparatus according to claim 73, wherein when the frame rate is changed in accordance with the time series of the accelerations of objects, the processor

performs control to increase the frame rate in a case in which accelerations of objects appearing in an image at a current clock time are larger than accelerations of objects appearing in an image at a previous clock time, and
performs control to decrease the frame rate in a case in which the accelerations of the objects appearing in the image at the current clock time are smaller than the accelerations of the objects appearing in the image at the previous clock time.

76. The information processing apparatus according to claim 73, wherein when the frame rate is changed in accordance with the time series of the sizes of objects, the processor

performs control to increase the frame rate in a case in which sizes of objects appearing in an image at a current clock time are larger than sizes of objects appearing in an image at a previous clock time, and
performs control to decrease the frame rate in a case in which the sizes of the objects appearing in the image at the current clock time are smaller than the sizes of the objects appearing in the image at the previous clock time.

77. The information processing apparatus according to claim 73, wherein the processor

calculates a score related to an external environment in accordance with at least one of a time series of the numbers of objects, a time series of accelerations of the objects, or a time series of sizes of the objects, and
performs control to change the frame rate in accordance with the score related to the external environment.

78. The information processing apparatus according to claim 73, wherein the processor extracts points indicating existing positions of the objects from the image captured by the camera and outputs the points indicating the existing positions of the objects.

79. The information processing apparatus according to claim 73, wherein the information processing apparatus outputs, as the motion information, vector information of motion of the points indicating existing positions of the objects along each of three coordinate axes in a three-dimensional orthogonal coordinate system by using the two processors.

80. An information processing method executed by an information processing apparatus including

a camera with a changeable frame rate, and
a processor,
the information processing method comprising, by the processor:

detecting objects that appear in an image captured at each clock time by the camera; and
performing control to change the frame rate of the camera in accordance with at least one of a time series of the numbers of detected objects, a time series of accelerations of the objects, or a time series of sizes of the objects.

81. An information processing program that causes a processor of an information processing apparatus including

a camera with a changeable frame rate, and
the processor
to execute:

detecting objects that appear in an image captured at each clock time by the camera; and
performing control to change the frame rate of the camera in accordance with at least one of a time series of the numbers of detected objects, a time series of accelerations of the objects, or a time series of sizes of the objects.

# FIG.1

# FIG.2

# FIG.3

12L

Left MoPU
(Left eye)

32L 30L 34L

| RADAR | CAMERA | INFRARED CAMERA |

17L

CORE

12R

Right MoPU
(Right eye)

32R 30R 34R

| RADAR | CAMERA | INFRARED CAMERA |

17R

CORE

10

11

IPU

1920 frames/sec

1920 frames/sec

Multiple frames/sec
120 240 480 960 1920

Central Brain — 15

## FIG.4

# FIG.5

# FIG.6

CAMERA 30

RADAR 32

12

100 frame/second

CORE 17

10

100 frame/second

Central Brain 15

FIG.7

FIG.8

FIG.9

110

COOLING EXECUTION APPARATUS

| ACQUISITION UNIT | ~112 |

| EXECUTION UNIT | ~114 |

| PREDICTION UNIT | ~116 |

# FIG.10

# FIG.11

FIG.12

FIG.13

# FIG.14

(A)

(B)

(C)

Xn,Yn

# FIG.15

# FIG.16

**FIRST INFORMATION PROCESSING APPARATUS** ~206A

230 226

LEADING VEHICLE MEMORY

LEADING VEHICLE PROGRAM

LEADING VEHICLE
COMMUNICATION I/F

228

**LEADING VEHICLE PROCESSOR**

LEADING VEHICLE CONTROL PROCESSING

LEADING VEHICLE IPU PROCESSING

LEADING VEHICLE MoPU PROCESSING

FIRST CENTRAL BRAIN PROCESSING

224

**SECOND INFORMATION PROCESSING APPARATUS** ~206B

238 234

INTERMEDIATE VEHICLE MEMORY

INTERMEDIATE VEHICLE PROGRAM

INTERMEDIATE VEHICLE
COMMUNICATION I/F

236

**INTERMEDIATE VEHICLE PROCESSOR**

INTERMEDIATE VEHICLE CONTROL PROCESSING

INTERMEDIATE VEHICLE IPU PROCESSING

INTERMEDIATE VEHICLE MoPU PROCESSING

SECOND CENTRAL BRAIN PROCESSING

232

**THIRD INFORMATION PROCESSING APPARATUS** ~206C

246 242

TAIL END VEHICLE MEMORY

TAIL END VEHICLE PROGRAM

TAIL END VEHICLE
COMMUNICATION I/F

244

**TAIL END VEHICLE PROCESSOR**

TAIL END VEHICLE CONTROL PROCESSING

TAIL END VEHICLE IPU PROCESSING

TAIL END VEHICLE MoPU PROCESSING

THIRD CENTRAL BRAIN PROCESSING

240

# FIG.17

FIRST CONDITION SENSOR — 208

FIRST LOW FR CAMERA — 208A

FIRST HIGH FR CAMERA — 208B

FIRST RADAR — 208C

FIRST INFORMATION PROCESSING APPARATUS — 206A

LEADING VEHICLE PROCESSOR — 224

FIRST CENTRAL BRAIN — 224A

FIRST IPU — 224B

SECOND IPU — 224C

FIRST MoPU — 224D

SECOND MoPU — 224E

SECOND CONDITION SENSOR — 210

SECOND LOW FR CAMERA — 210A

SECOND HIGH FR CAMERA — 210B

SECOND RADAR — 210C

# FIG.18

## FIG.19

# FIG.20

## FIG.21

# FIG.22

# FIG.23

# FIG.24

## FIG.25

# FIG.26

FIG.27

## FIG.28

SECOND CENTRAL BRAIN — 232A

- 302 — SENSOR INFORMATION
- 284 — THIRD ASSOCIATED INFORMATION
- 286 — FOURTH ASSOCIATED INFORMATION
- 288 — FIFTH ASSOCIATED INFORMATION
- 290 — SIXTH ASSOCIATED INFORMATION

INPUT → 306 → OUTPUT → SECOND CONTROL VARIABLE (304) --→ AUTOMATIC DRIVING CONTROL

EP 4 610 941 A1

FIG.29

EP 4 610 941 A1

# FIG.30

LEADING VEHICLE IPU
PROCESSING

ACQUIRE FIRST AND SECOND LOW FR
CAMERA IMAGES — ST10

RECOGNIZE CONDITIONS IN FRONT OF
AND BEHIND LEADING VEHICLE — ST12

GENERATE FIRST AND SECOND
LABEL INFORMATION — ST14

N — HAS END CONDITION BEEN SATISFIED? — ST16

Y

END

# FIG.31

LEADING VEHICLE MoPU PROCESSING

ACQUIRE FIRST AND SECOND HIGH FR CAMERA IMAGE AND THE LIKE — ST50

RECOGNIZE CONDITIONS IN FRONT OF AND BEHIND LEADING VEHICLE — ST52

GENERATE FIRST AND SECOND POINT INFORMATION — ST54

N — HAS END CONDITION BEEN SATISFIED? — ST56

Y

END

# FIG.32

FIRST CENTRAL BRAIN PROCESSING

ACQUIRE FIRST AND SECOND LABEL INFORMATION — ST100

ACQUIRE FIRST AND SECOND POINT INFORMATION — ST102

GENERATE FIRST AND SECOND ASSOCIATED INFORMATION — ST104

ACQUIRE FIFTH AND SIXTH ASSOCIATED INFORMATION — ST106

ACQUIRE SENSOR INFORMATION — ST108

DERIVE FIRST CONTROL VARIABLE ON BASIS OF FIRST, SECOND, FIFTH, AND SIXTH ASSOCIATED INFORMATION AND SENSOR INFORMATION — ST110

CONTROL AUTOMATIC DRIVING OF LEADING VEHICLE ON BASIS OF FIRST CONTROL VARIABLE — ST112

N — HAS END CONDITION BEEN SATISFIED? — ST114

Y

END

# FIG.33

INTERMEDIATE VEHICLE IPU
PROCESSING

ACQUIRE THIRD TO SIXTH LOW FR CAMERA
IMAGES — ST150

RECOGNIZE CONDITIONS IN FRONT OF
AND BEHIND INTERMEDIATE VEHICLE AND
CONDITIONS ON LATERAL SIDES OF QUEUE — ST152

GENERATE THIRD TO SIXTH LABEL
INFORMATION — ST154

N — HAS END CONDITION BEEN SATISFIED? — ST156

Y

END

# FIG.34

```
        ┌─────────────────────────────────┐
        │  INTERMEDIATE VEHICLE MoPU      │
        │         PROCESSING              │
        └─────────────────────────────────┘
                      │
            ┌─────────▼──────────────────────────┐
      ┌────►│ ACQUIRE THIRD TO SIXTH HIGH FR     │───ST200
      │     │ CAMERA IMAGES AND THE LIKE         │
      │     └─────────┬──────────────────────────┘
      │               │
      │     ┌─────────▼──────────────────────────┐
      │     │ RECOGNIZE CONDITIONS IN FRONT OF   │
      │     │ AND BEHIND INTERMEDIATE VEHICLE    │───ST202
      │     │ AND CONDITIONS ON LATERAL SIDES    │
      │     │ OF QUEUE                           │
      │     └─────────┬──────────────────────────┘
      │               │
      │     ┌─────────▼──────────────────────────┐
      │     │ GENERATE THIRD TO SIXTH POINT      │───ST204
      │     │ INFORMATION                        │
      │     └─────────┬──────────────────────────┘
      │               │
      │  N  ┌─────────▼──────────────────────────┐
      └─────◄ HAS END CONDITION BEEN SATISFIED?  ►───ST206
            └─────────┬──────────────────────────┘
                      │ Y
            ┌─────────▼──────────┐
            │        END         │
            └────────────────────┘
```

# FIG.35

```
        ┌──────────────────────────┐
        │   SECOND CENTRAL BRAIN   │
        │       PROCESSING        │
        └──────────────────────────┘
                     │
   ┌─────────────────▼──────────────────┐
   │  ACQUIRE THIRD TO SIXTH LABEL      │ ~ ST250
   │         INFORMATION                │
   └────────────────┬───────────────────┘
                    │
   ┌────────────────▼───────────────────┐
   │  ACQUIRE THIRD TO SIXTH POINT      │ ~ ST252
   │         INFORMATION                │
   └────────────────┬───────────────────┘
                    │
   ┌────────────────▼───────────────────┐
   │ GENERATE THIRD TO SIXTH ASSOCIATED │ ~ ST254
   │         INFORMATION                │
   └────────────────┬───────────────────┘
                    │
   ┌────────────────▼───────────────────┐
   │    ACQUIRE SENSOR INFORMATION      │ ~ ST256
   └────────────────┬───────────────────┘
                    │
   ┌────────────────▼───────────────────┐
   │  DERIVE SECOND CONTROL VARIABLE    │
   │   ON BASIS OF THIRD TO SIXTH       │ ~ ST258
   │  ASSOCIATED INFORMATION AND        │
   │      SENSOR INFORMATION            │
   └────────────────┬───────────────────┘
                    │
   ┌────────────────▼───────────────────┐
   │  CONTROL AUTOMATIC DRIVING OF      │
   │ INTERMEDIATE VEHICLE ON BASIS OF   │ ~ ST260
   │     SECOND CONTROL VARIABLE        │
   └────────────────┬───────────────────┘
                    │
   N ◄────◄ HAS END CONDITION BEEN SATISFIED? ► ~ ST262
                    │ Y
              ┌─────▼─────┐
              │    END    │
              └───────────┘
```

# FIG.36

```
        ┌─────────────────────────┐
        │   TAIL END VEHICLE IPU  │
        │       PROCESSING        │
        └─────────────────────────┘
                     │
         ┌───────────┘
         │           ▼
         │  ┌─────────────────────────────────┐
         │  │ ACQUIRE SEVENTH AND EIGHTH LOW FR │ ～ST300
         │  │        CAMERA IMAGES             │
         │  └─────────────────────────────────┘
         │           │
         │           ▼
         │  ┌─────────────────────────────────┐
         │  │ RECOGNIZE CONDITIONS IN FRONT OF  │ ～ST302
         │  │  AND BEHIND TAIL END VEHICLE     │
         │  └─────────────────────────────────┘
         │           │
         │           ▼
         │  ┌─────────────────────────────────┐
         │  │ GENERATE SEVENTH AND EIGHTH LABEL │ ～ST304
         │  │        INFORMATION               │
         │  └─────────────────────────────────┘
         │           │                         ～ST306
         │  N ◇──────────────────────────────◇
         └────  HAS END CONDITION BEEN SATISFIED?
                         │ Y
                         ▼
                ┌─────────────────┐
                │       END       │
                └─────────────────┘
```

# FIG.37

```
        ┌──────────────────────────────┐
        │    TAIL END VEHICLE MoPU      │
        │        PROCESSING            │
        └──────────────────────────────┘
                      │
    ┌────→───────────┘
    │                 │
    │   ┌──────────────────────────────┐
    │   │  ACQUIRE SEVENTH AND EIGHTH HIGH  │ ～ST350
    │   │  FR CAMERA IMAGES AND THE LIKE    │
    │   └──────────────────────────────┘
    │                 │
    │   ┌──────────────────────────────┐
    │   │  RECOGNIZE CONDITIONS IN FRONT OF │ ～ST352
    │   │  AND BEHIND TAIL END VEHICLE      │
    │   └──────────────────────────────┘
    │                 │
    │   ┌──────────────────────────────┐
    │   │  GENERATE SEVENTH AND EIGHTH   │ ～ST354
    │   │     POINT INFORMATION          │
    │   └──────────────────────────────┘
    │                 │
    │  N ◇─────────────────────────────◇ ～ST356
    └──◇ HAS END CONDITION BEEN SATISFIED? ◇
        ◇─────────────────────────────◇
                      │ Y
        ┌──────────────────────────────┐
        │            END                │
        └──────────────────────────────┘
```

# FIG.38

```
┌─────────────────────────────┐
│   THIRD CENTRAL BRAIN       │
│       PROCESSING            │
└─────────────────────────────┘
```

ACQUIRE SEVENTH AND EIGHTH LABEL INFORMATION — ST400

ACQUIRE SEVENTH AND EIGHTH POINT INFORMATION — ST402

GENERATE SEVENTH AND EIGHTH ASSOCIATED INFORMATION — ST404

ACQUIRE FIFTH AND SIXTH ASSOCIATED INFORMATION — ST406

ACQUIRE SENSOR INFORMATION — ST408

DERIVE THIRD CONTROL VARIABLE ON BASIS OF FIFTH, SIXTH, SEVENTH, AND EIGHTH ASSOCIATED INFORMATION AND SENSOR INFORMATION — ST410

CONTROL AUTOMATIC DRIVING OF TAIL END VEHICLE ON BASIS OF THIRD CONTROL VARIABLE — ST412

N ◁ HAS END CONDITION BEEN SATISFIED? ▷ — ST414

Y

```
┌─────────────┐
│     END     │
└─────────────┘
```

# FIG.39

FIG.40

# FIG.41

**FIRST CENTRAL BRAIN**

280 — SENSOR INFORMATION
FIRST ASSOCIATED INFORMATION
282 — SECOND ASSOCIATED INFORMATION
268 — FIFTH POINT INFORMATION
270 — SIXTH POINT INFORMATION
292 — SEVENTH ASSOCIATED INFORMATION
294 — EIGHTH ASSOCIATED INFORMATION

— 296,302,308

INPUT

318

OUTPUT

298
FIRST CONTROL VARIABLE → AUTOMATIC DRIVING CONTROL
SECOND CONTROL VARIABLE
304
THIRD CONTROL VARIABLE
310

224A

240A
THIRD CENTRAL BRAIN
AUTOMATIC DRIVING CONTROL

232A
SECOND CENTRAL BRAIN
AUTOMATIC DRIVING CONTROL

EP 4 610 941 A1

## FIG.42

FIRST CENTRAL BRAIN

296,302,308
320

SENSOR INFORMATION
280 — FIRST ASSOCIATED INFORMATION
268 — FIFTH POINT INFORMATION
270 — SIXTH POINT INFORMATION
294 — EIGHTH ASSOCIATED INFORMATION

INPUT

OUTPUT

298
FIRST CONTROL VARIABLE → AUTOMATIC DRIVING CONTROL
SECOND CONTROL VARIABLE
304
THIRD CONTROL VARIABLE
310

224A

240A
THIRD CENTRAL BRAIN
AUTOMATIC DRIVING CONTROL

232A
SECOND CENTRAL BRAIN
AUTOMATIC DRIVING CONTROL

EP 4 610 941 A1

## FIG.43

Left

| 1000 × 1000 |
| 4color bits |

Right

| 1000 × 1000 |
| 4color bits |

1000 frame/second

~ 12

CORE ~17A

Xn, Yn, Zn
1000 frame/second

Central Brain ~15

# FIG.44

| Left | Right |
| --- | --- |
| 1000 × 1000 4color bits | 1000 × 1000 4color bits |

~ 12

1000 frame/second                    1000 frame/second

CORE                    CORE

17A1                    17A2

Xn, Yn, Zn
1000 frame/second

Central Brain ~15

# FIG.45

# FIG.46

RADAR SIGNAL

IMAGE

1000 frame/second

~12

CORE ~17A

Xn,Yn,Zn
1000 frame/second

Central Brain ~15

# FIG.47

12L

Left MoPU
(Left eye)

32L    30L    34L

RADAR   CAMERA   INFRARED
CAMERA

17L

CORE

12R

Right MoPU
(Right eye)

32R    30R    34R

RADAR   CAMERA   INFRARED
CAMERA

17R

CORE

10

11

I P U

1920 frames/sec

1920 frames/sec

Multiple frames/sec
120 240 480 960 1920

CORE    17X

Xn,Yn,Zn

Central
Brain    15

# FIG.48

# FIG.49

# FIG.50

## INTERNATIONAL SEARCH REPORT

| International application No. |
|---|
| **PCT/JP2023/037929** |

**A. CLASSIFICATION OF SUBJECT MATTER**

*G06V 10/94*(2022.01)i; *B60G 3/00*(2006.01)i; *B60L 15/20*(2006.01)i; *B60W 10/08*(2006.01)i; *B60W 10/22*(2006.01)i; *B60W 30/02*(2012.01)i; *B60W 30/095*(2012.01)i; *B60W 40/00*(2006.01)i; *B60W 40/02*(2006.01)i; *B60W 40/06*(2012.01)i; *B60W 60/00*(2020.01)i; *B62D 7/15*(2006.01)i; *G01B 11/00*(2006.01)i; *G01C 3/06*(2006.01)i; *G01C 21/34*(2006.01)i; *G01P 13/00*(2006.01)i; *G06T 7/00*(2017.01)i; *G06T 7/20*(2017.01)i; *G06T 7/215*(2017.01)i; *G06T 7/521*(2017.01)i; *G06T 7/60*(2017.01)i; *G06T 7/70*(2017.01)i; *G06V 20/58*(2022.01)i; *G08G 1/0968*(2006.01)i; *G08G 1/16*(2006.01)i; *H01L 23/473*(2006.01)i; *H04N 7/01*(2006.01)i; *H04N 7/18*(2006.01)i; *H04N 23/60*(2023.01)i; *H04N 23/667*(2023.01)i; *H05K 7/20*(2006.01)i

FI: G06V10/94; B60G3/00; B60L15/20 S; B60W10/08; B60W10/22; B60W30/02; B60W30/095; B60W40/00; B60W40/02; B60W40/06; B60W60/00; B62D7/15 A; G01B11/00 H; G01C3/06 110V; G01C21/34; G01P13/00 E; G06T7/00 650B; G06T7/00 650Z; G06T7/20; G06T7/215; G06T7/521; G06T7/60 110; G06T7/70 A; G06V20/58; G08G1/0968; G08G1/16 C; G08G1/16 D; H01L23/46 Z; H04N7/01 270; H04N7/18 E; H04N7/18 J; H04N7/18 K; H04N23/60; H04N23/60 500; H04N23/667; H05K7/20 D

According to International Patent Classification (IPC) or to both national classification and IPC

**B. FIELDS SEARCHED**

Minimum documentation searched (classification system followed by classification symbols)

G06V10/94; B60G3/00; B60L15/20; B60W10/08; B60W10/22; B60W30/02; B60W30/095; B60W40/00; B60W40/02; B60W40/06; B60W60/00; B62D7/15; G01B11/00; G01C3/06; G01C21/34; G01P13/00; G06T7/00; G06T7/20; G06T7/215; G06T7/521; G06T7/60; G06T7/70; G06V20/58; G08G1/0968; G08G1/16; H01L23/473; H04N7/01; H04N7/18; H04N23/60; H04N23/667; H05K7/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-071394 A (DAINIPPON SCREEN MFG. CO., LTD.) 12 April 2012 (2012-04-12) paragraphs [0026], [0034], [0036], [0044]-[0046], [0057], fig. 1, 2 | 1-12, 23-29, 34, 38, 44 |
| A | WO 2019/138835 A1 (CANON KK) 18 July 2019 (2019-07-18) paragraphs [0026], [0027] | 1-12, 23-29, 34, 38, 44 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/JP2023/037929**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 2017-170567 A (SIGMA KK) 28 September 2017 (2017-09-28)<br>paragraphs [0027]-[0032] | 1-12, 23-29, 34, 38, 44 |

Form PCT/ISA/210 (second sheet) (July 2022)

## INTERNATIONAL SEARCH REPORT

International application No.

**PCT/JP2023/037929**

**Box No. III    Observations where unity of invention is lacking (Continuation of item 3 of first sheet)**

This International Searching Authority found multiple inventions in this international application, as follows:

Document 1: JP 2012-071394 A (DAINIPPON SCREEN MFG. CO., LTD.) 12 April 2012 (2012-04-12)
        paragraphs [0026], [0034], [0036], [0044]-[0046], [0057], fig. 1-2
        (Family: none)
Document 2: WO 2019/138835 A1 (CANON INC.) 18 July 2019 (2019-07-18)
        paragraphs [0026]-[0027]
        & JP 2019-125056 A
Document 3: JP 2017-170567 A (SIGMA KK) 28 September 2017 (2017-09-28)
        paragraphs [0027]-[0032]
        (Family: none)


Document 1 indicates that
a simulation system 100 comprises a second imaging unit 22, a first imaging unit 21, a second recognition unit 62, and a first recognition unit 61 (paragraph [0034]),
the second imaging unit 22 images a work object 10 in an individual partial region of a relatively narrow area where it has been recognized that the work object 10 is present, among multiple partial regions as obtained by conceptually dividing an entire region of a relatively wide area where the work object 10 can be present (paragraph [0036]),
the second recognition means 62 recognizes the three-dimensional position and pose of the work object 10 in the partial region, and recognizes the three-dimensional position and pose from image data obtained by the second imaging unit 22 (paragraphs [0026] and [0057]),
the first imaging unit 21 images the entire region (paragraph [0036]), and
the first recognition means 61 uses the first imaging unit 21 to recognize the work object 10 by image analysis (paragraphs [0044]-[0046]).
Using the coordinates of the center of an object, i.e., point information as a three-dimensional position is well known, as described in document 2 (paragraphs [0026] and [0027]) and document 3 (paragraphs [0027]-[0032]).


The claims are classified into the six inventions below.


(Invention 1) Claims 1-12, 23-29, 34, 38, and 44
    Claims 1-3, 6-10, 23-27, 34, 38, and 44 have the special technical feature of
"an information processing device comprising: a first processor that outputs point information in which an imaged object is obtained as a point from an image of the object as captured with a first camera;
    a second processor that outputs recognition information in which the imaged object is recognized from an image of the object as captured with a second camera facing a direction corresponding to the first camera; and
    a third processor that associates the point information output from the first processor with the recognition information output from the second processor";
thus these claims are classified as invention 1.
    Claims 4-5 are substantially identical to or similarly closely related to claim 1 classified as invention 1, and thus are classified as invention 1. Claims 11-12 are substantially identical to or similarly closely related to claim 6 or 9 classified as invention 1, and thus are classified as invention 1. Claims 28-29 are substantially identical to or similarly closely related to claim 23 classified as invention 1, and thus are classified as invention 1.


(Invention 2) Claims 13-22
    Claims 13-20 share the technical feature of
"an information processing device comprising: a first processor that outputs point information in which an imaged object is obtained as a point from an image of the object as captured with a first camera; and
    a second processor that outputs recognition information in which the imaged object is recognized from an image of the object as captured with a second camera facing a direction corresponding to the first camera",
    with claim 1 classified as invention 1. However, this technical feature does not make a contribution over the prior art in light of the disclosure of document 1 and the well-known feature as described in documents 2 and 3, and thus cannot be considered a special technical feature. Apart from this feature, there are not the same or corresponding special technical features among these inventions.

Form PCT/ISA/210 (continuation of first sheet) (July 2022)

**INTERNATIONAL SEARCH REPORT**

International application No.

**PCT/JP2023/037929**

| Box No. III | Observations where unity of invention is lacking (Continuation of item 3 of first sheet) |
|---|---|

Furthermore, claims 13-20 do not depend from claim 1. In addition, claims 13-20 are not substantially identical to or similarly closely related to any of the claims classified as invention 1.

Accordingly claims 13-20 cannot be identified as invention 1.

Meanwhile claims 13-20 have the special technical feature of

"an information processing device comprising: a first processor that outputs point information in which an imaged object is obtained as a point from an image of the object as captured with a first camera that allows a frame rate thereof to be changed; and

a second processor that outputs recognition information in which the imaged object is recognized from an image of the object as captured with a second camera facing a direction corresponding to the first camera,

wherein the first processor changes the frame rate of the first camera in accordance with the type of the object based on the recognition information";

thus these claims are classified as invention 2.

Claims 21-22 are substantially identical to or similarly closely related to claim 13 classified as invention 2, and thus are classified as invention 2.

(Invention 3) Claims 30-33, 35-37, and 39-42

Claims 30-33, 37, and 39-40 share the technical feature of

"an information processing device comprising a first processor that outputs point information in which an imaged object is obtained as a point from an image of the object as captured with a first camera",

with claim 1 classified as invention 1. However, this technical feature does not make a contribution over the prior art in light of the disclosure of documents 2 and 3, and thus cannot be considered a special technical feature. Apart from this feature, there are not the same or corresponding special technical features among these inventions.

Claims 30-33, 37, and 39-40 further share the technical feature of

"an information processing device comprising a first processor that outputs point information in which an imaged object is obtained as a point from an image of the object as captured with a first camera that allows a frame rate thereof to be changed,

wherein the first processor changes the frame rate of the first camera",

with claim 13 classified as invention 2. However, this technical feature does not make a contribution over the prior art in light of the disclosure of documents 2 and 3 and the well-known feature of performing control for changing the frame rate of a camera, and thus cannot be considered a special technical feature. Apart from this feature, there are not the same or corresponding special technical features among these inventions.

Furthermore, claims 30-33, 37, and 39-40 do not depend from claim 1 or 13. In addition, claims 30-33, 37, and 39-40 are not substantially identical to or similarly closely related to any of the claims classified as invention 1 or 2.

Accordingly claims 30-33, 37, and 39-40 cannot be identified as either of inventions 1 and 2.

Meanwhile, claims 30-33, 37, and 39-40 have the special technical feature of "an information processing device comprising a first processor that outputs point information in which an imaged object is obtained as a point from an image of the object as captured with a first camera that allows a frame rate thereof to be changed,

wherein the first processor changes the frame rate of the first camera in accordance with a position";

thus these claims are classified as invention 3.

Claims 35-36 are substantially identical to or similarly closely related to claim 30 classified as invention 3, and thus are classified as invention 3. Claims 41-42 are substantially identical to or similarly closely related to claim 37 classified as invention 3, and thus are classified as invention 3.

(Invention 4) Claims 43 and 45-48

Claims 43 and 45-46 share the technical feature of

"an information processing device comprising: a first processor that outputs point information in which an imaged object is obtained as a point from an image of the object as captured with a first camera; and

a second processor that outputs recognition information in which the imaged object is recognized from an image of the object as captured with a second camera facing a direction corresponding to the first camera",

with claim 1 classified as invention 1. However, this technical feature does not make a contribution over the prior art in light of the disclosure of document 1 and the well-known feature as described in documents 2 and 3, and thus cannot be considered a special technical feature. Apart from this feature, there are not the same or corresponding special technical features among these inventions.

Claims 43 and 45-46 share the technical feature of

Form PCT/ISA/210 (continuation of first sheet) (July 2022)

143

## INTERNATIONAL SEARCH REPORT

| International application No. |
| --- |
| **PCT/JP2023/037929** |

**Box No. III Observations where unity of invention is lacking (Continuation of item 3 of first sheet)**

"an information processing device comprising: a first processor that outputs point information in which an imaged object is obtained as a point from an image of the object as captured with a first camera that allows a frame rate thereof to be changed; and

a second processor that outputs recognition information in which the imaged object is recognized from an image of the object as captured with a second camera facing a direction corresponding to the first camera,

wherein the first processor changes the frame rate of the first camera",

with claim 13 classified as invention 2. However, this technical feature does not make a contribution over the prior art in light of the disclosure of document 1, the well-known feature as described in documents 2 and 3, and the well-known feature of performing control for changing the frame rate of a camera, and thus cannot be considered a special technical feature. Apart from this feature, there are not the same or corresponding special technical features among these inventions.

Claims 43 and 45-46 share the technical feature of

"an information processing device comprising a first processor that outputs point information in which an imaged object is obtained as a point from an image of the object as captured with a first camera that allows a frame rate thereof to be changed,

wherein the first processor changes the frame rate of the first camera",

with claim 30 classified as invention 3. However, this technical feature does not make a contribution over the prior art in light of the disclosure of documents 2 and 3 and the well-known feature of performing control for changing the frame rate of a camera, and thus cannot be considered a special technical feature. Apart from this feature, there are not the same or corresponding special technical features among these inventions.

Furthermore, claims 43 and 45-46 do not depend from claim 1, 13, or 30. In addition, claims 43 and 45-46 are not substantially identical to or similarly closely related to any of the claims classified as inventions 1-3.

Accordingly claims 43 and 45-46 cannot be identified as any of inventions 1-3.

Meanwhile, claims 43 and 45-46 have the special technical feature of

"an information processing device comprising: a first processor that outputs point information in which an imaged object is obtained as a point from an image of the object as captured with a first camera; and

a second processor that outputs recognition information in which the imaged object is recognized from an image of the object as captured with a second camera facing a direction corresponding to the first camera,

wherein the first camera has a variable frame rate, and

the first processor changes the frame rate of the first camera on the basis of information of a user acquired from the user";

thus these claims are classified as invention 4. Claims 47-48 are substantially identical to or similarly closely related to claim 43 classified as invention 4, and thus are classified as invention 4.

(Invention 5) Claims 49-63

Claims 49-61 clearly do not have the same or corresponding special technical features between these claims and any of claim 1 classified as invention 1, claim 13 classified as invention 2, claim 30 classified as invention 3, and claim 43 classified as invention 4.

Furthermore, claims 49-61 do not depend from claim 1, 13, 30, or 43. In addition, claims 49-61 are not substantially identical to or similarly closely related to any of the claims classified as inventions 1-4.

Accordingly claims 49-61 cannot be identified as any of inventions 1-4.

Meanwhile, claims 49-61 have the special technical feature of

"an information processing device comprising a processor,

wherein the processor

recognizes the appearance of an area ahead on the basis of a front image obtained by imaging the area ahead with a front camera that is provided in a mobile body at the head of multiple mobile bodies moving in convoy, and that is capable of imaging the area ahead of the convoy,

recognizes the appearance of an area behind on the basis of a rear image obtained by imaging the area behind with a rear camera that is provided in a mobile body at the tail end of the multiple mobile bodies, and that is capable of imaging the area behind the convoy, and

recognizes the appearance of an area alongside on the basis of a side image obtained by imaging the area alongside with a side camera that is provided in specific mobile bodies less in number than the multiple mobile bodies among the multiple mobile bodies, and that is capable of imaging the area alongside the convoy";

thus these claims are classified as invention 5. Claims 62-63 are substantially identical to or similarly closely related to claim 49 classified as invention 5, and thus are classified as invention 5.

Form PCT/ISA/210 (continuation of first sheet) (July 2022)

## INTERNATIONAL SEARCH REPORT

| International application No. |
| --- |
| **PCT/JP2023/037929** |

---

**Box No. III     Observations where unity of invention is lacking (Continuation of item 3 of first sheet)**

(Invention 6) Claims 64-81
Claims 64-70 and 73-79 share the technical feature of
"an information processing device comprising a first processor that performs predetermined processing on an image of an object as captured with a first camera",
with claim 1 classified as invention 1. However, this technical feature does not make a contribution over the prior art in light of the disclosure of document 1, and thus cannot be considered a special technical feature. Apart from this feature, there are not the same or corresponding special technical features among these inventions.
Claims 64-70 and 73-79 share the technical feature of
"an information processing device comprising a first processor that performs predetermined processing on an image of an object as captured with a first camera that allows a frame rate thereof to be changed,
wherein the first processor changes the frame rate of the first camera",
with claim 13 classified as invention 2, claim 30 classified as invention 3, and claim 43 classified as invention 4. However, this technical feature does not make a contribution over the prior art in light of the disclosure of document 1 and the well-known feature of performing control for changing the frame rate of a camera, and thus cannot be considered a special technical feature. Apart from this feature, there are not the same or corresponding special technical features among these inventions.
Claims 64-70 and 73-79 clearly do not have the same or corresponding special technical features between these claims and claim 49 classified as invention 5.
Furthermore, claims 64-70 and 73-79 do not depend from claim 1, 13, 30, 43, or 49. In addition, claims 64-70 and 73-79 are not substantially identical to or similarly closely related to any of the claims classified as inventions 1-5.
Accordingly claims 64-70 and 73-79 cannot be identified as any of inventions 1-5.
Meanwhile claims 64-70 and 73-79 have the special technical feature of
"an information processing device comprising: a camera that allows a frame rate thereof to be changed; and
a processor,
wherein
the processor
detects an object appearing in an image captured with the camera, and
performs control for changing the frame rate of the camera in accordance with at least one of the number of objects thus detected, the acceleration of the object, and the size of the object";
thus these claims are classified as invention 6. Claims 71-72 are substantially identical to or similarly closely related to claim 64 classified as invention 6, and thus are classified as invention 6. Claims 80-81 are substantially identical to or similarly closely related to claim 73 classified as invention 6, and thus are classified as invention 6.

1. ☐  As all required additional search fees were timely paid by the applicant, this international search report covers all searchable claims.

2. ☐  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☑  No required additional search fees were timely paid by the applicant. Consequently, this international search report is restricted to the invention first mentioned in the claims; it is covered by claims Nos.: **Claims 1-12, 23-29, 34, 38, and 44**

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

| International application No. |
| --- |
| **PCT/JP2023/037929** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2012-071394 | A | 12 April 2012 | (Family: none) | | | |
| WO | 2019/138835 | A1 | 18 July 2019 | JP | 2019-125056 | A | |
| JP | 2017-170567 | A | 28 September 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035198 A
- JP 2022170165 A
- JP 2022172777 A
- JP 2022175679 A
- JP 2022181362 A
- JP 2022182131 A
- JP 2022186040 A
- JP 2022187648 A
- JP 2022187649 A
- JP 2022189546 A
- JP 2023000320 A

- JP 2023004742 A
- JP 2023036967 A
- JP 2023036970 A
- JP 2023036971 A
- JP 2023066683 A
- JP 2023066684 A
- JP 2023066685 A
- JP 2023080410 A
- JP 2023088201 A
- JP 2023088202 A